# EUROPÄISCHE PATENTSCHRIFT

(11) **EP 1 454 975 B1**
(45) Veröffentlichungstag und Bekanntmachung des Hinweises auf die Patenterteilung: **15.11.2006**
(21) Anmeldenummer: 04003994.3
(22) Anmeldetag: 23.02.2004
(51) Int. Cl.: C09K 19/30, C09K 19/42, C09K 19/20, C09K 19/32, C09K 19/34

(54) **Flüssigkristallines Medium**
Liquid crystalline medium
Milieu liquide cristallin

(30) Priorität: 05.03.2003 DE 10309513
(43) Veröffentlichungstag der Anmeldung: 08.09.2004
(73) Patentinhaber: Merck Patent GmbH, 64293 Darmstadt (DE)
(72) Erfinder: Heckmeier, Michael, Dr., 69502 Hemsbach (DE); Schuler, Brigitte, 63762 Grossostheim (DE); Saito, Izumi, 64285 Darmstadt (DE); Schoen, Sabine, Dr., 45701 Herten (DE); Kirsch, Peer, Dr., 64342 Seeheim-Jugenheim (DE)

(56) Entgegenhaltungen:
- EP-A- 1 046 693
- EP-A- 1 046 694
- DE-A- 10 151 300
- DE-A- 10 229 476
- DE-A- 10 243 776

## Beschreibung

Die vorliegende Erfindung betrifft ein flüssigkristallines Medium, sowie dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens erkannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nichtlinearen Elementen zur Schaltung einzelner Bildpunkte (MFK-Anzeigen) Medien mit großer positiver dielektrischer Anisotropie, breiten nematischen Phasen, relative niedriger Doppelbrechung, sehr hohem spezifischen Widerstand, guter UV- und Temperaturstabilität und geringerem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitem wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKOGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Neben Flüssigkristallanzeigen, die eine Hintergrundbeleuchtung verwenden, also transmissiv und gegebenenfalls transflektiv betrieben werden, sind besonders auch reflektive Flüssigkristallanzeigen interessant. Diese reflektiven Flüssigkristallanzeigen benutzen das Umgebungslicht zur Informationsdarstellung. Somit verbrauchen sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive Anzeigen auch bei hellen Umgebungsverhältnissen noch gut abzulesen. Dies ist bereits von einfachen reflektiven TN-Anzeigen, wie sie in z. B. Armbanduhren und Taschenrechnern verwendet werden, bekannt. Jedoch ist das Prinzip auch auf hochwertige, höher auflösende Aktiv-Matrix angesteuerte Anzeigen, wie z. B. TFT-Displays anwendbar. Hier ist wie bereits bei den allgemeinen üblichen transmissiven TFT-TN-Anzeigen die Verwendung von Flüssigkristallen mit niedriger Doppelbrechung (Δn) nötig, um eine geringe optische Verzögerung (d · Δn) zu erreichen. Diese geringe optische Verzögerung führt zu einer meist akzeptablen geringen Blickwinkelabhängigkeit des Kontrastes (vgl. DE 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- lagerstabil, auch bei extrem tiefen Temperaturen
- Schaltbarkeit bei extrem tiefen Temperaturen (out-door-use, Automobil, Avionik)
- erhöhte Beständigkeit gegenüber UV-Strahlung (längere Lebensdauer)
- kleine optische Doppelbrechung (Δn) für reflektive Anzeigen

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannung und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde, Medien insbesondere für derartige MFK-, TN- oder STN-Anzeigen bereitzustellen, die die oben angegebenen Nachteile nicht oder nur in geringerem Maße, und vorzugsweise gleichzeitig sehr niedrige Schwellenspannungen und gleichzeitig hohe Werte für die Voltage Holding Ratio (VHR) aufweisen.

Es wurde nun gefunden, dass diese Aufgabe gelöst werden kann, wenn man in Anzeigen erfindungsgemäße Medien verwendet.

Gegenstand der Erfindung ist somit ein flüssigkristallines Medium auf der Basis eines Gemisches von polaren Verbindungen mit positiver dielektrischer Anisotropie, dadurch gekennzeichnet, dass es eine oder mehrere Verbindungen der Formel I 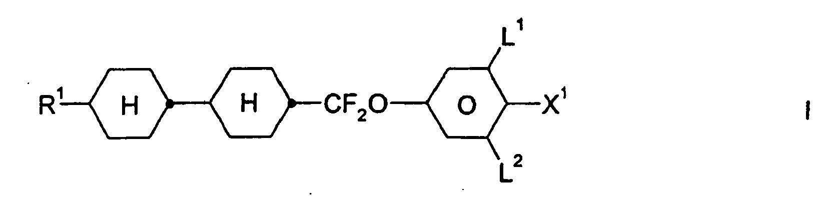 und eine oder mehrere Verbindungen der Formel IA, 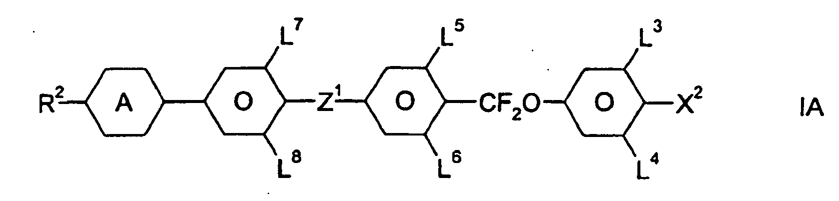 enthält,
worin die einzelnen Reste folgende Bedeutungen besitzen:
- R¹ und R²: jeweils unabhängig voneinander H, einen halogenierten oder unsubstituierten Alkylrest mit 1 bis 15 C-Atomen, wobei in diesen Resten auch eine oder mehrere CH₂-Gruppen jeweils unabhängig voneinander durch -C≡C-, -CH=CH-, -O-, 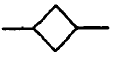 -CO-O- oder -O-CO- so ersetzt sein können, dass O-Atome nicht direkt miteinander verknüpft sind,
- X¹ und X²: jeweils unabhängig voneinander F, Cl, CN, SF₅, SCN, OCN, halogenierter Alkylrest, halogenierter Alkenylrest, halogenierter Alkoxyrest oder halogenierter Alkenyloxyrest mit jeweils bis zu 6 C-Atomen, 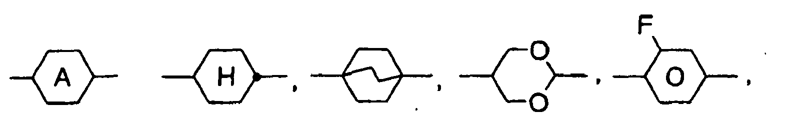 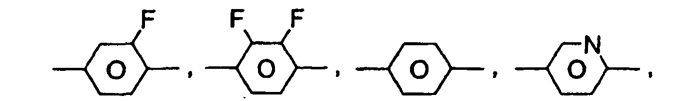 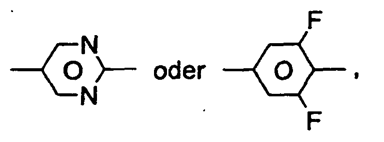
- Z¹: -CH₂CH₂-, -CH=CH-, -C=C-, -COO-, -CH₂O-, -OCH₂-, -OOC-, -(CH₂)₄-, -CHFO-, -CH=CF-, -CF=CH-, -CF=CF-, -C₂F₄-, - CF₂O-, -OCF₂- oder eine Einfachbindung,
- L¹⁻⁸: jeweils unabhängig voneinander H oder F.

Die Verbindungen der Formeln I und IA besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formeln I und IA flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren. Das erfindungsgemäße Mischungskonzept führt zu Mischungen, die sich gegenüber dem Stand der Technik durch ihre sehr gute Reliability und ihr Vₜₕ/_{γ1}-Verhältnis, insbesondere bei 2,5 V- und 3,3 V-Mischungen, auszeichnen. Weiterhin zeichnen sich die erfindungsgemäßen Mischungen im Vergleich zum Stand der Technik, wie z. B. DE 102 29 476 EP 10 46 693 und EP 10 46 694, durch kleinere Werte für die Doppelbrechung aus. Vorzugsweise besitzen die erfindungsgemäßen Mischungen Δn-Werte von < 0,0780.

Die Verbindungen der Formeln und IA sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

Im folgenden werden bevorzugte Reste für die Verbindungen der Formeln I und IA angegeben.

X¹ und X² bedeuten in den Verbindungen der Formeln unabhängig voneinander vorzugsweise F, CI, CN, CF₃, C₂F₅, C₃F₇, SF₅, CF₂H, OCF₃, OCF₂H, OCFHCF₃, OCFHCFH₂, OCFHCF₂H, OCF₂CH₃, OCF₂CFH₂, OCF₂CF₂H, OCF₂CF₂CF₂H, OCF₂CF₂CFH₂, OCFHCF₂CF₃, OCFHCF₂CF₂H, OCFHCFHCF₃, OCH₂CF₂CF₃, OCF₂CF₂CF₃, OCF₂CFHCFH₂, OCF₂CH₂CF₂H, OCFHCF₂CFH₂, OCFHCFHCF₂H, OCFHCH₂CF₃, OCH₂CFHCF₃, OCH₂CF₂CF₂H, OCF₂CFHCH₃, OCF₂CH₂CFH₂, OCFHCF₂CH₃, OCFHCFHCFH₂, OCFHCH₂CF₃, OCH₂CF₂CFH₂, OCH₂CFHCF₂H, OCF₂CH₂CH₃, OCFHCFHCH₃, OCFHCH₂CFH₂, OCH₂CF₂CH₃, OCH₂CFHCFH₂, OCH₂CH₂CF₂H, OCHFCH₂CH₃, OCH₂CFHCH₃, OCH₂CH₂CF₂H, OCCIFCF₃, OCCIFCCIF₂, OCCIFCFH₂, OCFHCCI₂F, OCCIFCF₂H, OCCIFCCIF₂, OCF₂CCIH₂, OCF₂CCI₂H, OCF₂CCI₂F, OCF₂CCIFH, OCF₂CCIF₂, OCF₂CF₂CCIF₂, OCF₂CF₂CCI₂F, OCCIFCF₂CF₃, OCCIFCF₂CF₂H, OCCIFCF₂CCIF₂, OCCIFCFHCF₃, OCCIFCCIFCF₃, OCCI₂CF₂CF₃, OCCIHCF₂CF₃, OCCIFCF₂CF₃, OCCIFCCIFCF₃, OCF₂CCIFCFH₂, OCF₂CF₂CCI₂F, OCF₂CCI₂CF₂H, OCF₂CH₂CCIF₂, OCCIFCF₂CFH₂, OCFHCF₂CCl₂F, OCCIFCFHCF₂H, OCCIFCCIFCF₂H, OCFHCFHCCIF₂, OCCIFCH₂CF₃, OCFHCCl₂CF₃, OCCl₂CFHCF₃, OCH₂CClFCF₃, OCCl₂CF₂CF₂H, OCH₂CF₂CClF₂, OCF₂CClFCH₃, OCF₂CFHCCl₂H, OCF₂CCl₂CFH₂, OCF₂CH₂CCl₂F, OCClFCF₂CH₃, OCFHCF₂CCl₂H, OCClFCClFCFH₂, OCFHCFHCCl₂F, OCClFCH₂CF₃, OCFHCCl₂CF₃, OCCl₂CF₂CFH₂, OCH₂CF₂CCl₂F, OCCl₂CFHCF₂H, OCClHCClFCF₂H, OCF₂CClHCClH₂, OCF₂CH₂CCl₂H, OCClFCFHCH₃, OCF₂CClFCCl₂H, OCClFCH₂CFH₂, OCFHCCl₂CFH₂, OCCl₂CF₂CH₃, OCH₂CF₂CClH₂, OCCl₂CFHCFH₂, OCH₂CCIFCFCI₂, OCH₂CH₂CF₂H, OCCIHCCIHCF₂H, OCH₂CCI₂CF₂H, OCCIFCH₂CH₃, OCFHCH₂CCI₂H, OCCIHCFHCCIH₂, OCH₂CFHCCI₂H, OCCI₂CH₂CF₂H, OCH₂CCI₂CF₂H, CH=CF₂, CF=CF₂, OCH=CF₂, OCF=CF₂, CH=CHF, OCH=CHF, CF=CHF, OCF=CHF, insbesondere F, CI, CN, CF₃, SF₅, CF₂H, OCF₃, OCF₂H, OCFHCF₃, OCFHCFH₂, OCFHCF₂H, OCF₂CH₃, OCF₂CFH₂, OCF₂CF₂H, OCF₂CF₂CF₂H, OCF₂CF₂CFH₂, OCFHCF₂CF₃, OCFHCF₂CF₂H, OCF₂CF₂CF₃ oder OCF₂CHFCF₃.

Falls R¹ und/oder R² einen Alkylrest und/oder einen Alkoxyrest bedeuten, so kann dieser geradkettig oder verzweigt sein. Vorzugsweise ist er geradkettig, hat 1, 2, 3, 4, 5, 6 oder 7 C-Atome und bedeutet demnach bevorzugt Methyl, Ethyl, Propyl, Butyl, Pentyl, Hexyl, Heptyl, Ethoxy, Propoxy, Butoxy, Pentoxy, Hexoxy oder Heptoxy, ferner Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxybutyl (= 2-Methoxyethyl), 2-, 3-oder 4-Oxypentyl, 2-, 3-, 4- oder 5-Oxyhexyl, 2-, 3-, 4-, 5- oder 6-Oxyheptyl, 2-, 3-, 4-, 5-, 6-, oder 7-Oxyoctyl, 2-, 3-, 4-, 5-, 6-, 7- oder 8-Oxanonyl, 2-, 3-, 4-, 5-, 6-, 7-, 8- oder 9-Oxadexyl.

Falls R¹ und/oder R² einen Alkylrest bedeuten, in dem eine CH₂-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R¹ und/oder R² einen Alkylrest bedeuten, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome. Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyl-oxypropyl, 4-Acetyloxybutyl, Methoxycarbonyl, Ethoxycarbonyl, Propoxy-carbonyl, Butoxycarbonyl, Pentoxycarbonyl, Methoxycarbonylmethyl, Ethoxycarbonylmethly, Propoxycarbonylmethyl, Butoxycarbonylmethyl, 2-(Methoxycarbonyl)ethyl, 2-(Ethoxycarbonyl)ethyl, 2-(Propoxycarbonyl)-ethyl, 3-(Methoxycarbonyl)-propyl, 3-(Ethoxycarbonyl)-propyl oder 4-(Methoxycarbonyl)-butyl.

Falls R¹ und/oder R² einen Alkylrest bedeuten, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 12 C-Atome. Er bedeutet demnach besonders Acryloyloxymethyl, 2-Acryloyl-oxyethyl, 3-Acryloyloxypropyl, 4-Acryoyloxybutyl, 5-Acrytoyloxypentyl, 6-Acryloyloxyhexyl, 7-Acryloyloxyheptyl, 8-Acryloyloxyoctyl, 9-Acryloyl-oxynonyl, 10-Acryloyloxydecyl, Methacryloyloxymethyl, 2-Methacryloyl-oxyethyl, 3-Methacryloyloxypropyl, 4-Methacryloyloxybutyl, 5-Methacryl-oyloxypentyl, 6-Methacryloyloxyhexyl, 7-Methacryloyloxyheptyl, 8-Methacryloyloxyoctyl, 9-Methacryloyloxynonyl.

Falls R¹ und/oder R² einen einfach durch CN oder CF₃ substituerten Alkyl- oder Alkenylrest bedeuten, so ist dieser Rest vorzugsweise geradkettig. Die Substitution durch CN oder CF₃ ist in beliebiger Position.

Falls R¹ und/oder R² einen mindestens einfach durch Halogen substituierten Alkyl- oder Alkenylrest bedeuten, so ist dieser Rest vorzugsweise geradkettig und Halogen ist vorzugsweise F oder Cl. Bei Mehrtachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Verbindungen mit verzweigten Flügelgruppen R¹ und/oder R² können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugt verzweigte Reste R sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R¹ und/oder R² einen Alkylrest darstellen, in dem zwei oder mehr CH₂-Gruppen durch -O- und/oder -CO-O- ersetzt sind, so kann dieser geradkettig oder verzweigt sind. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxycarbonyl)-methyl, 2,2-Bis-(methoxycarbonyl)-ethyl, 3,3-Bis-(methoxycarbonyl)-propyl, 4,4-Bis-(methoxycarbonyl)-butyl, 5,5-Bis-(methoxycarbonl)-pentyl, 6,6-Bis-(methocycarbonyl)-hexyl, 7,7-Bis-(methoxycarbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-pentyl.

Z¹ bedeutet vorzugsweise eine Einfachbindung, ferner -C₂F₄-, -COO-, -C₂H₄- oder -CF₂O-.

Ring A bedeutet vorzugsweise 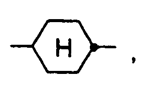 ferner

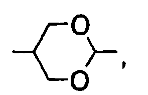

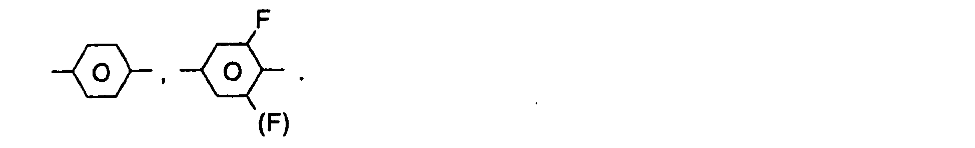

Die Verbindungen der Formeln I und IA werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen. Die Verbindungen der Formel IA sind z. B. aus der EP 1 046 693 A1 und EP 1 046 694 A1 bekannt. Die Verbindungen der Formel I sind beispielsweise beschrieben in GB 22 29 438.

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Gegenüber den aus der EP 1 046 693 A1 offenbarten Mischungen besitzen die erfindungsgemäßen Mischungen niedrige γ₁-Werte und niedrigere Schwellen und Δn-Werte. Die erfindungsgemäßen Mischungen sind bevorzugt als TN-TFT-Mischungen für Note-PC-Anwendungen mit 3,3 und 2,5 V-Treibern geeignet.

Die erfindungsgemäßen Flüssigkristallmischungen ermöglichen es bei Beibehaltung der nematischen Phase bis -30 °C, besonders bevorzugt bis -40 °C, Klärpunkt oberhalb 70 °C, vorzugsweise oberhalb 75 °C, besonders bevorzugt oberhalb 80 °C, gleichzeitig dielektrische Anisotropiewerte Δε ≥ 6, vorzugsweise ≥ 8 und einen hohen Wert für den spezifischen Widerstand zu erreichen, wodurch hervorragende STN- und MFK-Anzeigen erzielt werden können. Insbesondere sind die Mischungen durch kleine Operationsspannungen gekennzeichnet. Die TN-Schwellen liegen vorzugsweise unterhalb 1,5 V, vorzugsweise unterhalb 1,4 V, besonders bevorzugt < 1,3 V.

Es versteht sich, dass durch geeignete Wahl der Komponenten der erfindungsgemäßen Mischungen auch höhere Klärpunkte (z.B. oberhalb 110 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8,1575-1584,1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Fließviskosität ν₂₀ bei 20 °C ist vorzugsweise < 60 mm²·s⁻¹, besonders bevorzugt < 50 mm²s·⁻¹. Die Rotationsviskosität γ₁ der erfindungsgemäßen Mischungen bei 20 °C ist vorzugsweise < 140 mPa·s, besonders bevorzugt < 120 mPa·s. Der nematische Phasenbereich ist vorzugsweise mindestens 100°, insbesondere mindestens 110°. Vorzugsweise erstreckt sich dieser Bereich mindestens von -40° bis +80°.

Bei Flüssigkristallanzeigen ist eine kleine Schaltzeit erwünscht. Dies gilt besonders für Anzeigen die Videowiedergabe-fähig sind. Für derartige Anzeigen werden Schaltzeiten (Summe: tₒₙ + t_{off}) von maximal 16 ms benötigt. Die Obergrenze der Schaltzeit wird durch die Bildwiederholfrequenz bestimmt.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I und IA eine deutlich kleinere Abnahme des HR mit steigender Temperatur aufweisen als analoge Mischungen enthaltend anstelle den Verbindungen der Formel IA

Cyanophenylcyclohexane der Formel 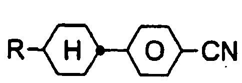 oder Ester der Formel

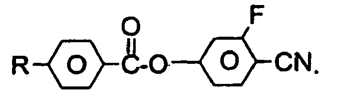

Vorzugsweise enthalten die erfindungsgemäßen Mischungen nur geringe Mengen (≤ 10 Gew.%) oder keine Nitrile. Die erfindungsgemäßen Mischungen weisen Werte für die Holding Ratio von > 98 %, insbesondere größer 99 % auf.

Auch die UV-Stabilität der erfindungsgemäßen Mischungen ist erheblich besser, d.h. sie zeigen eine deutlich kleinere Abnahme des HR unter UV-Belastung.

Formel I umfasst vorzugsweise Verbindungen der Formeln I-1 bis I-27 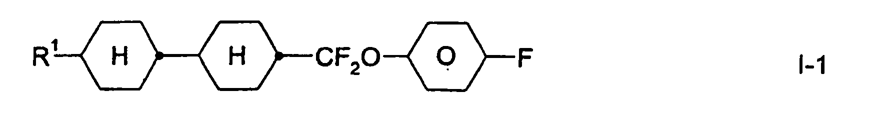 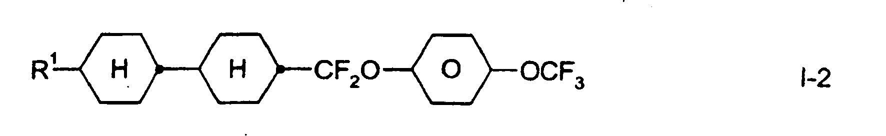 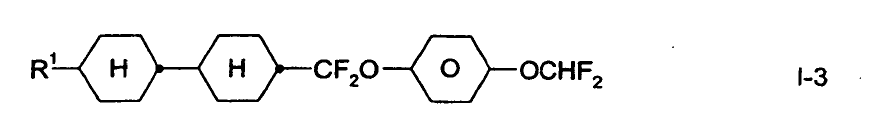 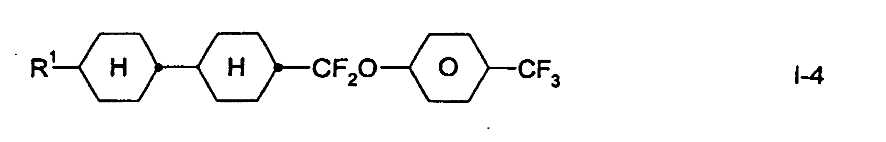 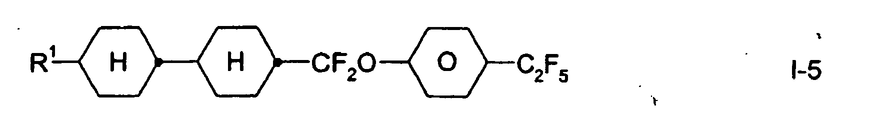 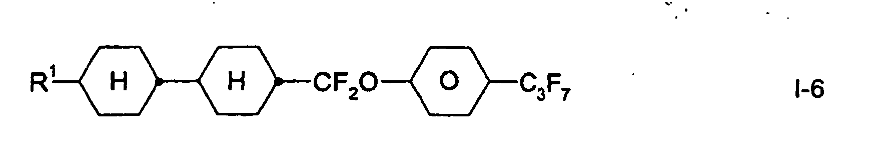 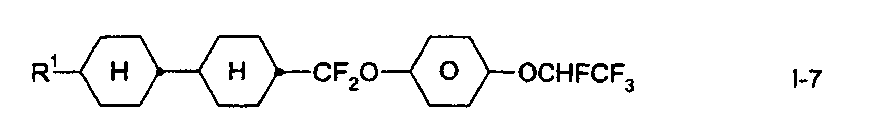 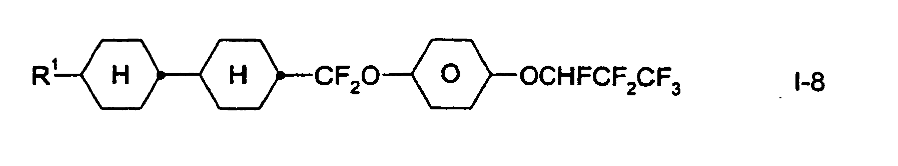 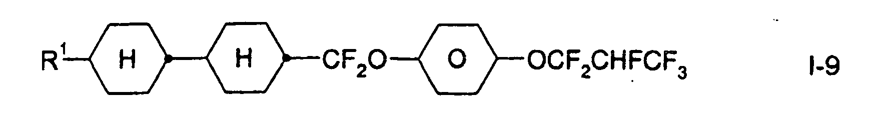 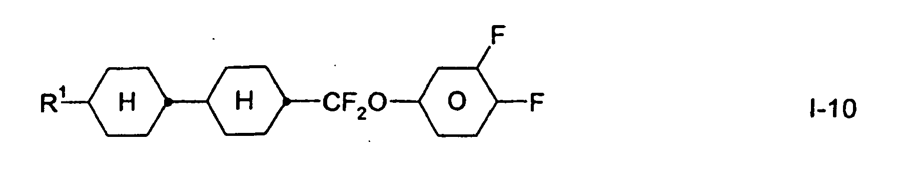 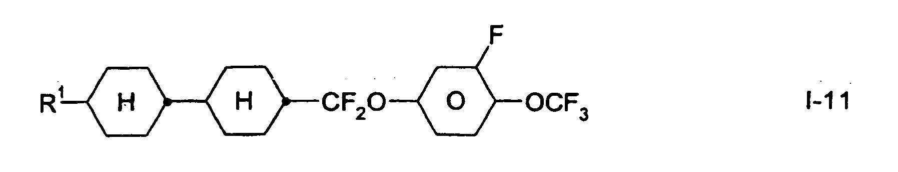 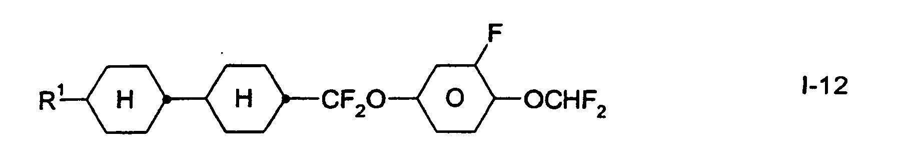 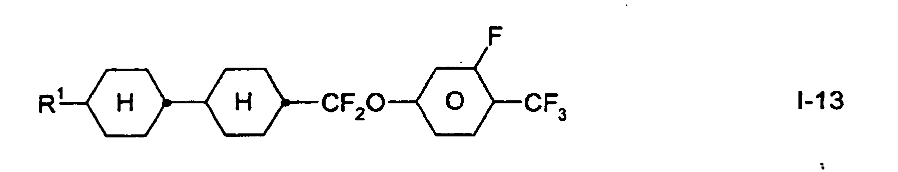 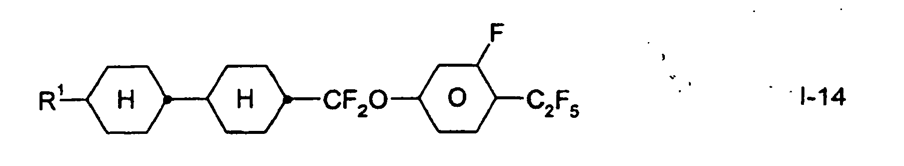 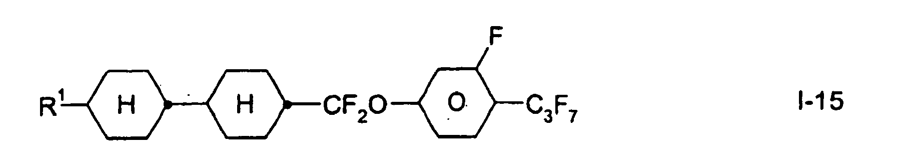 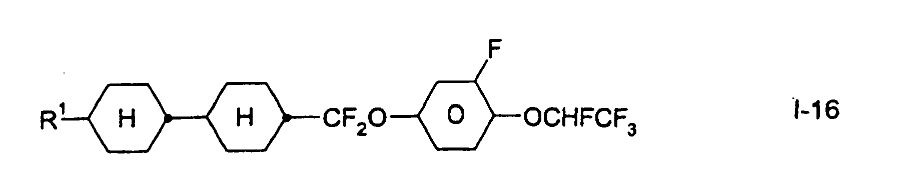 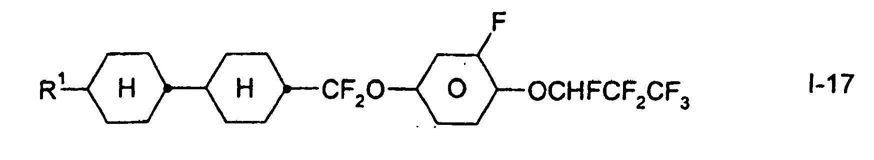 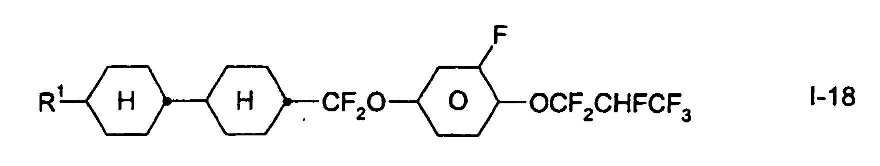 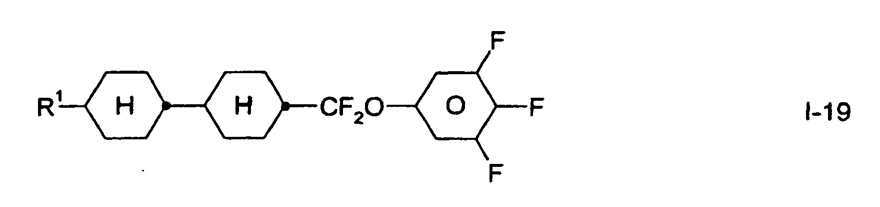 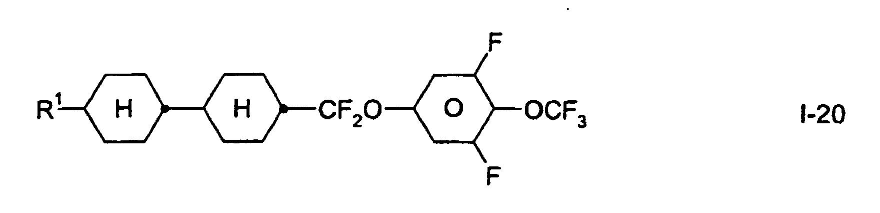 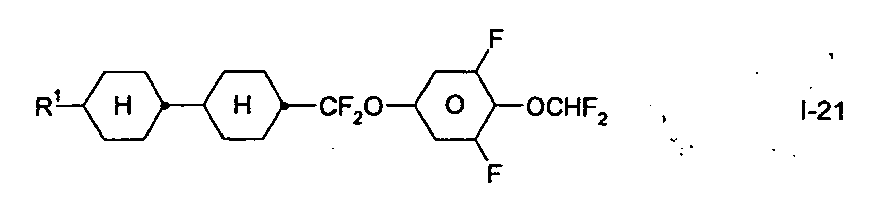 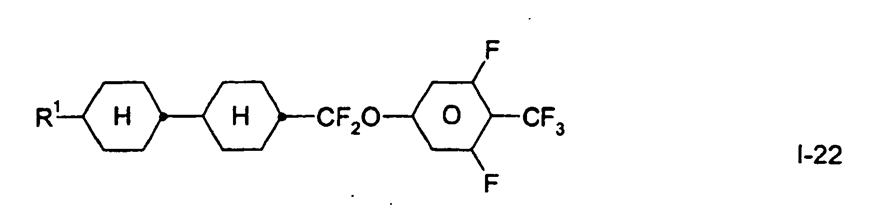 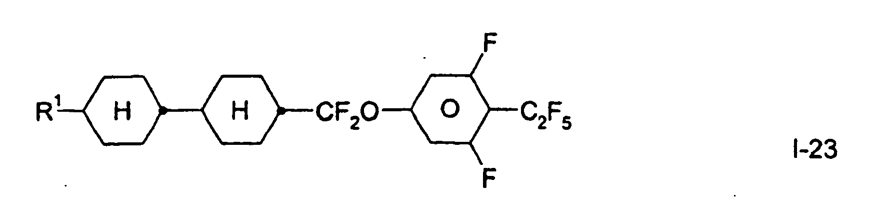 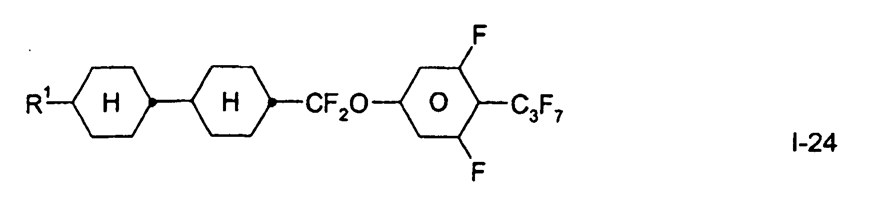 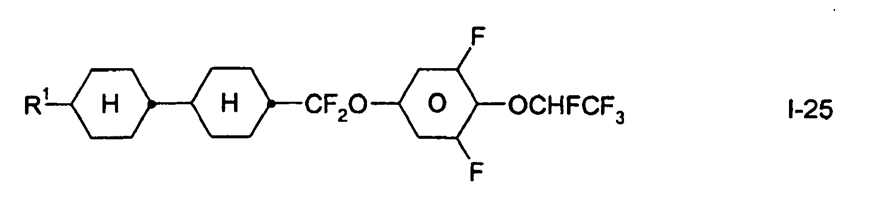 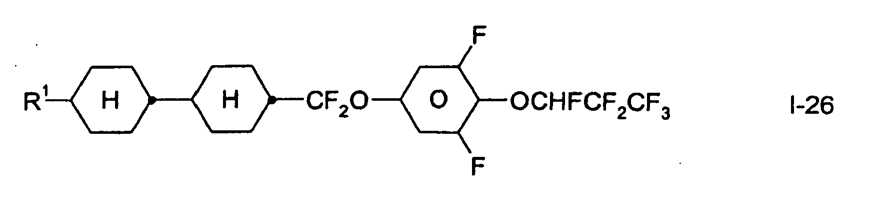 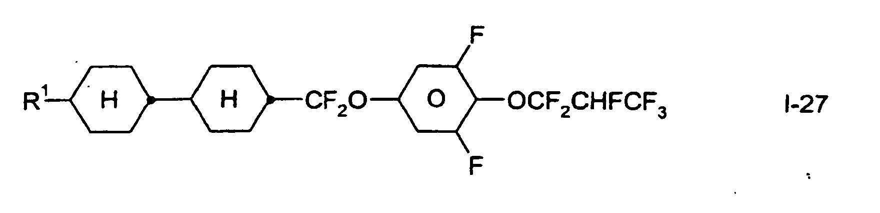 worin R¹ die in Anspruch 1 angegebenen Bedeutungen besitzt. Vorzugsweise bedeutet R¹ H, CH₃, C₂H₅, n-C₃H₇, n-C₄H₉, n-C₅H₁₁, n-C₆H₁₃, CH₂=CH, CH₃CH=CH, CH₃CH=CHCH₂CH₂ oder CH₂=CHCH₂CH₂.

Bevorzugt sind erfindungsgemäße Medien, die wenigstens eine Verbindung der Formel I-10 und/oder I-19, besonders bevorzugt jeweils wenigstens eine Verbindung der Formel I-19, enthalten. Weiterhin bevorzugt sind Verbindungen der Formeln I-11 und I-20.

Besonders bevorzugte Verbindungen der Formel IA sind Verbindungen der Formel IAA

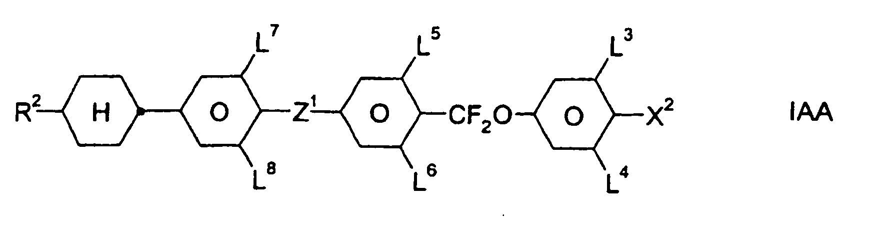

In der Verbindung IAA bedeutet Z¹ vorzugsweise eine Einfachbindung.

Bevorzugte Unterformeln der Formel IA sind Verbindungen der Formeln IA-1 bis IA-108, 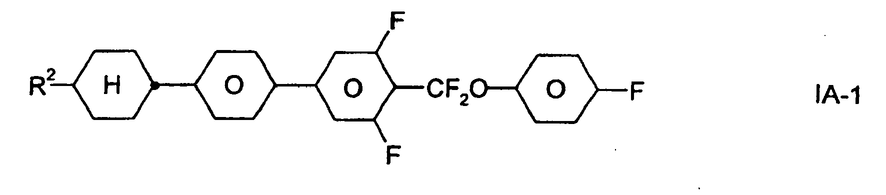 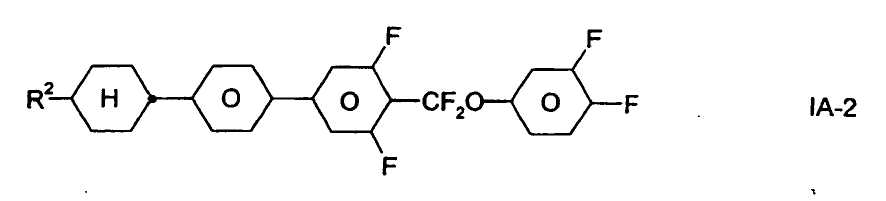 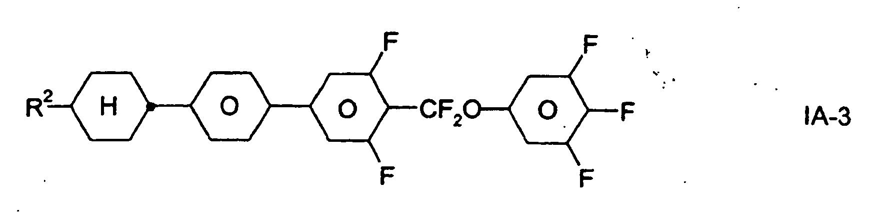 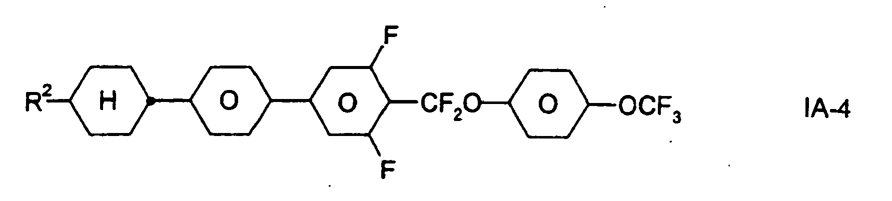 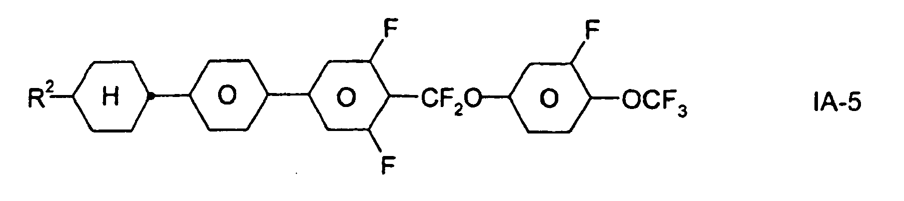 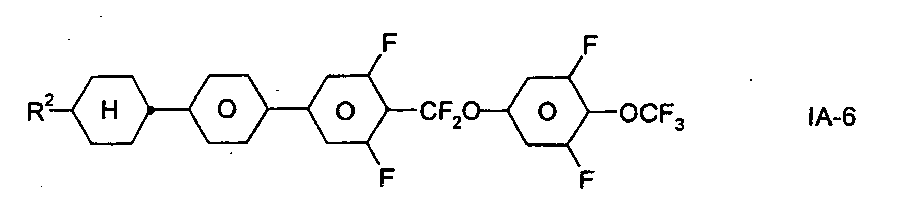 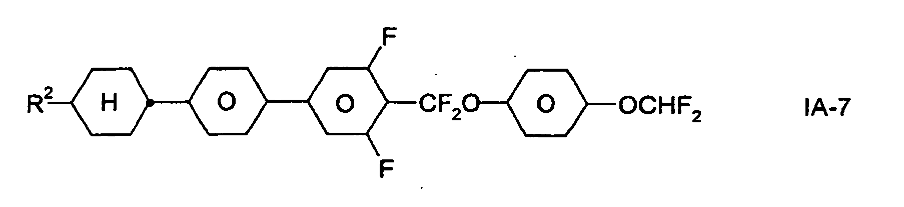 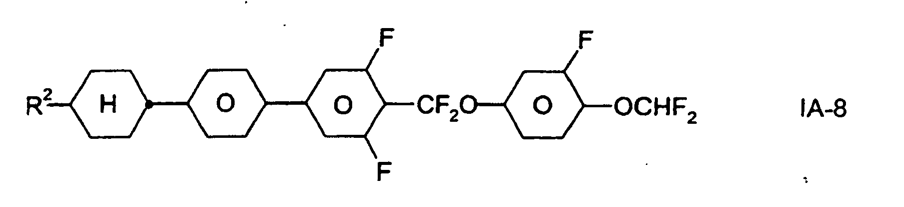 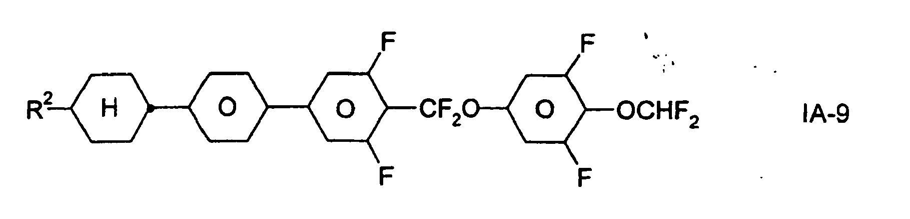 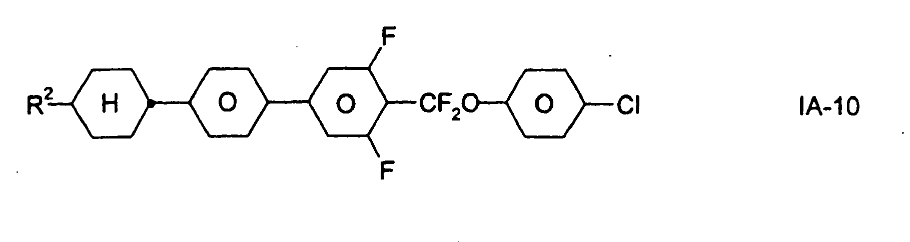 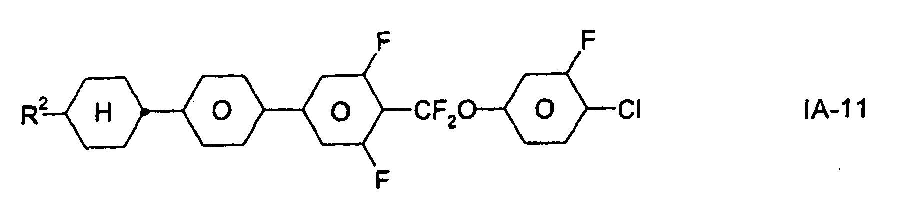 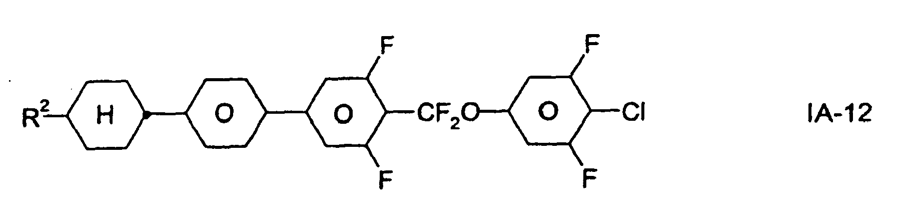 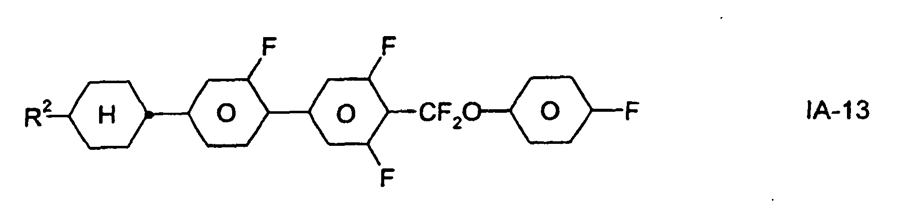 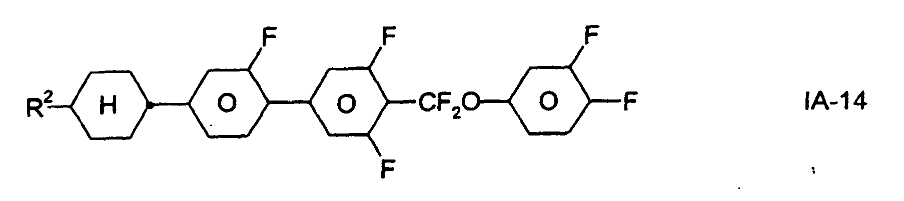 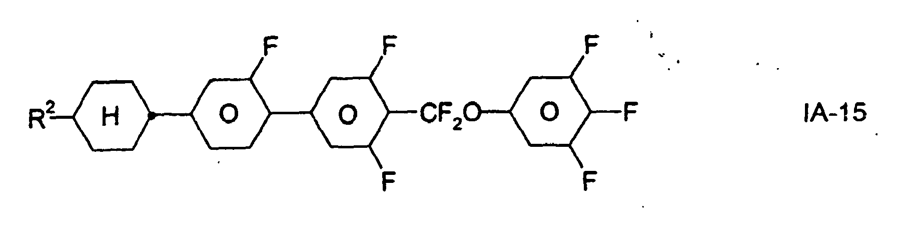 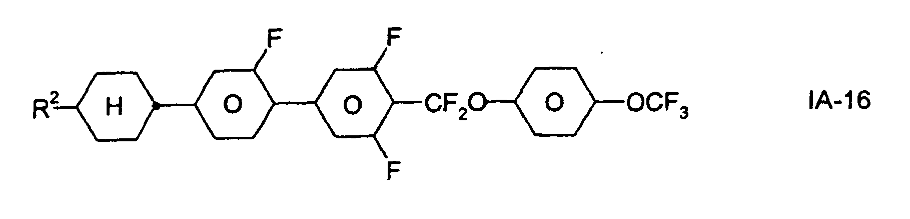 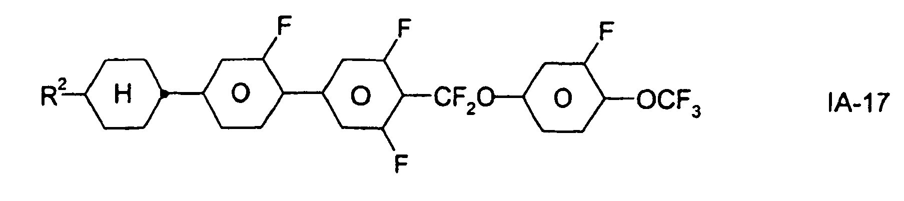 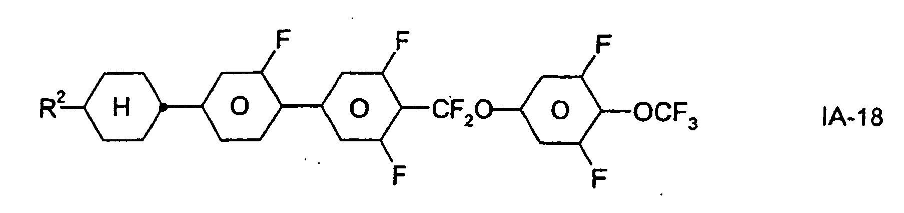 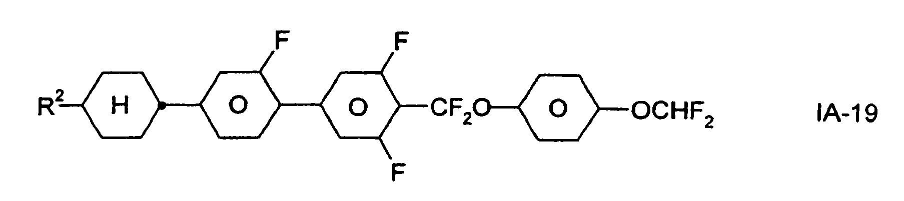 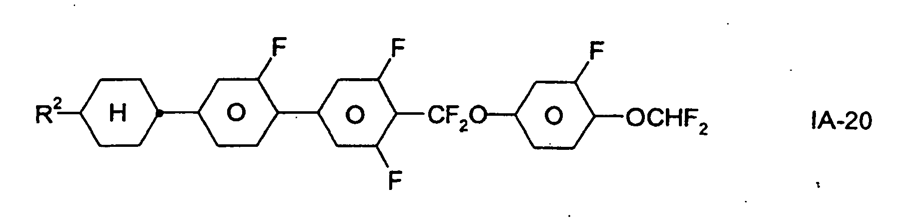 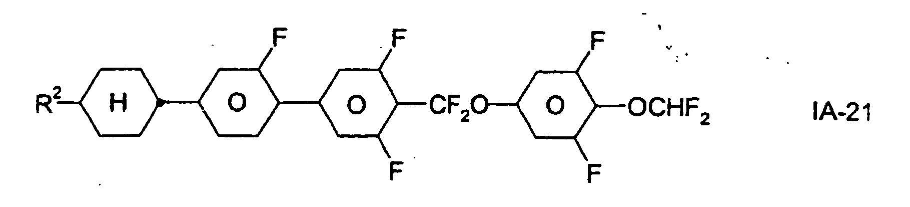 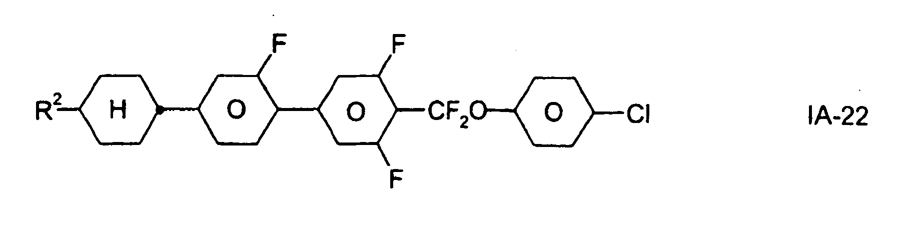 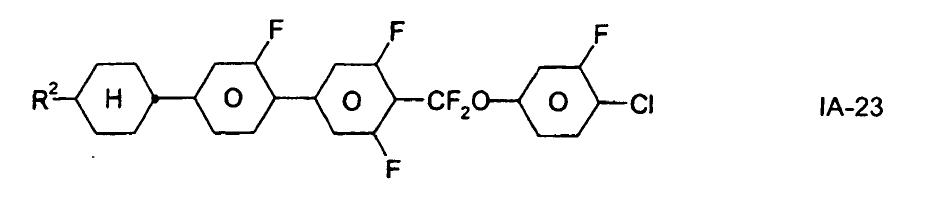 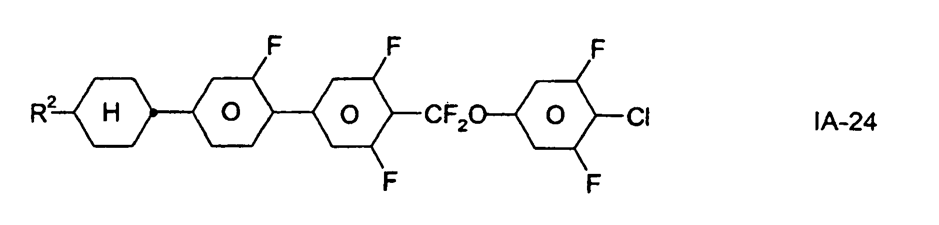 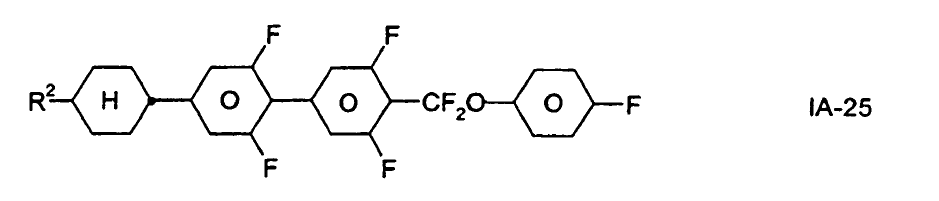 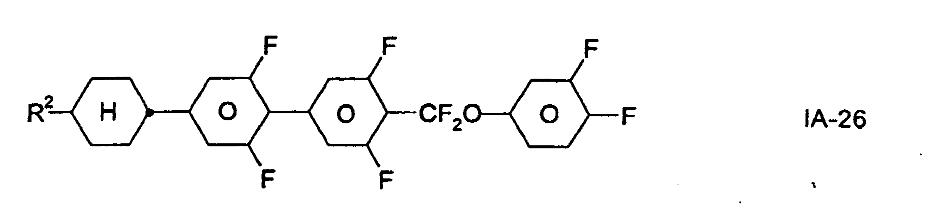 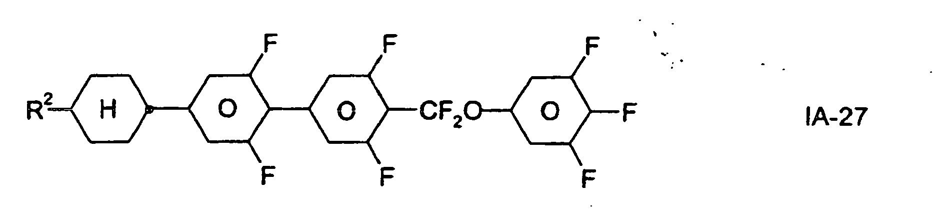 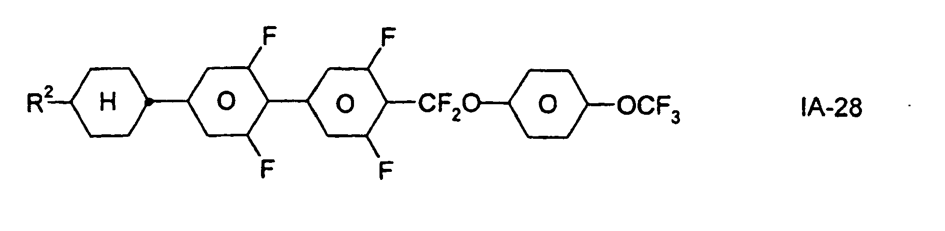 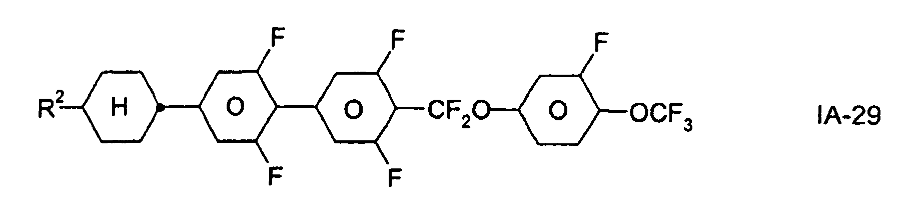 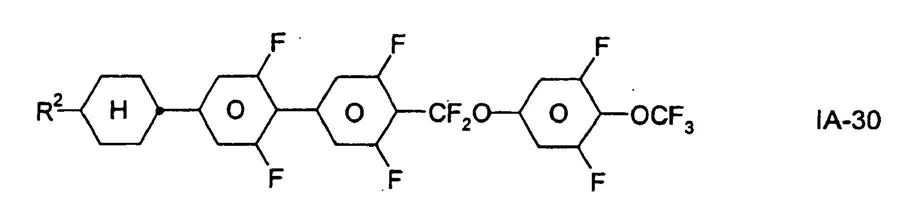 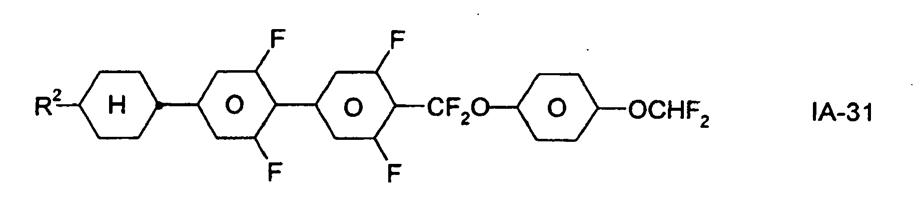 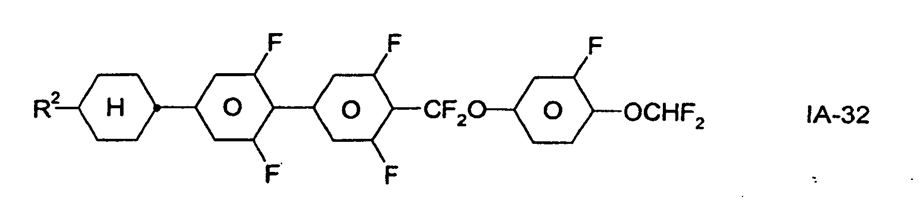 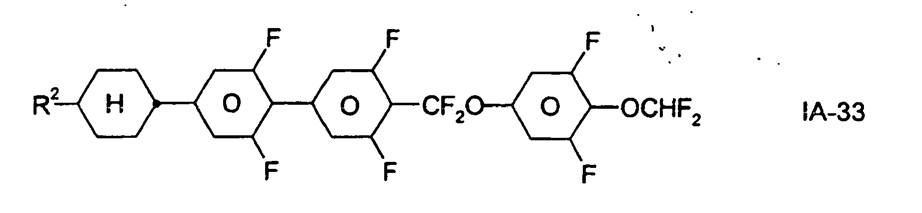 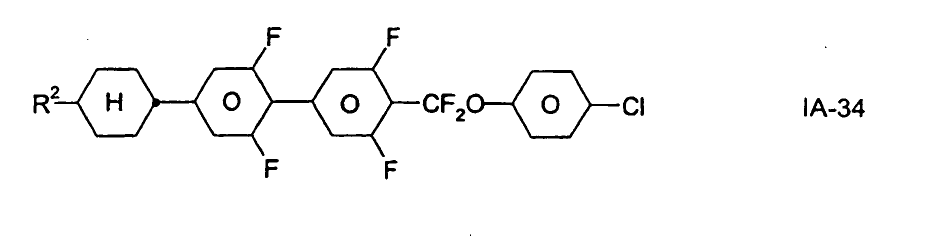 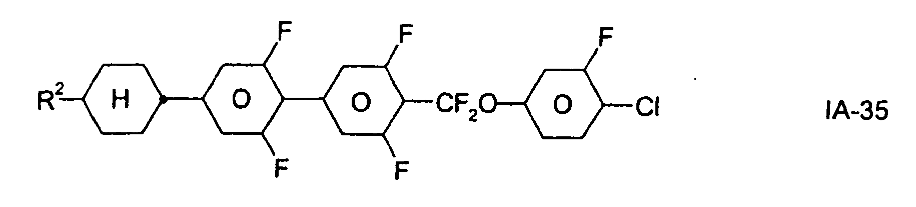 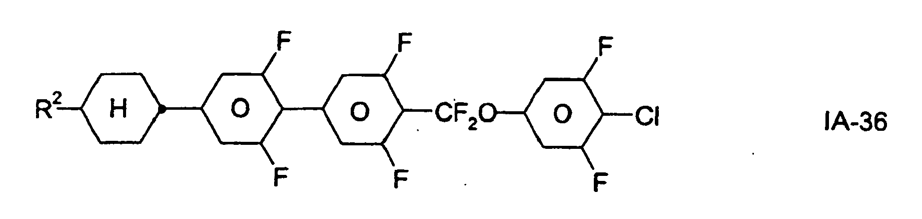 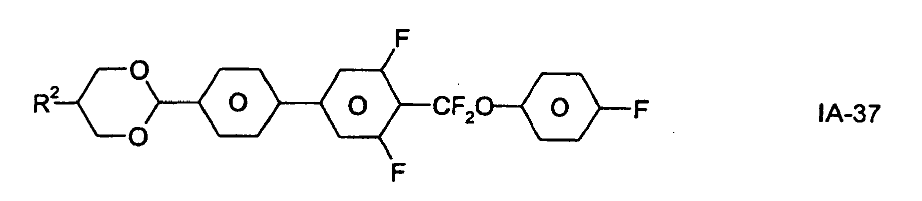 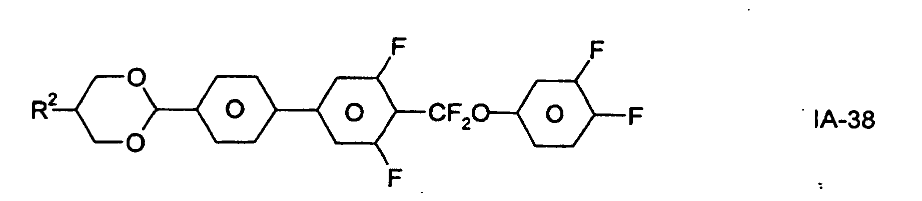 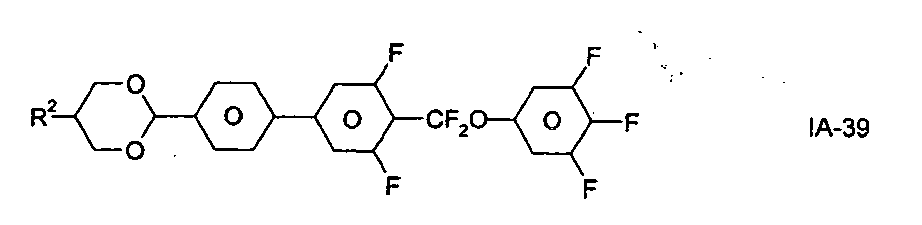 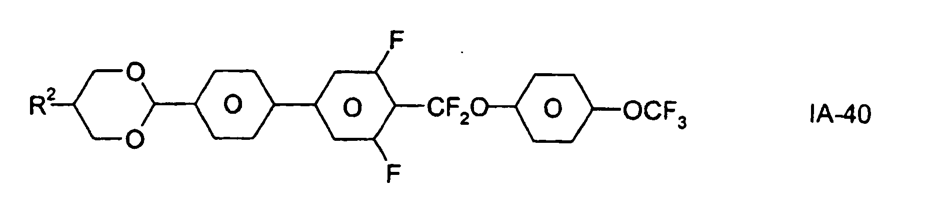 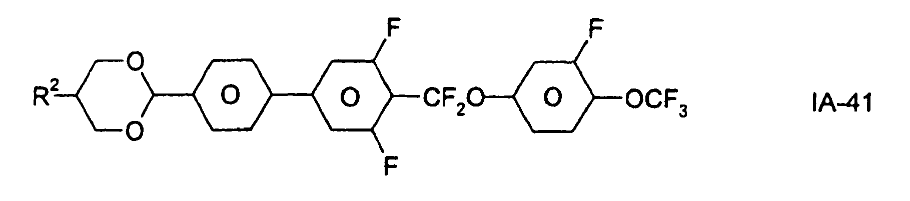 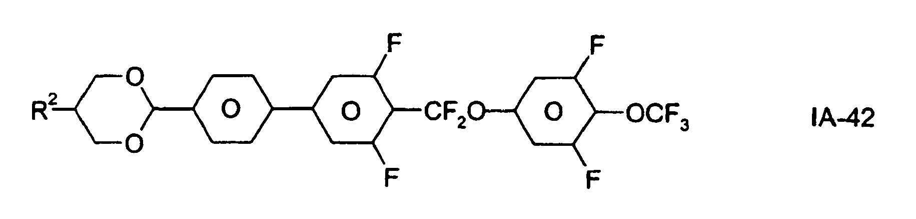 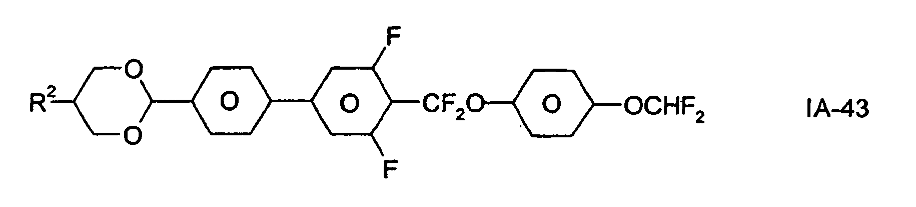 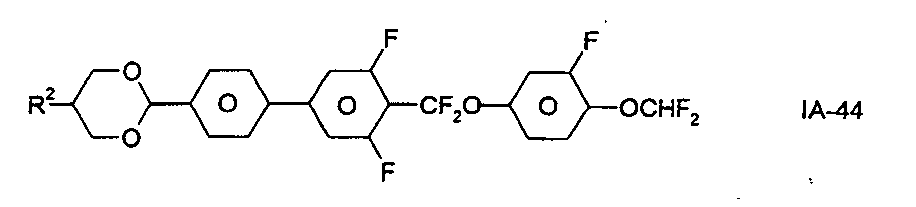 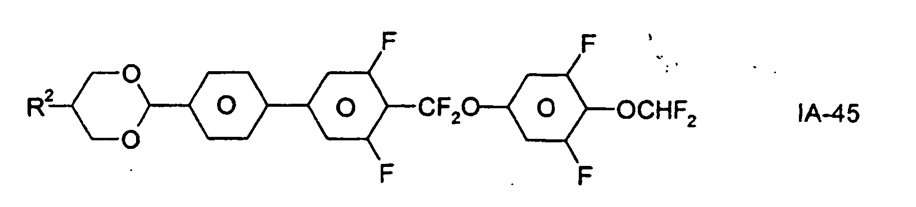 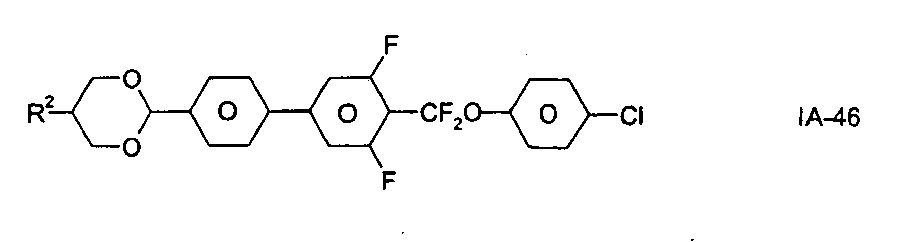 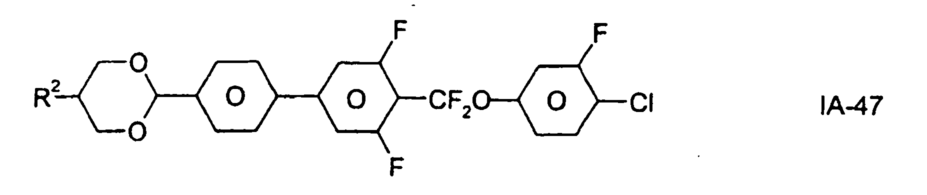 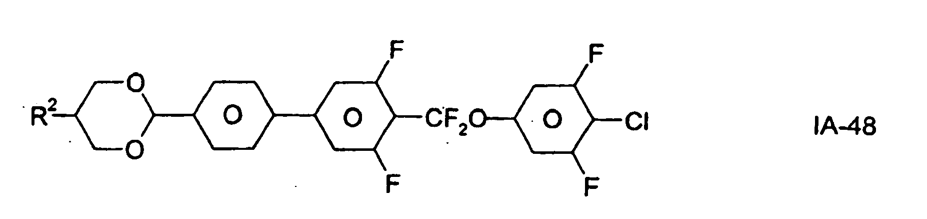 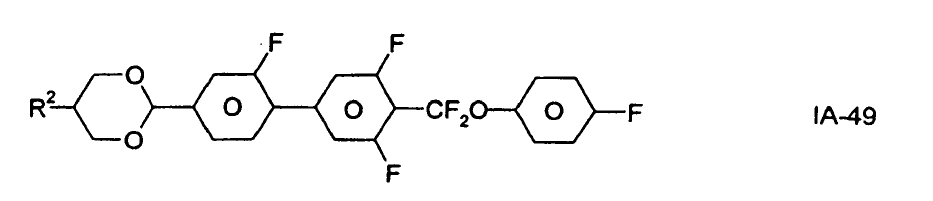 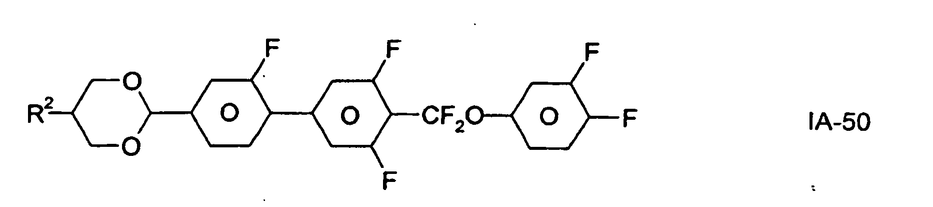 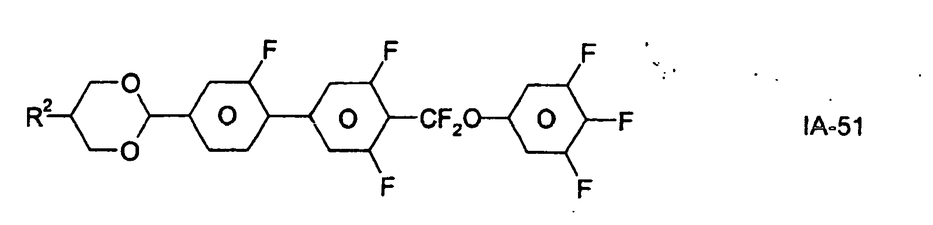 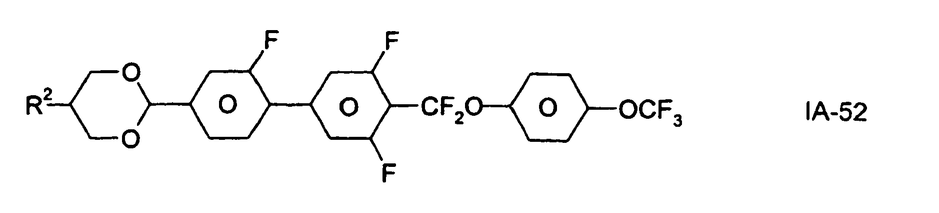 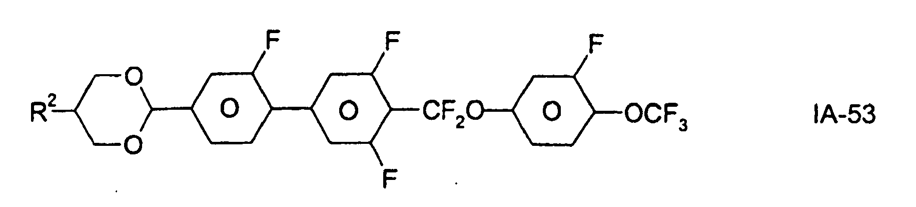 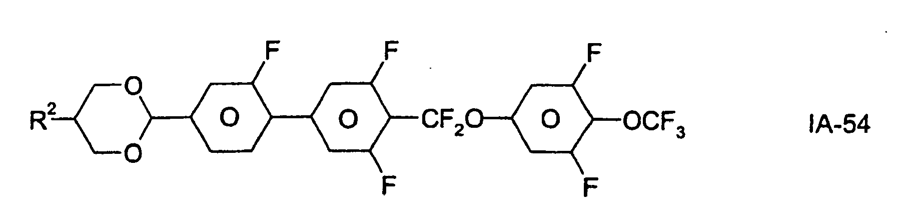 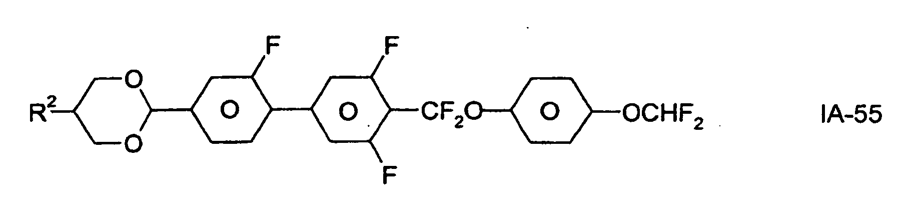 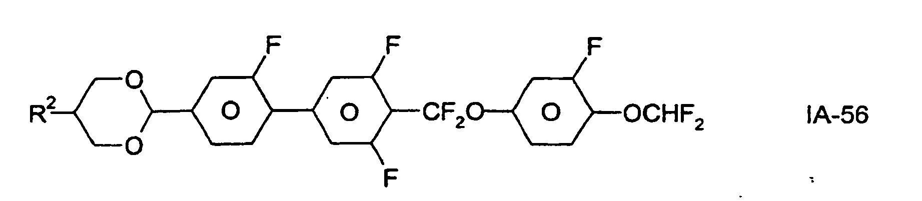 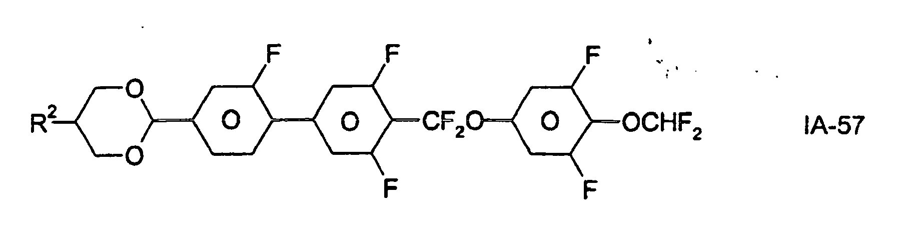 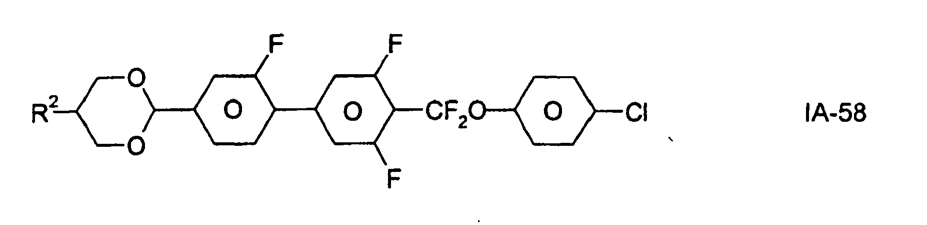 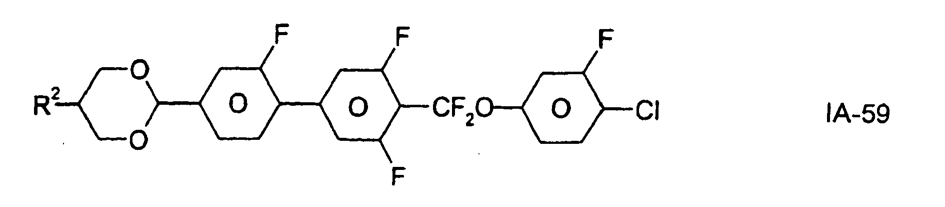 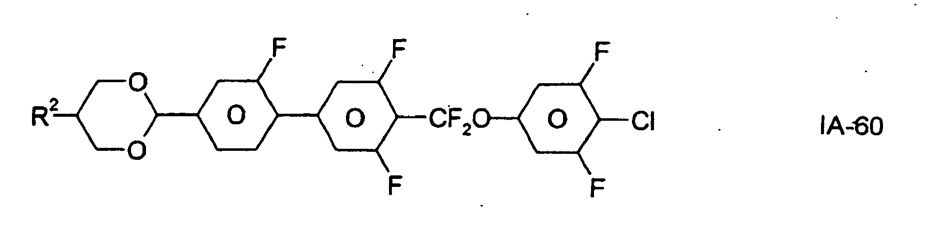 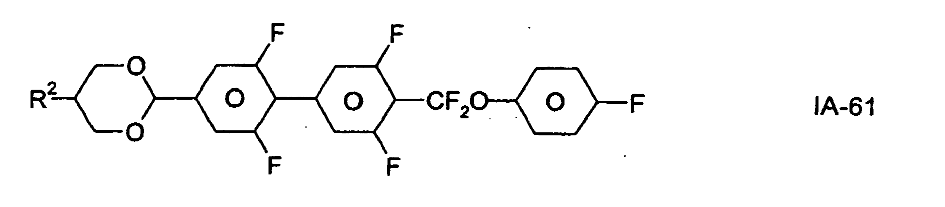 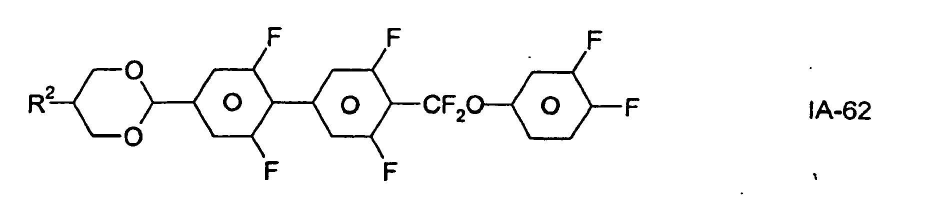 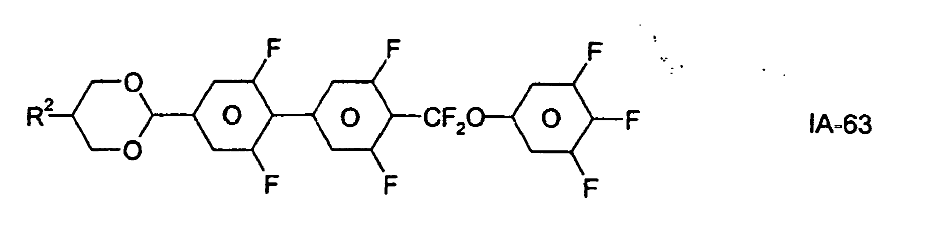 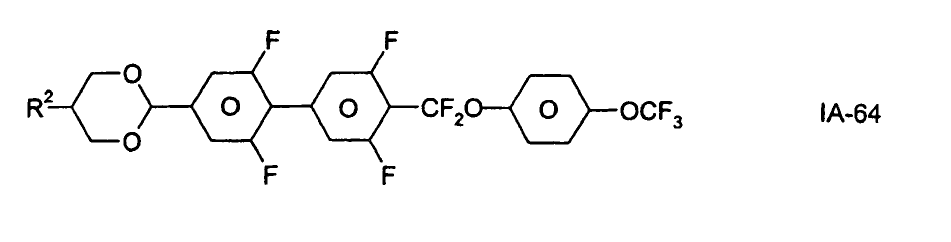 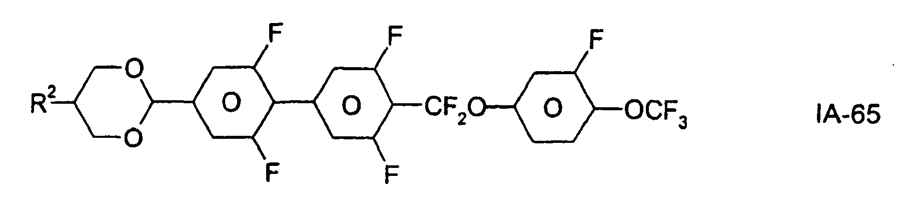 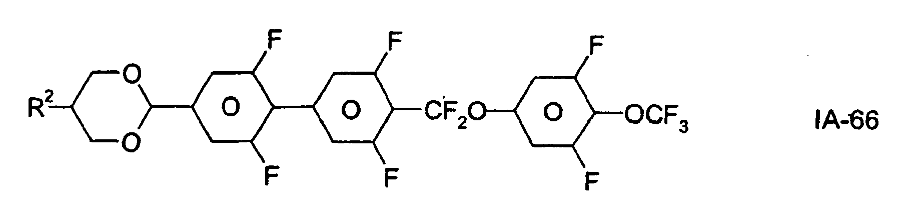 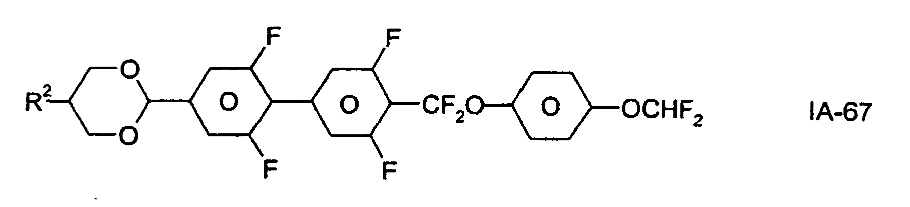 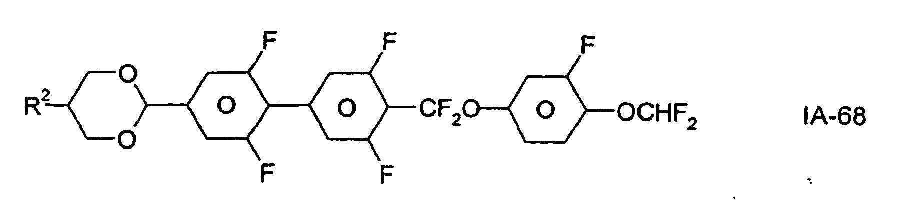 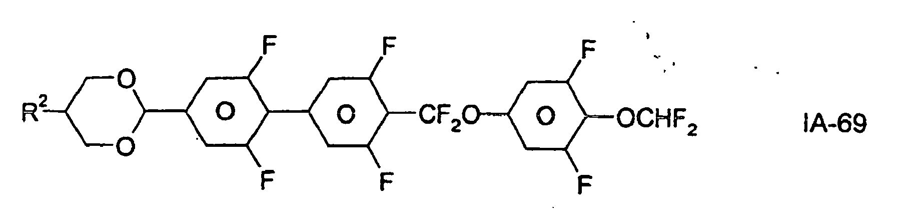 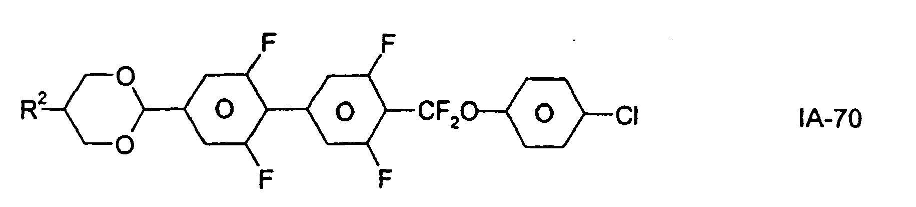 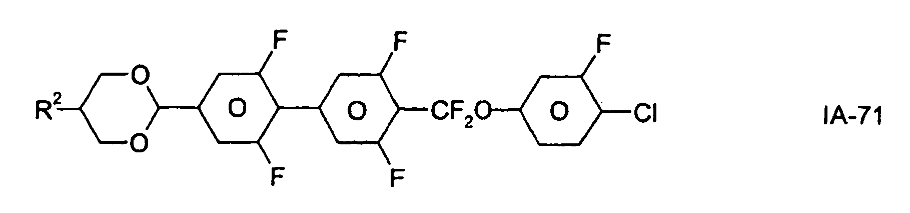 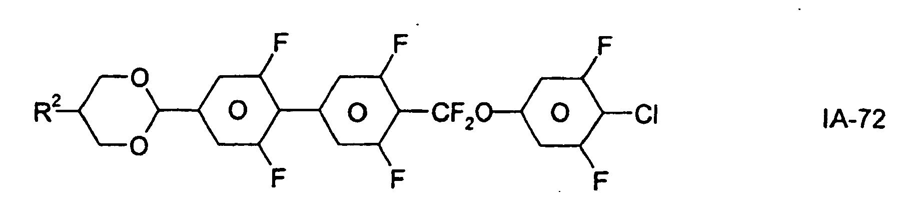 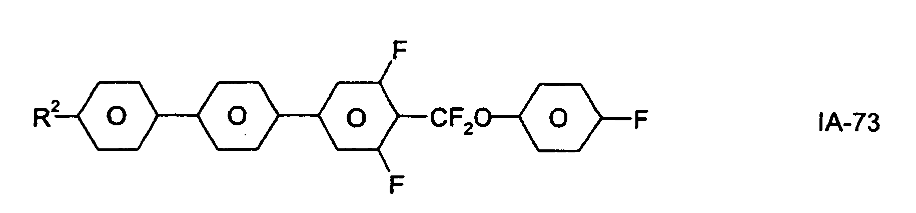 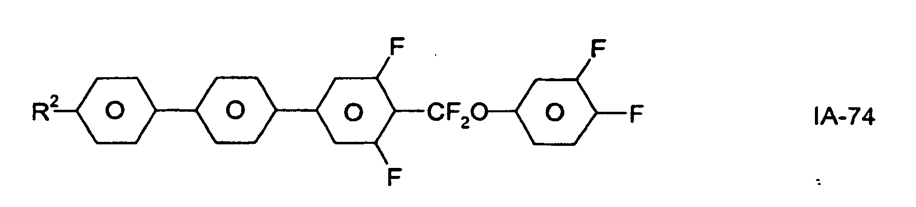 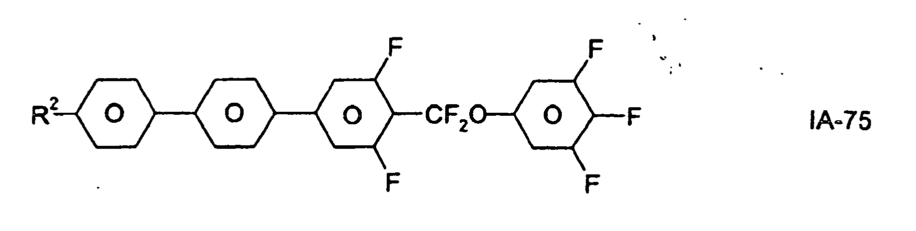 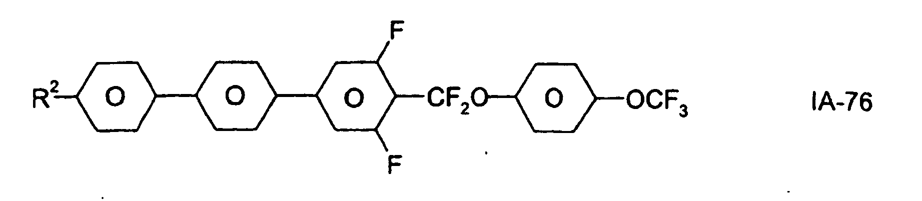 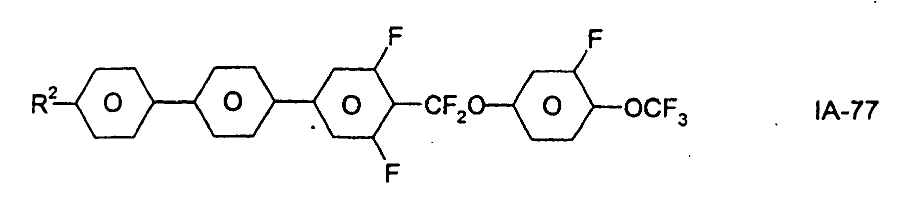 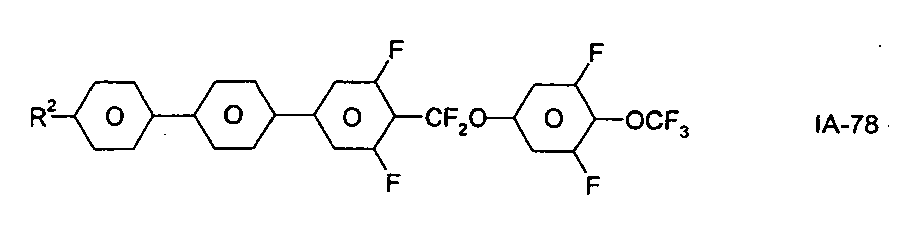 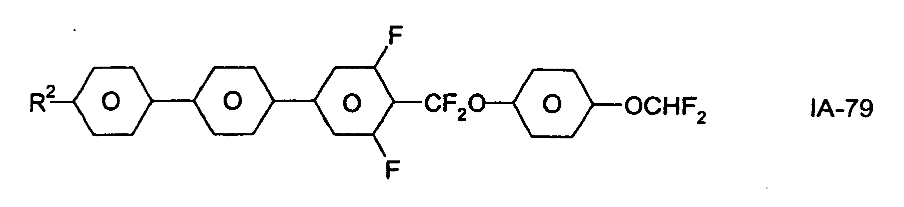 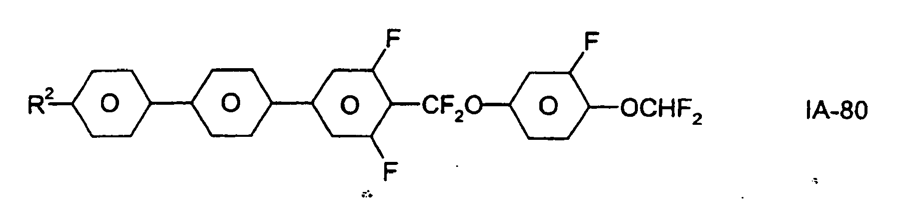 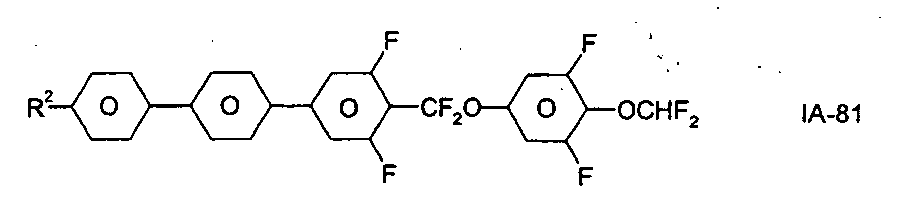 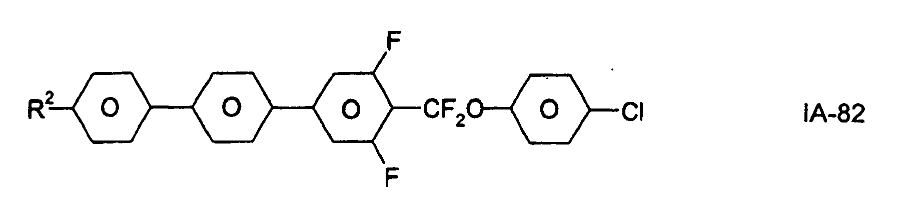 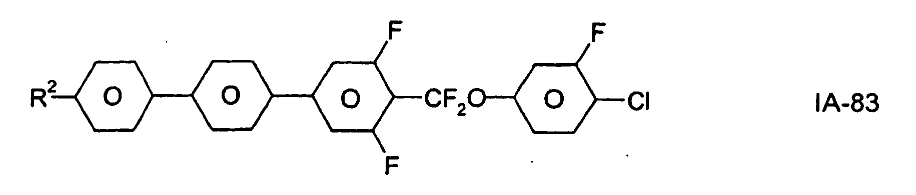 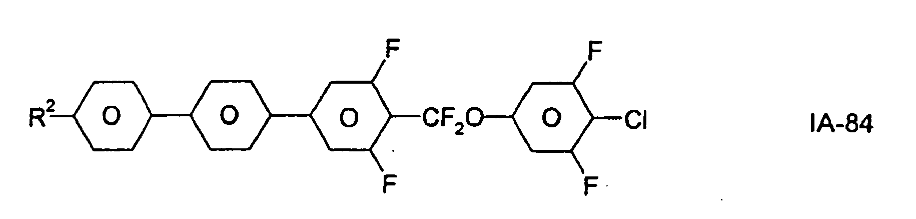 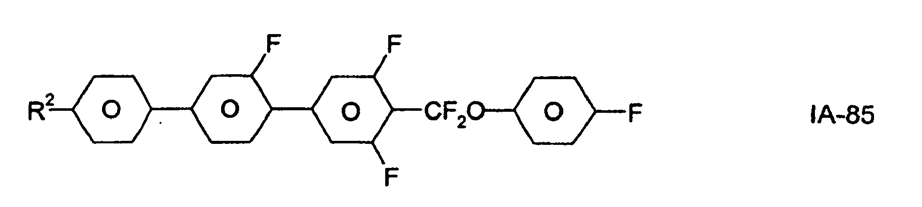 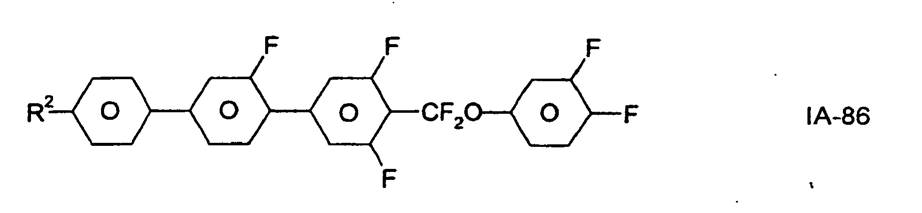 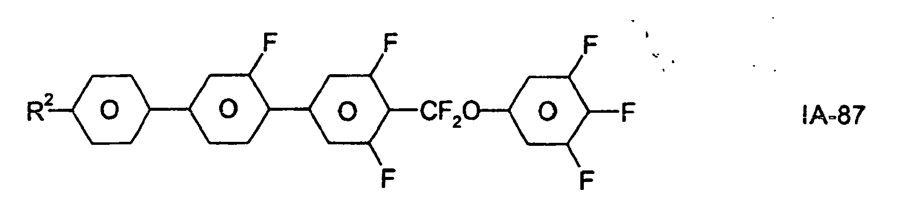 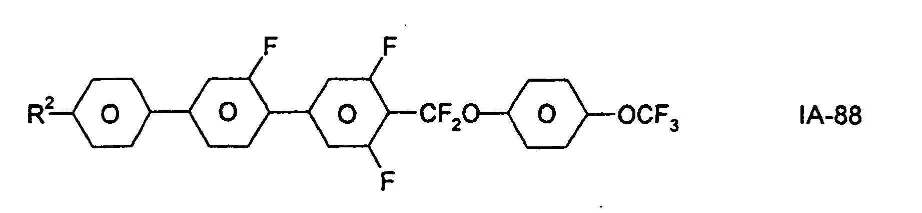 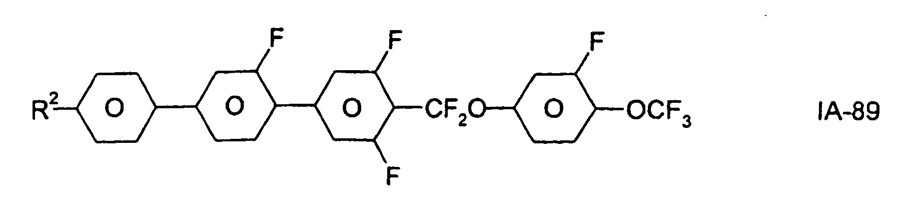 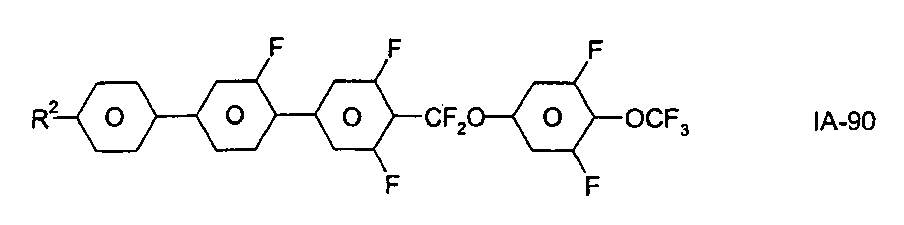 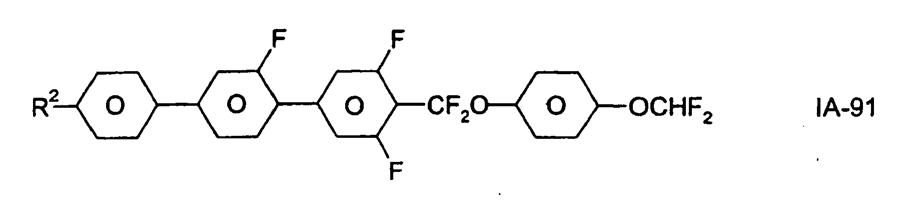 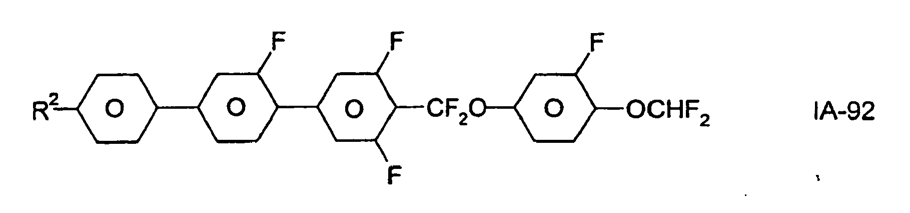 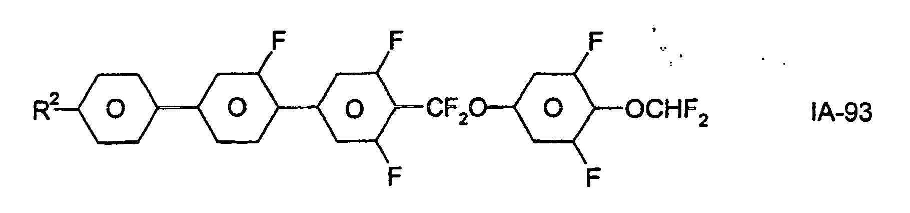 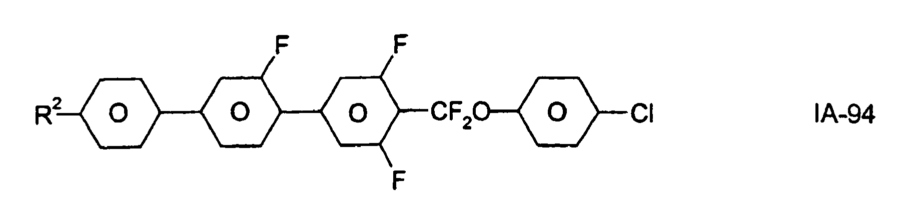 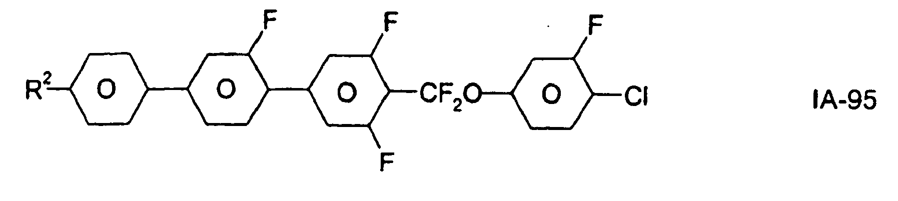 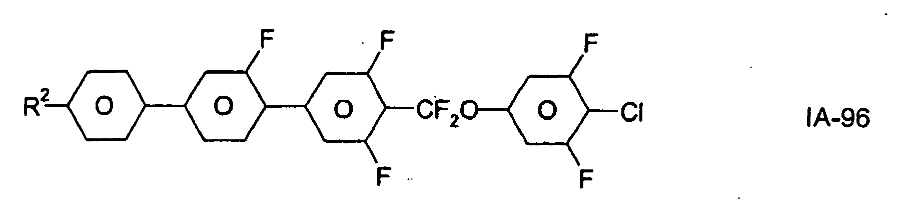 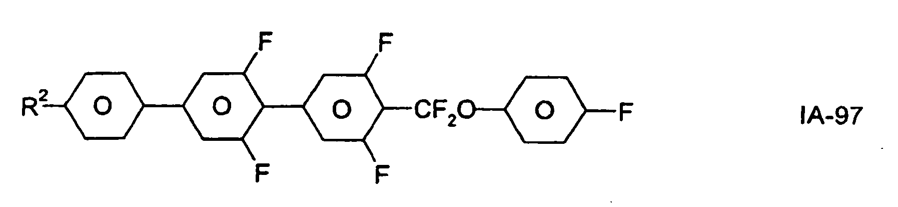 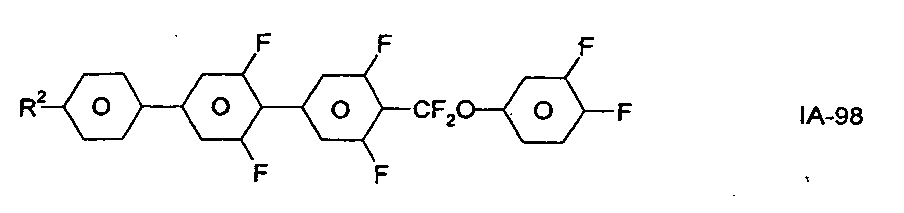 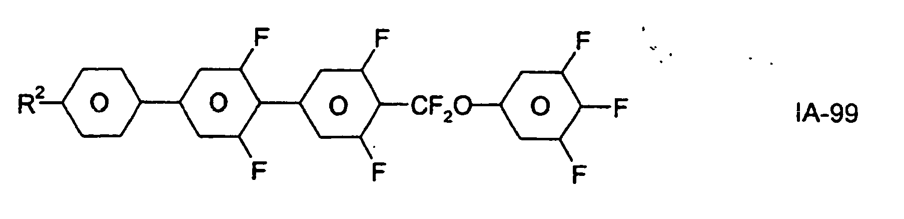 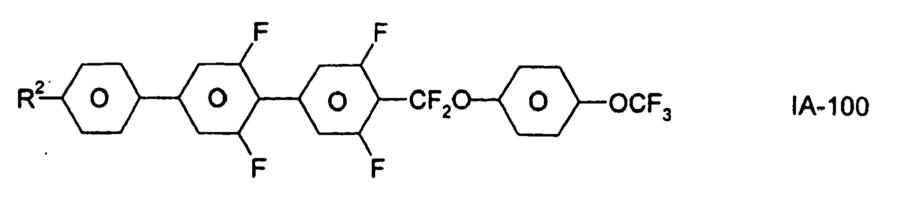 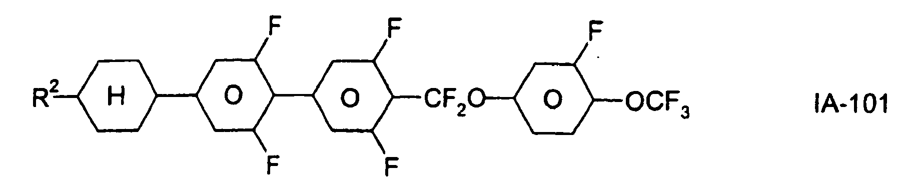 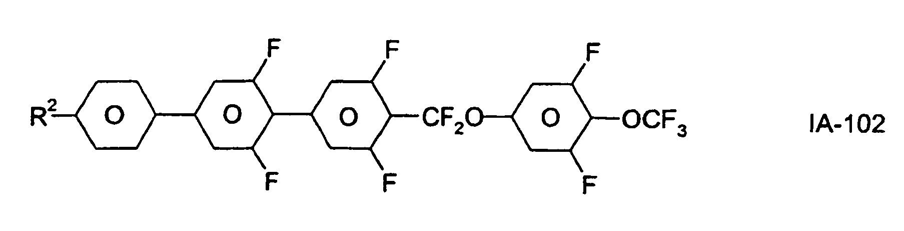 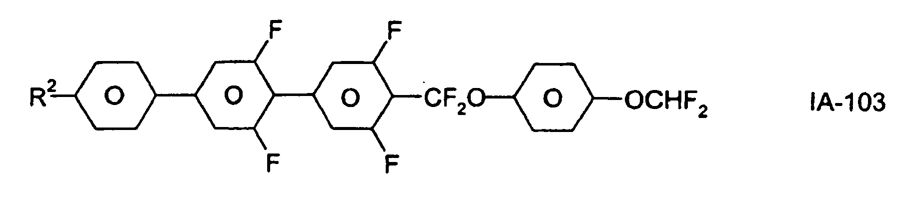 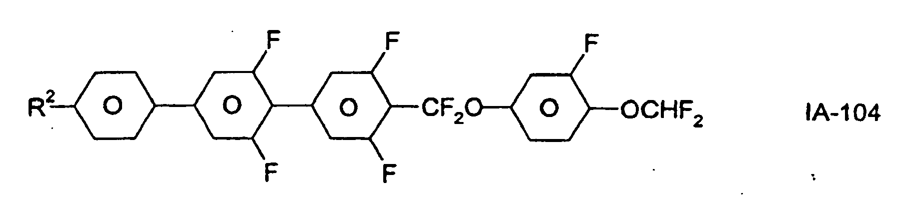 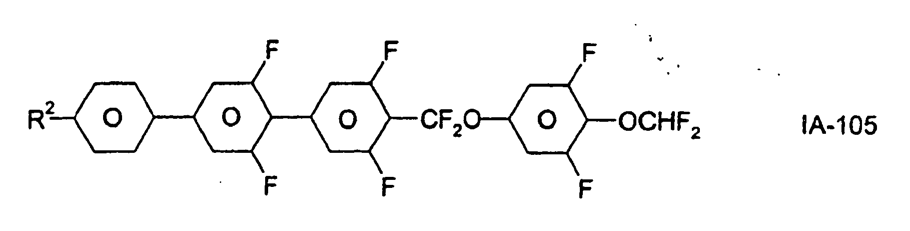 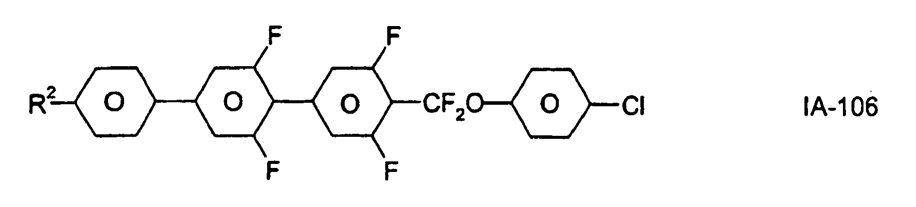 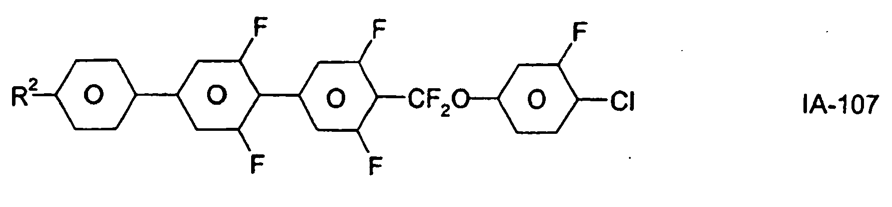 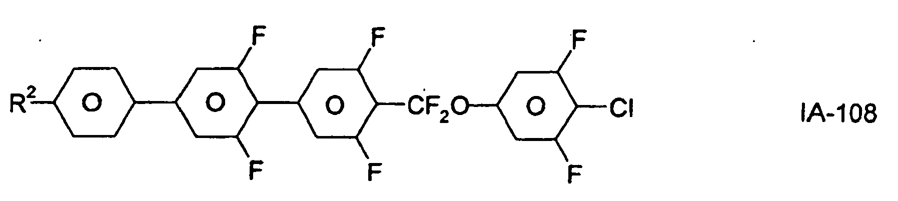 worin R² die oben angegebenen Bedeutungen hat.

Von diesen bevorzugten Verbindungen sind besonders bevorzugt solche der Formeln IA-1 bis IA-36, besonders bevorzugt die der Formeln IA-2, IA-3, IA-5, IA-6 und IA-14, IA-15 und IA-18, insbesondere die der Formeln IA-3 und IA-15.

R² bedeutet vorzugsweise in den Verbindungen der Formeln IA und IA-1 bis IA-108 H, geradkettiges Alkyl mit 1 bis 7 C-Atomen, insbesondere CH₃, C₂H₅, n-C₃H₇, n-C₄H₉, n-C₅H₁₁, n-C₆H₁₃, n-C₇H₁₅, ferner 1 E- oder 3-Alkenyl, insbesondere CH₂=CH, CH₃CH=CH, CH₂=CHCH₂CH₂, CH₃CH=CH-CH₂CH₂.

Bevorzugte Ausführungsformen sind im folgenden angegeben:
- Das Medium enthält ein, zwei oder mehr Verbindungen ausgewählt aus der Gruppe der Formeln IA-1 bis IA-108;
- Das Medium enthält vorzugsweise jeweils eine oder mehrere, vorzugsweise zwei oder drei, Verbindungen (Homologen) der Formeln I-10 und/oder I-19;
- Das Medium enthält vorzugsweise jeweils eine oder mehrere, vorzugsweise zwei oder drei, Verbindungen (Homologen) der Formel IA-3;
- Das Medium enthält zusätzlich eine oder mehrere Verbindungen ausgewählt aus der Gruppe bestehend aus den allgemeinen Formeln II bis VI: 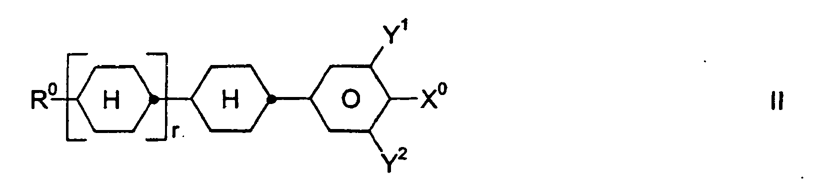 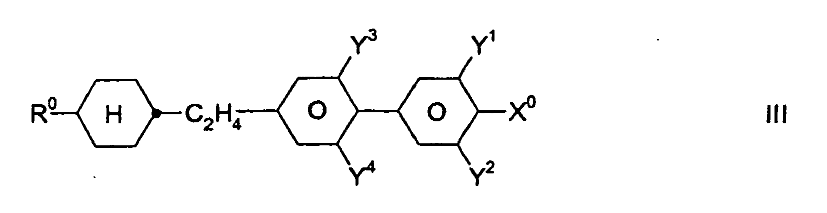 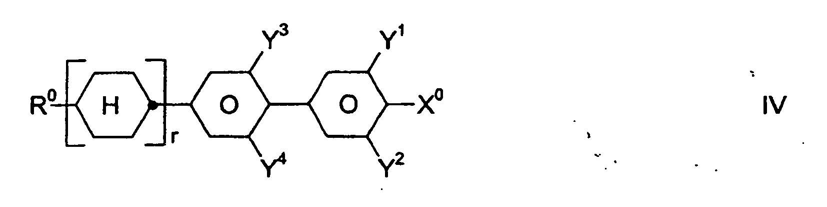 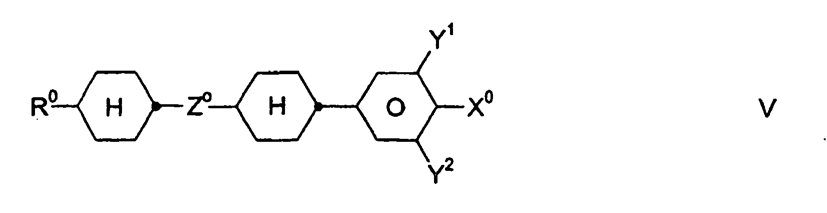 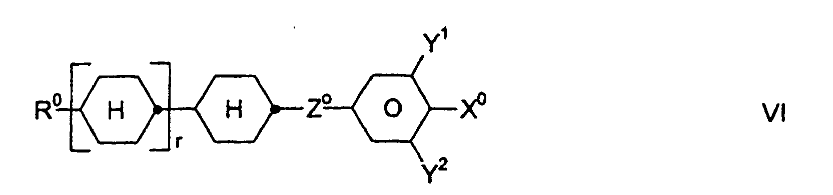
worin die einzelnen Reste die folgenden Bedeutungen haben:
- R⁰: n-Alkyl, Oxaalkyl, Alkoxy, Fluoralkyl oder Alkenyl mit jeweils bis zu 9 C-Atomen,
- X⁰: F, CI, halogeniertes Alkyl, halogeniertes Alkenyl, halogeniertes Alkenyloxy oder Alkoxy mit bis zu 6 C-Atomen,
- Z⁰: -C₂F₄-, -CF=CF-, -CH=CF-, -CF=CH-, -C₂H₄-, -(CH₂)₄-, -OCHF-, -CHFO-, -CH=CH-, -O-CO-, -CF₂O-, -OCF₂-, -OCH₂- oder -CH₂O-,
- Y¹ und Y²: jeweils unabhängig voneinander H oder F,
- r: 0 oder 1,
wobei die Verbindung der Formel VI nicht mit der Formel I identisch ist.

Die Verbindung der Formel IV ist vorzugsweise 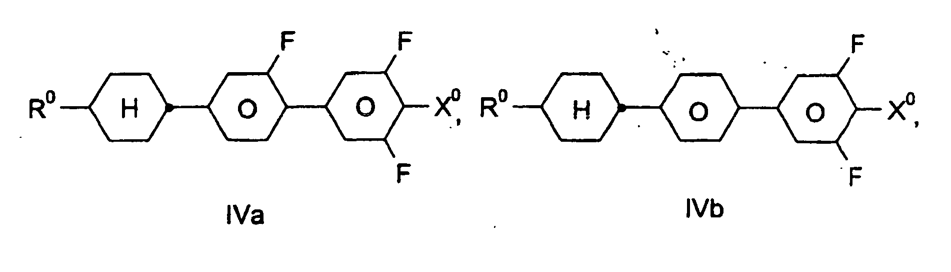 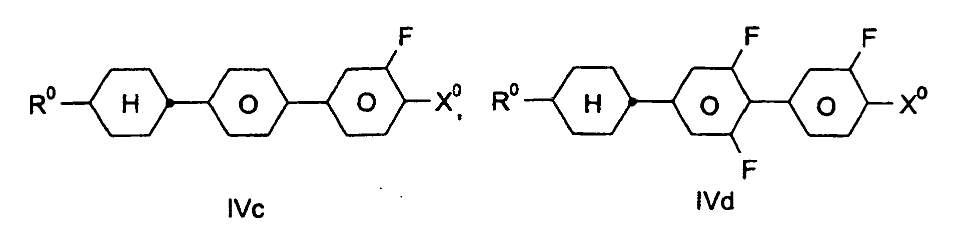 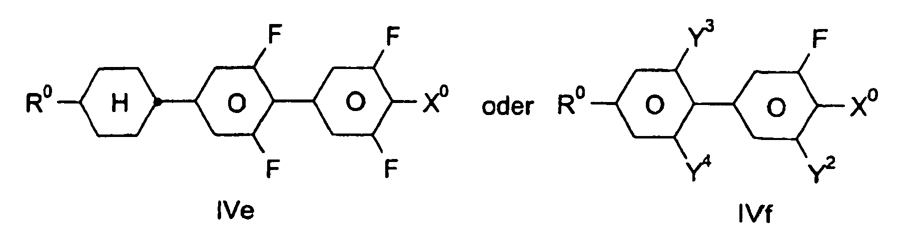
- Das Medium enthält zusätzlich eine oder mehrere Verbindungen ausgewählt aus der Gruppe bestehend aus den allgemeinen Formeln VII bis XII: 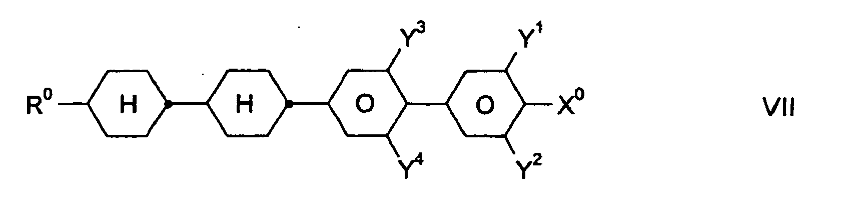 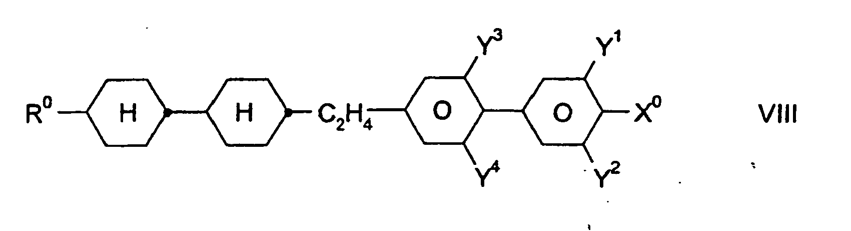 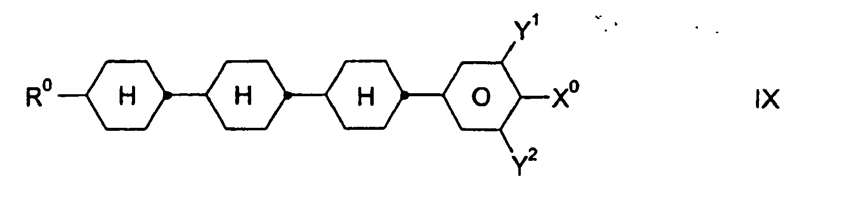 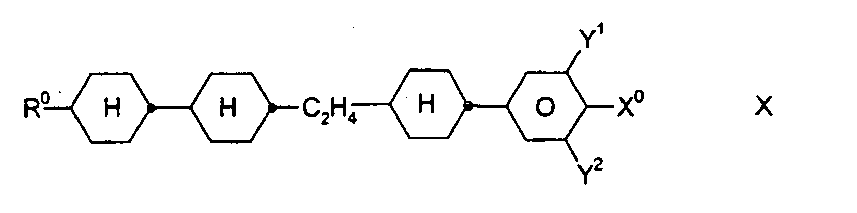 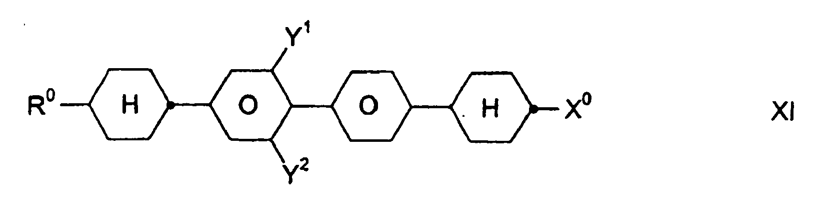 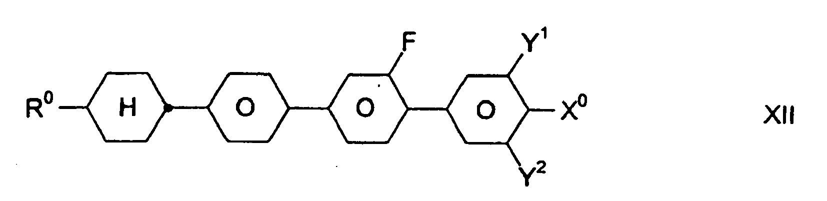 worin R⁰, X⁰, Y¹ und Y² jeweils unabhängig voneinander eine der in Anspruch 4 angegebenen Bedeutung haben. Y³ und Y⁴ bedeuten jeweils unabhängig voneinander H oder F. X⁰ ist vorzugsweise F, CI, CF₃,OCF₃ oder OCHF₂. R⁰ bedeutet vorzugsweise Alkyl, Oxaalkyl, Alkoxy, Fluoralkyl oder Alkenyl mit jeweils bis zu 6 C-Atomen.
- Das Medium enthält zusätzlich eine oder mehrere Ester-Verbindungen der Formeln Ea bis Ef, 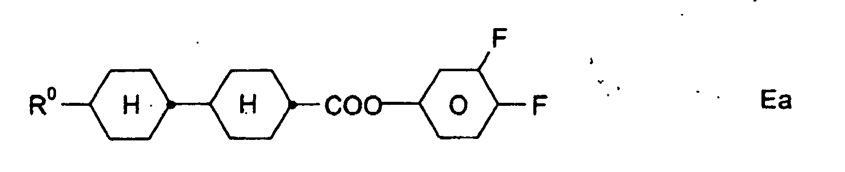 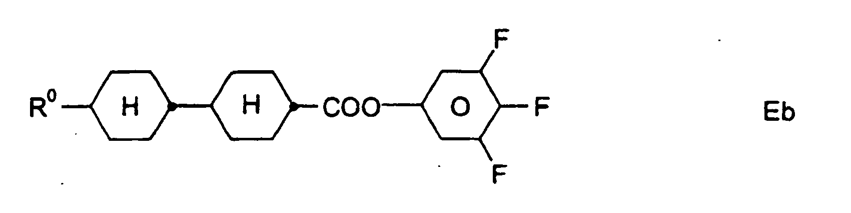 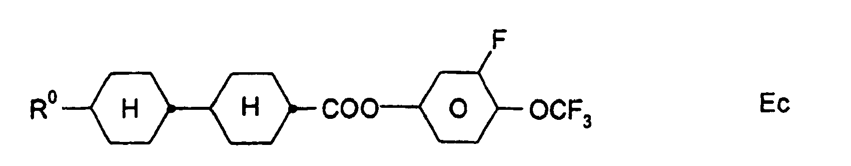 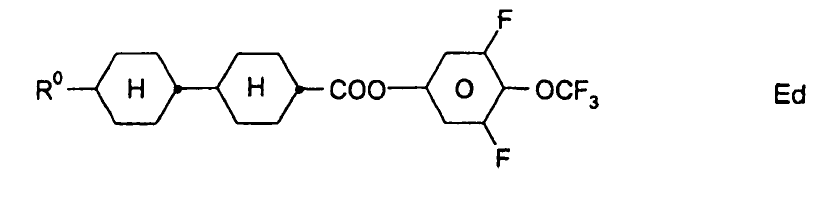 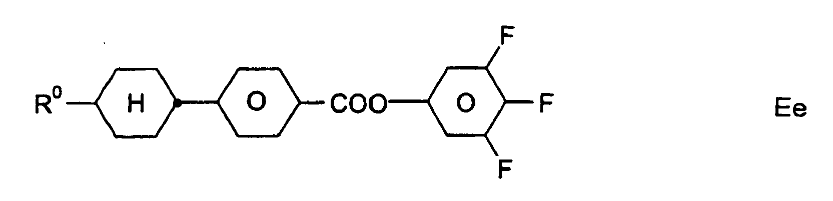 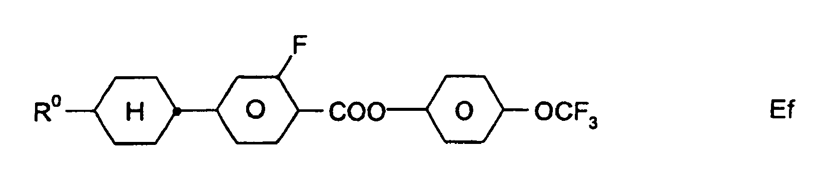 worin R⁰ die in Anspruch 4 angegebene Bedeutung hat;
- Das Medium enthält ein oder mehrere Verbindungen mit einem Dioxanring der Formeln D1 und/oder D2 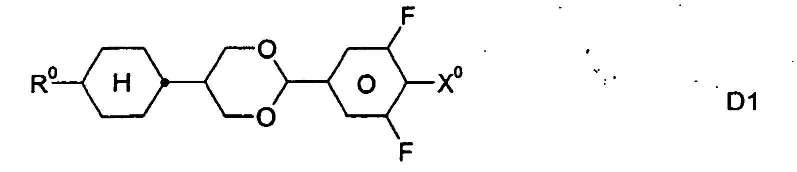 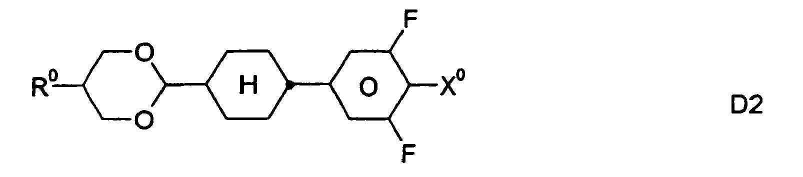 worin R⁰ und X⁰ die in Anspruch 4 angegebenen Bedeutungen haben. X° bedeutet vorzugsweise F oder OCF₃, R⁰ ist vorzugsweise Alkyl.
- Der Anteil der Verbindung der Formeln Ea bis Ef ist vorzugsweise 10-30 Gew.%, insbesondere 15-25 Gew.%;
- Der Anteil an Verbindungen der Formeln IA und I bis VI zusammen beträgt im Gesamtgemisch mindestens 50 Gew.%;
- Der Anteil an Verbindungen der Formel I beträgt im Gesamtgemisch 5 bis 40, besonders bevorzugt 10 bis 30 Gew.%;
- Der Anteil an Verbindungen der Formel IA beträgt im Gesamtgemisch 5 bis 40, besonders bevorzugt 10 bis 30 Gew.%;
- Der Anteil an Verbindungen der Formeln II bis VI im Gesamtgemisch beträgt 30 bis 80 Gew.%; 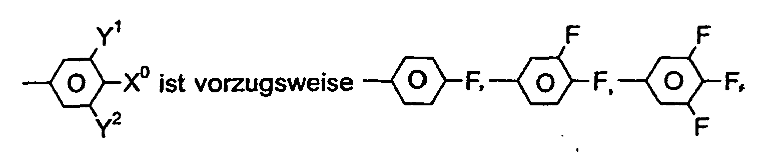 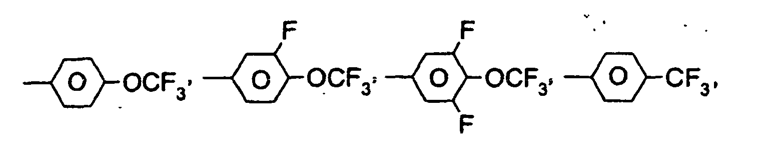 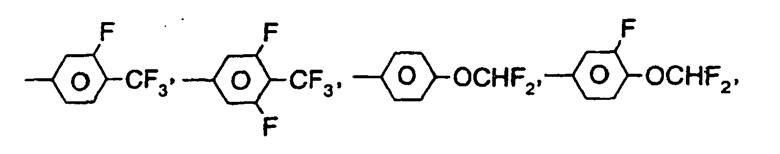 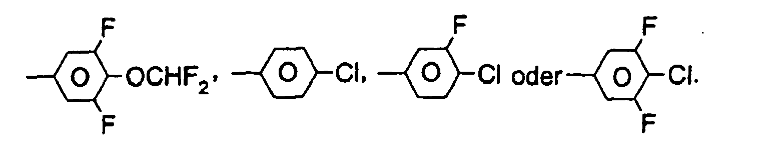
- Das Medium enthält Verbindungen der Formeln II, III, IV, V oder VI;
- R⁰ ist geradkettiges Alkyl oder Alkenyl mit 2 bis 7 C-Atomen;
- Das Medium besteht im wesentlichen aus Verbindungen der Formeln IA und I und ein oder mehreren Verbindungen ausgewählt aus der Gruppe der Verbindungen II bis VI, wobei im wesentlichen bedeutet ≥ 60 Gew.-%;
- Das Medium enthält weitere Verbindungen, vorzugsweise ausgewählt aus der folgenden Gruppe bestehend aus den allgemeinen Formeln XIII bis XVI: 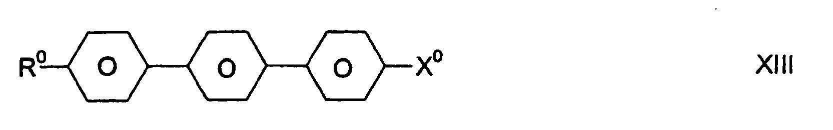 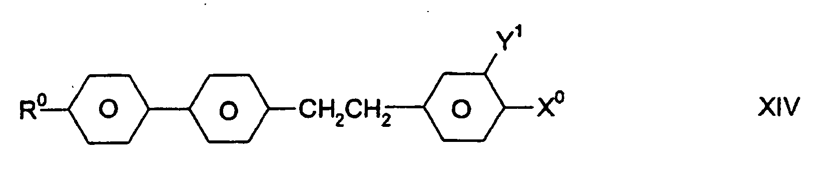 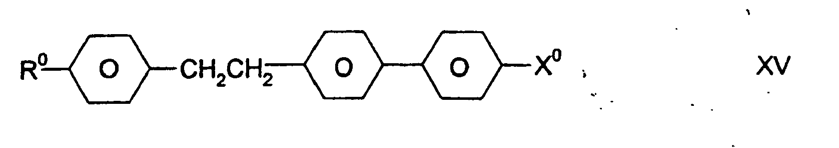 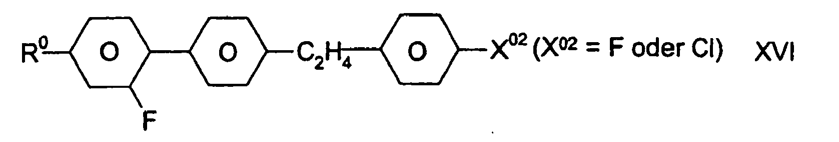 worin R⁰ und X⁰ die oben angegebene Bedeutung haben und die 1,4-Phenylenringe durch CN, Chlor oder Fluor substituiert sein können. Vorzugsweise sind die 1,4-Phenylenringe ein- oder mehrfach durch Fluoratome substituiert.
- Das Medium enthält zusätzlich ein oder mehrere Verbindungen der Formeln XVII und/oder XVIII, 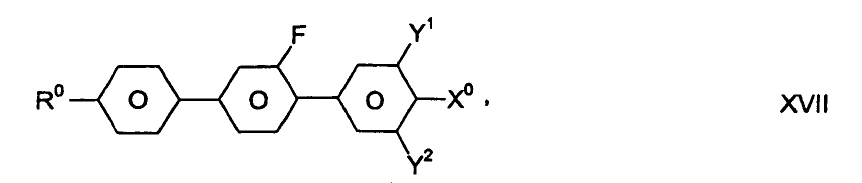 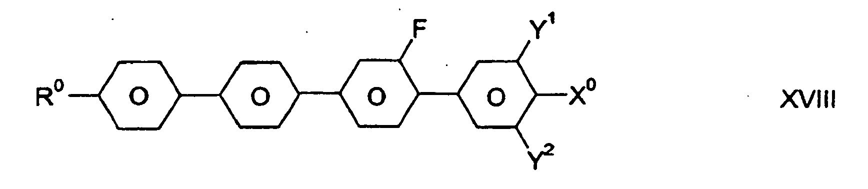 worin R⁰,X⁰, Y¹, Y² die oben angegebenen Bedeutungen haben.

Der Anteil der Verbindungen der Formeln XVII und/oder XVIII beträgt vorzugsweise 2-30 Gew.-%;
- Das Medium enthält zusätzlich ein, zwei, drei oder mehr, vorzugsweise zwei oder drei, Verbindungen der Formel 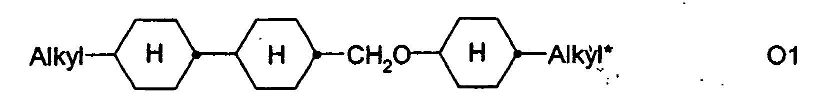 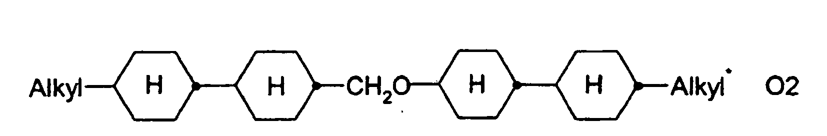 worin "Alkyl" und "Alkyl*" jeweils unabhängig voneinander ein geradkettiger oder verzweigter Alkylrest mit 1-9 C-Atomen bedeutet.

Der Anteil der Verbindungen der Formeln O1 und/oder O2 in den erfindungsgemäßen Mischungen beträgt vorzugsweise 5-10 Gew.%.
- Das Medium enthält vorzugsweise 5-35 Gew.% der Verbindung IVa und/oder IVf.
- Das Medium enthält vorzugsweise eine, zwei oder drei Verbindungen der Formel IVa, worin X⁰ F oder OCF₃ bedeutet.
- Das Medium enthält vorzugsweise ein oder mehrere Verbindungen der Formeln IIa bis IIg, 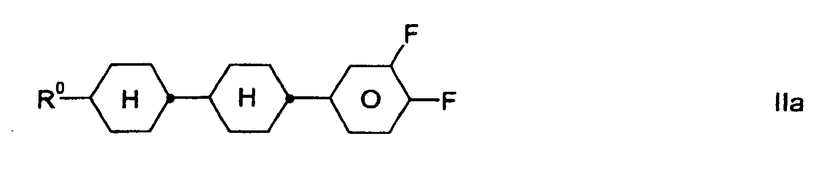 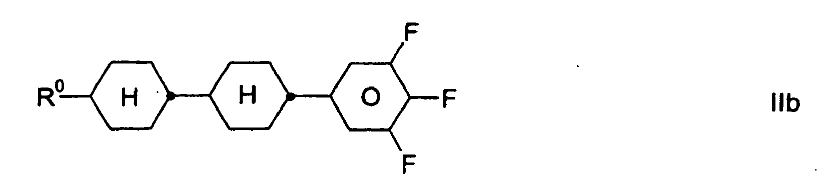 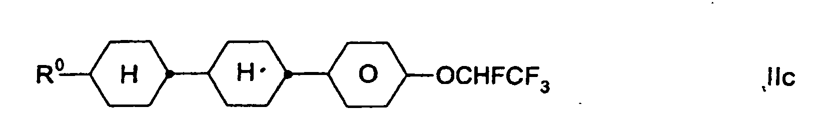 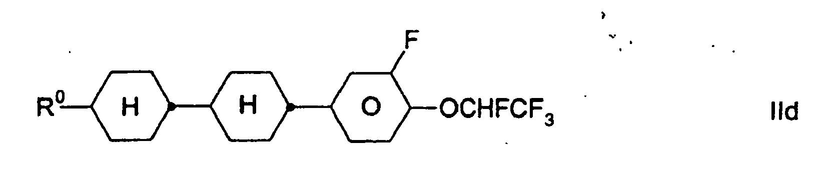 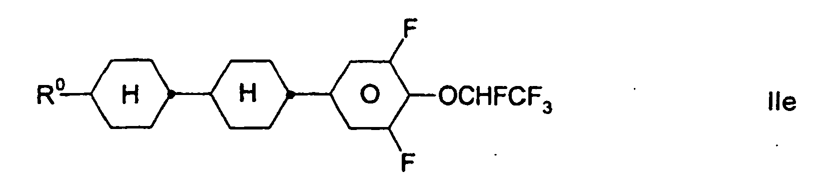 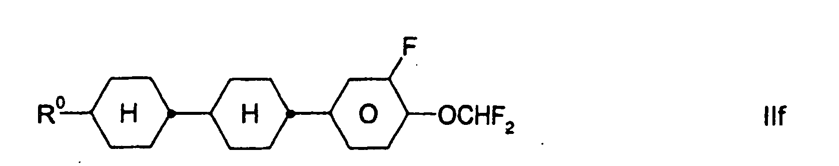 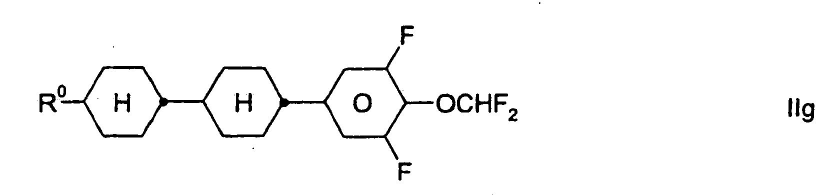 worin R⁰ die oben angegebenen Bedeutungen hat. In den Verbindungen der Formeln IIa-IIg bedeutet R⁰ vorzugsweise H, Methyl, Ethyl, n-Propyl, n-Butyl oder n-Pentyl, ferner n-Hexyl oder n-Heptyl.
- Das Gewichtsverhältnis (I + IA) : (II + III + IV + V + VI) ist vorzugsweise 1 : 10 bis 10 : 1.
- Das Medium besteht zu ≥ 60 Gew.-% aus Verbindungen ausgewählt aus der Gruppe bestehend aus den allgemeinen Formeln IA und 1 bis XVIII.
- Der Anteil der Verbindungen der Formel IVb und/oder IVc, worin X⁰ Fluor und R⁰ C₂H₅, n-C₃H₇, n-C₄H₉ oder n-C₅H₁₁ bedeutet, beträgt im Gesamtgemisch 2 bis 20 Gew.%, insbesondere 2 bis 15 Gew.%;
- Das Medium enthält vorzugsweise ein, zwei oder drei, ferner vier, Homologe der Verbindungen ausgewählt aus der Gruppe H1 bis H18 (n = 1-12): 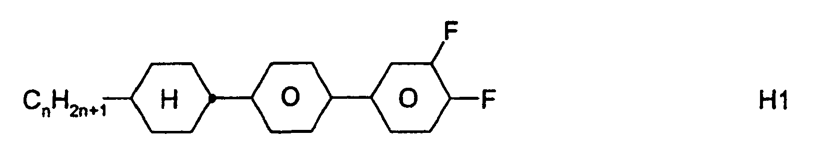 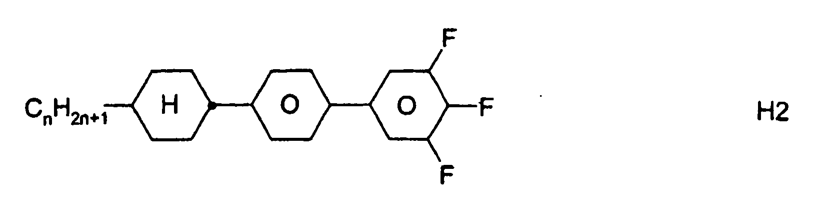 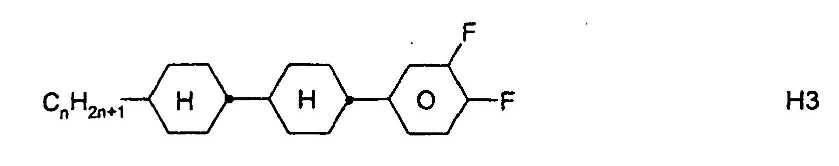 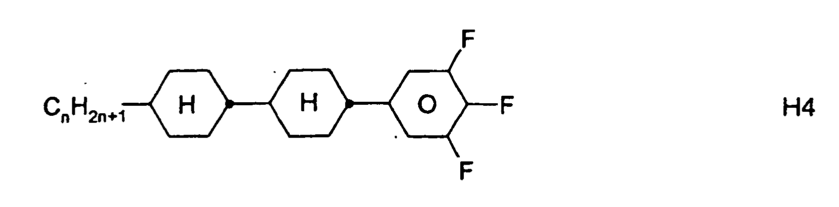 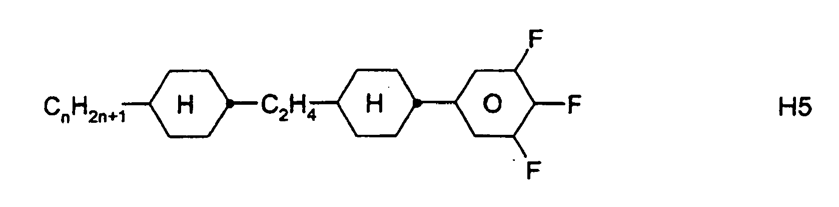 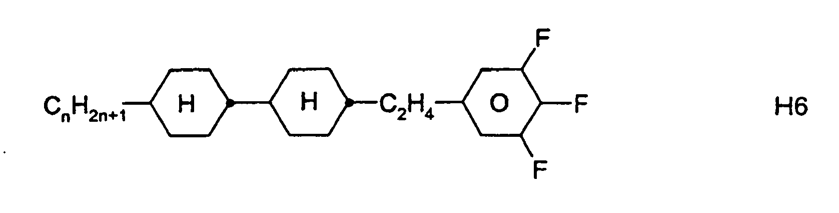 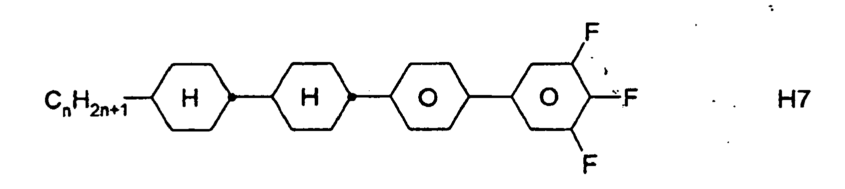 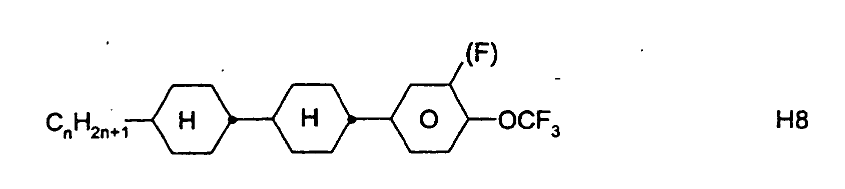 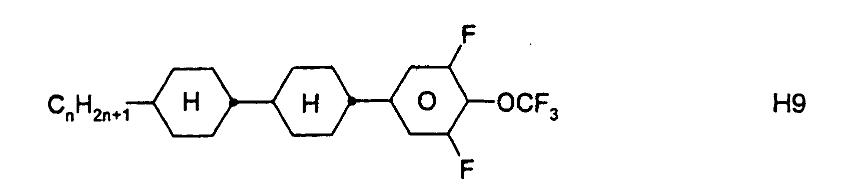 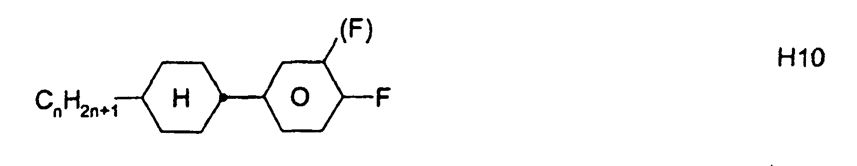 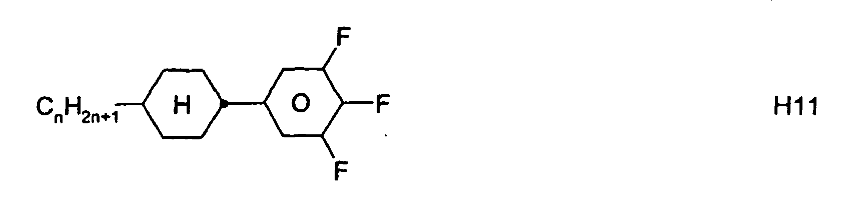 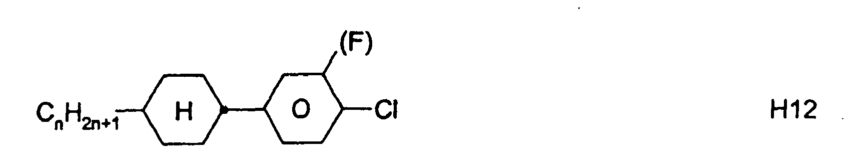 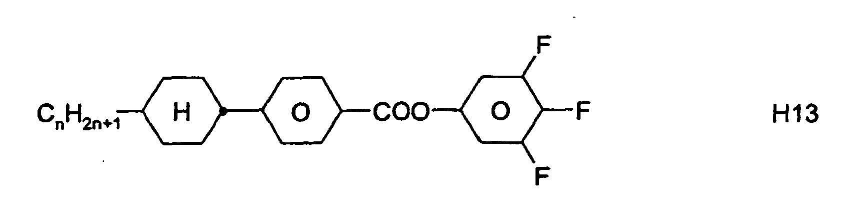 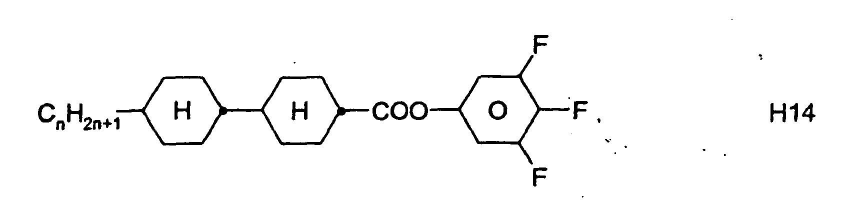 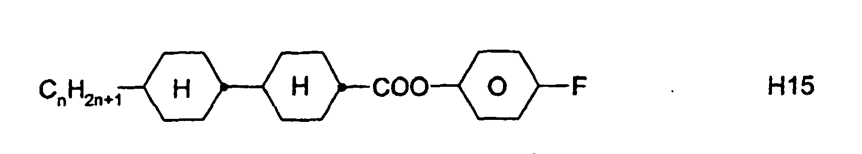 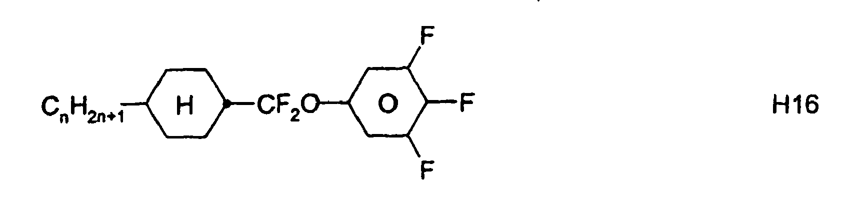 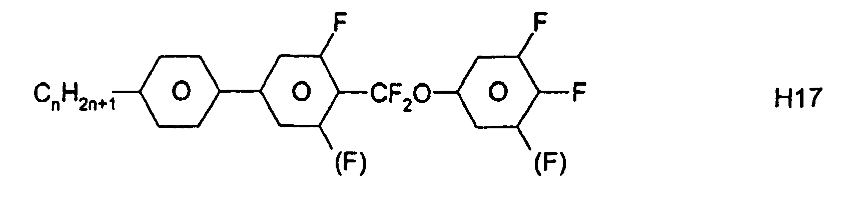 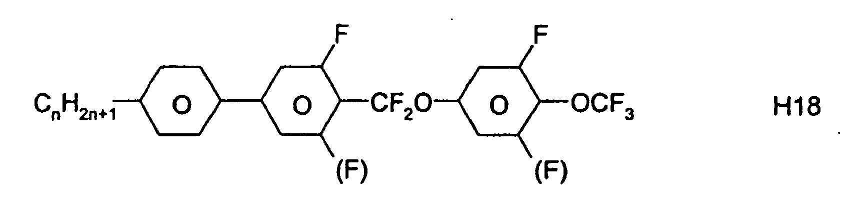
- Das Medium enthält vorzugsweise die Verbindung IIb, worin R⁰ Methyl bedeutet;
- Das Medium enthält weitere Verbindungen, vorzugsweise ausgewählt aus der folgenden Gruppe bestehend aus den Formeln RI bis RVIII, 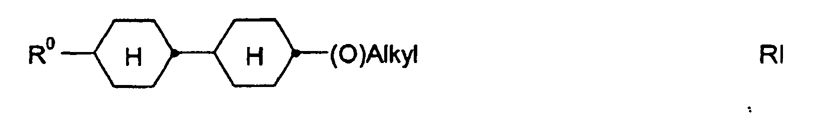 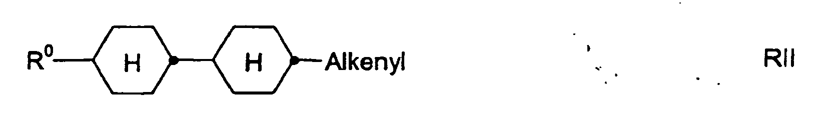 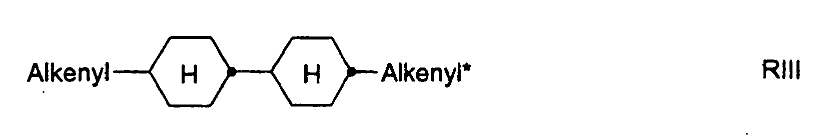 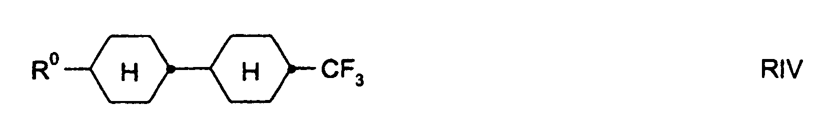 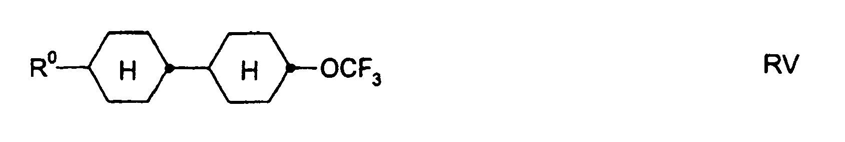 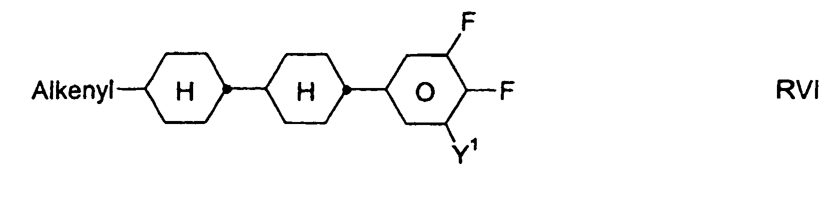 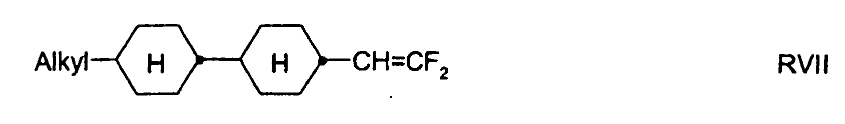 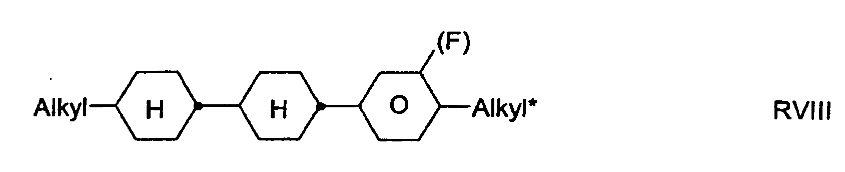 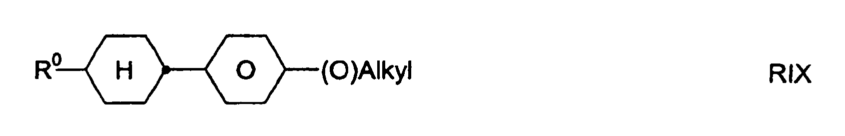
worin
- R⁰: n-Alkyl, Alkoxy, Oxaalkyl, Fluoralkyl, Alkenyloxy oder Alkenyl mit jeweils bis zu 9 C-Atomen,
- Y¹: H oder F,
- Alkyl oder Alkyl*: jeweils unabhängig voneinander ein geradkettiger oder verzweigter Alkylrest mit 1-9 C-Atomen,
- Alkenyl oder Alkenyl*: jeweils unabhängig voneinander einen geradkettigen oder verzweigten Alkenylrest mit 2 bis zu 9 C-Atomen
bedeuten.

Der Anteil an Verbindungen der Formeln RI bis RVIII bei den erfindungsgemäßen Mischungen beträgt vorzugsweise 1 bis 40 Gew.-%.
- Das Medium enthält vorzugsweise ein oder mehrere Verbindungen der Formeln 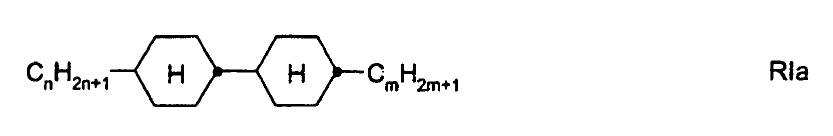 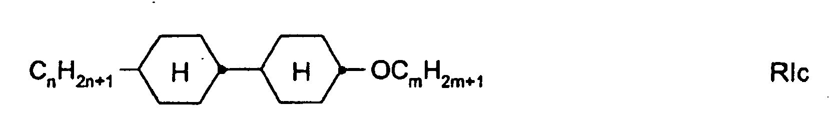 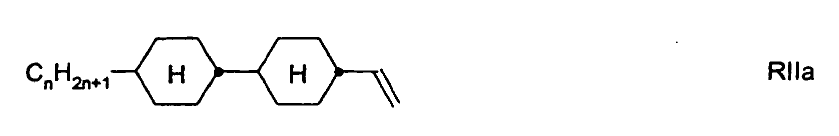 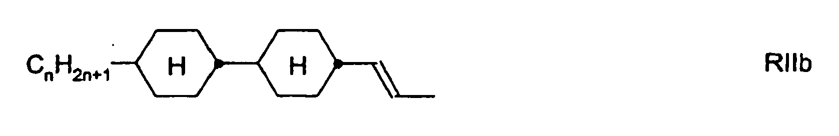 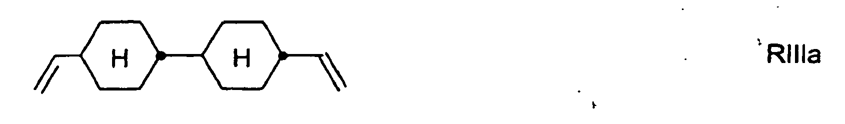 worin
   n und m jeweils 1, 2, 3, 4, 5, 6, 7, 8, 9, 10, 11 oder 12 bedeuten. Vorzugsweise ist n und m 1, 2, 3, 4, 5 oder 6.
- Das Medium enthält zusätzlich ein, zwei oder mehr Verbindungen mit annellierten Ringen der Formeln AN1 bis AN12: 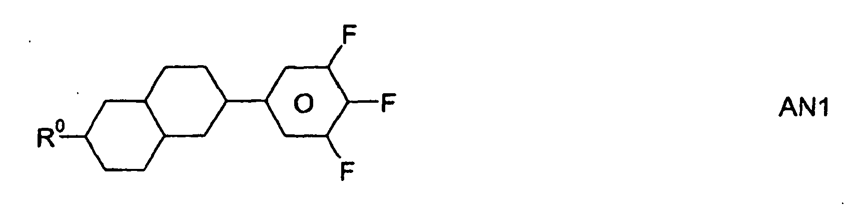 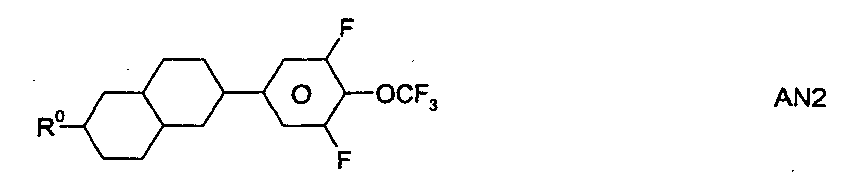 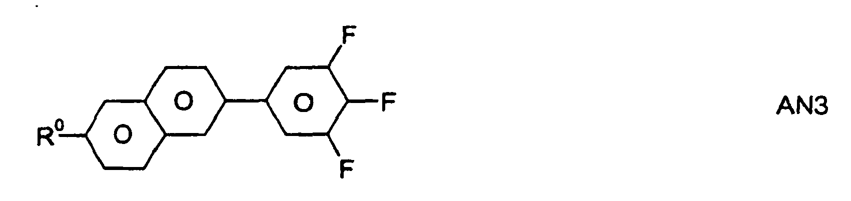 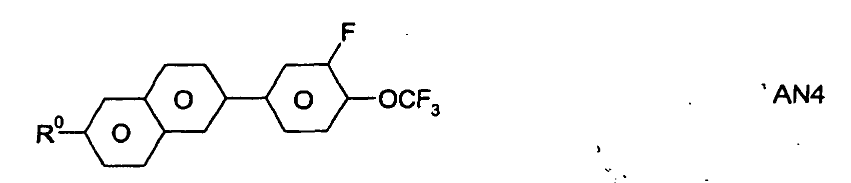 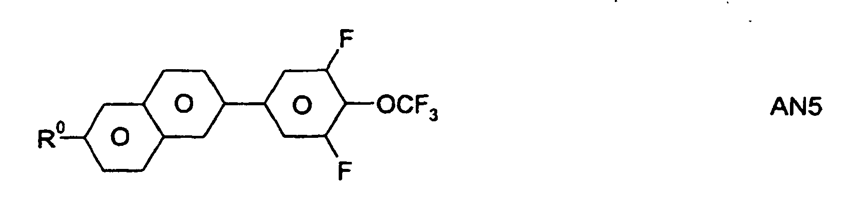 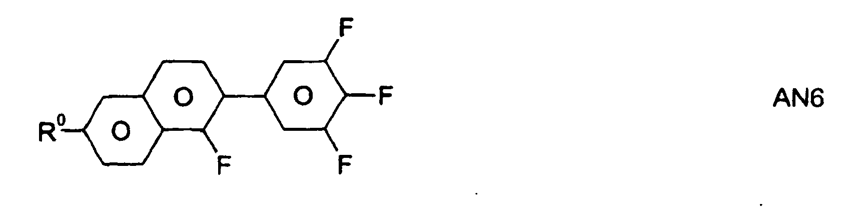 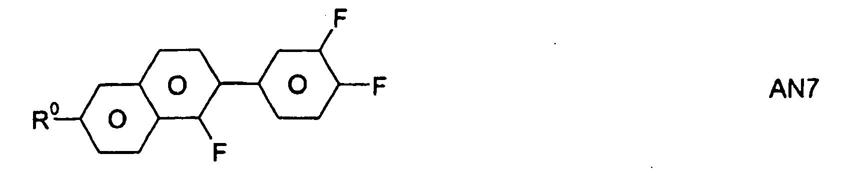 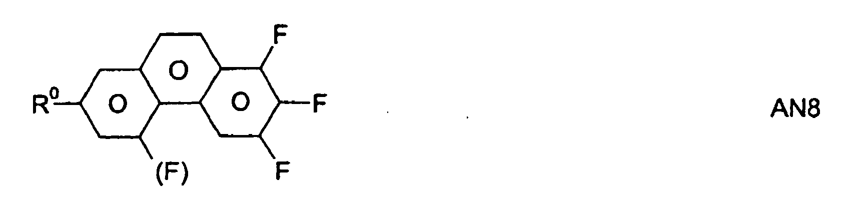 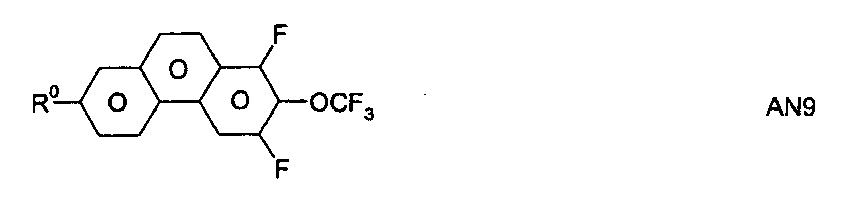 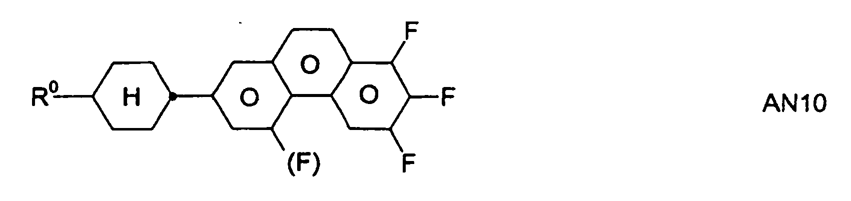 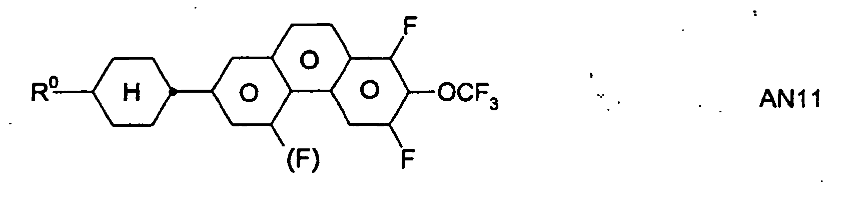 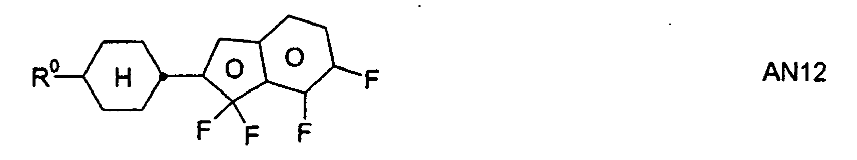 worin R⁰ die oben angegebenen Bedeutungen hat;

Der Ausdruck "Alkyl" bzw. "Alkyl*" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenastoffatomen sind im allgemeinen bevorzugt.

Der Ausdruck "Alkenyl" umfasst geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Alkoxy" oder "Oxaalkyl" umfasst vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6. m kann auch 0 bedeuten.

Es wurde gefunden, dass bereits ein relativ geringer Anteil an Verbindungen der Formeln I und IA im Gemisch mit üblichen Flüssigkristallmaterialien, insbesondere jedoch mit einer oder mehreren Verbindungen der Formeln II, III, IV, V und/oder VI zu einer beträchtlichen Erniedrigung der Schwellenspannung und zu hohen Werten für die VHR (100 °C) führt, wobei gleichzeitig breite nematische Phasen mit tiefen Übergangstemperaturen smektisch-nematisch beobachtet werden, wodurch die Lagerstabilität verbessert wird. Bevorzugt sind insbesondere Mischungen, die neben ein oder mehreren Verbindungen der Formeln I und IA ein oder mehrere Verbindungen der Formel II enthalten, insbesondere Verbindungen der Formel II, worin X⁰ F oder OCF₃ bedeutet. Die Verbindungen der Formeln IA, I bis VI sind farblos, stabil und untereinander und mit anderen Flüssigkristallmaterialien gut mischbar.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine -CH₂CH₂-Gruppe führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I, IA und II + III + IV + V + VI hängt weitgehend von den gewünschten Eigenschaften, von der Wahl der Komponenten der Formeln I, IA, II, III, IV, V und/oder VI und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der Formeln IA und I bis XII in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die

Ansprechzeiten und die Schwellenspannung ist jedoch in der Regel umso größer je höher die Gesamtkonzentration an Verbindungen der Formeln IA und I bis XII sind.

In einer besonders bevorzugten Ausführungsform enthalten die erfindungsgemäßen Medien Verbindungen der Formel II bis VI (vorzugsweise II, III und/oder IV, insbesondere IVa), worin X⁰ F, OCF₃, OCHF₂, OCH=CF₂, OCF=CF₂ oder OCF₂-CF₂H bedeutet. Eine günstige synergistische Wirkung mit den Verbindungen der Formeln I und IA führt zu besonders vorteilhaften Eigenschaften. Insbesondere Mischungen enthaltend Verbindungen der Formel I, IA und der Formel II zeichnen sich durch ihre niedrige Schwellenspannung aus.

Die einzelnen Verbindungen der Formeln IA und I bis XVIII und deren Unterformeln, die in den erfindungsgemäßen Medien verwendet werden können, sind entweder bekannt, oder sie können analog zu den bekannten Verbindungen hergestellt werden.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. Stabilisatoren, UV-Filter, Antioxidantien, enthalten. Beispielsweise können 0-15 % pleochroitische Farbstoffe oder chirale Dotierstoffe zugesetzt werden. Geeignete Stabilisatoren, UV-Filter, Antioxidantien, etc. werden nachfolgend in Tabelle D gelistet.

C bedeutet eine kristalline, S eine smektische, S_{c} eine smektisch C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,0fachen Wert von V₁₀. Δn bezeichnet die optische Anisotropie. Δε bezeichnet die dielektrische Anisotropie (Δε = ε_{∥} - ε_{┴}, wobei ε_{∥} die Dielektrizitätskonstante parallel zu den Moleküllängsachsen und ε_{┴} die Dielektrizitätskonstante senkrecht dazu bedeutet). Die elektro-optischen Daten werden in einer TN-Zelle im 1. Minimum (d.h. bei einem d · Δn-Wert von 0,5 µm) bei 20 °C gemessen, sofern nicht ausdrücklich etwas anderes angegeben wird. Die optischen Daten werden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Acronym für den Grundkörper angegeben. Im Einzelfall folgt getrennt von Acronym für den Grundkörper mit einem Strick ein Code für die Substituenten R^{1*}, R^{2*}, L^{1*} und L^{2*}:

| Code für R^{1*}, R^{2*}, L^{1*}, L^{2*} | R^{1*} | R^{2*} | L^{1*} | L^{2*} |
|---|---|---|---|---|
| Nm | CₙH₂ₙ₊₁ | CₘH₂ₘ₊₁ | H | H |
| nOm | CₙH₂ₙ+₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nmF | CₙH₂ₙ₊₁ | CₘH₂ₘ₊₁ | F | H |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |
| nOCF₃.F.F | CₙH₂ₙ₊₁ | OCF₃ | F | F |

Bevorzugte Mischungskomponenten finden sich in den Tabellen A und B.

**Tabelle A:**

| |
|---|
| 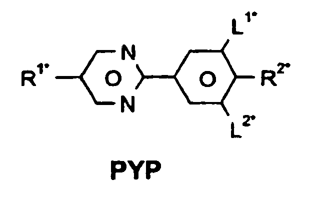 |
| 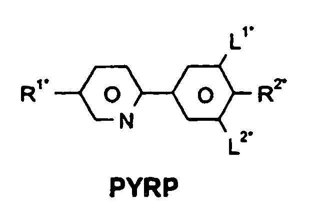 |
| 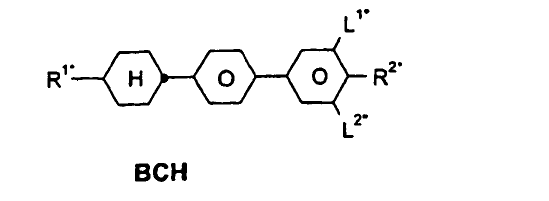 |
| 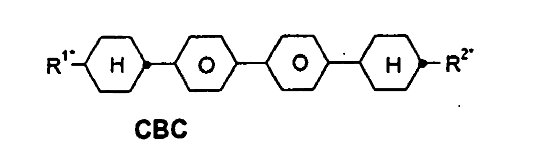 |
| 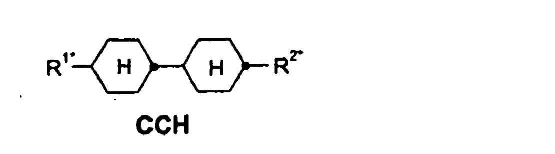 |
| 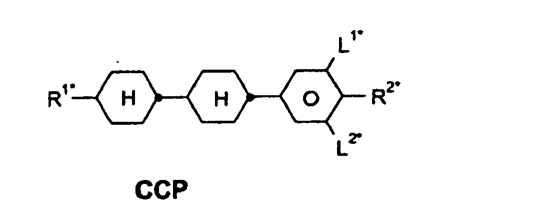 |
| 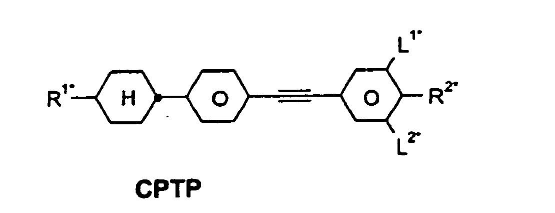 |
| 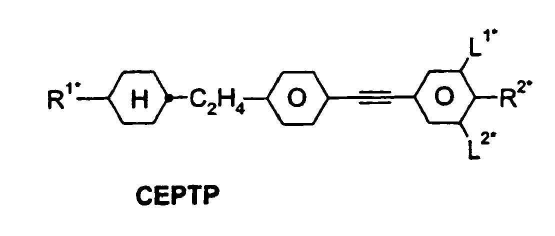 |
| 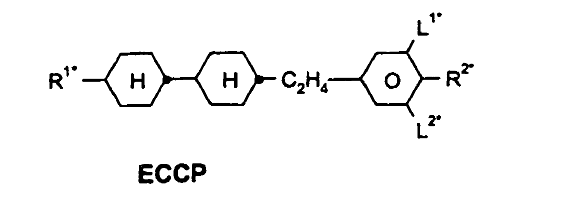 |
| 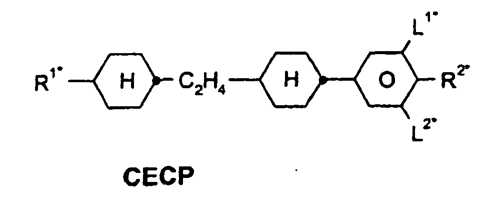 |
| 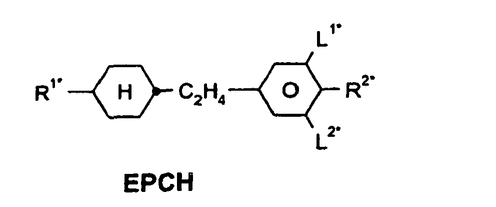 |
| 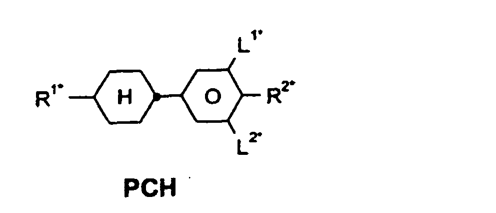 |
| 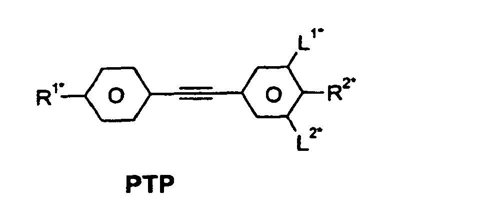 |
| 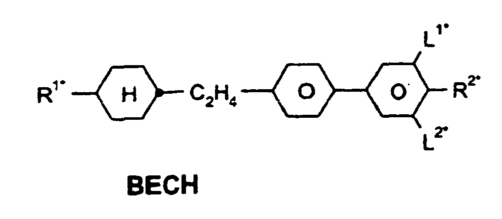 |
| 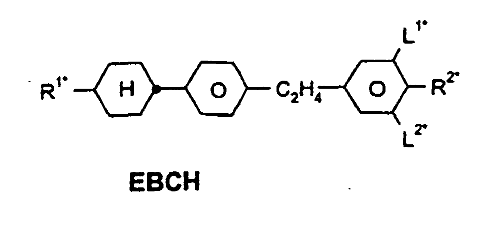 |
| 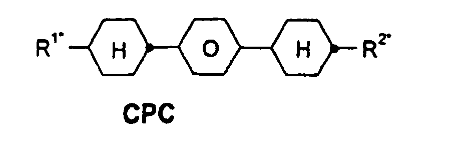 |
| 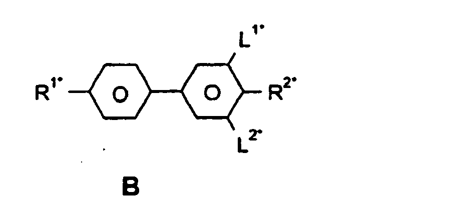 |
| 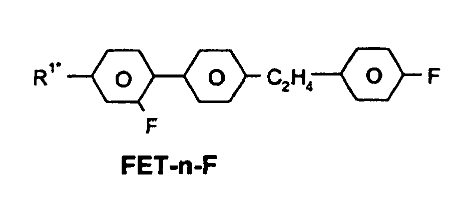 |
| 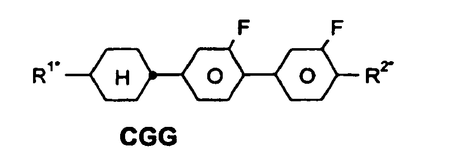 |
| 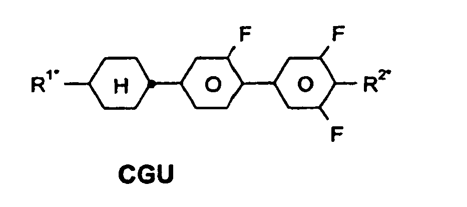 |
| 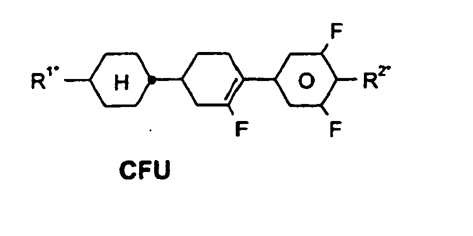 |

**Tabelle B:**

| |
|---|
| 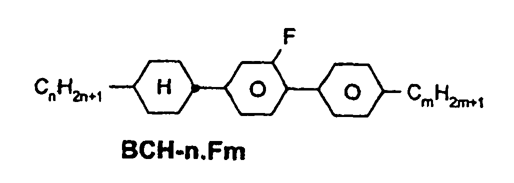 |
| 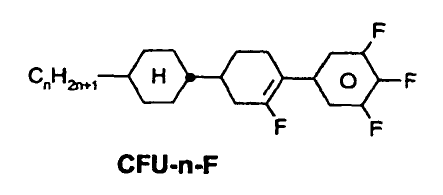 |
| 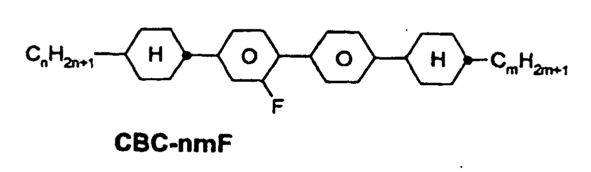 |
| 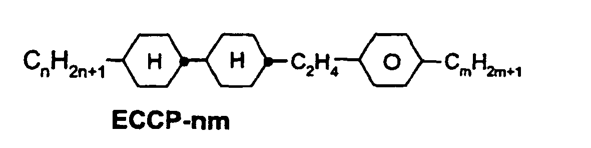 |
| 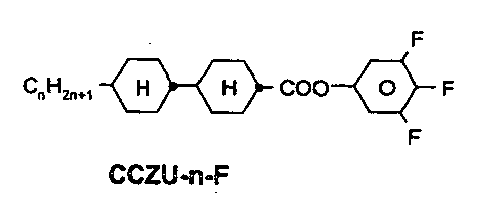 |
| 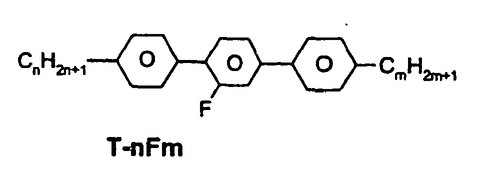 |
| 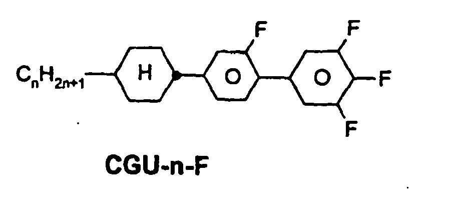 |
| 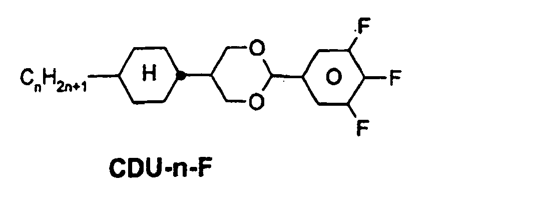 |
| 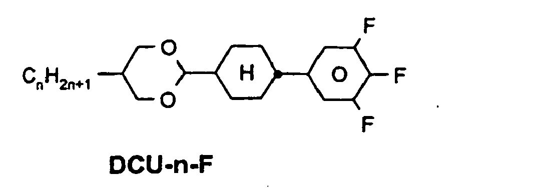 |
| 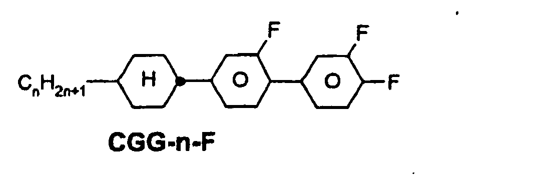 |
| 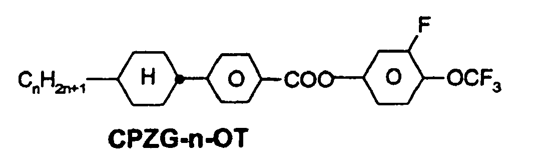 |
| 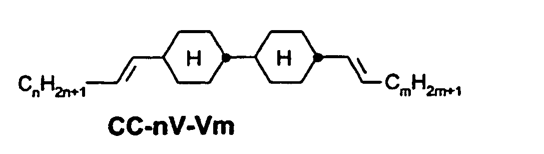 |
| 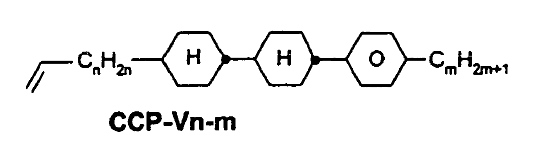 |
| 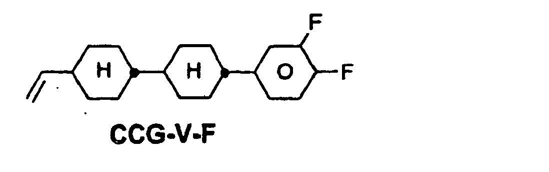 |
| 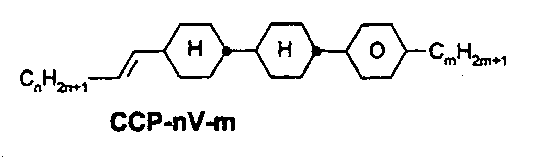 |
| 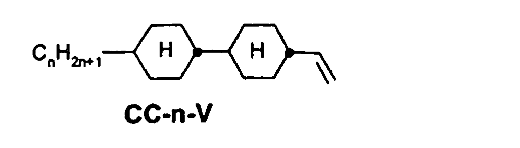 |
| 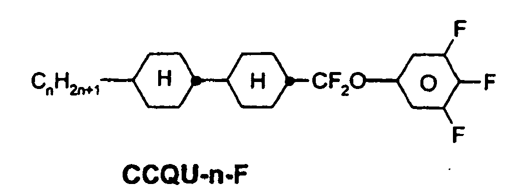 |
| 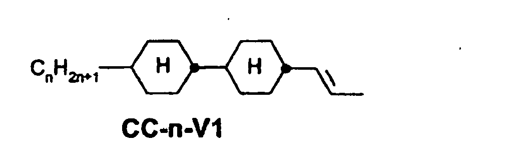 |
| 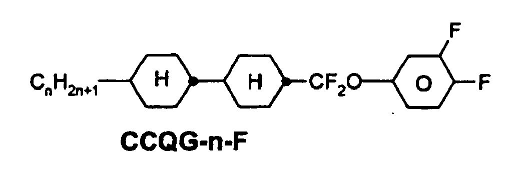 |
| 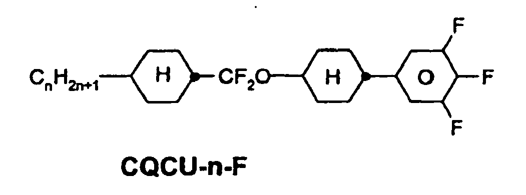 |
| 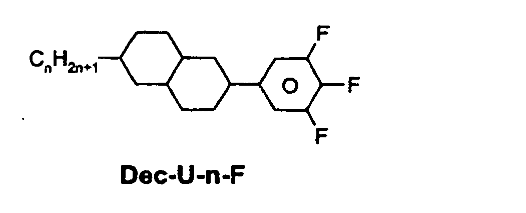 |
| 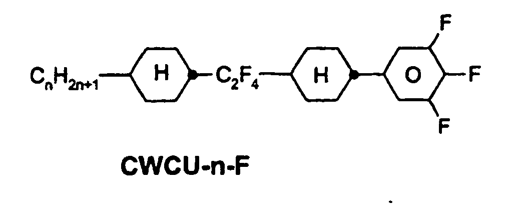 |
| 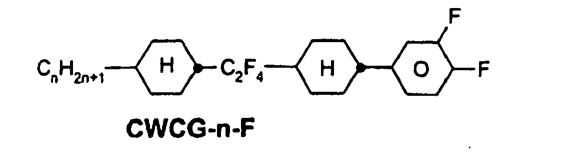 |
| 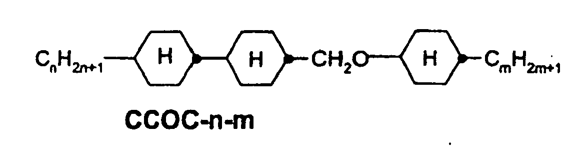 |
| 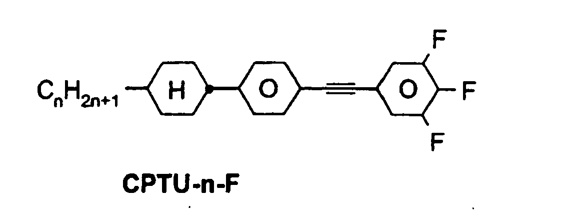 |
| 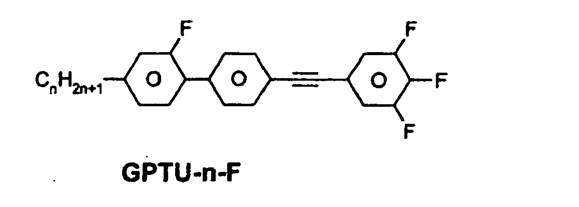 |
| 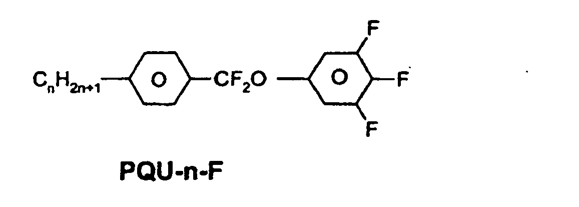 |
| 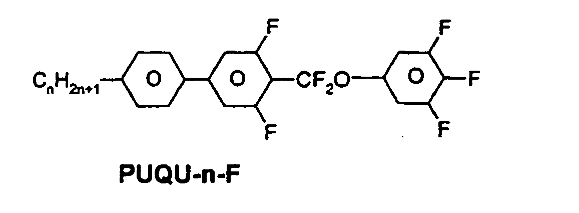 |
| 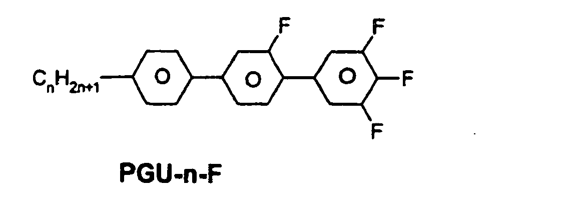 |
| 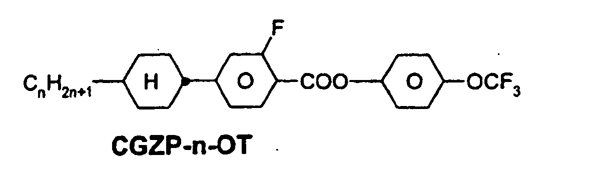 |
| 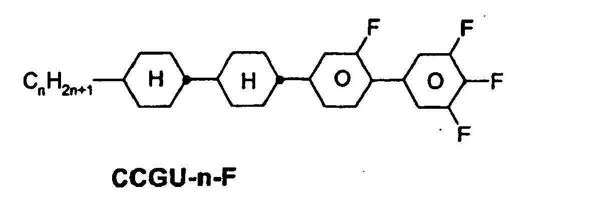 |
| 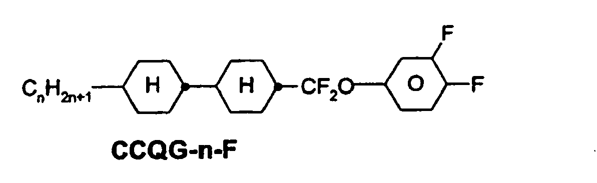 |
| 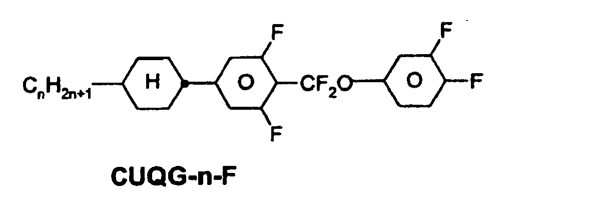 |
| 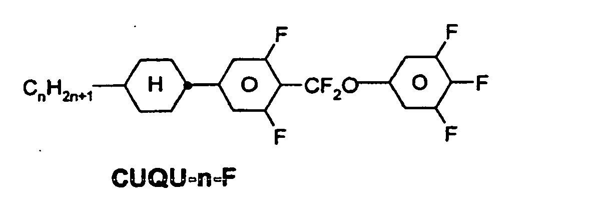 |
| 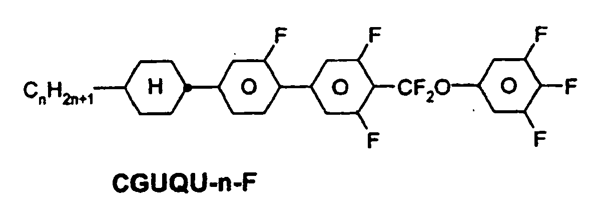 |
| 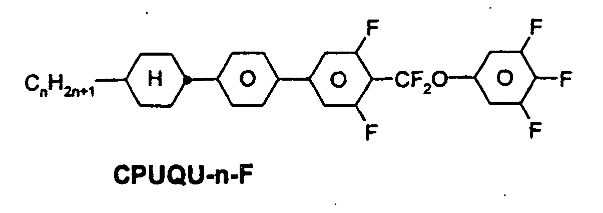 |
| 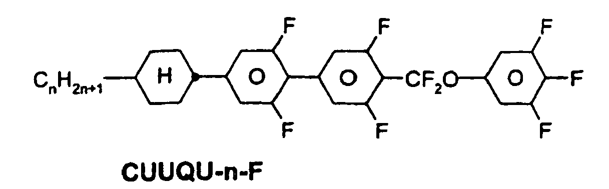 |
| 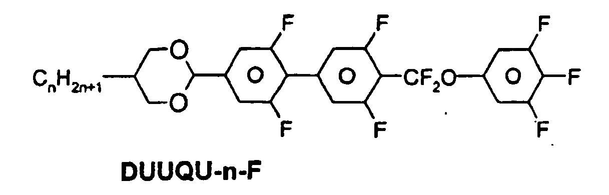 |
| 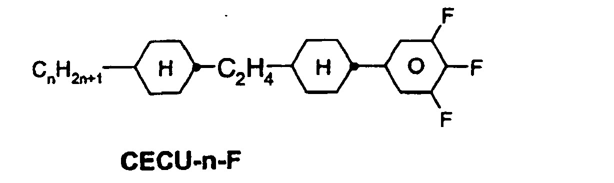 |
| 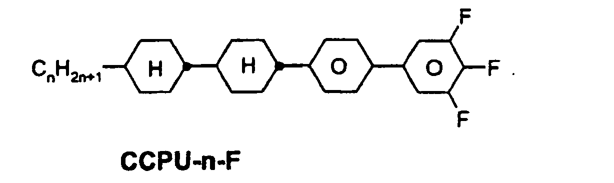 |
| 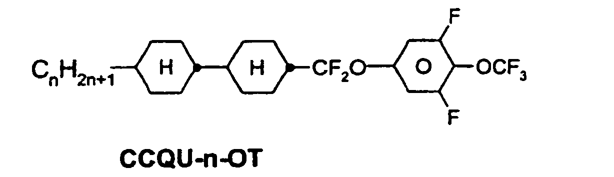 |
| 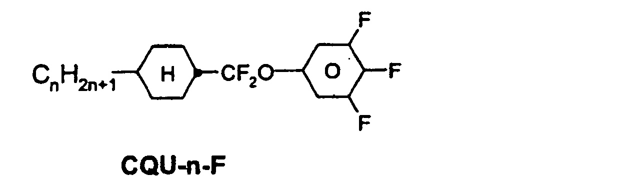 |

Besonders bevorzugt sind flüssigkristalline Mischungen, die neben den Verbindungen der Formeln I und IA mindestens ein, zwei, drei oder vier Verbindungen aus der Tabelle B enthalten.

**Tabelle C:**

| |
|---|
| In der Tabelle C werden mögliche Dotierstoffe angegeben, die den erfindungsgemäßen Mischungen zugesetzt werden können. Vorzugsweise enthalten die erfindungsgemäßen Mischungen 0,01-10 Gew.-% eines Dotierstoffes oder Dotierstoffgemisches. Von den genannten Dotierstoffen sind insbesondere bevorzugt CN, CM 44, R/S-2011, R/S-4011, R/S-5011, ferner C15 oder CB15. |
| 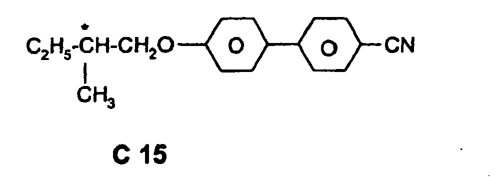 |
| 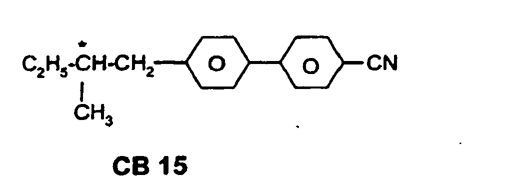 |
| 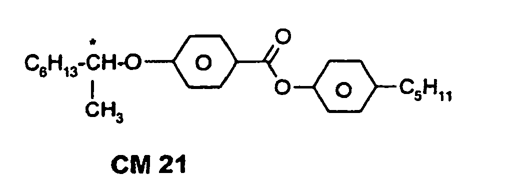 |
| 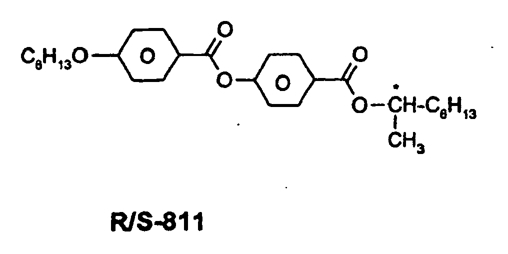 |
| 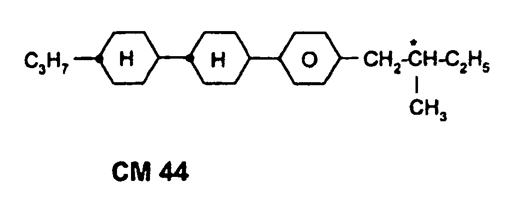 |
| 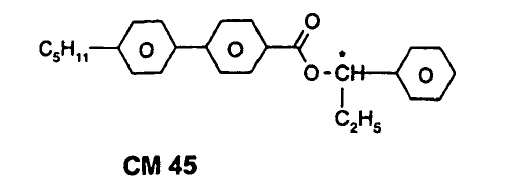 |
| 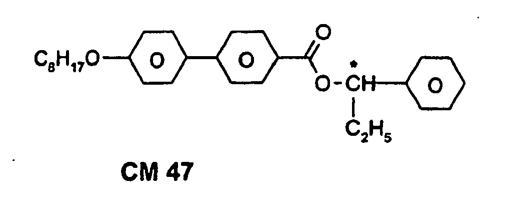 |
| 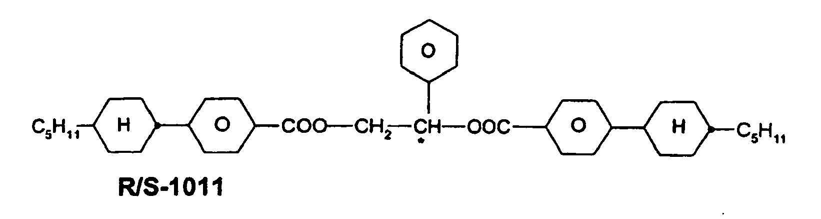 |
| 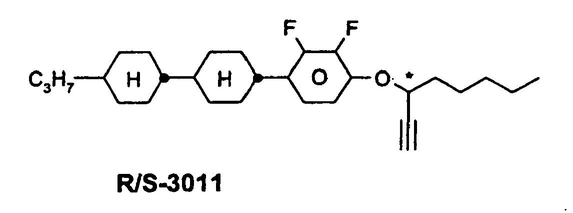 |
| 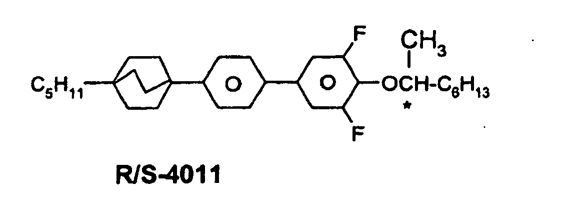 |
| 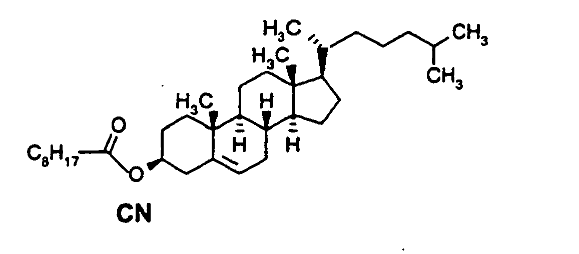 |
| 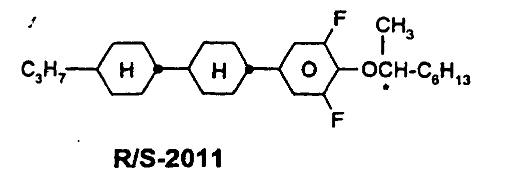 |
| 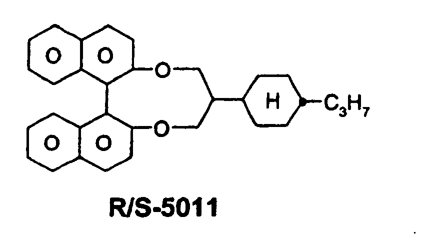 |

**Tabelle D**

| | |
|---|---|
| Stabilisatoren, die beispielsweise den erfindungsgemäßen Mischungen zugesetzt werden können, werden nachfolgend genannt. Sofern die erfindungsgemäßen Mischungen einen Stabilisator enthalten, wird er in Mengen von 0,01 bis 10 Gew.% zugesetzt. | |
| 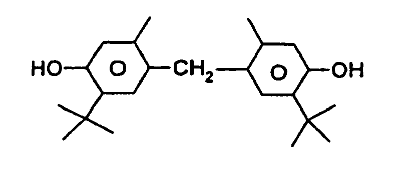 | 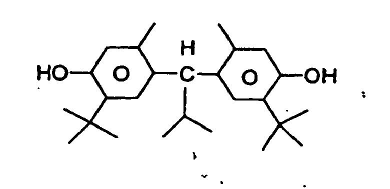 |
| 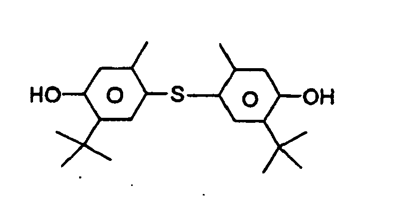 | 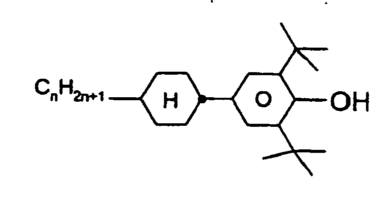 |
| 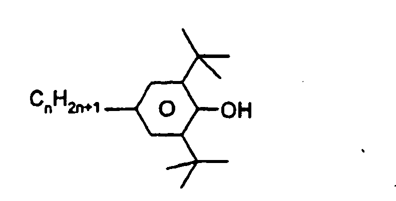 | 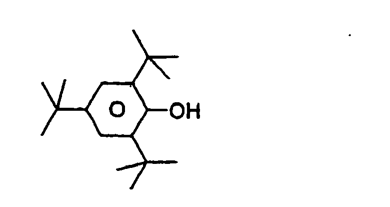 |
| 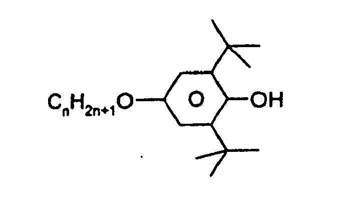 | 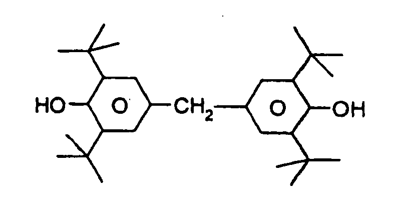 |
| 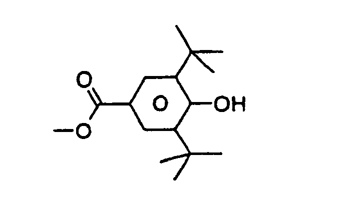 | 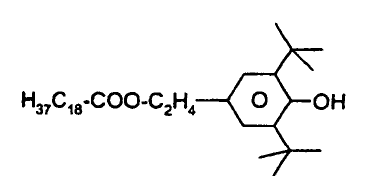 |
| 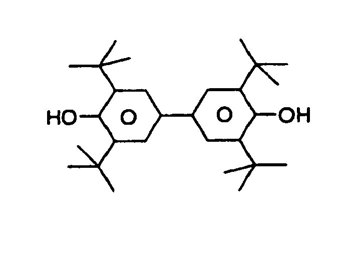 | 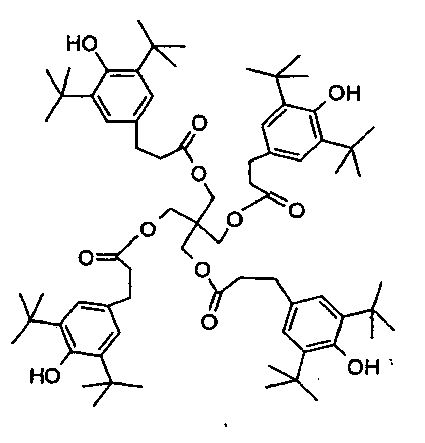 |
| 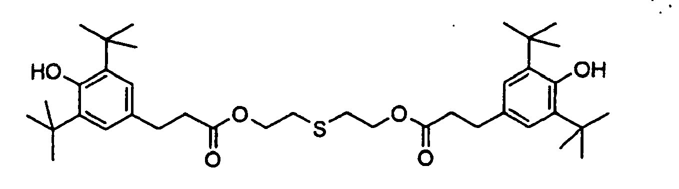 | |
| 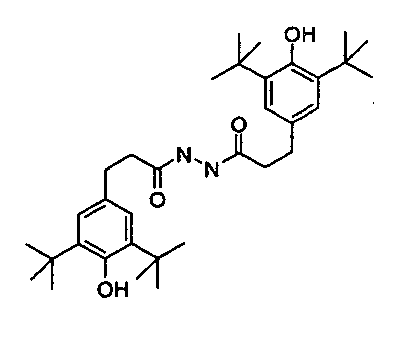 | 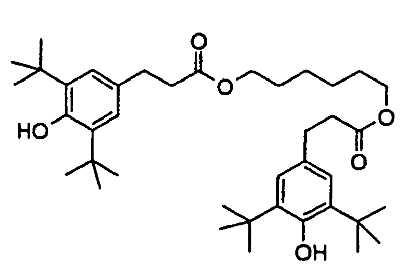 |
| 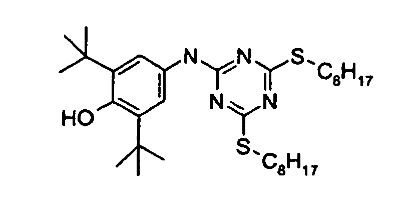 | 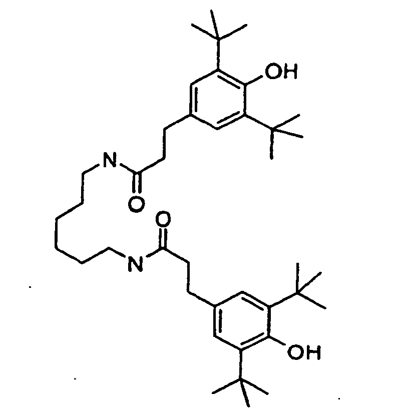 |
| 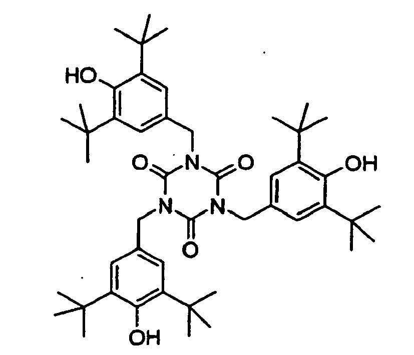 | 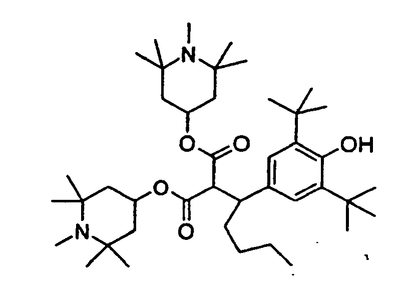 |
| 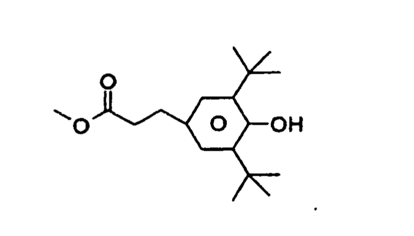 | 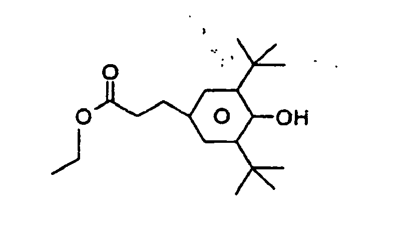 |
| 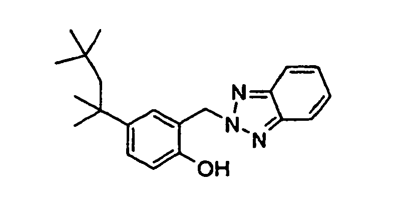 | 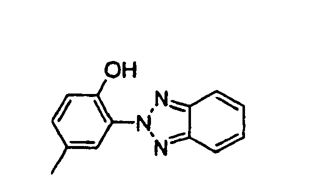 |
| 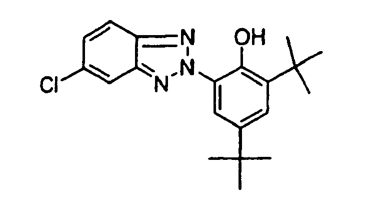 | 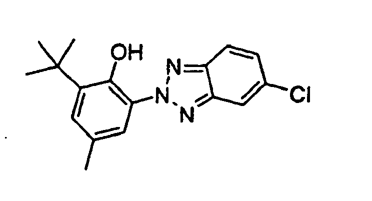 |
| 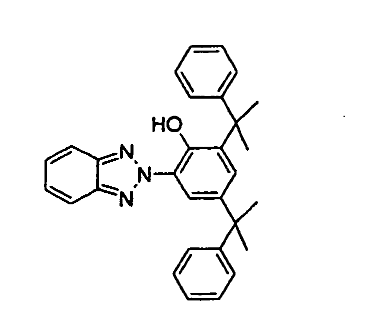 | 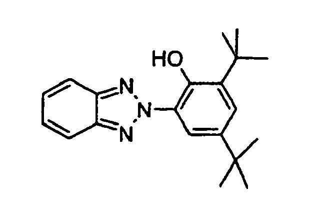 |
| 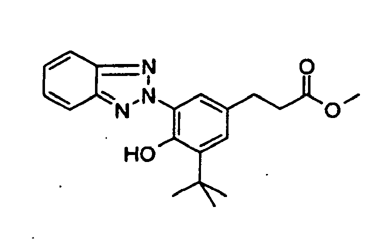 | 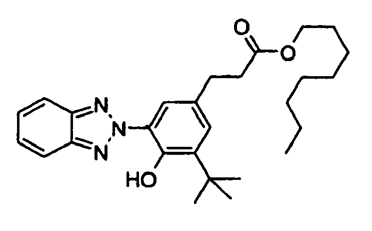 |
| 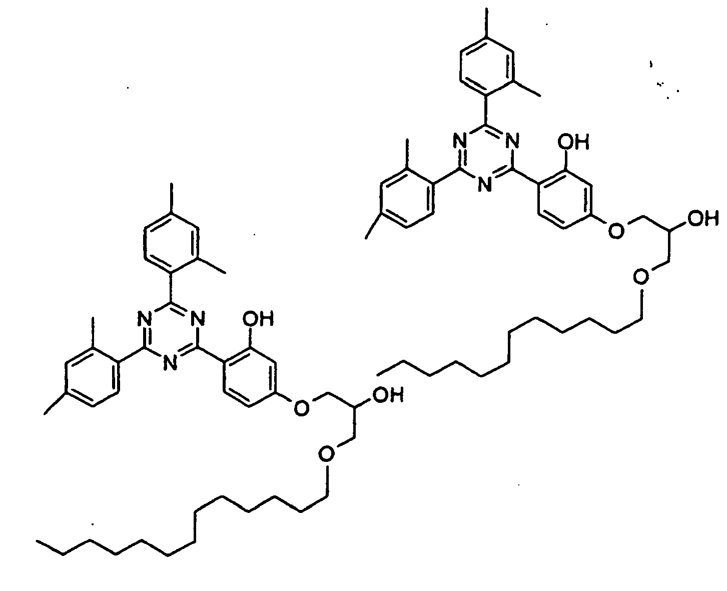 | |
| 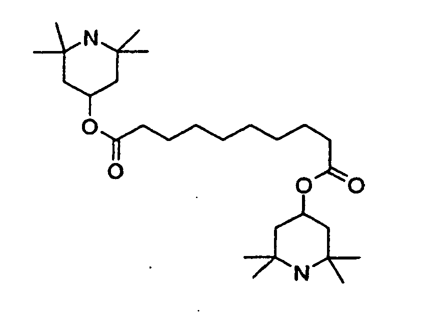 | 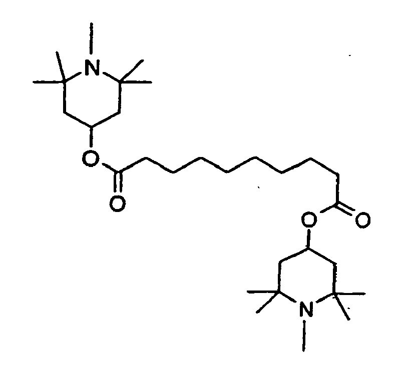 |
| 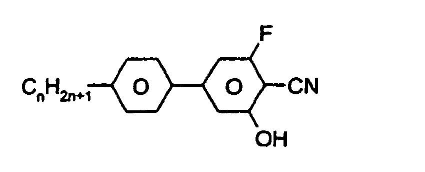 | |

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), Δε die dielektrische Anisotropie (1 kHz, 20 °C). Die Fließviskosität ν₂₀ (mm²/sec) wird bei 20 °C bestimmt. Die Rotationsviskosität γ₁ (mPa·s) wird ebenfalls bei 20°C bestimmt.

### Beispiele

### Beispiel 1

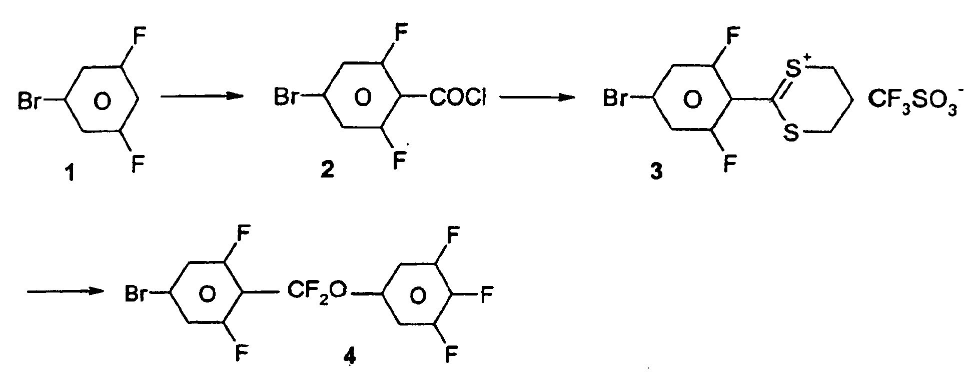

### Schritt 1.1

Eine Lösung von 0,2 mol **1** in 300 ml THF wird bei -40 °C mit 0,21 mol Lithiumdiisopropylamid (LDA; 1 M in THF) behandelt. Nach 30 Min. wird ein kräftiger Strom CO₂ eingeleitet. Die Reaktionsmischung wird in 1,5 l eiskalte 1 N HCI gegossen. Die Lösung wird mit CH₂Cl₂ extrahiert, die vereinten organischen Extrakte über Na₂SO₄ getrocknet und zur Trockne eingedampft. Zur Reinigung wird das Rohprodukt aus Toluol umkristallisiert. Die so erhaltene Carbonsäure wird in 200 ml SOCl₂ gelöst und nach Zusatz von 0,1 ml DMF für 3 h zum Sieden erhitzt. Das überschüssige SOCl₂ wird destillativ entfernt.

### Schritt 1.2

0,1 mol **2** werden bei 0 °C zuerst mit 0,11 mol Propan-1,3-dithiol, dann mit 0,25 mol Trifluormethansulfonsäure versetzt. Die Mischung wird unter Eiskühlung 1 h gerührt, dann läßt man langsam 0,4 mol Acetanhydrid zulaufen. Nach einer weiteren Stunde fügt man 500 ml Diethylether zu, saugt das ausgefallene Dithianyliumsalz **3** ab und trocknet es im Vakuum.

### Schritt 1.3

Eine Suspension von 0,1 mol **3** in 300 ml CH₂Cl₂ wird auf -70 °C gekühlt und tropfenweise mit einer Mischung von 0,15 mol 3,4,5-Trifluorphenol, 0,17 mol NEt₃ und 100 ml CH₂Cl₂ versetzt. Nach 5 Min. tropft man zuerst 0,5 mol NEt₃ · 3HF zu, und nach weiteren 5 Min. 0,5 mol Br₂. Man rührt 1 h bei -70 °C, läßt dann auf Raumtemperatur kommen und gießt die orange-gelbe Lösung in eiskalte 0,1 N NaOH. Die Mischung wird mit CH₂Cl₂ extrahiert, die vereinten organischen Extrakte werden über Na₂SO₄ getrocknet und zur Trockne einrotiert. Das Rohprodukt wird zur weiteren Reinigung in n-Heptan gelöst und über eine Kieselgelfritte filtriert. Das Produkt **4** wird anschließend bei -20 °C aus n-Heptan umkristallisiert.

### Schritt 1.4

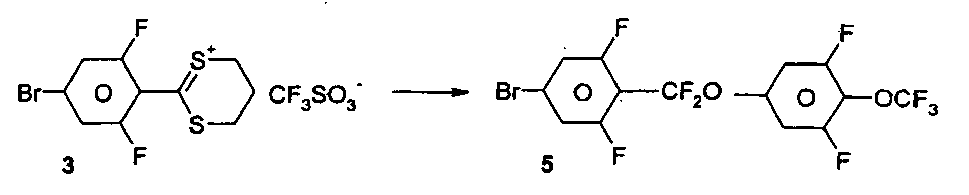

Eine Suspension von 0,1 mol **3** in 300 ml CH₂Cl₂ wird auf -70 °C gekühlt und tropfenweise mit einer Mischung von 0,15 mol 3,5-Difluor-4-tritluormethoxyphenol, 0,17 mol NEt₃ und 100 ml CH₂Cl₂ versetzt. Nach 5 Min. tropft man zuerst 0,5 mol NEt₃ . 3HF zu, und nach weiteren 5 Min. 0,5 mol Br₂. Man rührt 1 h bei -70 °C, läßt dann auf Raumtemperatur kommen und gießt die orange-gelbe Lösung in eiskalte 0,1 N NaOH. Die Mischung wird mit CH₂Cl₂ extrahiert, die vereinten organischen Extrakte werden über Na₂SO₄ getrocknet und zur Trockne einrotiert. Das Rohprodukt wird zur weiteren Reinigung in n-Heptan gelöst und über eine Kieselgelfritte filtriert. Das Produkt **5** wird anschließend bei -20 °C aus n-Heptan umkristallisiert.

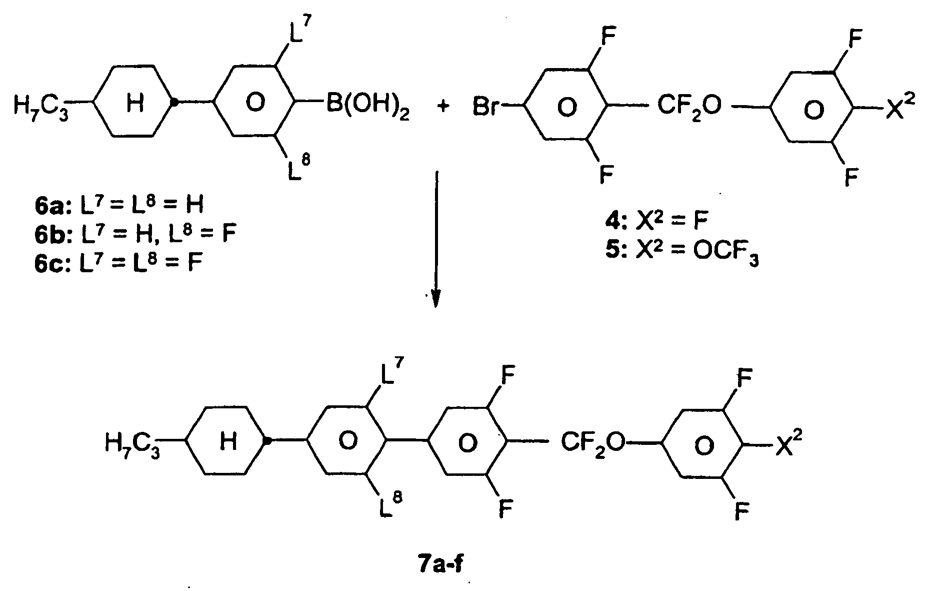

*Allgemeine Vorschrift für* **7a-f**: Eine Mischung aus 50 mmol **6a-c,** 50 mmol **4** oder **5**, 2,5 mmol Pd(PPh₃)₄, 300 ml Toluol und 300 ml Na-Boratpuffer pH 9 wird 18 h bei 80 °C geührt. Man gießt die Mischung in 500 ml 0,1 N HCl, extrahiert das Produkt mit CH₂Cl₂, trocknet über Na₂SO₄ und rotiert zur Trockne ein. Das Rohprodukt wird in n-Heptan über Kieselgel chromatographiert und anschließend bei -20 °C aus n-Heptan umkristallisiert.

Analog werden die folgenden Verbindungen der Formel 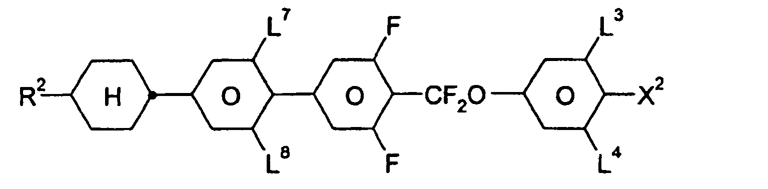 hergestellt:

| **R**^{**2**} | **L**^{**7**} | **L**^{**8**} | **X**^{**2**} | **L**^{**3**} | **L**^{**4**} | |
|---|---|---|---|---|---|---|
| H | H | H | F | H | H | |
| H | H | H | F | F | H | |
| H | H | H | F | F | F | K 88 I;Δn = 0,1231; |
| | | | | | | Δε = 22,4 |
| H | H | F | F | F | F | K 91 I; Δn = 0,0991; |
| | | | | | | Δε = 23,8 |
| H | F | F | F | F | F | |
| CH₃ | H | H | F | H | H | |
| CH₃ | H | H | F | F | H | |
| CH₃ | H | H | F | F | F | |
| CH₃ | H | F | F | F | F | |
| CH₃ | F | F | F | F | F | |
| C₂H₅ | H | H | F | H | H | |
| C₂H₅ | H | H | F | F | H | |
| C₂H₅ | H | H | F | F | F | |
| C₂H₅ | H | F | F | F | F | |
| C₂H₅ | F | F | F | F | F | K85N(85,0) I; |
| | | | | | | Δn = 0,1150; Δε = 28,7 |
| n-C₃H₇ | H | H | F | H | H | |
| n-C₃H₇ | H | H | F | F | H | |
| n-C₃H₇ | H | H | F | F | F | |
| n-C₃H₇ | H | F | F | F | F | |
| n-C₃H₇ | F | F | F | F | F | K 94 N 112,41; |
| | | | | | | Δn = 0,1240; Δε = 28,6 |
| n-C₄H₉ | H | H | F | H | H | |
| n-C₄H₉ | H | H | F | F | H | |
| n-C₄H₉ | H | H | F | F | F | |
| n-C₄H₉ | H | F | F | F | F | |
| n-C₄H₉ | F | F | F | F | F | |
| n-C₅H₁₁ | H | H | F | H | H | |
| n-C₅H₁₁ | H | H | F | F | H | |
| n-C₅H₁₁ | H | H | F | F | F | |
| n-C₅H₁₁ | H | F | F | F | F | |
| n-C₅H₁₁ | F | F | F | F | F | |
| n-C₆H₁₃ | H | H | F | H | H | |
| n-C₆H₁₃ | H | H | F | F | H | |
| n-C₆H₁₃ | H | H | F | F | F | |
| n-C₆H₁₃ | H | F | F | F | F | |
| n-C₆H₁₃ | F | F | F | F | F | |
| CH₂=CH | H | H | F | H | H | |
| CH₂=CH | H | H | F | F | H | |
| CH₂=CH | H | H | F | F | F | |
| CH₂=CH | H | F | F | F | F | |
| CH₂=CH | F | F | F | F | F | |
| CH₃CH=CH | H | H | F | H | H | |
| CH₃CH=CH | H | H | F | F | H | |
| CH₃CH=CH | H | H | F | F | F | |
| CH₃CH=CH | H | F | F | F | F | |
| CH₃CH=CH | F | F | F | F | F | |
| CH₂=CHCH₂CH₂ | H | H | F | H | H | |
| CH₂=CHCH₂CH₂ | H | H | F | F | H | |
| CH₂=CHCH₂CH₂ | H | H | F | F | F | |
| CH₂=CHCH₂CH₂ | H | F | F | F | F | |
| CH₂=CHCH₂CH₂ | F | F | F | F | F | |
| H | H | H | OCF₃ | H | H | |
| H | H | H | OCF₃ | F | H | |
| H | H | H | OCF₃ | F | F | K 69 I; Δn = 0,1246; |
| | | | | | | Δε =28,2 |
| H | H | F | OCF₃ | F | F | |
| H | F | F | OCF₃ | F | F | |
| CH₃ | H | H | OCF₃ | H | H | |
| CH₃ | H | H | OCF₃ | F | H | |
| CH₃ | H | H | OCF₃ | F | F | |
| CH₃ | H | F | OCF₃ | F | F | |
| CH₃ | F | F | OCF₃ | F | F | |
| C₂H₅ | H | H | OCF₃ | H | H | |
| C₂H₅ | H | H | OCF₃ | F | H | |
| C₂H₅ | H | H | OCF₃ | F | F | |
| C₂H₅ | H | F | OCF₃ | F | F | K 76 N 120,7 I; |
| | | | | | | Δn = 0,1295; Δε = 26,9 |
| C₂H₅ | F | F | OCF₃ | F | F | K 77 N 103,5 I; |
| | | | | | | Δn = 0,1154; Δε = 30,5 |
| n-C₃H₇ | H | H | OCF₃ | H | H | |
| n-C₃H₇ | H | H | OCF₃ | F | H | |
| n-C₃H₇ | H | H | OCF₃ | F | F | |
| n-C₃H₇ | H | F | OCF₃ | F | F | K 71 N 142,5 I; |
| | | | | | | Δn = 0,1320; Δε = 26,8 |
| n-C₃H₇ | F | F | OCF₃ | F | F | K 77 N 128,7 I; |
| | | | | | | Δn = 0,1240; Δε = 29,9 |
| n-C₄H₉ | H | H | OCF₃ | H | H | |
| n-C₄H₉ | H | H | OCF₃ | F | H | |
| n-C₄H₉ | H | H | OCF₃ | F | F | |
| n-C₄H₉ | H | F | OCF₃ | F | F | |
| n-C₄H₉ | F | F | OCF₃ | F | F | |
| n-C₅H₁₁ | H | H | OCF₃ | H | H | |
| n-C₅H₁₁ | H | H | OCF₃ | F | H | |
| n-C₅H₁₁ | H | H | OCF₃ | F | F | |
| n-C₅H₁₁ | H | F | OCF₃ | F | F | |
| n-C₅H₁₁ | F | F | OCF₃ | F | F | |
| n-C₆H₁₃ | H | H | OCF₃ | H | H | |
| n-C₆H₁₃ | H | H | OCF₃ | F | H | |
| n-C₆H₁₃ | H | H | OCF₃ | F | F | |
| n-C₆H₁₃ | H | F | OCF₃ | F | F | |
| n-C₆H₁₃ | F | F | OCF₃ | F | F | |
| CH₂=CH | H | H | OCF₃ | H | H | |
| CH₂=CH | H | H | OCF₃ | F | H | |
| CH₂=CH | H | H | OCF₃ | F | F | |
| CH₂=CH | H | F | OCF₃ | F | F | |
| CH₂=CH | F | F | OCF₃ | F | F | |
| CH₃CH=CH | H | H | OCF₃ | H | H | |
| CH₃CH=CH | H | H | OCF₃ | F | H | |
| CH₃CH=CH | H | H | OCF₃ | F | F | |
| CH₃CH=CH | H | F | OCF₃ | F | F | |
| CH₃CH=CH | F | F | OCF₃ | F | F | |
| CH₂=CHCH₂CH₂ | H | H | OCF₃ | H | H | |
| CH₂=CHCH₂CH₂ | H | H | OCF₃ | F | H | |
| CH₂=CHCH₂CH₂ | H | H | OCF₃ | F | F | |
| CH₂=CHCH₂CH₂ | H | F | OCF₃ | F | F | |
| CH₂=CHCH₂CH₂ | F | F | OCF₃ | F | F | |
| H | H | H | Cl | H | H | |
| H | H | H | Cl | F | H | |
| H | H | H | Cl | F | F | K 92 I; Δn = 0,1489; |
| | | | | | | Δε = 20,4 |
| H | H | H | Cl | H | H | |
| H | H | H | Cl | F | H | |
| H | H | H | Cl | F | F | |
| H | H | F | Cl | F | F | |
| H | F | F | Cl | F | F | |
| CH₃ | H | H | Cl | H | H | |
| CH₃ | H | H | Cl | F | H | |
| CH₃ | H | H | Cl | F | F | |
| CH₃ | H | F | Cl | F | F | |
| CH₃ | F | F | Cl | F | F | |
| C₂H₅ | H | H | Cl | H | H | |
| C₂H₅ | H | H | Cl | F | H | |
| C₂H₅ | H | H | Cl | F | F | |
| C₂H₅ | H | F | Cl | F | F | |
| C₂H₅ | F | F | Cl | F | F | |
| n-C₃H₇ | H | H | Cl | H | H | |
| n-C₃H₇ | H | H | Cl | F | H | |
| n-C₃H₇ | H | H | Cl | F | F | |
| n-C₃H₇ | H | F | Cl | F | F | |
| n-C₃H₇ | F | F | Cl | F | F | |
| n-C₄H₉ | H | H | Cl | H | H | |
| n-C₄H₉ | H | H | Cl | F | H | |
| n-C₄H₉ | H | H | Cl | F | F | |
| n-C₄H₉ | H | F | Cl | F | F | |
| n-C₄H₉ | F | F | Cl | F | F | |
| n-C₅H₁₁ | H | H | Cl | H | H | |
| n-C₅H₁₁ | H | H | Cl | F | H | |
| n-C₅H₁₁ | H | H | Cl | F | F | |
| n-C₅H₁₁ | H | F | Cl | F | F | |
| n-C₅H₁₁ | F | F | Cl | F | F | |
| n-C₆H₁₃ | H | H | Cl | H | H | |
| n-C₆H₁₃ | H | H | Cl | F | H | |
| n-C₆H₁₃ | H | H | Cl | F | F | |
| n-C₆H₁₃ | H | F | Cl | F | F | |
| n-C₆H₁₃ | F | F | Cl | F | F | |
| CH₂=CH | H | H | CI | H | H | |
| CH₂=CH | H | H | CI | F | H | |
| CH₂=CH | H | H | CI | F | F | |
| CH₂=CH | H | F | CI | F | F | |
| CH₂=CH | F | F | CI | F | F | |
| CH₃CH=CH | H | H | CI | H | H | |
| CH₃CH=CH | H | H | CI | F | H | |
| CH₃CH=CH | H | H | CI | F | F | |
| CH₃CH=CH | H | F | CI | F | F | |
| CH₃CH=CH | F | F | CI | F | F | |
| CH₂=CHCH_{2CH2} | H | H | Cl | H | H | |
| CH₂=CHCH₂CH₂ | H | H | Cl | F | H | |
| CH₂=CHCH₂CH₂ | H | H | Cl | F | F | |
| CH₂CHCH₂CH₂ | H | F | Cl | F | F | |
| CH₂=CHCH₂CH₂ | F | F | Cl | F | F | |
| H | H | H | OCHF₂ | H | H | |
| H | H | H | OCHF₂ | F | H | |
| H | H | H | OCHF₂ | F | F | |
| H | H | F | OCHF₂ | F | F | |
| H | F | F | OCHF₂ | F | F | |
| CH₃ | H | H | OCHF₂ | H | H | |
| CH₃ | H | H | OCHF₂ | F | H | |
| CH₃ | H | H | OCHF₂ | F | F | |
| CH₃ | H | F | OCHF₂ | F | F | |
| CH₃ | F | F | OCHF₂ | F | F | |
| C₂H₅ | H | H | OCHF₂ | H | H | |
| C₂H₅ | H | H | OCHF₂ | F | H | |
| C₂H₅ | H | H | OCHF₂ | F | F | |
| C₂H₅ | H | F | OCHF₂ | F | F | |
| C₂H₅ | F | F | OCHF₂ | F | F | |
| n-C₃H₇ | H | H | OCHF₂ | H | H | |
| n-C₃H₇ | H | H | OCHF₂ | F | H | |
| n-C₃H₇ | H | H | OCHF₂ | F | F | |
| n-C₃H₇ | H | F | OCHF₂ | F | F | |
| n-C₃H₇ | F | F | OCHF₂ | F | F | |
| n-C₄H₉ | H | H | OCHF₂ | H | H | |
| n-C₄H₉ | H | H | OCHF₂ | F | H | |
| n-C₄H₉ | H | H | OCHF₂ | F | F | |
| n-C₄H₉ | H | F | OCHF₂ | F | F | |
| n-C₄H₉ | F | F | OCHF₂ | F | F | |
| n-C₅H₁₁ | H | H | OCHF₂ | H | H | |
| n-C₅H₁₁ | H | H | OCHF₂ | F | H | |
| n-C₅H₁₁ | H | H | OCHF₂ | F | F | |
| n-C₅H₁₁ | H | F | OCHF₂ | F | F | |
| n-C₅H₁₁ | F | F | OCHF₂ | F | F | |
| n-C₆H₁₃ | H | H | OCHF₂ | H | H | |
| n-C₆H₁₃ | H | H | OCHF₂ | F | H | |
| n-C₆H₁₃ | H | H | OCHF₂ | F | F | |
| n-C₆H₁₃ | H | F | OCHF₂ | F | F | |
| n-C₆H₁₃ | F | F | OCHF₂ | F | F | |
| CH₂=CH | H | H | OCHF₂ | H | H | |
| CH₂=CH | H | H | OCHF₂ | F | H | |
| CH₂=CH | H | H | OCHF₂ | F | F | |
| CH₂=CH | H | F | OCHF₂ | F | F | |
| CH₂=CH | F | F | OCHF₂ | F | F | |
| CH₃CH=CH | H | H | OCHF₂ | H | H | |
| CH₃CH=CH | H | H | OCHF₂ | F | H | |
| CH₃CH=CH | H | H | OCHF₂ | F | F | |
| CH₃CH=CH | H | F | OCHF₂ | F | F | |
| CH₃CH=CH | F | F | OCHF₂ | F | F | |
| CH₂=CHCH₂CH₂ | H | H | OCHF₂ | H | H | |
| CH₂=CHCH₂CH₂ | H | H | OCHF₂ | F | H | |
| CH₂=CHCH₂CH₂ | H | H | OCHF₂ | F | F | |
| CH₂=CHCH₂CH₂ | H | F | OCHF₂ | F | F | |
| CH₂=CHCH₂CH₂ | F | F | OCHF₂ | F | F | |
| H | H | H | SF₅ | H | H | |
| H | H | H | SF₅ | F | H | |
| H | H | H | SF₅ | F | F | |
| H | H | F | SF₅ | F | F | |
| H | F | F | SF₅ | F | F | |
| CH₃ | H | H | SF₅ | H | H | |
| CH₃ | H | H | SF₅ | F | H | |
| CH₃ | H | H | SF₅ | F | F | |
| CH₃ | H | F | SF₅ | F | F | |
| CH₃ | F | F | SF₅ | F | F | |
| C₂H₅ | H | H | SF₅ | H | H | |
| C₂H₅ | H | H | SF₅ | F | H | |
| C₂H₅ | H | H | SF₅ | F | F | |
| C₂H₅ | H | F | SF₅ | F | F | |
| C₂H₅ | F | F | SF₅ | F | F | |
| n-C₃H₇ | H | H | SF₅ | H | H | |
| n-C₃H₇ | H | H | SF₅ | F | H | |
| n-C₃H₇ | H | H | SF₅ | F | F | |
| n-C₃H₇ | H | F | SF₅ | F | F | |
| n-C₃H₇ | F | F | SF₅ | F | F | |
| n-C₄H₉ | H | H | SF₅ | H | H | |
| n-C₄H₉ | H | H | SF₅ | F | H | |
| n-C₄H₉ | H | H | SF₅ | F | F | |
| n-C₄H₉ | H | F | SF₅ | F | F | |
| n-C₄H₉ | F | F | SF₅ | F | F | |
| n-C₅H₁₁ | H | H | SF₅ | H | H | |
| n-C₅H₁₁ | H | H | SF₅ | F | H | |
| n-C₅H₁₁ | H | H | SF₅ | F | F | |
| n-C₅H₁₁ | H | F | SF₅ | F | F | |
| n-C₅H₁₁ | F | F | SF₅ | F | F | |
| n-C₆H₁₃ | H | H | SF₅ | H | H | |
| n-C₆H₁₃ | H | H | SF₅ | F | H | |
| n-C₆H₁₃ | H | H | SF₅ | F | F | |
| n-C₆H₁₃ | H | F | SF₅ | F | F | |
| n-C₆H₁₃ | F | F | SF₅ | F | F | |
| CH₂=CH | H | H | SF₅ | H | H | |
| CH₂=CH | H | H | SF₅ | F | H | |
| CH₂=CH | H | H | SF₅ | F | F | |
| CH₂=CH | H | F | SF₅ | F | F | |
| CH₂=CH | F | F | SF₅ | F | F | |
| CH₃CH=CH | H | H | SF₅ | H | H | |
| CH₃CH=CH | H | H | SF₅ | F | H | |
| CH₃CH=CH | H | H | SF₅ | F | F | |
| CH₃CH=CH | H | F | SF₅ | F | F | |
| CH₃CH=CH | F | F | SF₅ | F | F | |
| CH₂=CHCH₂CH₂ | H | H | SF₅ | H | H | |
| CH₂=CHCH₂CH₂ | H | H | SF₅ | F | H | |
| CH₂=CHCH₂CH₂ | H | H | SF₅ | F | F | |
| CH₂=CHCH₂CH₂ | H | F | SF₅ | F | F | |
| CH₂=CHCH₂CH₂ | F | F | SF₅ | F | F | |
| H | H | H | OC₃F₇ | H | H | |
| H | H | H | OC₃F₇ | F | H | |
| H | H | H | OC₃F₇ | F | F | |
| H | H | F | OC₃F₇ | F | F | |
| H | F | F | OC₃F₇ | F | F | |
| CH₃ | H | H | OC₃F₇ | H | H | |
| CH₃ | H | H | OC₃F₇ | F | H | |
| CH₃ | H | H | OC₃F₇ | F | F | |
| CH₃ | H | F | OC₃F₇ | F | F | |
| CH₃ | F | F | OC₃F₇ | F | F | |
| C₂H₅ | H | H | OC₃F₇ | H | H | |
| C₂H₅ | H | H | OC₃F₇ | F | H | |
| C₂H₅ | H | H | OC₃F₇ | F | F | |
| C₂H₅ | H | F | OC₃F₇ | F | F | |
| C₂H₅ | F | F | OC₃F₇ | F | F | |
| n-C₃H₇ | H | H | OC₃F₇ | H | H | |
| n-C₃H₇ | H | H | OC₃F₇ | F | H | |
| n-C₃H₇ | H | H | OC₃F₇ | F | F | |
| n-C₃H₇ | H | F | OC₃F₇ | F | F | |
| n-C₃H₇ | F | F | OC₃F₇ | F | F | |
| n-C₄H₉ | H | H | OC₃F₇ | H | H | |
| n-C₄H₉ | H | H | OC₃F₇ | F | H | |
| n-C₄H₉ | H | H | OC₃F₇ | F | F | |
| n-C₄H₉ | H | F | OC₃F₇ | F | F | |
| n-C₄H₉ | F | F | OC₃F₇ | F | F | |
| n-C₅H₁₁ | H | H | OC₃F₇ | H | H | |
| n-C₅H₁₁ | H | H | OC₃F₇ | F | H | |
| n-C₅H₁₁ | H | H | OC₃F₇ | F | F | |
| n-C₅H₁₁ | H | F | OC₃F₇ | F | F | |
| n-C₅H₁₁ | F | F | OC₃F₇ | F | F | |
| n-C₆H₁₃ | H | H | OC₃F₇ | H | H | |
| n-C₆H₁₃ | H | H | OC₃F₇ | F | H | |
| n-C₆H₁₃ | H | H | OC₃F₇ | F | F | |
| n-C₆H₁₃ | H | F | OC₃F₇ | F | F | |
| n-C₆H₁₃ | F | F | OC₃F₇ | F | F | |
| CH₂=CH | H | H | OC₃F₇ | H | H | |
| CH₂=CH | H | H | OC₃F₇ | F | H | |
| CH₂=CH | H | H | OC₃F₇ | F | F | |
| CH₂=CH | H | F | OC₃F₇ | F | F | |
| CH₂=CH | F | F | OC₃F₇ | F | F | |
| CH₃CH=CH | H | H | OC₃F₇ | H | H | |
| CH₃CH=CH | H | H | OC₃F₇ | F | H | |
| CH_{3C}H=CH | H | H | OC₃F₇ | F | F | |
| CH₃CH₌CH | H | F | OC₃F₇ | F | F | |
| CH₃CH=CH | F | F | OC₃F₇ | F | F | |
| CH₂=CHCH₂CH₂ | H | H | OC₃F₇ | H | H | |
| CH₂=CHCH₂CH₂ | H | H | OC₃F₇ | F | H | |
| CH₂=CHCH₂CH₂ | H | H | OC₃F₇ | F | F | |
| CH₂=CHCH₂CH₂ | H | F | OC₃F₇ | F | F | |
| CH₂₌CHCH₂CH₂ | F | F | OC₃F₇ | F | F | |
| H | H | H | OCHFCF₃ | H | H | |
| H | H | H | OCHFCF₃ | F | H | |
| H | H | H | OCHFCF₃ | F | F | |
| H | H | F | OCHFCF₃ | F | F | |
| H | F | F | OCHFCF₃ | F | F | |
| CH₃ | H | H | OCHFCF₃ | H | H | |
| CH₃ | H | H | OCHFCF₃ | F | H | |
| CH₃ | H | H | OCHFCF₃ | F | F | |
| CH₃ | H | F | OCHFCF₃ | F | F | |
| CH₃ | F | F | OCHFCF₃ | F | F | |
| C₂H₅ | H | H | OCHFCF₃ | H | H | |
| C₂H₅ | H | H | OCHFCF₃ | F | H | |
| C₂H₅ | H | H | OCHFCF₃ | F | F | |
| C₂H₅ | H | F | OCHFCF₃ | F | F | |
| C₂H₅ | F | F | OCHFCF₃ | F | F | |
| n-C₃H₇ | H | H | OCHFCF₃ | H | H | |
| n-C₃H₇ | H | H | OCHFCF₃ | F | H | |
| n-C₃H₇ | H | H | OCHFCF₃ | F | F | |
| n-C₃H₇ | H | F | OCHFCF₃ | F | F | |
| n-C₃H₇ | F | F | OCHFCF₃ | F | F | |
| n-C₄H₉ | H | H | OCHFCF₃ | H | H | |
| n-C₄H₉ | H | H | OCHFCF₃ | F | H | |
| n-C₄H₉ | H | H | OCHFCF₃ | F | F | |
| n-C₄H₉ | H | F | OCHFCF₃ | F | F | |
| n-C₄H₉ | F | F | OCHFCF₃ | F | F | |
| n-C₅H₁₁ | H | H | OCHFCF₃ | H | H | |
| n-C₅H₁₁ | H | H | OCHFCF₃ | F | H | |
| n-C₅H₁₁ | H | H | OCHFCF₃ | F | F | |
| n-C₅H₁₁ | H | F | OCHFCF₃ | F | F | |
| n-C₅H₁₁ | F | F | OCHFCF₃ | F | F | |
| n-C₆H₁₃ | H | H | OCHFCF₃ | H | H | |
| n-C₆H₁₃ | H | H | OCHFCF₃ | F | H | |
| n-C₆H₁₃ | H | H | OCHFCF₃ | F | F | |
| n-C₆H₁₃ | H | F | OCHFCF₃ | F | F | |
| n-C₆H₁₃ | F | F | OCHFCF₃ | F | F | |
| CH₂=CH | H | H | OCHFCF₃ | H | H | |
| CH₂=CH | H | H | OCHFCF₃ | F | H | |
| CH₂=CH | H | H | OCHFCF₃ | F | F | |
| CH₂=CH | H | F | OCHFCF₃ | F | F | |
| CH₂=CH | F | F | OCHFCF₃ | F | F | |
| CH₃CH=CH | H | H | OCHFCF₃ | H | H | |
| CH₃CH=CH | H | H | OCHFCF₃ | F | H | |
| CH₃CH=CH | H | H | OCHFCF₃ | F | F | |
| CH₃CH=CH | H | F | OCHFCF₃ | F | F | |
| CH₃CH=CH | F | F | OCHFCF₃ | F | F | |
| CH₂=CHCH₂CH₂ | H | H | OCHFCF₃ | H | H | |
| CH₂=CHCH_{2C}H₂ | H | H | OCHFCF₃ | F | H | |
| CH₂=CHCH₂CH₂ | H | H | OCHFCF₃ | F | F | |
| CH₂=CHCH₂CH₂ | H | F | OCHFCF₃ | F | F | |
| CH₂=CHCH₂CH₂ | F | F | OCHFCF₃ | F | F | |
| H | H | H | OCF₂CHFCF₃ | H | H | |
| H | H | H | OCF₂CHFCF₃ | F | H | |
| H | H | H | OCF₂CHFCF₃ | F | F | |
| H | H | F | OCF₂CHFCF₃ | F | F | |
| H | F | F | OCF₂CHFCF₃ | F | F | |
| CH₃ | H | H | OCF₂CHFCF₃ | H | H | |
| CH₃ | H | H | OCF₂CHFCF₃ | F | H | |
| CH₃ | H | H | OCF₂CHFCF₃ | F | F | |
| CH₃ | H | F | OCF₂CHFCF₃ | F | F | |
| CH₃ | F | F | OCF₂CHFCF₃ | F | F | |
| C₂H₅ | H | H | OCF₂CHFCF₃ | H | H | |
| C₂H₅ | H | H | OCF₂CHFCF₃ | F | H | |
| C₂H₅ | H | H | OCF₂CHFCF₃ | F | F | |
| C₂H₅ | H | F | OCF₂CHFCF₃ | F | F | |
| C₂H₅ | F | F | OCF₂CHFCF₃ | F | F | |
| n-C₃H₇ | H | H | OCF₂CHFCF₃ | H | H | |
| n-C₃H₇ | H | H | OCF₂CHFCF₃ | F | H | |
| n-C₃H₇ | H | H | OCF₂CHFCF₃ | F | F | |
| n-C₃H₇ | H | F | OCF₂CHFCF₃ | F | F | |
| n-C₃H₇ | F | F | OCF₂CHFCF₃ | F | F | |
| n-C₄H₉ | H | H | OCF₂CHFCF₃ | H | H | |
| n-C₄H₉ | H | H | OCF₂CHFCF₃ | F | H | |
| n-C₄H₉ | H | H | OCF₂CHFCF₃ | F | F | |
| n-C₄H₉ | H | F | OCF₂CHFCF₃ | F | F | |
| n-C₄H₉ | F | F | OCF₂CHFCF₃ | F | F | |
| n-C₅H₁₁ | H | H | OCF₂CHFCF₃ | H | H | |
| n-C₅H₁₁ | H | H | OCF₂CHFCF₃ | F | H | |
| n-C₅H₁₁ | H | H | OCF₂CHFCF₃ | F | F | |
| n-C₅H₁₁ | H | F | OCF₂CHFCF₃ | F | F | |
| n-C₅H₁₁ | F | F | OCF₂CHFCF₃ | F | F | |
| n-C₆H₁₃ | H | H | OCF₂CHFCF₃ | H | H | |
| n-C₆H₁₃ | H | H | OCF₂CHFCF₃ | F | H | |
| n-C₆H₁₃ | H | H | OCF₂CHFCF₃ | F | F | |
| n-C₆H₁₃ | H | F | OCF₂CHFCF₃ | F | F | |
| n-C₆H₁₃ | F | F | OCF₂CHFCF₃ | F | F | |
| CH₂=CH | H | H | OCF₂CHFCF₃ | H | H | |
| CH₂=CH | H | H | OCF₂CHFCF₃ | F | H | |
| CH₂=CH | H | H | OCF₂CHFCF₃ | F | F | |
| CH₂=CH | H | F | OCF₂CHFCF₃ | F | F | |
| CH₂=CH | F | F | OCF₂CHFCF₃ | F | F | |
| CH₃CH=CH | H | H | OCF₂CHFCF₃ | H | H | |
| CH₃CH=CH | H | H | OCF₂CHFCF₃ | F | H | |
| CH₃CH=CH | H | H | OCF₂CHFCF₃ | F | F | |
| CH₃CH=CH | H | F | OCF₂CHFCF₃ | F | F | |
| CH₃CH=CH | F | F | OCF₂CHFCF₃ | F | F | |
| CH₂=CHCH₂CH₂ | H | H | OCF₂CHFCF₃ | H | H | |
| CH₂=CHCH₂CH₂ | H | H | OCF₂CHFCF₃ | F | H | |
| CH₂=CHCH₂CH₂ | H | H | OCF₂CHFCF₃ | F | F | |
| CH₂=CHCH₂CH₂ | H | F | OCF₂CHFCF₃ | F | F | |
| CH₂=CHCH₂CH₂ | F | F | OCF₂CHFCF₃ | F | F | |
| H | H | H | CN | H | H | |
| H | H | H | CN | F | H | |
| H | H | H | CN | F | F | |
| H | H | F | CN | F | F | |
| H | F | F | CN | F | F | |
| CH₃ | H | H | CN | H | H | |
| CH₃ | H | H | CN | F | H | |
| CH₃ | H | H | CN | F | F | |
| CH₃ | H | F | CN | F | F | |
| CH₃ | F | F | CN | F | F | |
| C₂H₅ | H | H | CN | H | H | |
| C₂H₅ | H | H | CN | F | H | |
| C₂H₅ | H | H | CN | F | F | |
| C₂H₅ | H | F | CN | F | F | |
| C₂H₅ | F | F | CN | F | F | |
| n-C₃H₇ | H | H | CN | H | H | |
| n-C₃H₇ | H | H | CN | F | H | |
| n-C₃H₇ | H | H | CN | F | F | |
| n-C₃H₇ | H | F | CN | F | F | |
| n-C₃H₇ | F | F | CN | F | F | |
| n-C₄H₉ | H | H | CN | H | H | |
| n-C₄H₉ | H | H | CN | F | H | |
| n-C₄H₉ | H | H | CN | F | F | |
| n-C₄H₉ | H | F | CN | F | F | |
| n-C₄H₉ | F | F | CN | F | F | |
| n-C₅H₁₁ | H | H | CN | H | H | |
| n-C₅H₁₁ | H | H | CN | F | H | |
| n-C₅H₁₁ | H | H | CN | F | F | |
| n-C₅H₁₁ | H | F | CN | F | F | |
| n-C₅H₁₁ | F | F | CN | F | F | |
| n-C₆H₁₃ | H | H | CN | H | H | |
| n-C₆H₁₃ | H | H | CN | F | H | |
| n-C₆H₁₃ | H | H | CN | F | F | |
| n-C₆H₁₃ | H | F | CN | F | F | |
| n-C₆H₁₃ | F | F | CN | F | F | |
| CH₂=CH | H | H | CN | H | H | |
| CH₂=CH | H | H | CN | F | H | |
| CH₂=CH | H | H | CN | F | F | |
| CH₂=CH | H | F | CN | F | F | |
| CH₂=CH | F | F | CN | F | F | |
| CH₃CH=CH | H | H | CN | H | H | |
| CH₃CH=CH | H | H | CN | F | H | |
| CH₃CH=CH | H | H | CN | F | F | |
| CH₃CH=CH | H | F | CN | F | F | |
| CH₃CH=CH | F | F | CN | F | F | |
| CH₂=CHCH₂CH₂ | H | H | CN | H | H | |
| CH₂=CHCH₂CH₂ | H | H | CN | F | H | |
| CH₂=CHCH₂CH₂ | H | H | CN | F | F | |
| CH₂=CHCH₂CH₂ | H | F | CN | F | F | |
| CH₂=CHCH₂CH₂ | F | F | CN | F | F | |

### Beispiel M1

| | | | |
|---|---|---|---|
| CCP-1F.F.F | 2,00 % | Klärpunkt [°C]: | 72,0 |
| CCP-3OCF₃ | 5,00 % | Δn [589 nm; 20 °C]: | 0,0779 |
| CCQU-5-F | 4,00 % | γ₁ [mPa·s; 20 °C]: | 98 |
| CCQU-1-F | 14,00 % | V₁₀ [V]: | 1,23 |
| CCQU-2-F | 9,00 % | | |
| CCQU-3-F | 9,00 % | | |
| CPUQU-2-F | 8,00 % | | |
| CPUQU-3-F | 3,00 % | | |
| CDU-2-F | 8,00 % | | |
| CDU-3-F | 9,00 % | | |
| PGU-2-F | 4,00 % | | |
| CC-3-V1 | 12,00 % | | |
| CC-5-V | 8,00 % | | |
| CCH-35 | 5,00 % | | |

### Beispiel M2

| | | | |
|---|---|---|---|
| CC-3-V | 19,00 % | Klärpunkt [°C]: | 80,6 |
| CCH-35 | 4,00 % | Δn [589 nm; 20 °C]: | 0,0763 |
| CCQU-1-F | 11,00 % | γ₁[mPa·s; 20°C]: | 105 |
| CCQU-2-F | 10,00 % | V₁₀ [V]: | 1,24 |
| CCP-2OCF₃ | 8,00 % | | |
| CCP-3OCF₃ | 8,00 % | | |
| CCP-4OCF₃ | 6,00 % | | |
| CCZU-2-F | 4,00 % | | |
| CCZU-3-F | 15,00 % | | |
| CGUQU-2-F | 10,00 % | | |
| CGUQU-3-F | 5,00 % | | |

### Beispiel M3

| | | | |
|---|---|---|---|
| CCP-1 F.F.F | 8,00 % | Klärpunkt [°C]: | 90,5 |
| CCP-2F.F.F | 8,00 % | Δn [589 nm; 20 °C]: | 0,0783 |
| CCP-3F.F.F | 7,00 % | V₁₀ [V]: | 1,14 |
| CCP-5F.F.F | 5,00 % | | |
| CCP-20CF₃.F | 10,00 % | | |
| CCP-50CF₃.F | 10,00 % | | |
| CGUQU-2-F | 6,00 % | | |
| CGUQU-3-F | 5,00 % | | |
| CCOC-3-3 | 3,00 % | | |
| CCOC-4-3 | 4,00 % | | |
| CCOC-3-5 | 2,00 % | | |
| CCQU-1-F | 10,00 % | | |
| CCQU-2-F | 10,00 % | | |
| CCQU-3-F | 12,00 % | | |

### Beispiel M4

| | |
|---|---|
| CCP-1 F.F.F | 8,00 % |
| CCP-2F.F.F | 9,00 % |
| CCP-3F.F.F | 9,00 % |
| CCP-5F.F.F | 5,00 % |
| CCP-20CF₃.F | 11,00% |
| CCP-50CF₃.F | 12,00 % |
| CCQU-2-F | 10,00 % |
| CCQU-3-F | 12,00 % |
| CCQU-5-F | 8,00 % |
| CUUQU-2-F . | 5,00 % |
| CUUQU-3-F | 6,00 % |
| CCH-5CF₃ | 1,00 % |
| CCOC-3-3 | 2,00 % |
| CCOC-4-3 | 2,00 % |

### Beispiel M5

| | | | |
|---|---|---|---|
| CECU-2-F | 4,00 % | Klärpunkt [°C]: | 79,1 |
| CECU-5-F | 9,00 % | Δn [589 nm; 20 °C]: | 0,0742 |
| CCP-2F.F.F | 9,00 % | Δε [kHz, 20 °C]: | 11,1 |
| CCP-3F.F.F | 10,00 % | γ₁ [mPa·s; 20 °C]: | 163 |
| CCP-5F.P.F | 6,00 % | | |
| CCZU-2-F | 4,00 % | | |
| CCZU-3-F | 15,00 % | | |
| CCZU-5-F | 4,00 % | | |
| CCPU-5-F | 2,00 % | | |
| CCQU-1-F | 8,00 % | | |
| CCQU-2-F | 10,00 % | | |
| CCQU-3-F | 11,00 % | | |
| CGUQU-2-F | 8,00 % | | |

### Beispiel M6

| | | | |
|---|---|---|---|
| CCQG-2-F | 8,00 % | Klärpunkt [°C]: | 73,5 |
| CCQG-3-F | 8,00 % | Δn [589 nm; 20 °C]: | 0,0733 |
| CCQG-5-F | 8,00 % | Δε [kHz, 20°C]: | 11,8 |
| CGUQU-2-F | 7,00 % | γ₁ [mPa·s; 20 °C]: | 138 |
| CGUQU-3-F | 5,00 % | | |
| CCQU-1-F | 9,00 % | | |
| CCQU-2-F | 10,00 % | | |
| CCQU-3-F | 10,00% | | |
| CCQU-2-OT | 9,00 % | | |
| CCQU-3-OT | 9,00 % | | |
| CCQU-4-OT | 9,00 % | | |
| CQU-3-F | 4,00 % | | |
| CQU-5-F | 4,00 % | | |

## Patentansprüche

1. Flüssigkristallines Medium auf der Basis eines Gemisches von polaren Verbindungen mit positiver dielektrischer Anisotropie, **dadurch gekennzeichnet, dass** es eine oder mehrere Verbindungen der Formel I 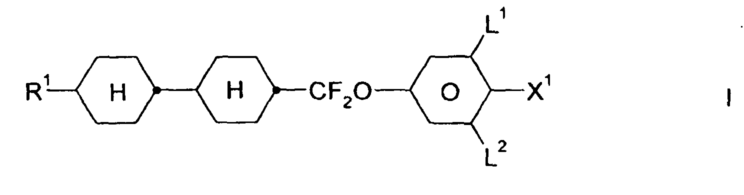 und eine oder mehrere Verbindungen der Formel IA, 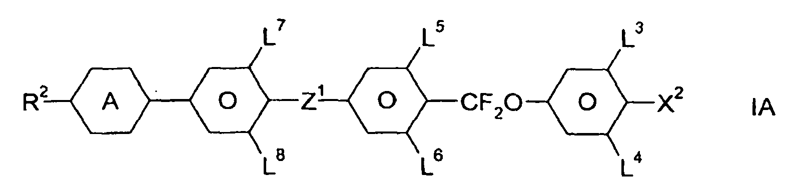 enthält,
worin die einzelnen Reste folgende Bedeutungen besitzen:
R¹ und R² jeweils unabhängig voneinander H, einen halogenierten oder unsubstituierten Alkylrest mit 1 bis 15 C-Atomen, wobei in diesen Resten auch eine oder mehrere CH₂₋Gruppen jeweils unabhängig voneinander durch -C≡C-, -CH=CH-, -O-, 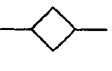 -CO-O- oder -O-CO- so ersetzt sein können, dass O-Atome nicht direkt miteinander verknüpft sind,
X¹ und X² jeweils unabhängig voneinander F, Cl, CN, SF₅, SCN, OCN, halogenierter Alkylrest, halogenierter Alkenylrest, halogenierter Alkoxyrest oder halogenierter Alkenyloxyrest mit jeweils bis zu 6 C-Atomen, 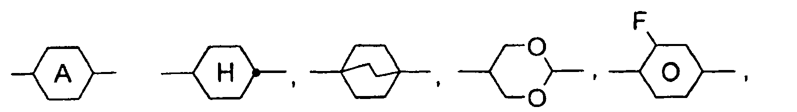 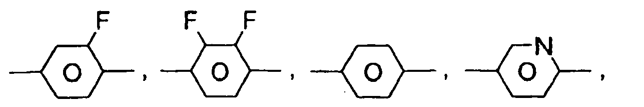 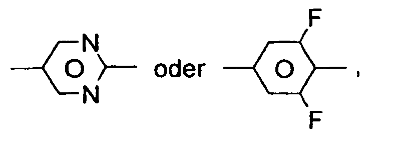
Z¹ -CH₂CH₂-, -CH=CH-, -C≡C-, -COO-, -CH₂O-, -OCH₂-, - OOC-, -(CH₂)₄-, -CHFO-, -CH=CF-, -CF=CH-, -CF=CF-, -C₂F₄-, -CF₂O-, -OCF₂- oder eine Einfachbindung,
L¹ bis L⁸ jeweils unabhängig voneinander H oder F.

2. Flüssigkristallines Medium nach Anspruch 1, **dadurch gekennzeichnet, dass** es ein, zwei oder mehr Verbindungen der Formeln IA-1 bis IA-108, 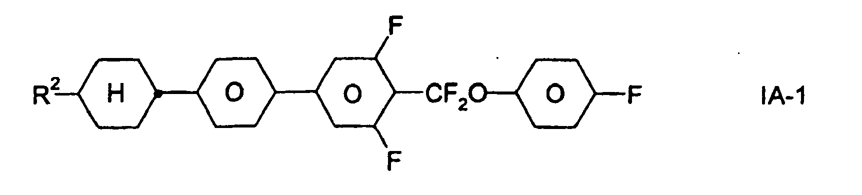 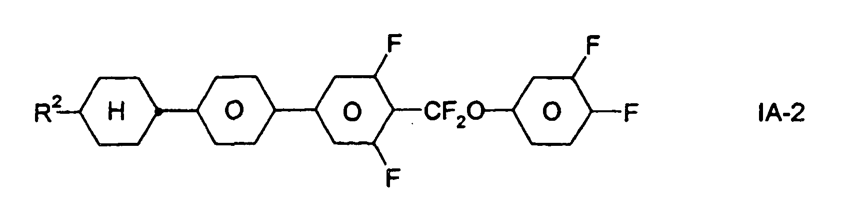 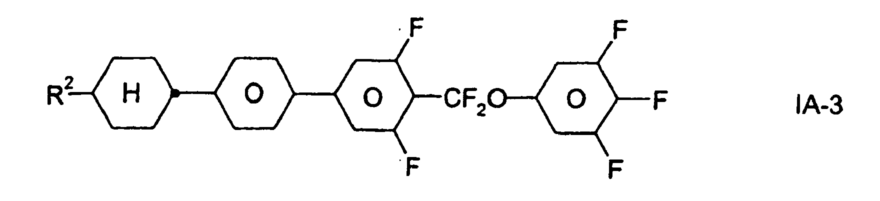 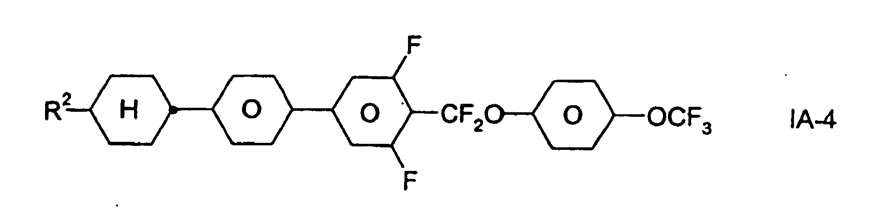 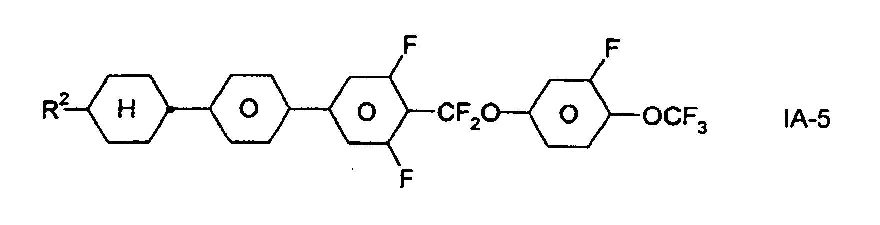 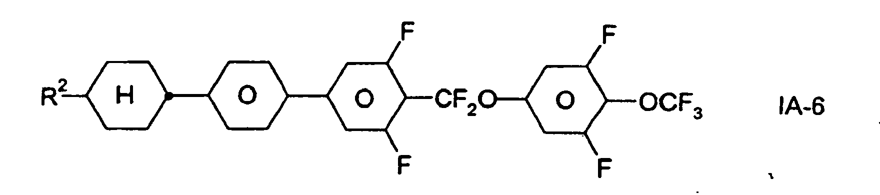 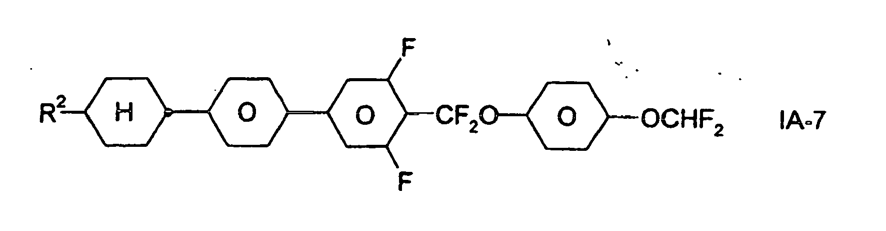 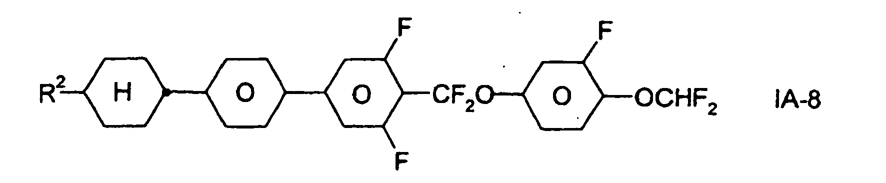 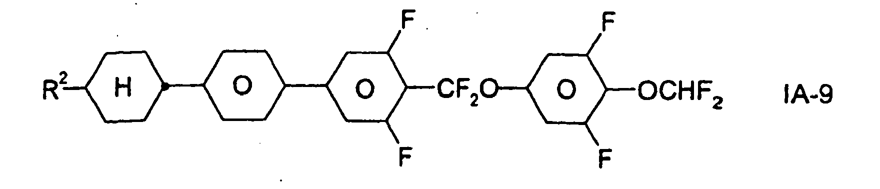 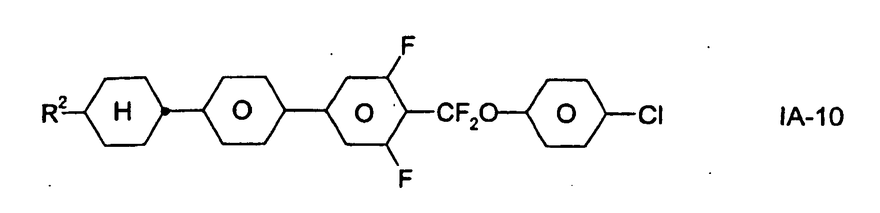 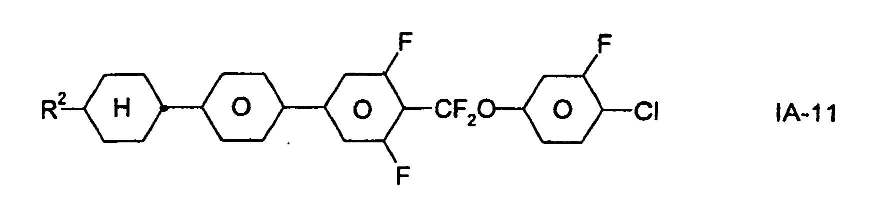 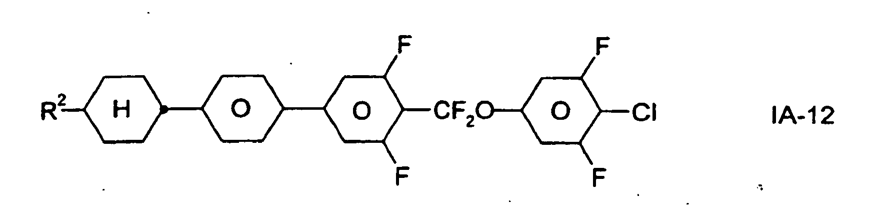 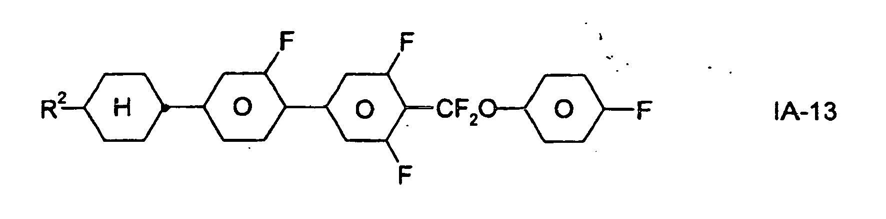 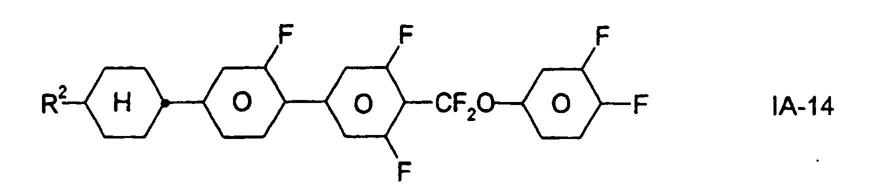 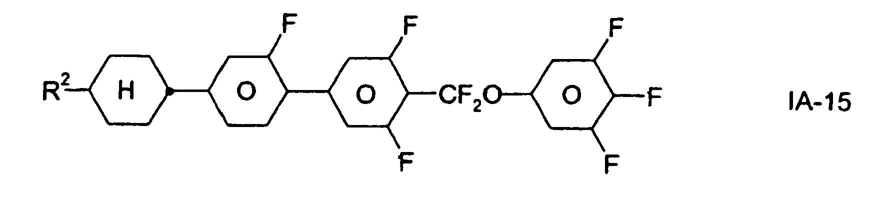 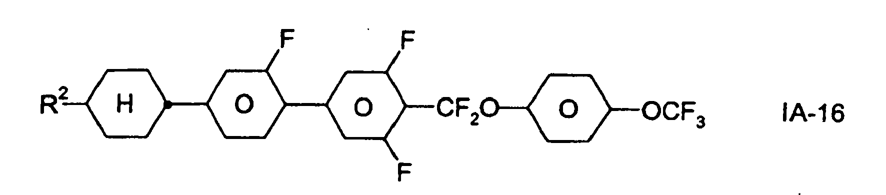 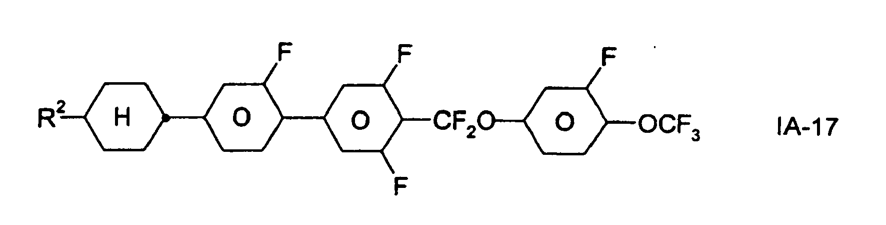 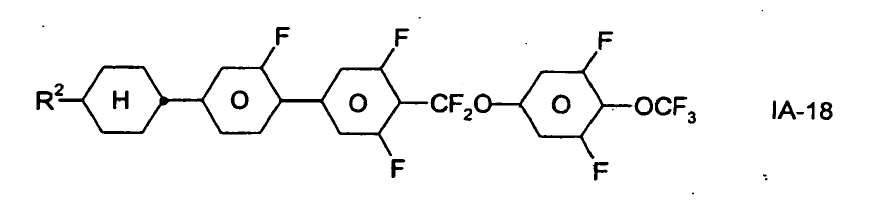 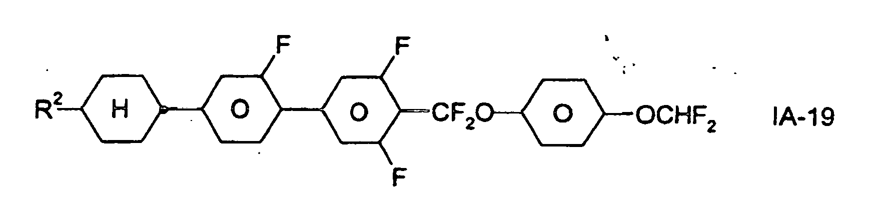 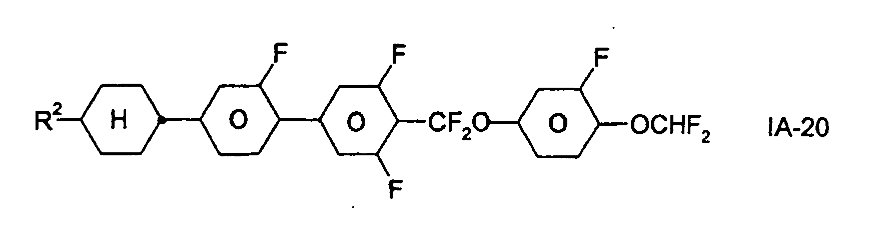 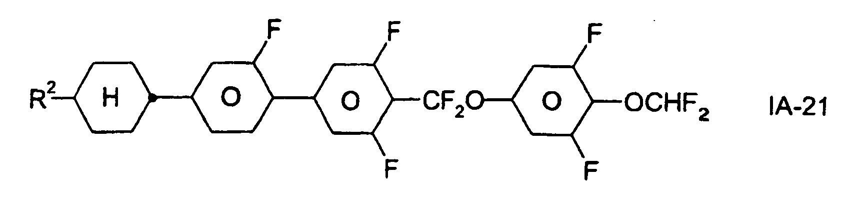 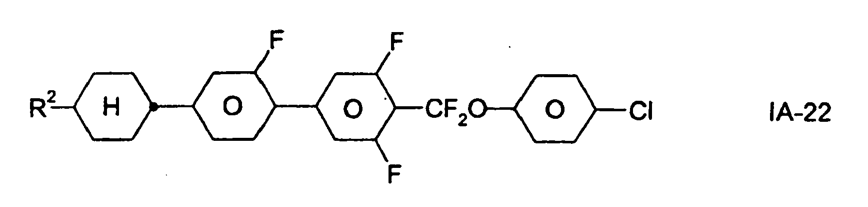 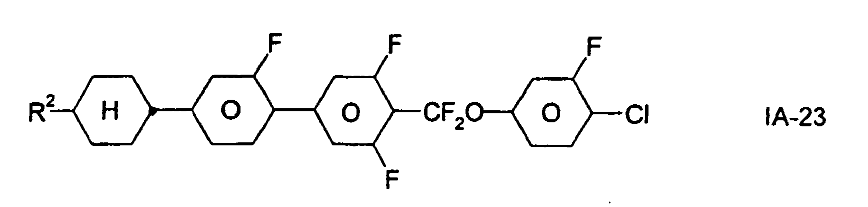 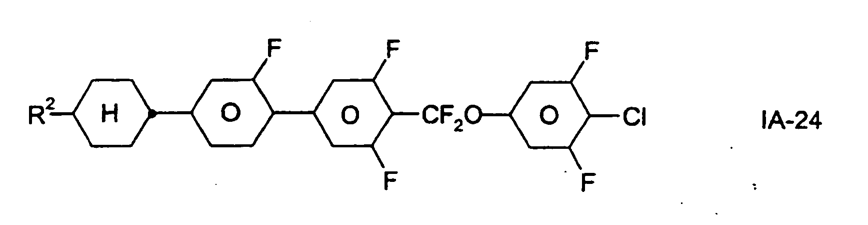 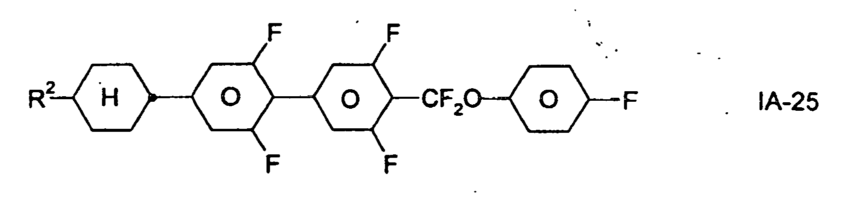 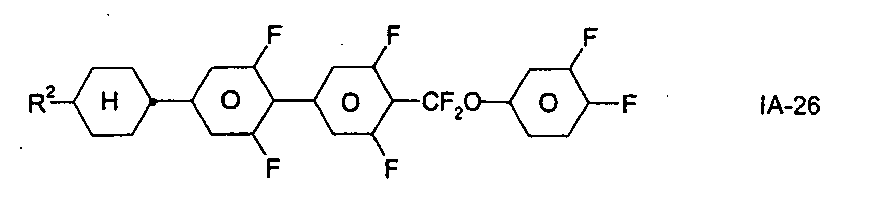 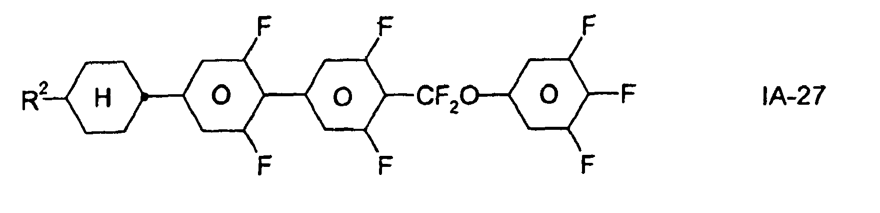 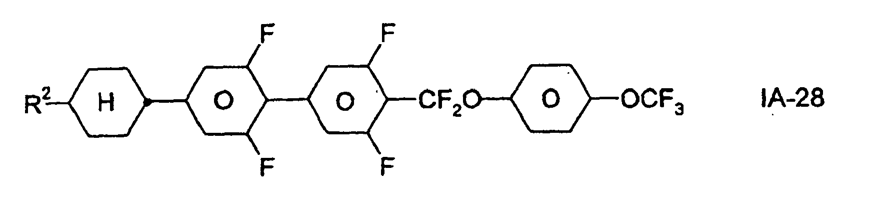 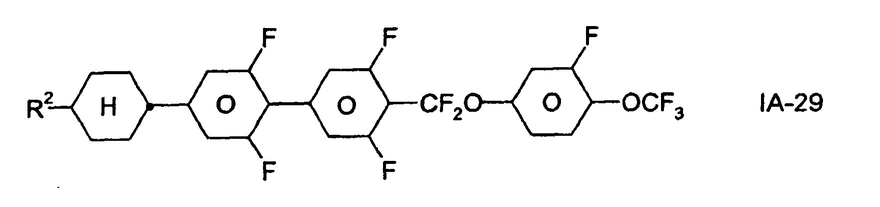 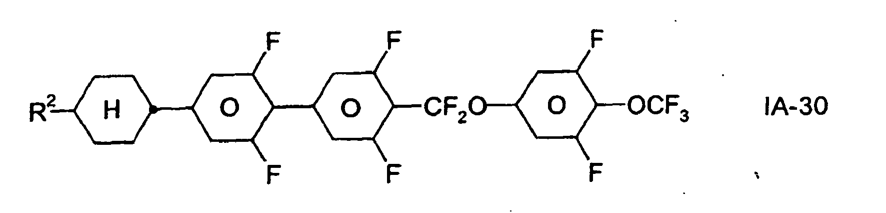 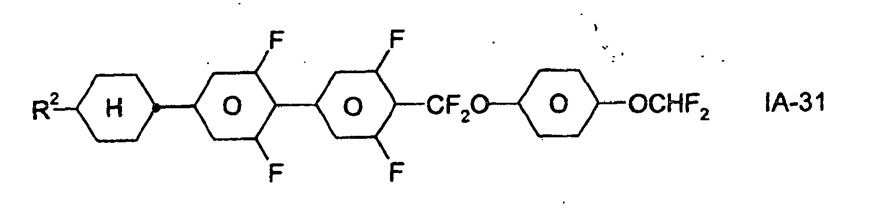 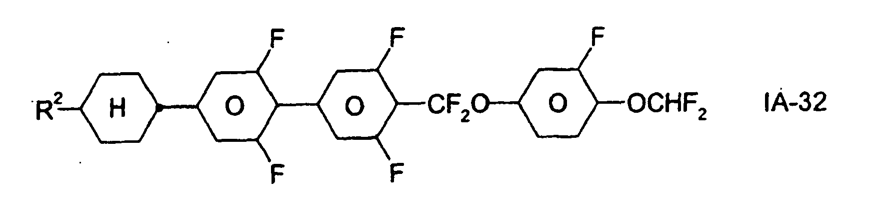 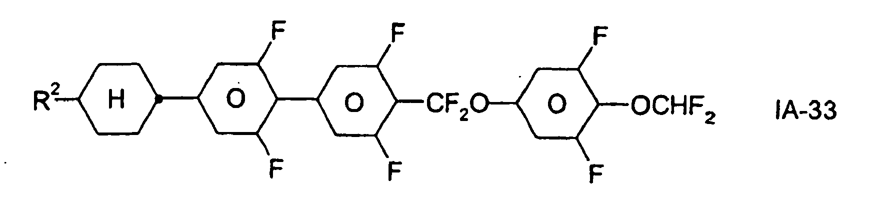 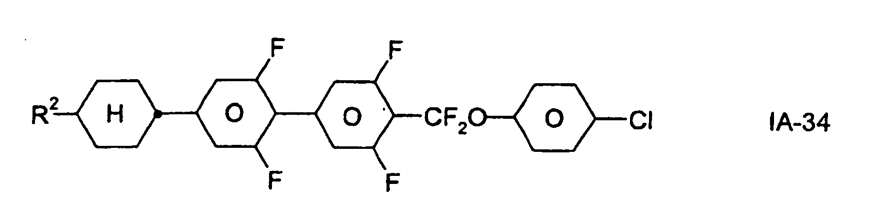 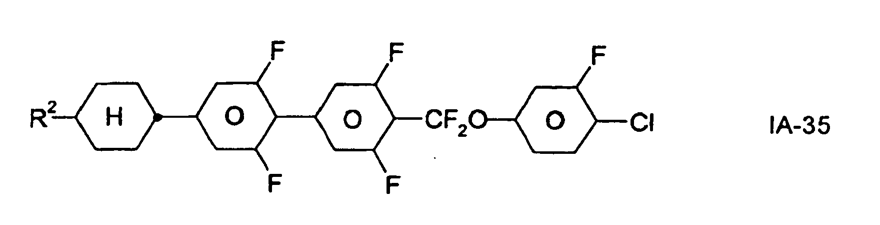 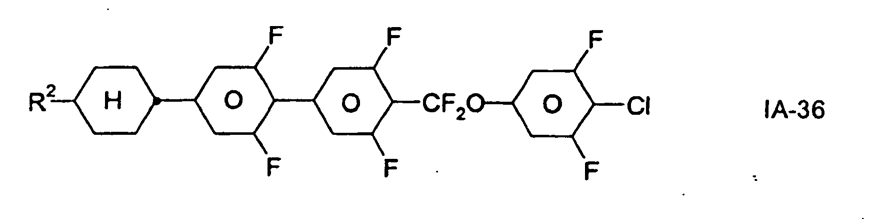 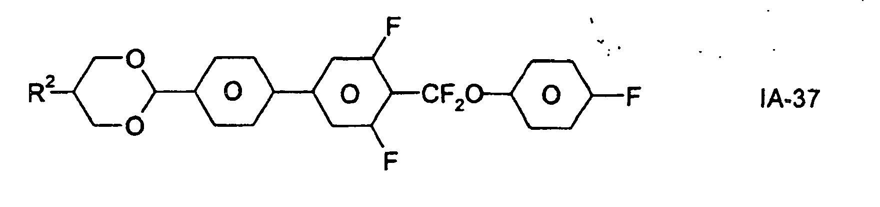 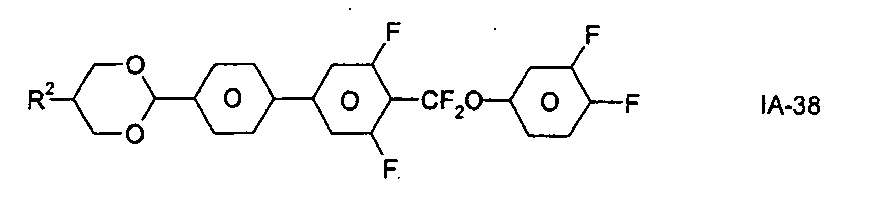 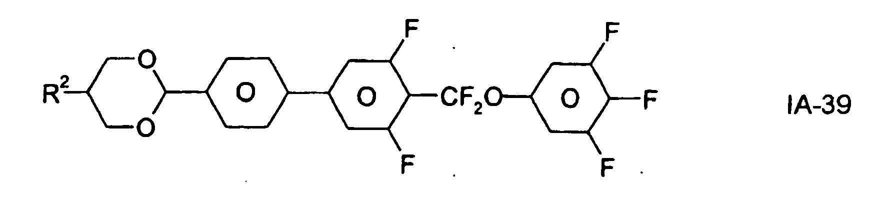 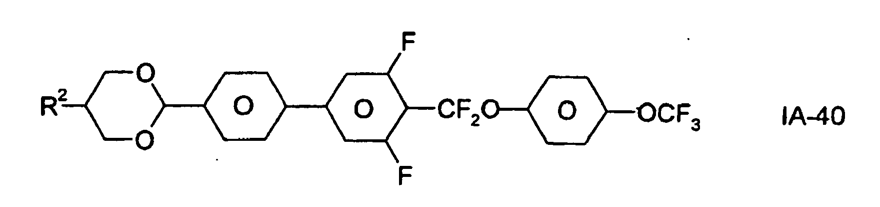 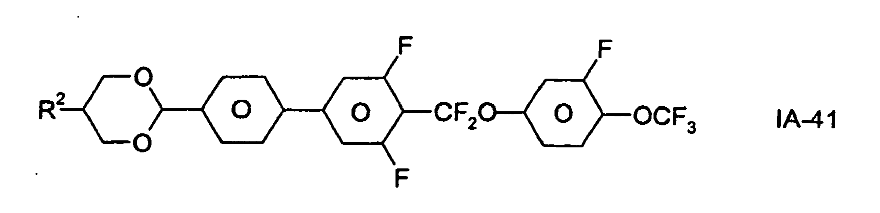 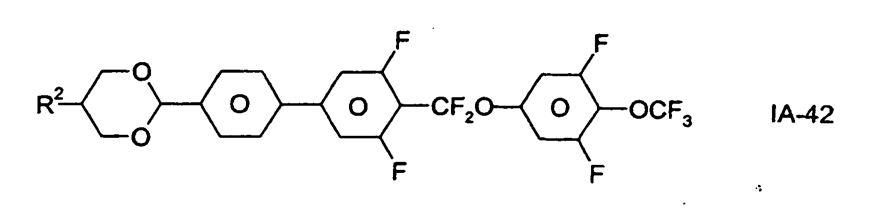 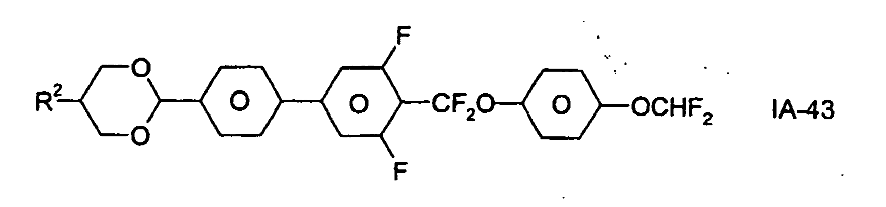 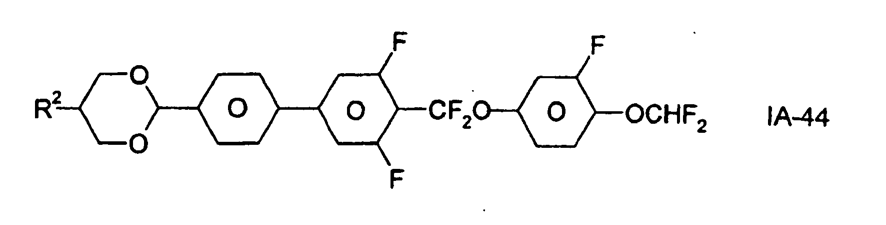 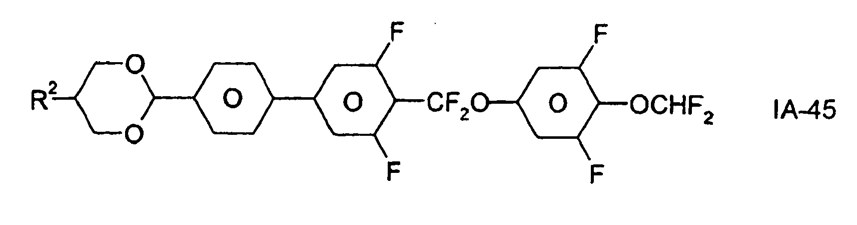 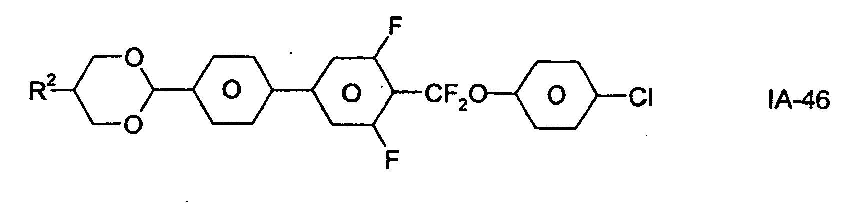 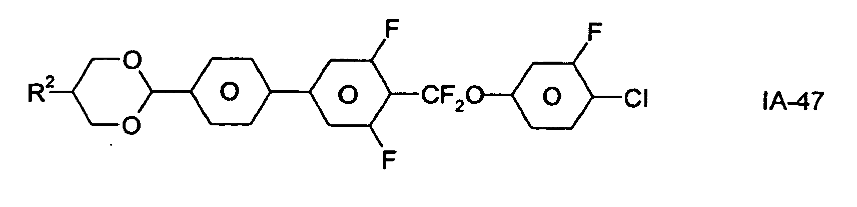 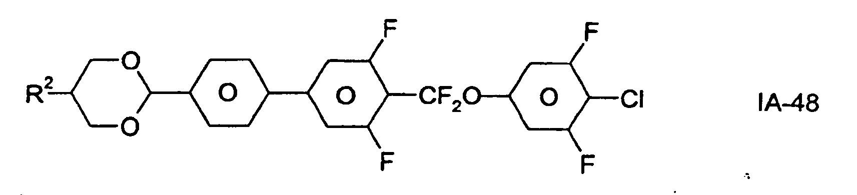 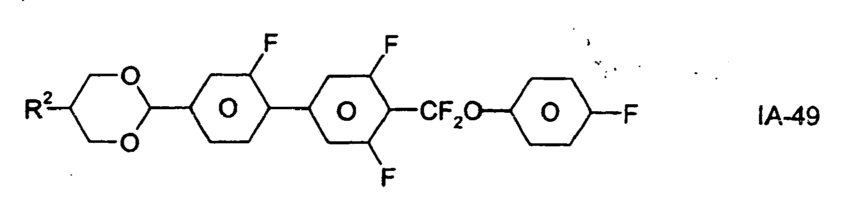 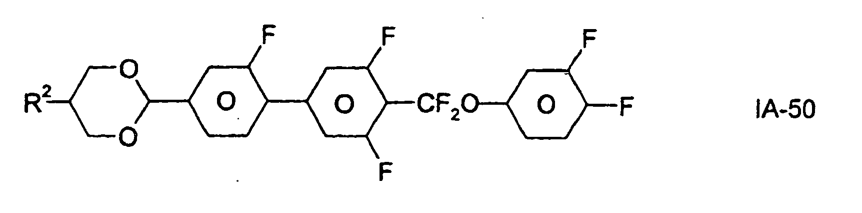 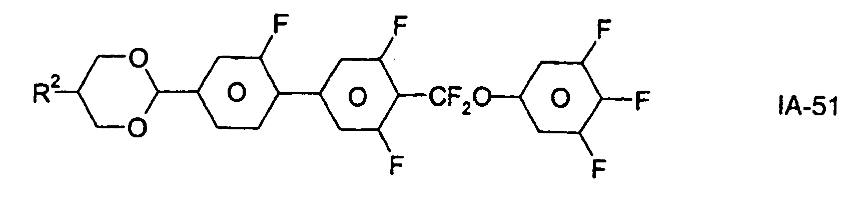 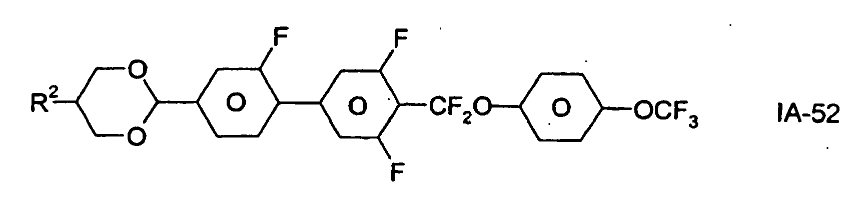 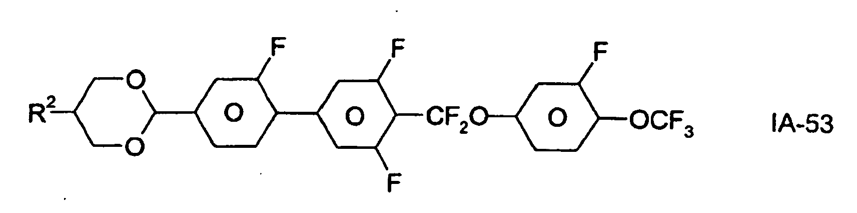 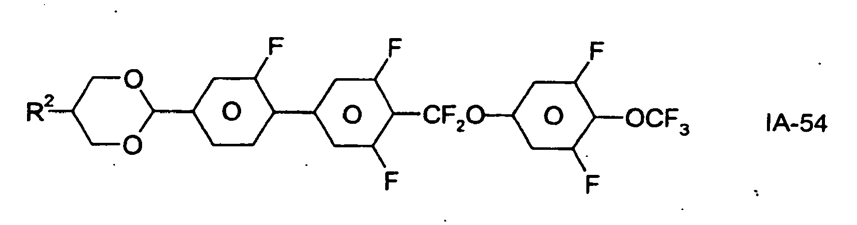 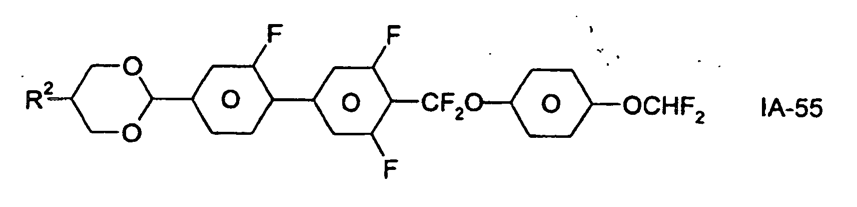 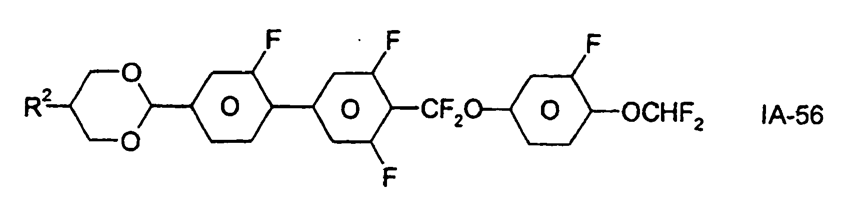 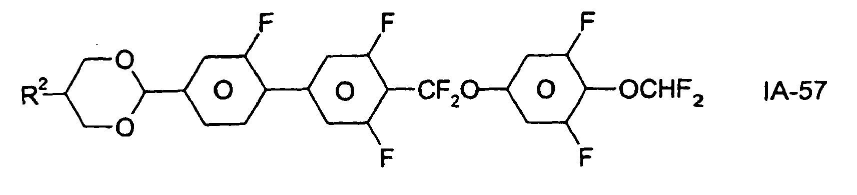 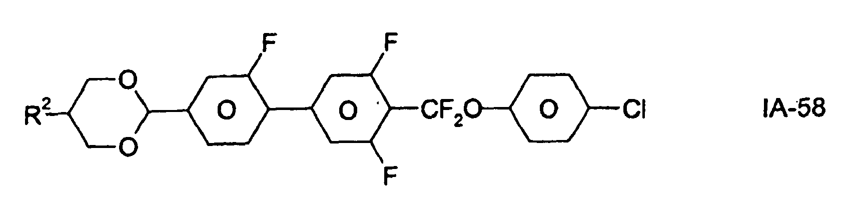 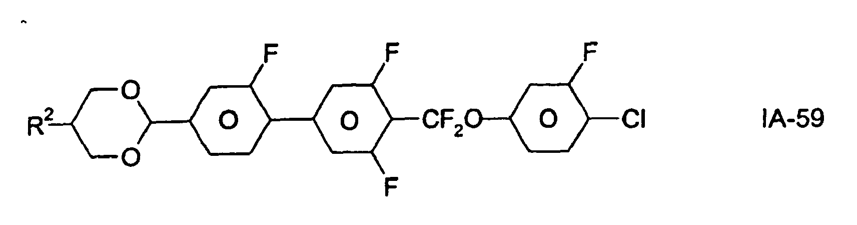 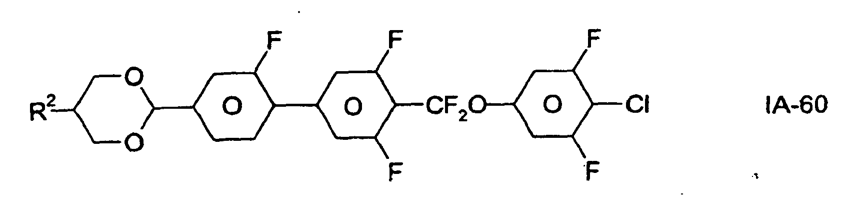 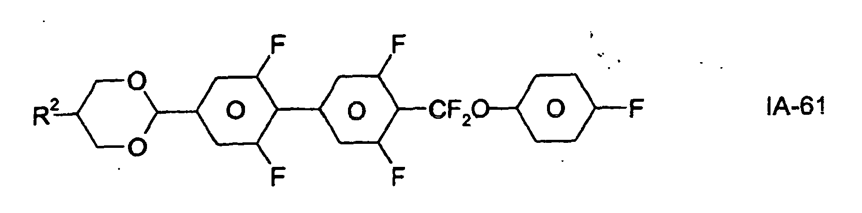 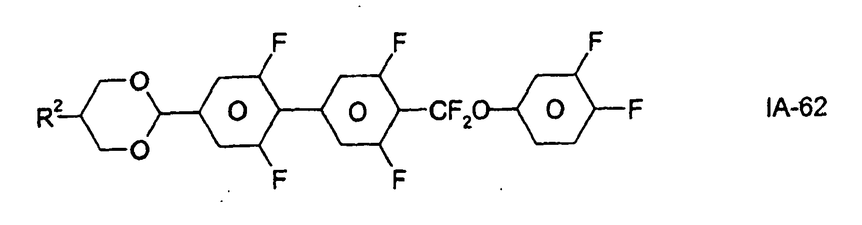 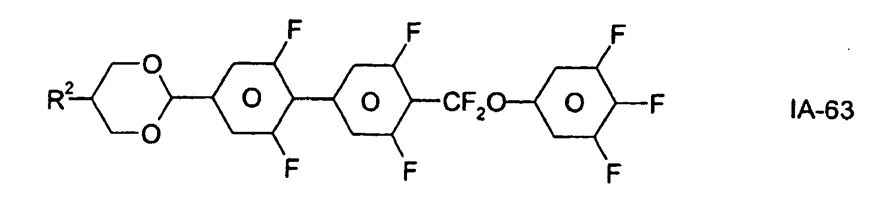 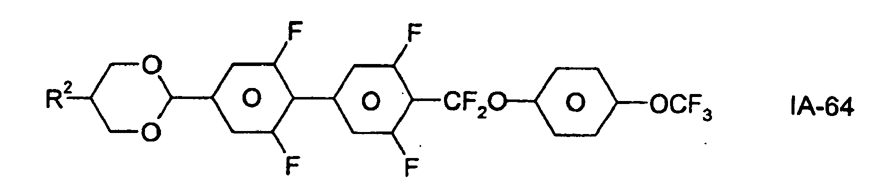 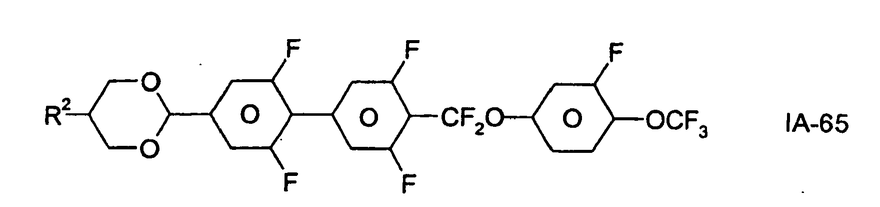 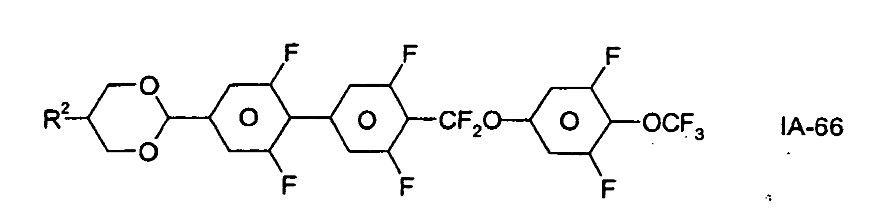 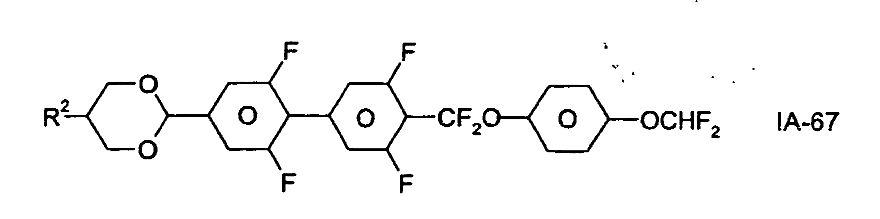 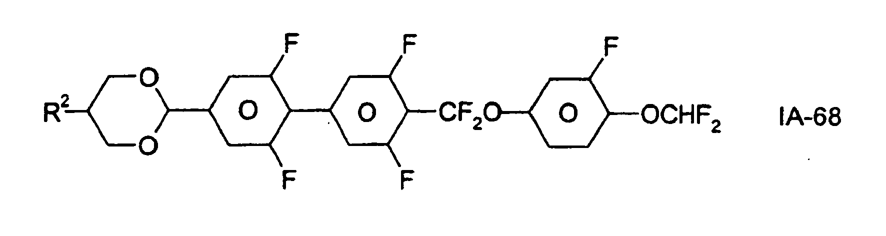 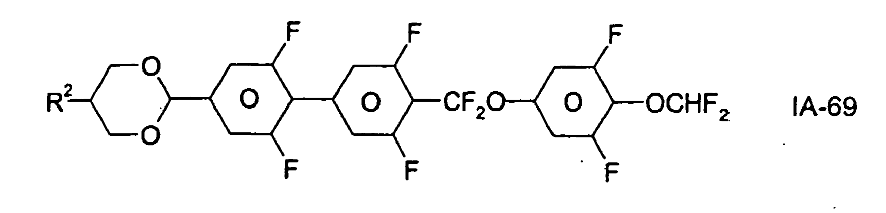 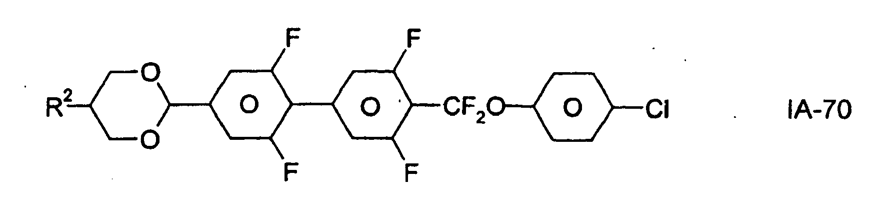 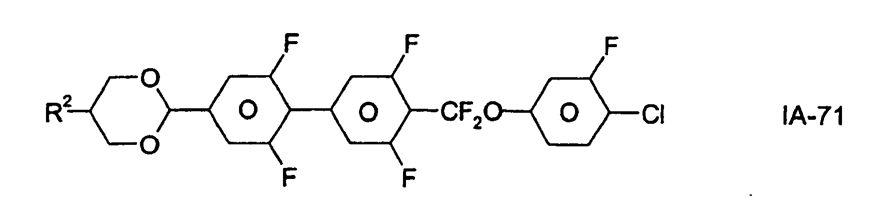 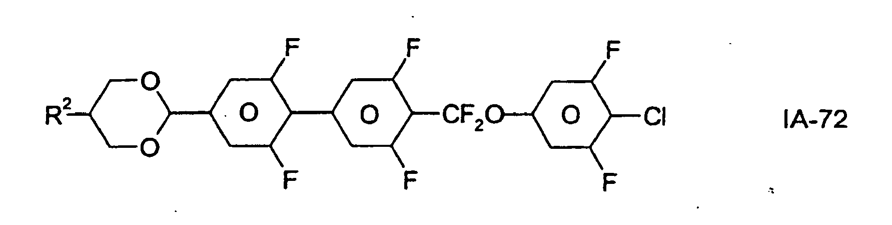 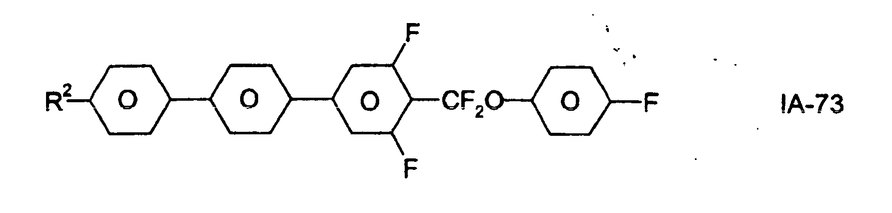 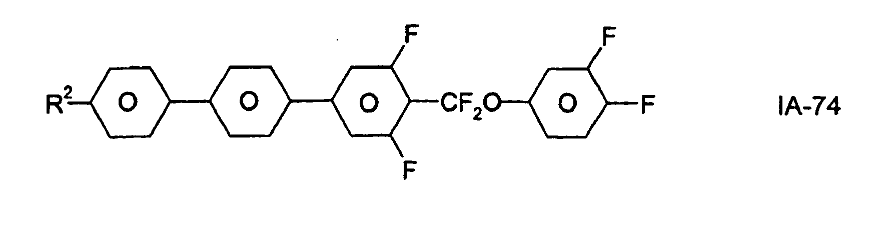 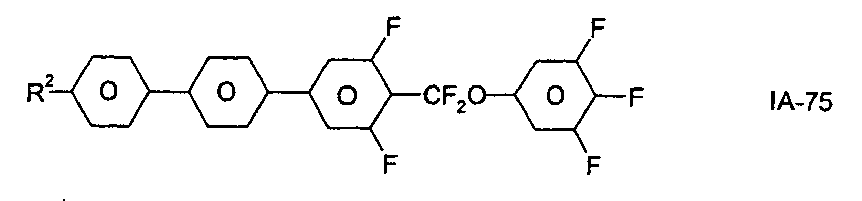 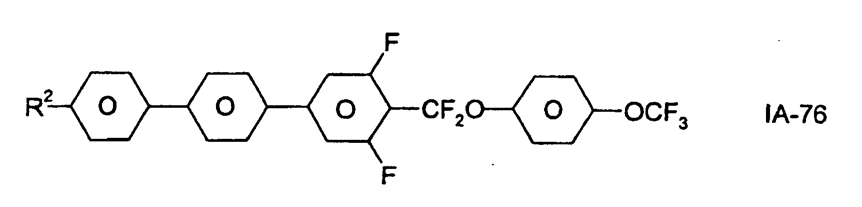 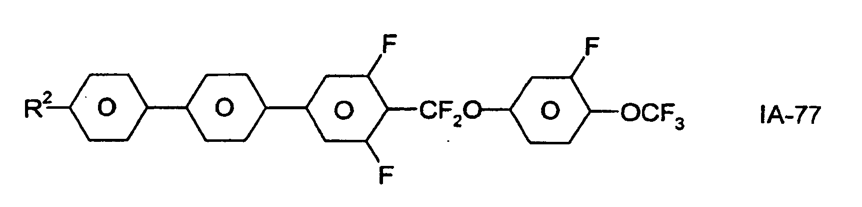 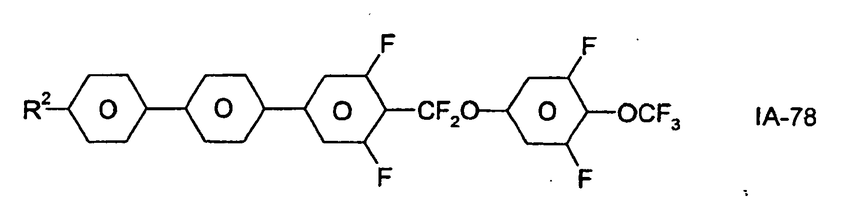 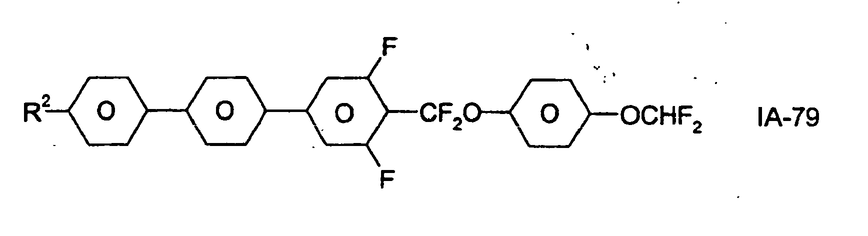 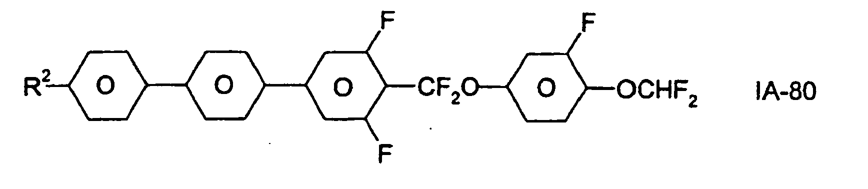 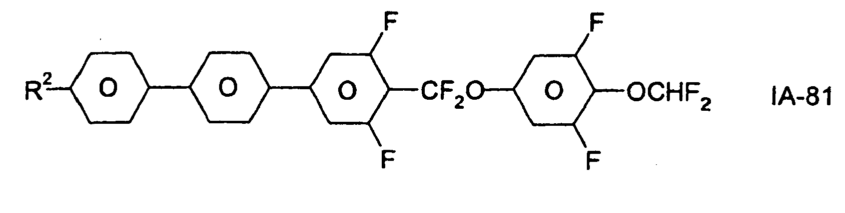 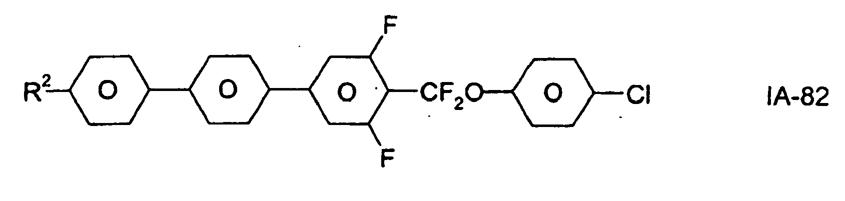 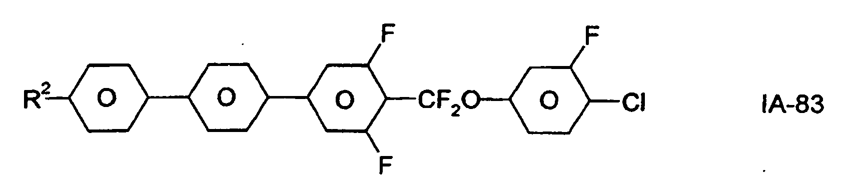 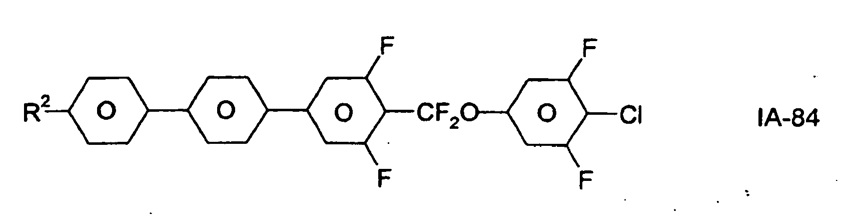 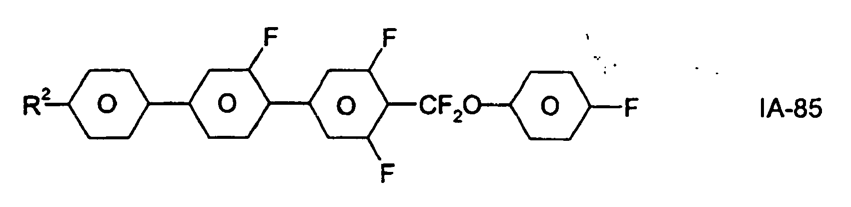 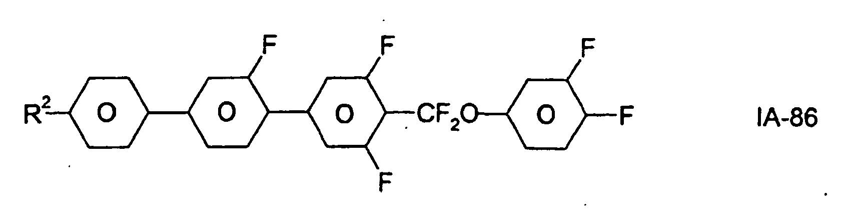 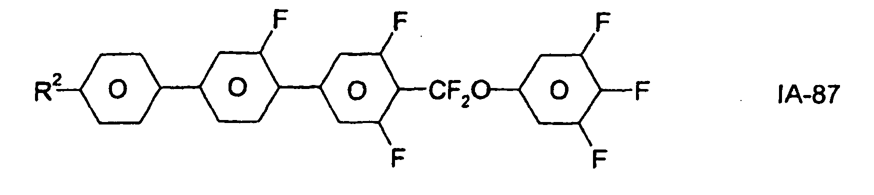 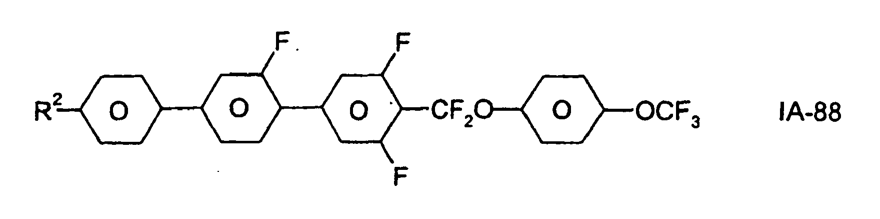 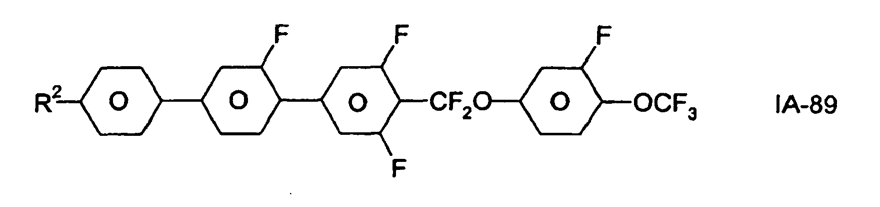 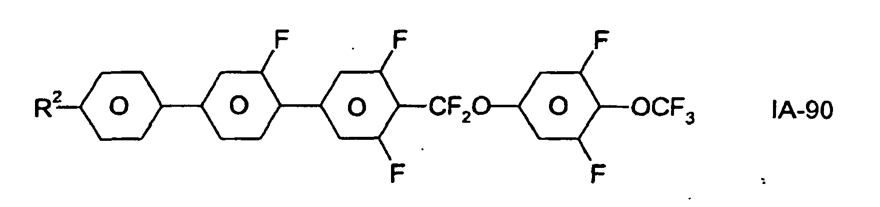 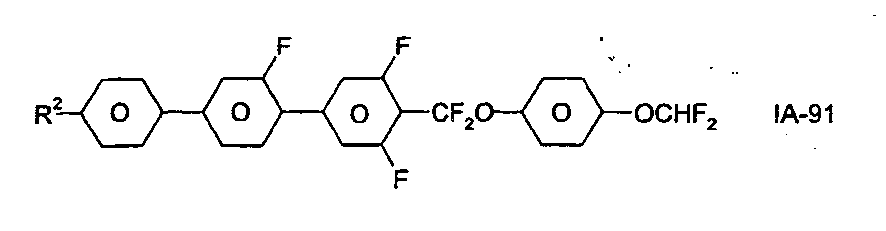 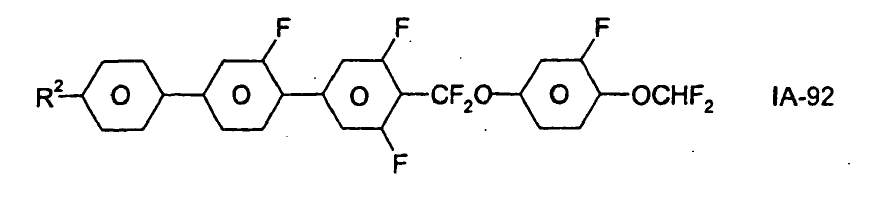 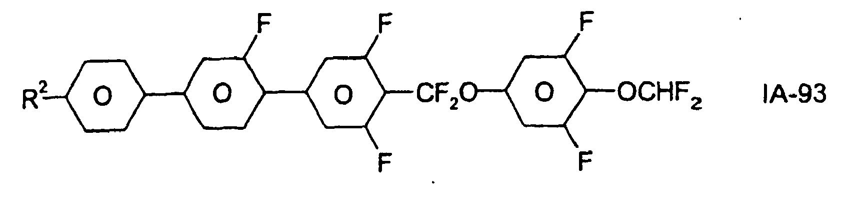 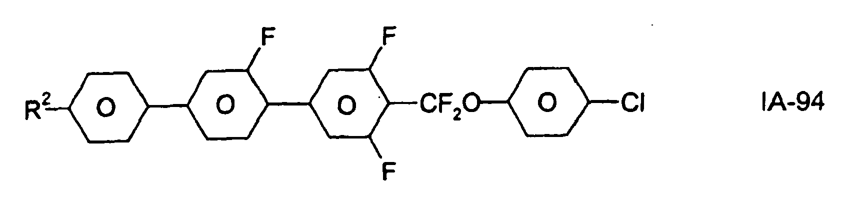 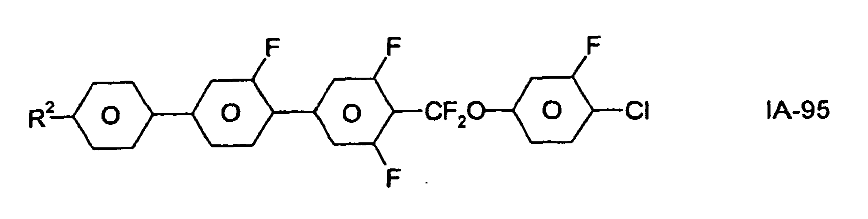 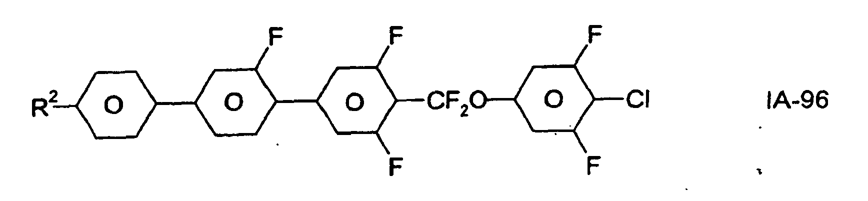 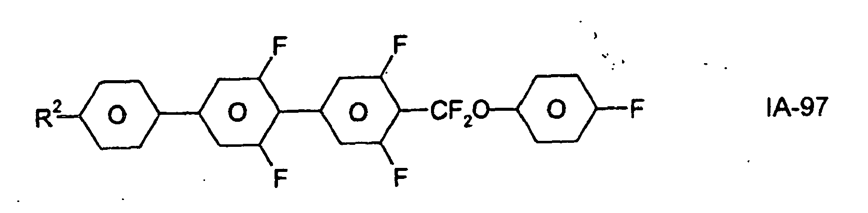 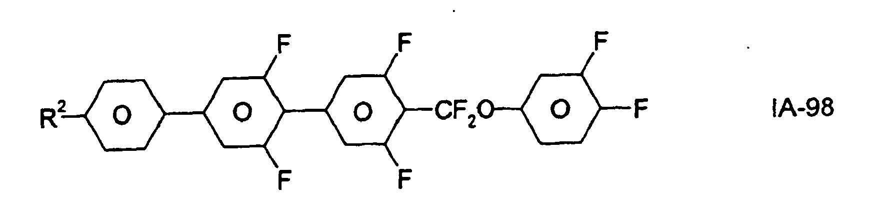 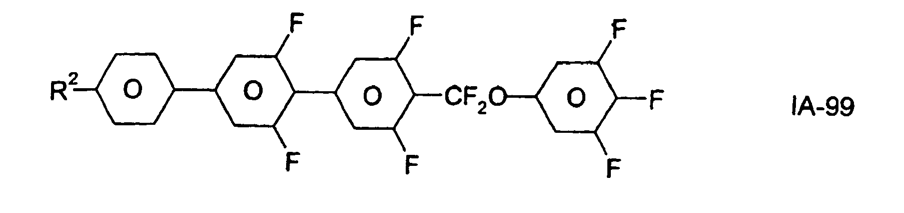 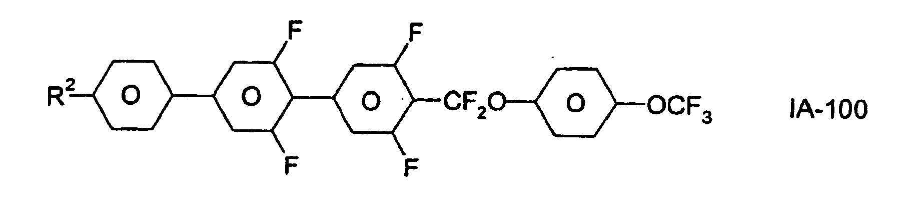 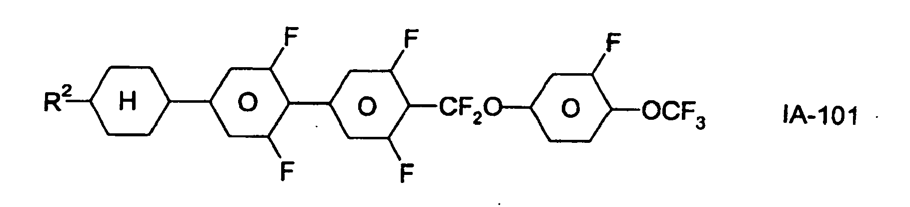 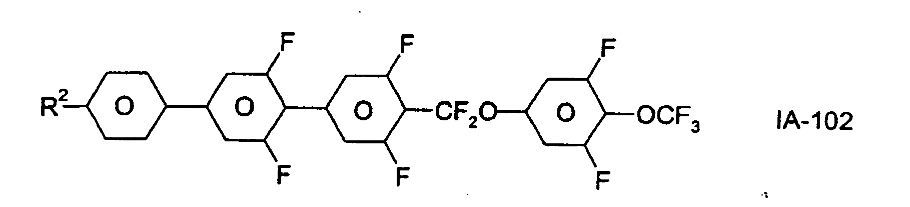 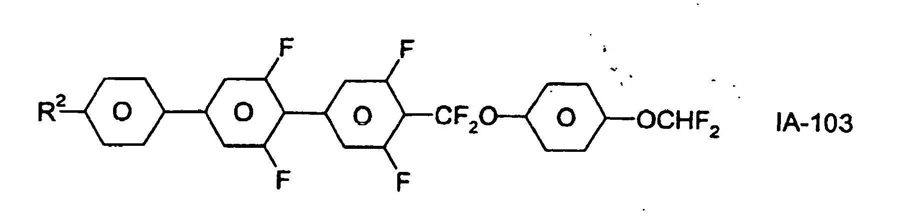 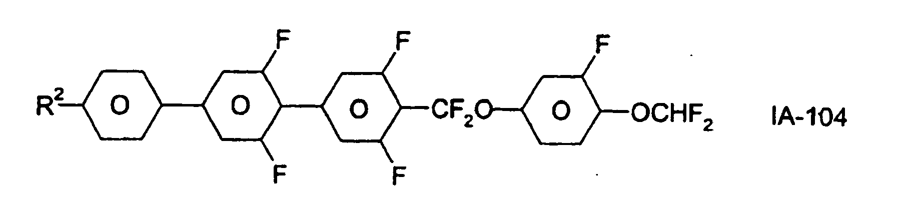 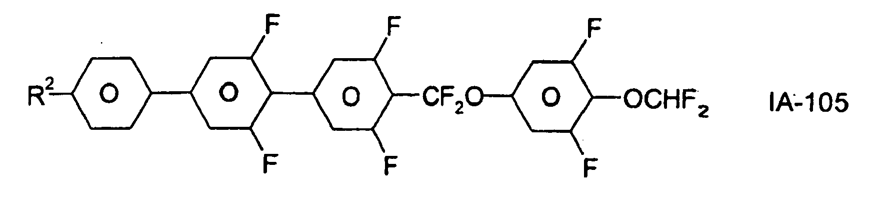 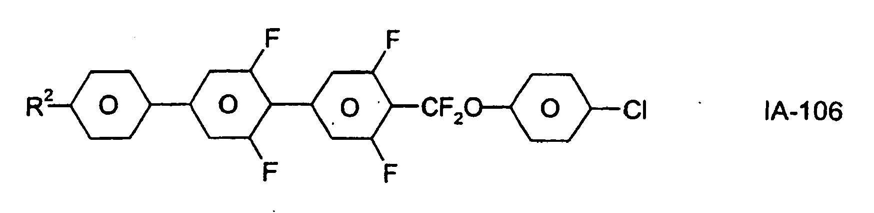 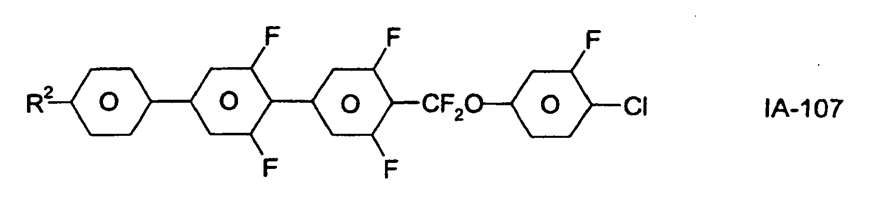 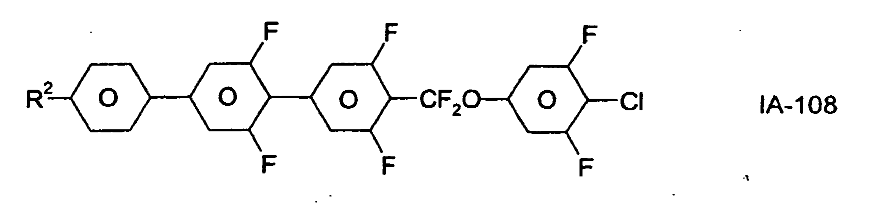 worin R² die in Anspruch 1 angegebene Bedeutung hat,
enthält.

3. Flüssigkristallines Medium nach Anspruch 1 oder 2, **dadurch gekennzeichnet, dass** es eine oder mehrere Verbindungen der Formeln I-1 bis I-27, 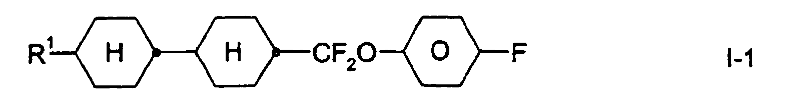 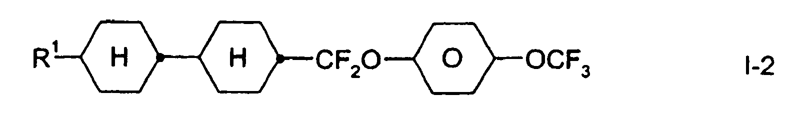 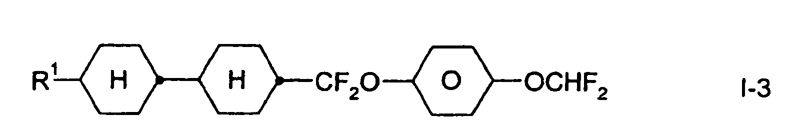 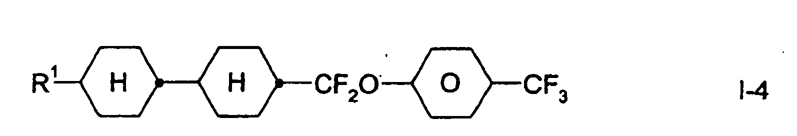 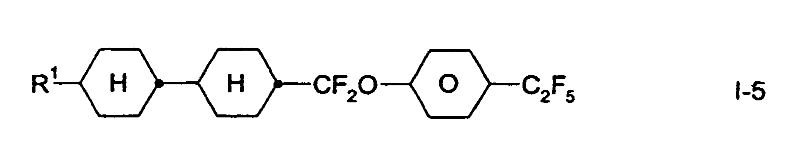 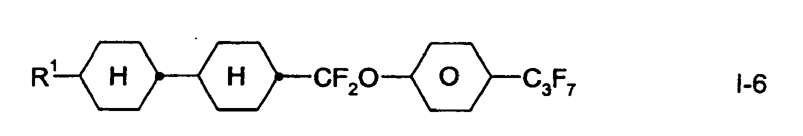 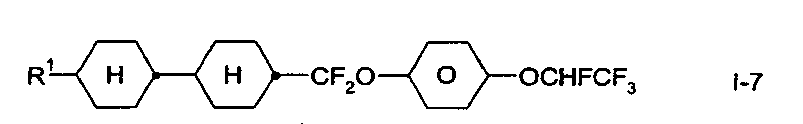 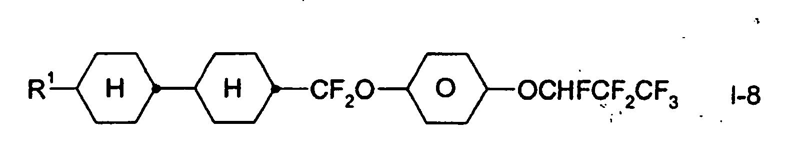 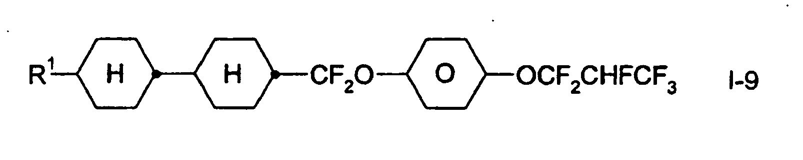 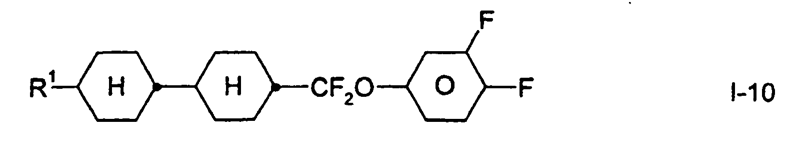 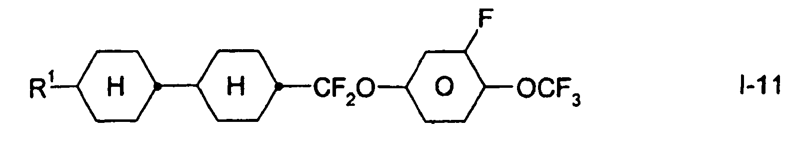 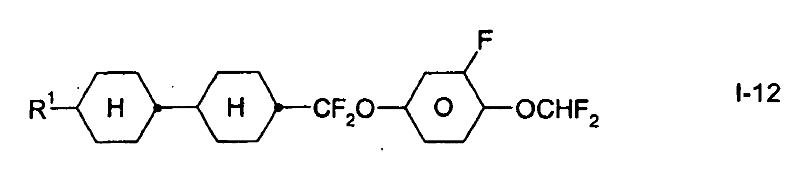 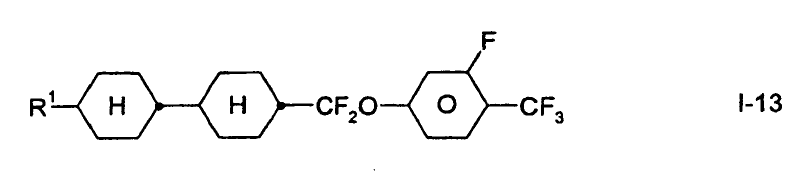 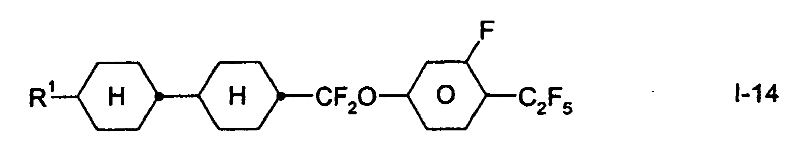 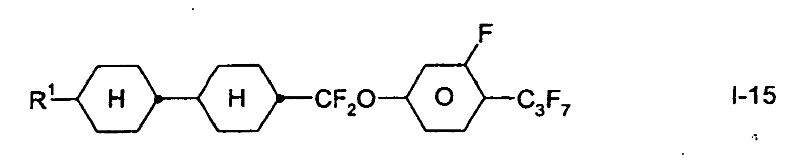 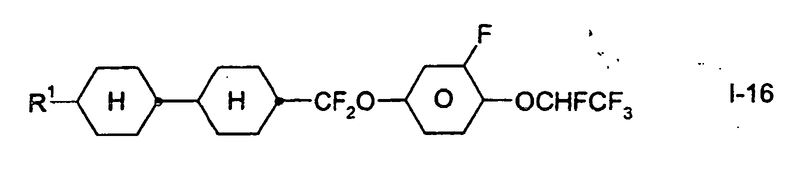 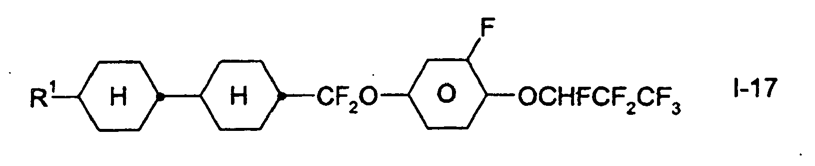 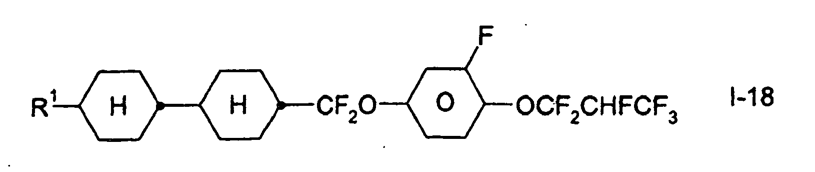 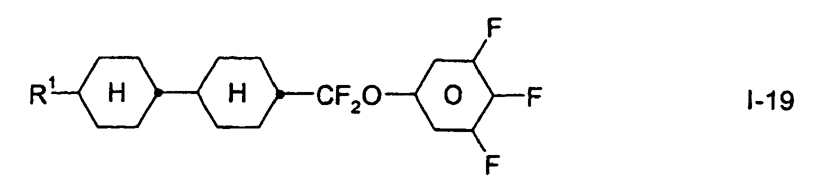 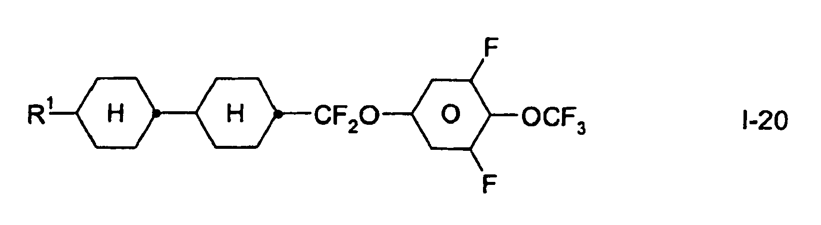 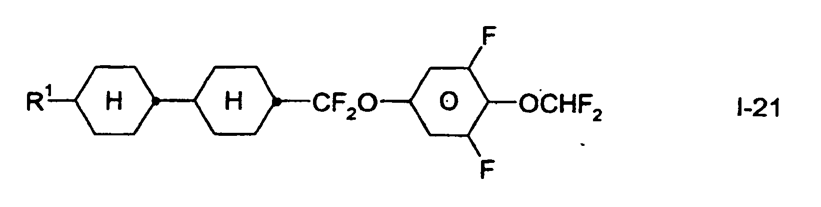 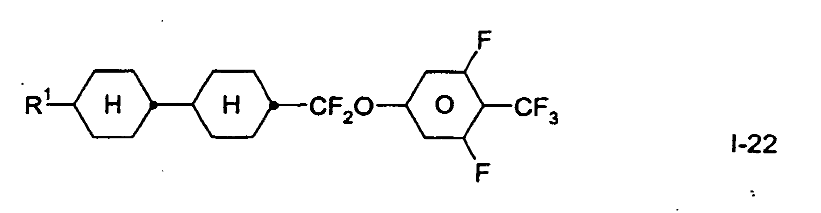 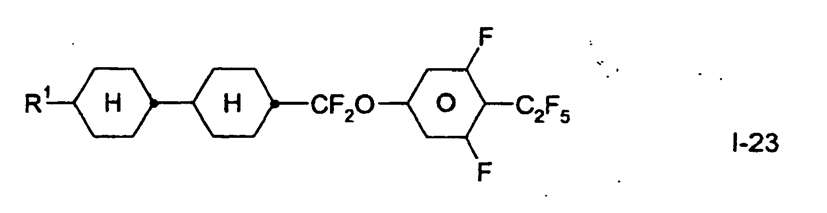 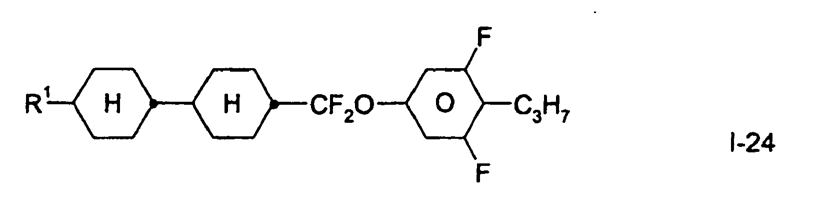 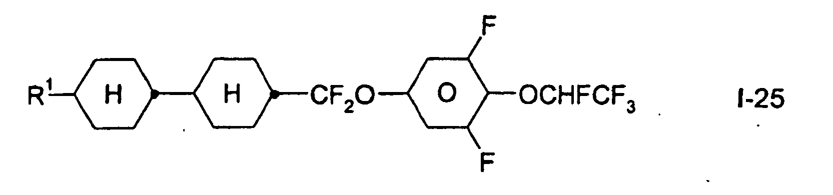 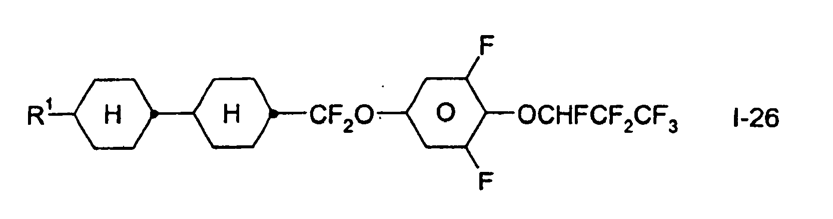 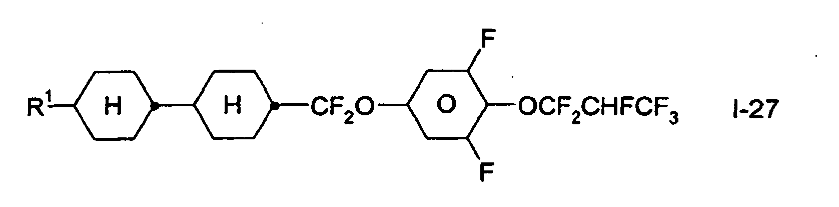 worin R¹ die in Anspruch 1 angegebenen Bedeutungen hat,
enthält.

4. Flüssigkristallines Medium nach einem der Ansprüche 1 bis 3, **dadurch gekennzeichnet, dass** es zusätzlich eine oder mehrere Verbindungen ausgewählt aus der Gruppe bestehend aus den allgemeinen Formeln II, III, IV, V und VI enthält: 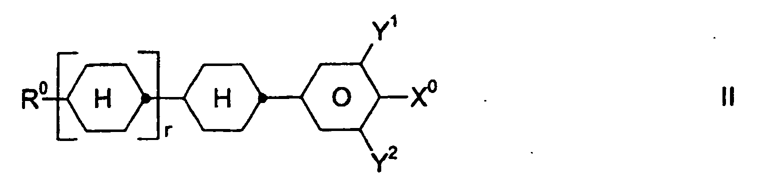 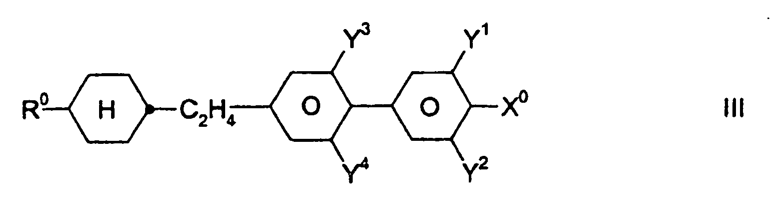 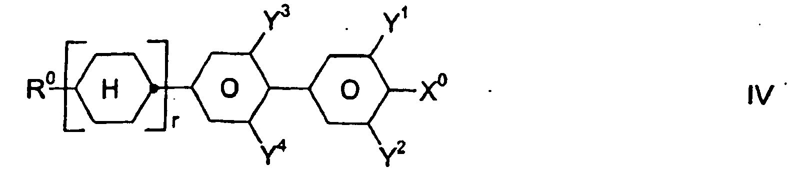 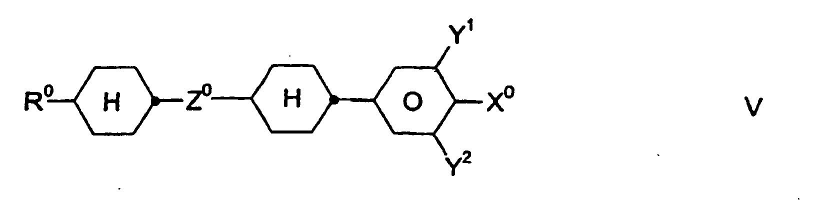 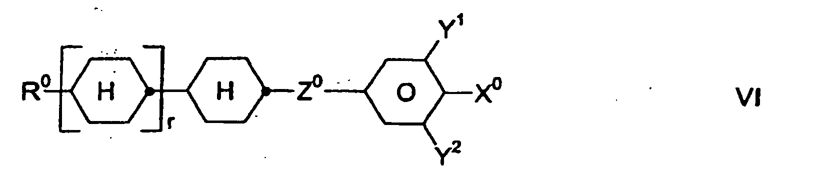 worin die einzelnen Reste die folgenden Bedeutungen haben:
R⁰ H, n-Alkyl, Oxaalkyl, Alkoxy, Fluoralkyl oder Alkenyl mit jeweils bis zu 9 C-Atomen,
X⁰ F, CI, halogeniertes Alkyl, halogeniertes Alkenyl, halogeniertes Alkenyloxy oder Alkoxy mit bis zu 6 C-Atomen,
Z⁰ -C₂F₄-, -CF=CF-, -CH=CF-, -CF=CH-, -C₂H₄-, -(CH₂)₄-, -OCHF-, -CHFO-, -CH=CH-, -COO-, -OCO- -CF₂O-, -OCF₂-, -OCH₂- oder -CH₂O-,
Y¹,Y²,Y³ und Y⁴ jeweils unabhängig voneinander H oder F,
r 0 oder 1
und die Verbindung der Formel VI nicht identisch ist mit der Verbindung der Formell.

5. Flüssigkristalines Medium nach Anspruch 4, **dadurch gekennzeichnet, dass** der Anteil an Verbindungen der Formeln IA und I bis VI zusammen im Gesamtgemisch mindestens 50 Gew.-% beträgt.

6. Flüssigkristallines Medium nach einem der Ansprüche 1 bis 5, **dadurch gekennzeichnet, dass** es zusätzlich eine oder mehrere Verbindungen der Formeln Ea bis Ef enthält, 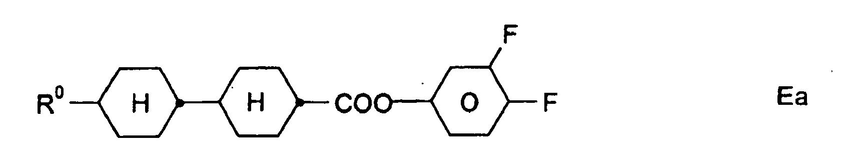 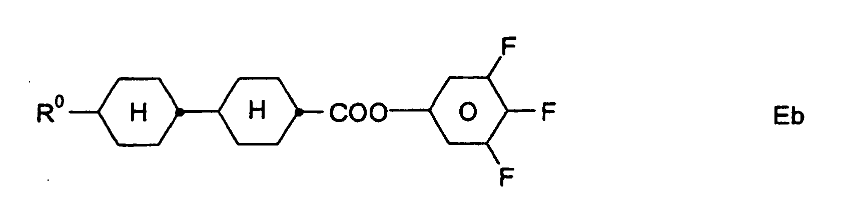 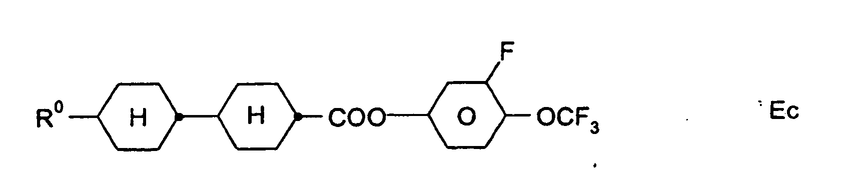 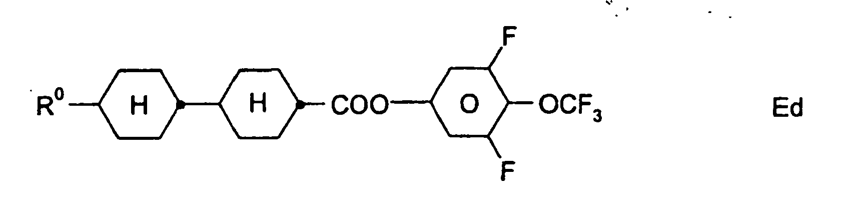 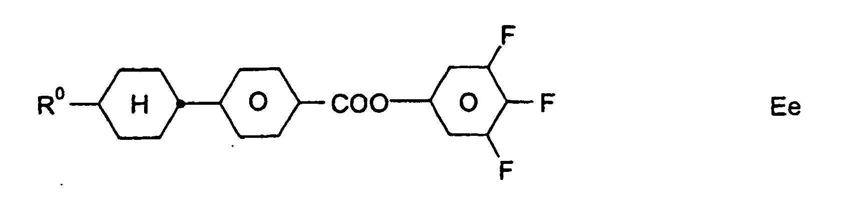 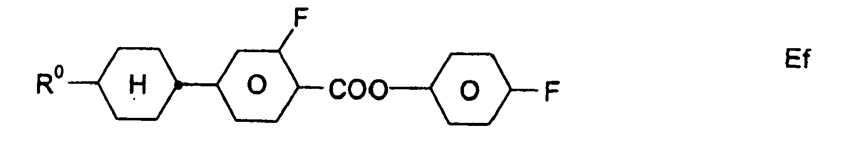 worin R⁰ die in Anspruch 4 angegebene Bedeutung hat,
enthält.

7. Flüssigkristallines Medium nach einem der Ansprüche 1 bis 6, **dadurch gekennzeichnet, dass** es zusätzlich eine oder mehrere Verbindungen der Formeln IIa bis IIg, 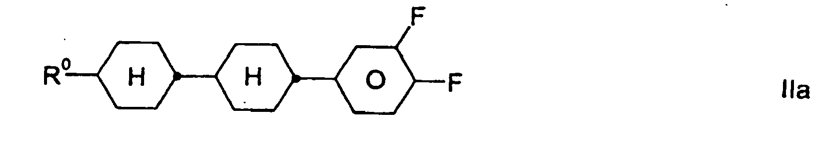 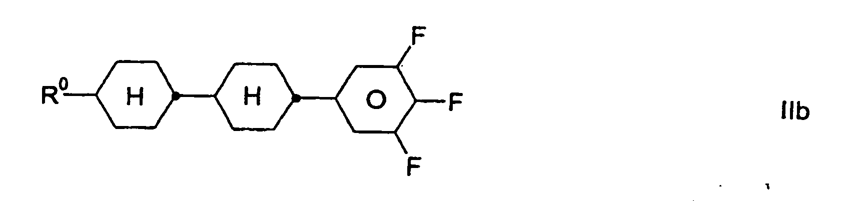 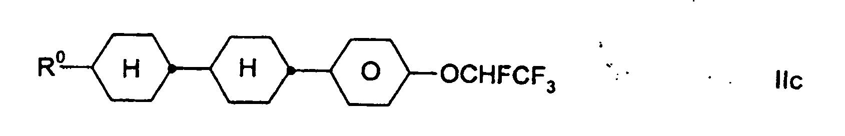 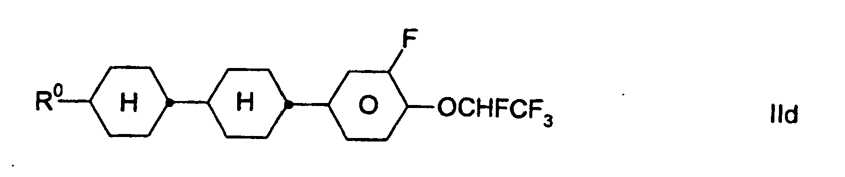 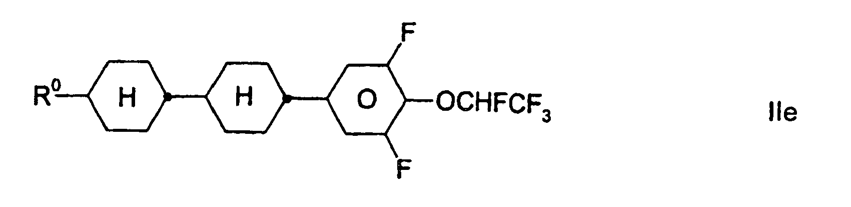 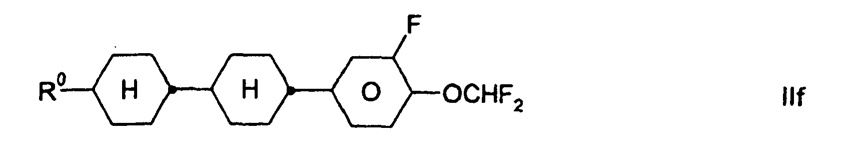 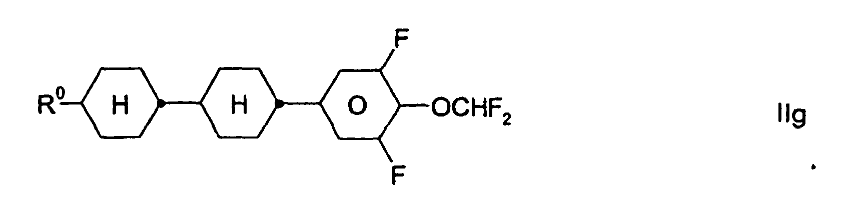 worin R⁰ die in Anspruch 4 angegebene Bedeutung hat,
enthält.

8. Flüssigkristallines Medium nach einem der Ansprüche 1 bis 7, **dadurch gekennzeichnet, dass** es zusätzlich eine oder mehrere Verbindungen der Formeln RI bis RIX, 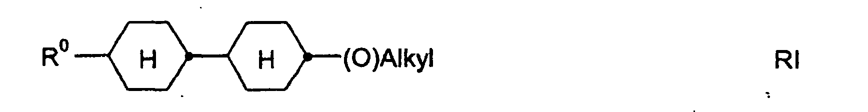 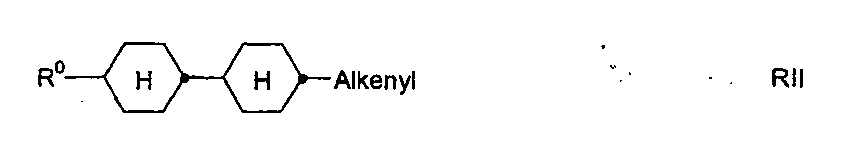 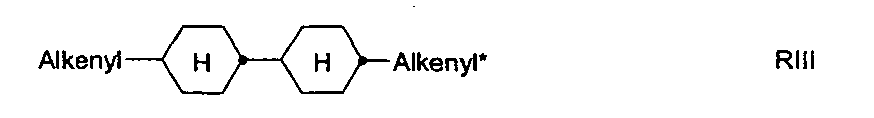 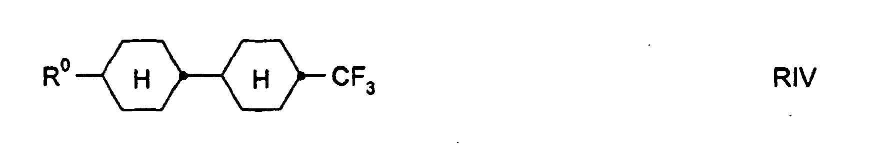 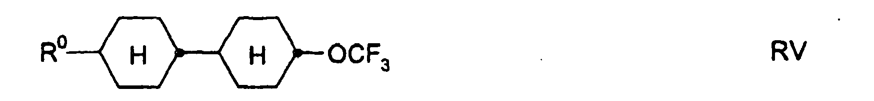 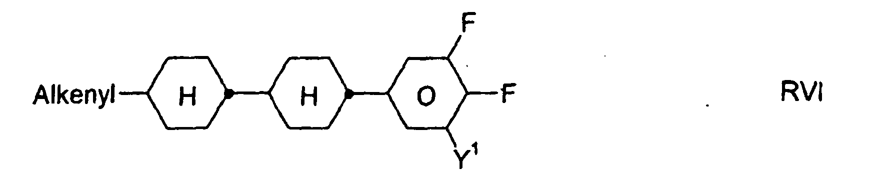 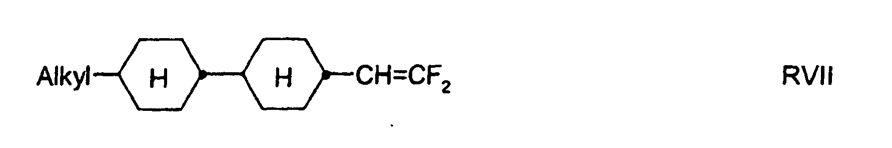 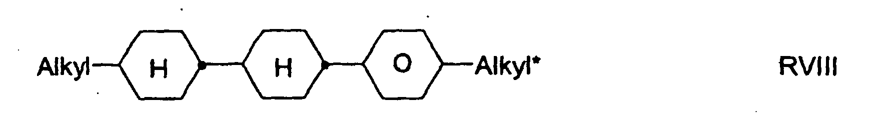 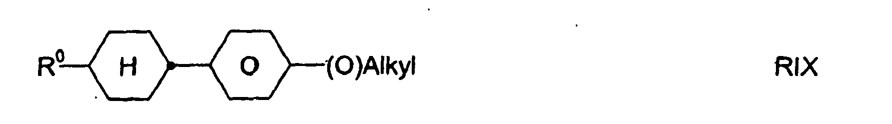 worin
R⁰ n-Alkyl, Alkoxy, Oxaalkyl, Fluoralkyl, Alkenyloxy oder Alkenyl mit jeweils bis zu 9 C-Atomen,
Y¹ H oder F,
Alkyl oder Alkyl* jeweils unabhängig voneinander ein geradkettiger oder verzweigter Alkylrest mit 1-9 C-Atomen,
Alkenyl oder Alkenyl* jeweils unabhängig voneinander einen geradkettigen oder verzweigten Alkenylrest mit 2 bis zu 9 C-Atomen
bedeuten,
enthält.

9. Flüssigkristallines Medium nach einem der Ansprüche 1 bis 8, **dadurch gekennzeichnet, dass** der Anteil an Verbindungen der Formel IA im Gesamtgemisch 5 bis 40 Gew.% beträgt.

10. Flüssigkristallines Medium nach einem der Ansprüche 1 bis 9, **dadurch gekennzeichnet, dass** der Anteil an Verbindungen der Formel I im Gesamtgemisch 5 bis 40 Gew:-% beträgt.

11. Verwendung des flüssigkristallinen Mediums nach Anspruch 1 für elektrooptische Zwecke.

12. Elektrooptische Flüssigkristallanzeige enthaltend ein flüssigkristallines Medium nach Anspruch 1.

## Claims

1. Liquid-crystalline medium based on a mixture of polar compounds of positive dielectric anisotropy, **characterised in that** it comprises one or more compounds of the formula I 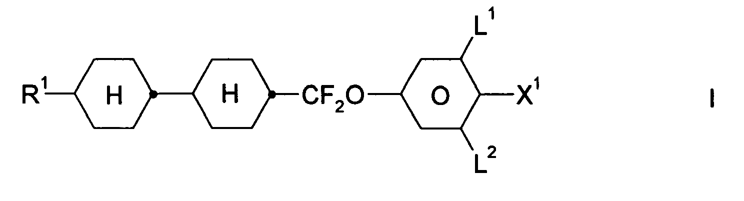 and one or more compounds of the formula IA 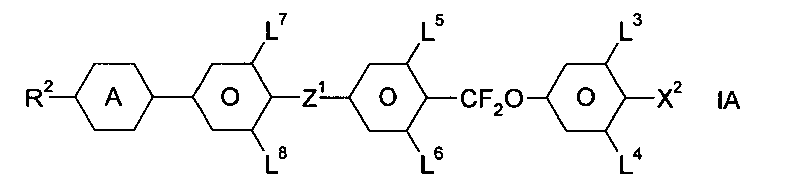 in which the individual radicals have the following meanings:
R¹ and R² each, independently of one another, denote H, a halogenated or unsubstituted alkyl radical having 1 to 15 C atoms, where one or more CH₂ groups in these radicals may also be replaced, in each case independently of one another, by -C≡C-, -CH=CH-, -O-, 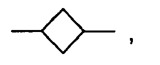 -CO-O- or -O-CO- in such a way that O atoms are not linked directly to one another,
X¹ and X² each, independently of one another, denote F, Cl, CN, SF₅, SCN, OCN, a halogenated alkyl radical, a halogenated alkenyl radical, a halogenated alkoxy radical or a halogenated alkenyloxy radical, each having up to 6 C atoms, 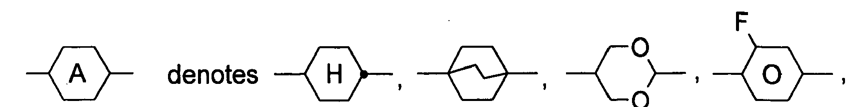 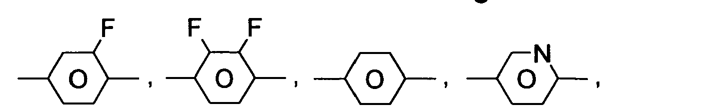 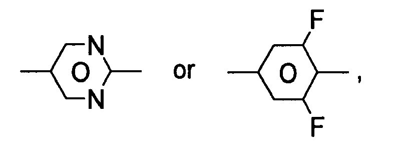
Z¹ denotes -CH₂CH₂-, -CH=CH-, -C≡C-, -COO-, -CH₂O-, -OCH₂-, -OOC-, -(CH₂)₄-, -CHFO-, -CH=CF-, -CF=CH-, -CF=CF-, -C₂F₄-, -CF₂O-, -OCF₂- or a single bond,
L¹ to L⁸ each, independently of one another, denote H or F.

2. Liquid-crystalline medium according to Claim 1, **characterised in that** it comprises one, two or more compounds of the formulae IA-1 to IA-108 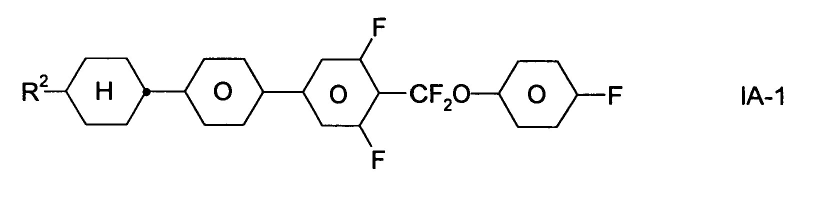 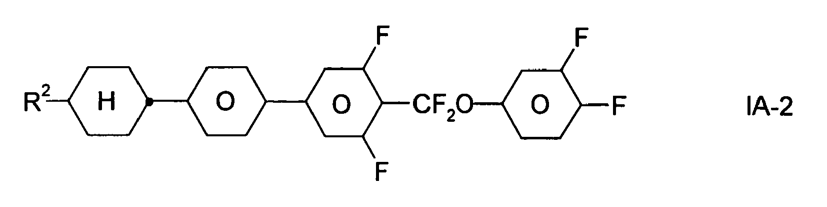 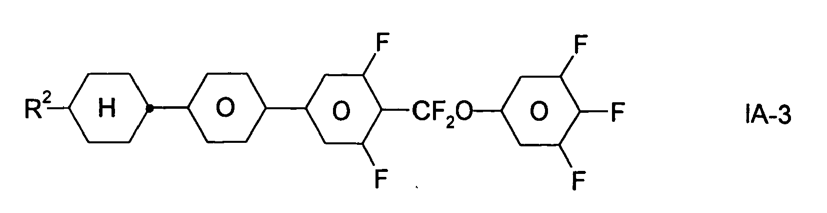 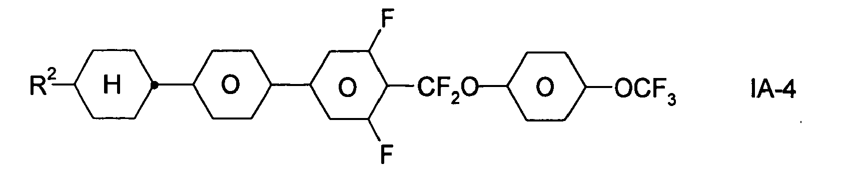 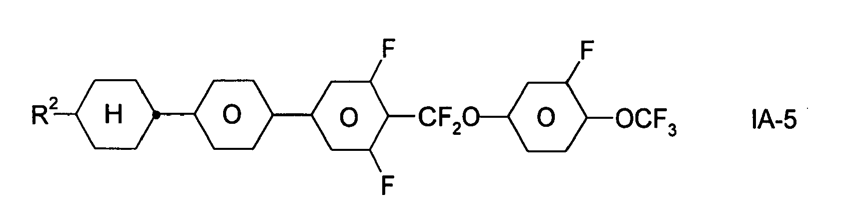 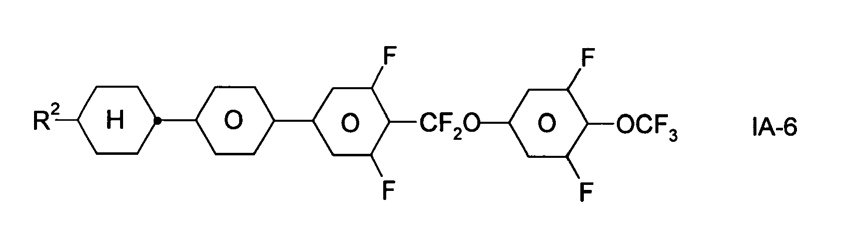 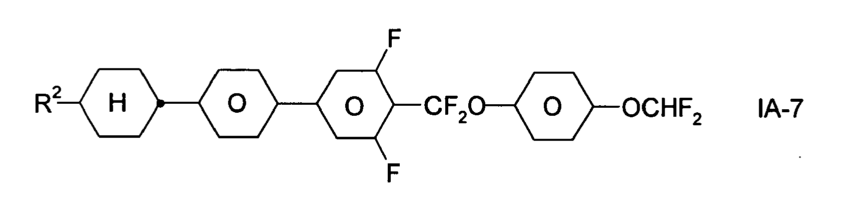 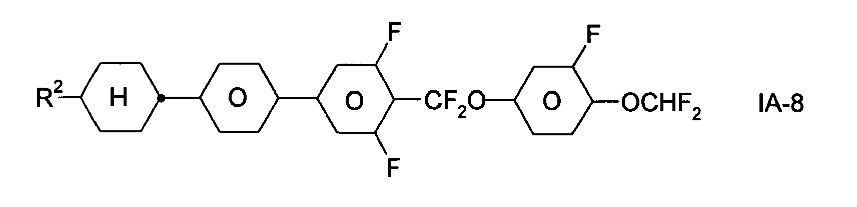 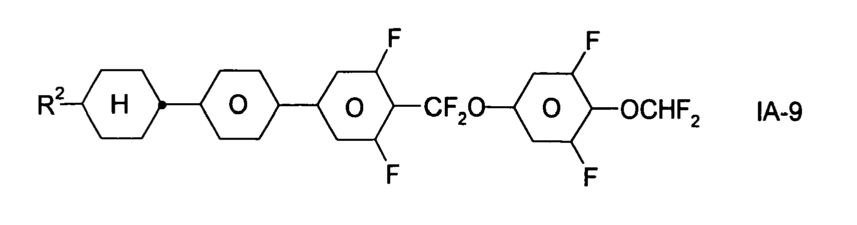 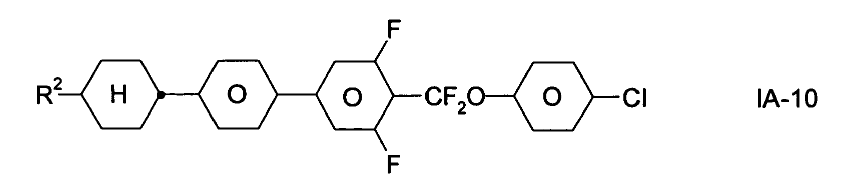 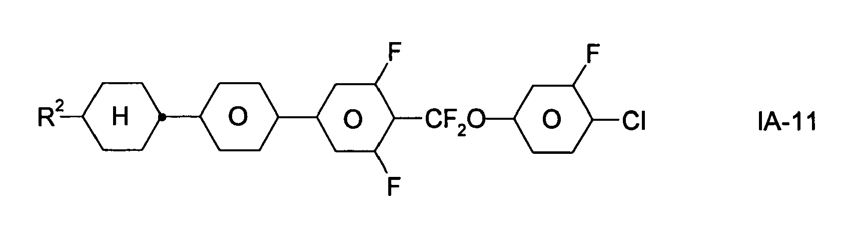 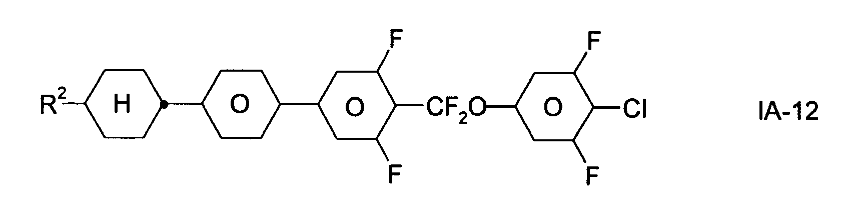 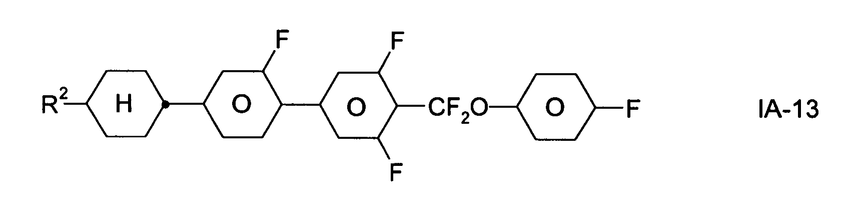 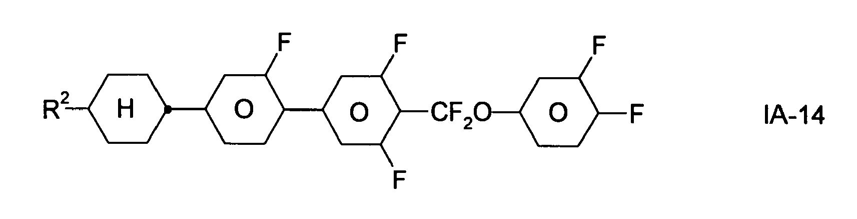 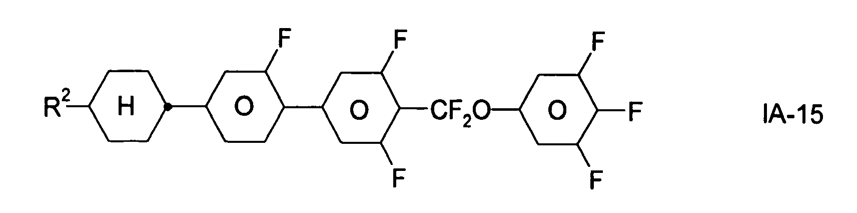 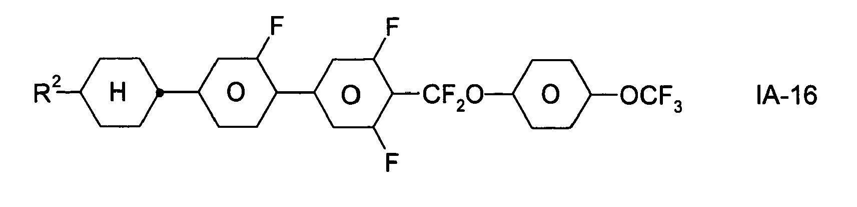 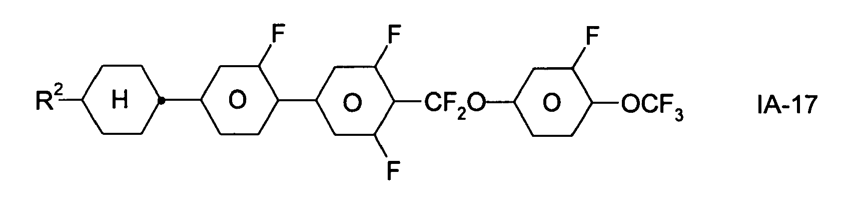 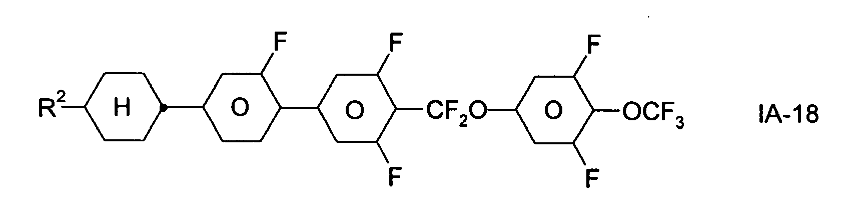 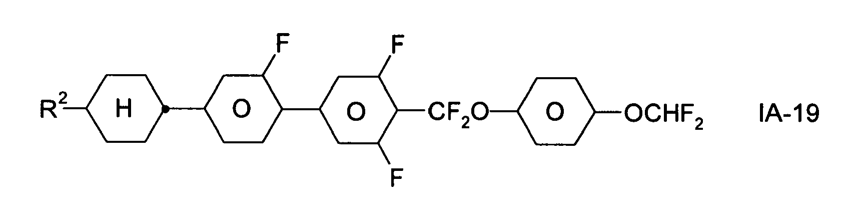 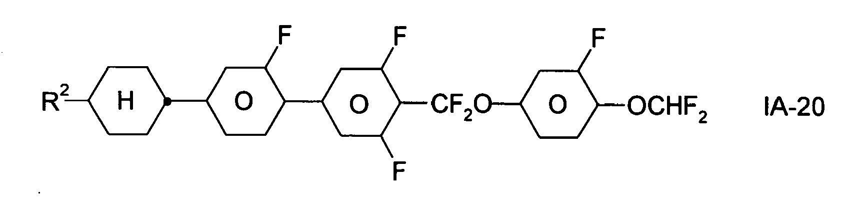 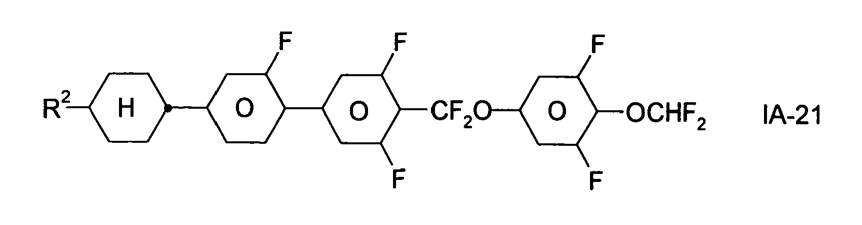 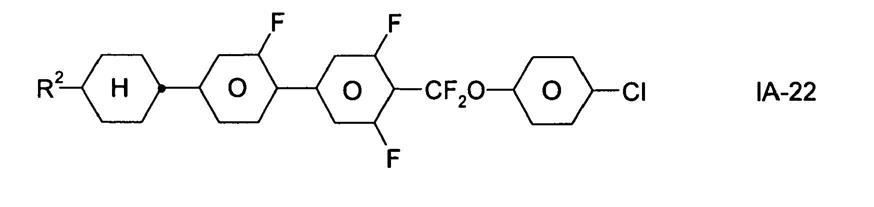 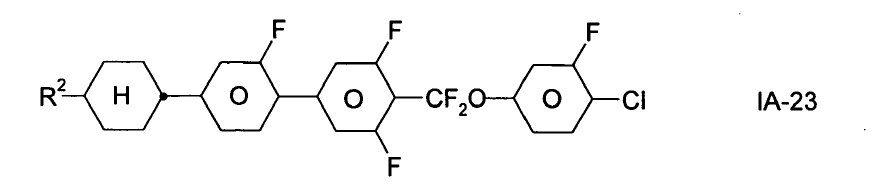 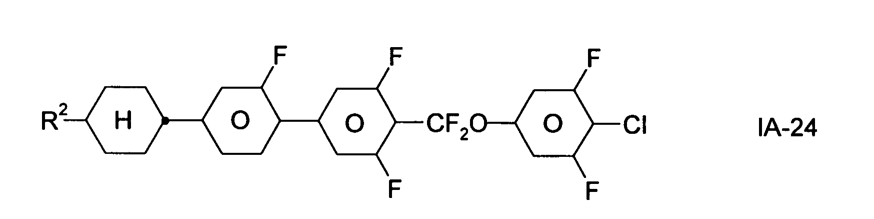 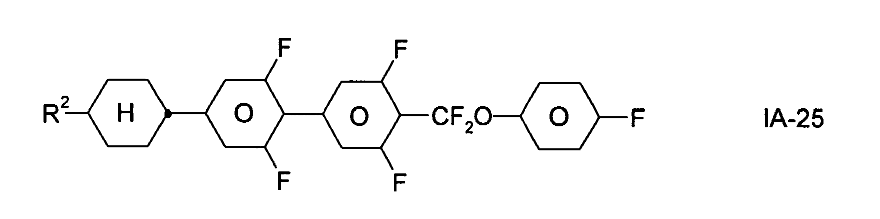 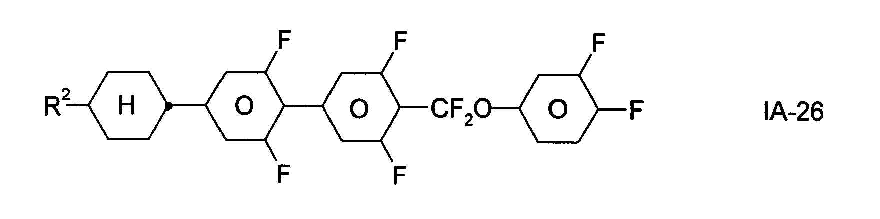 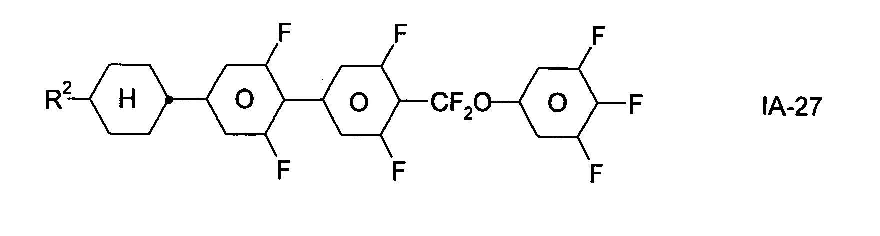 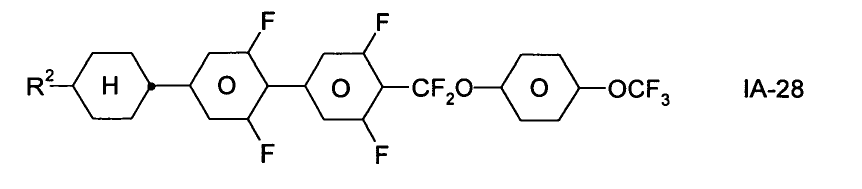 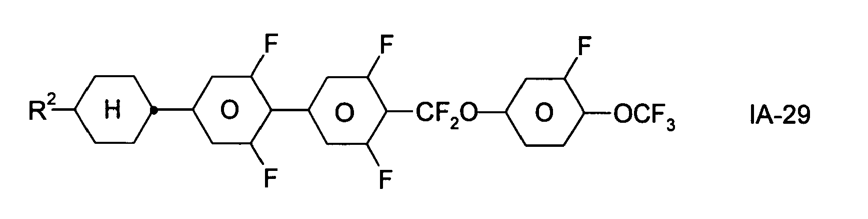 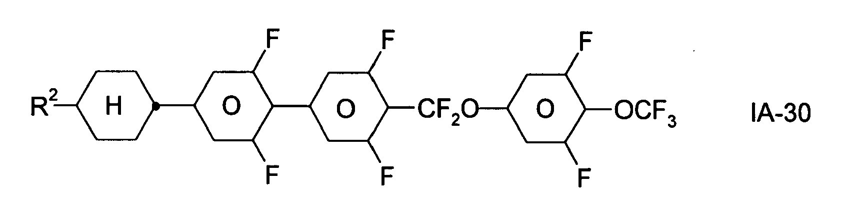 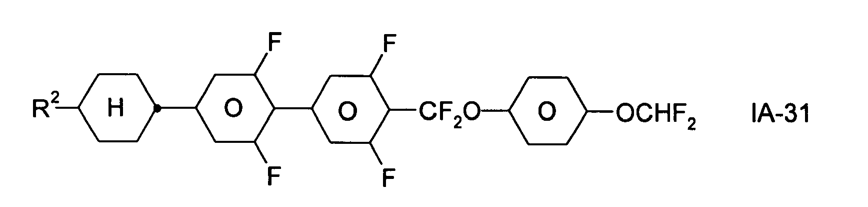 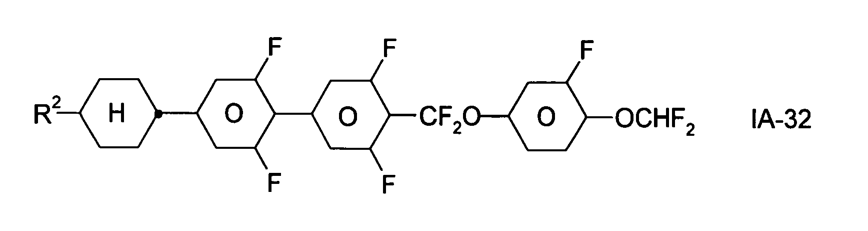 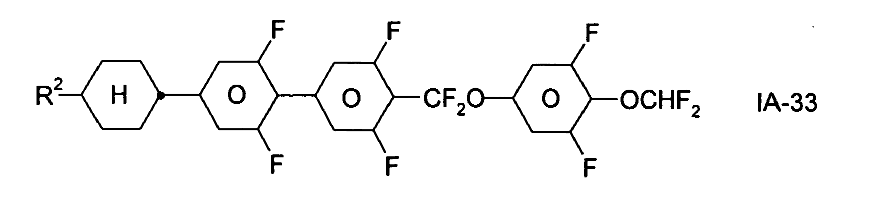 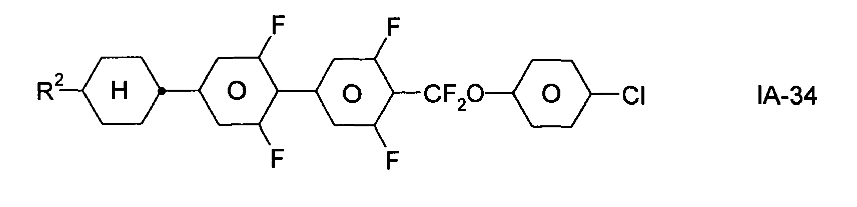 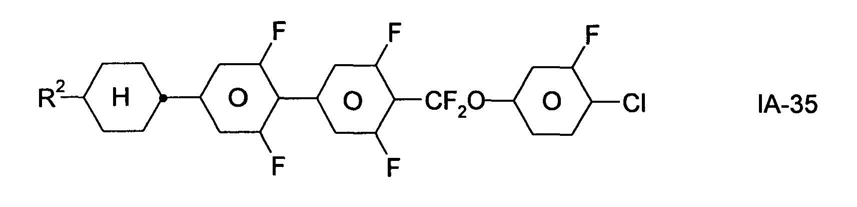 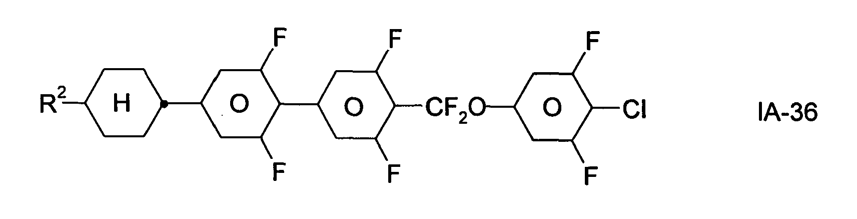 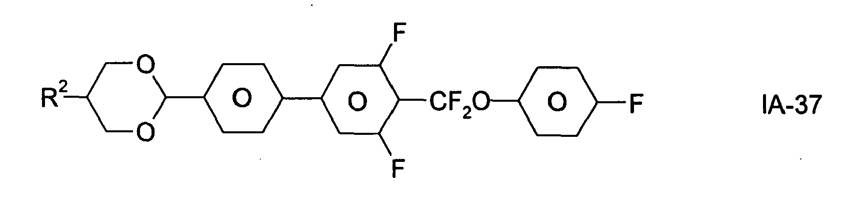 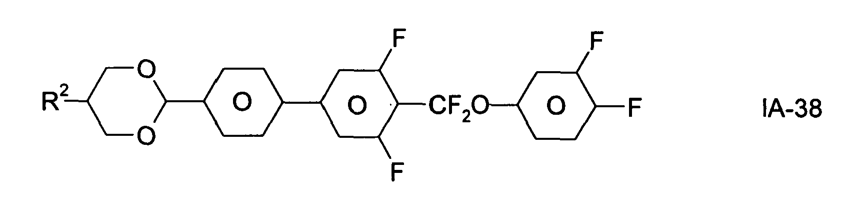 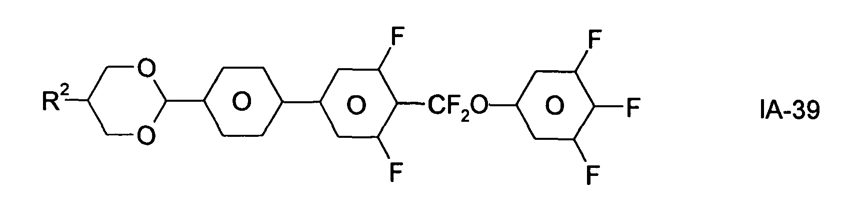 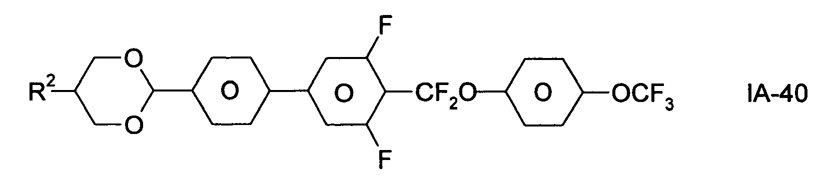 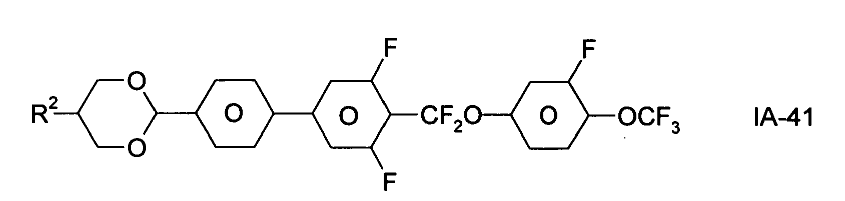 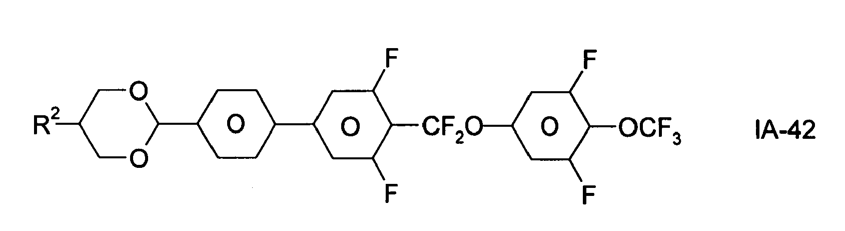 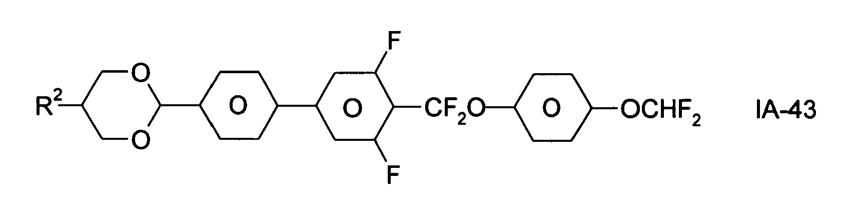 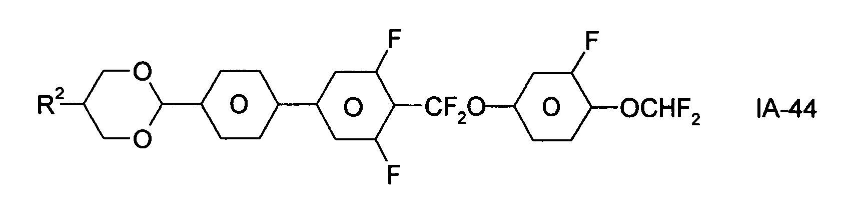 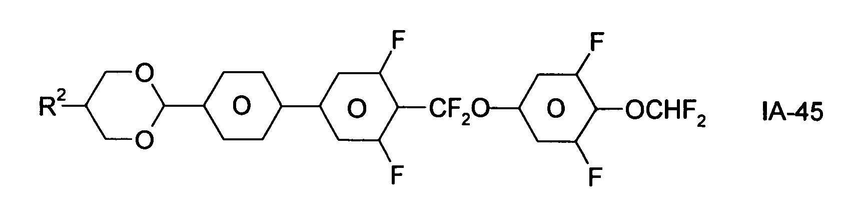 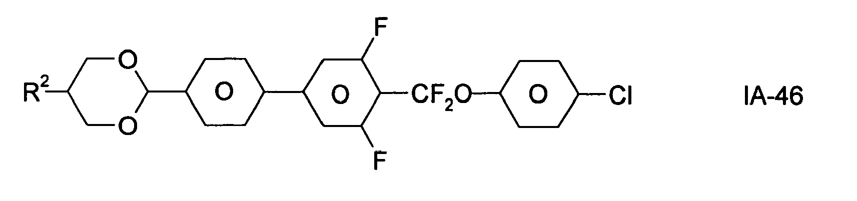 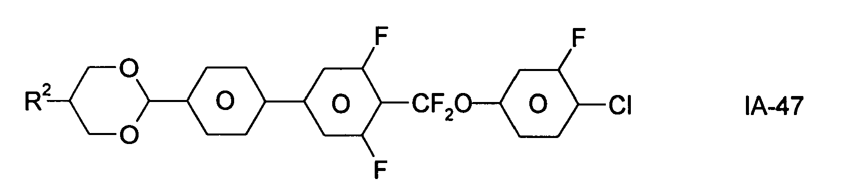 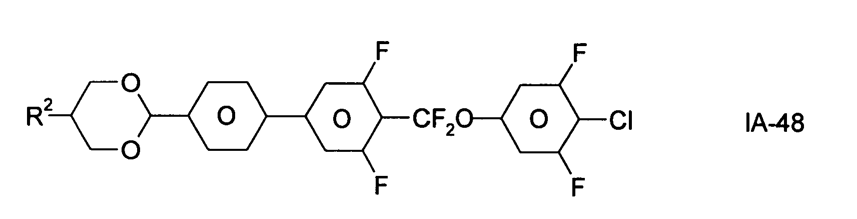 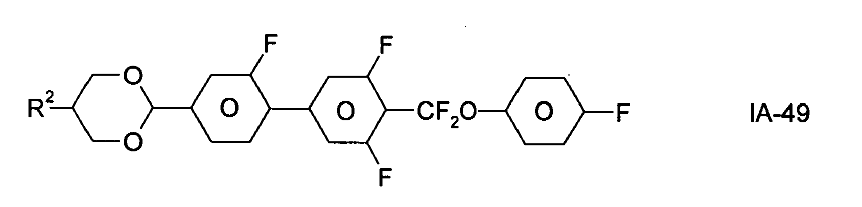 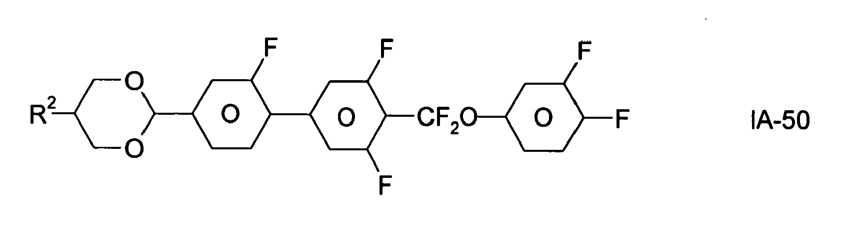 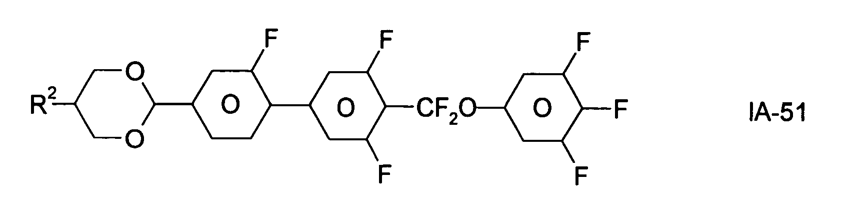 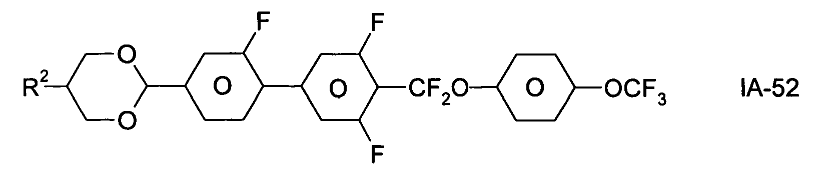 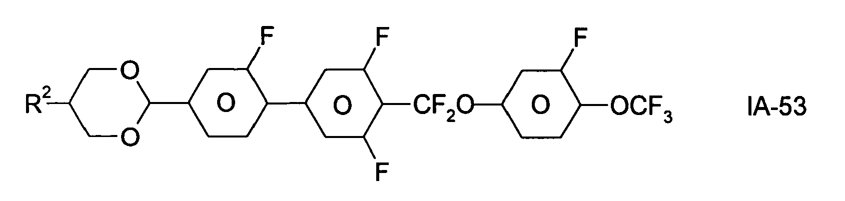 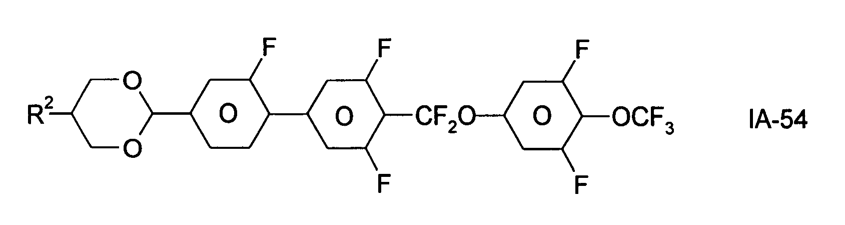 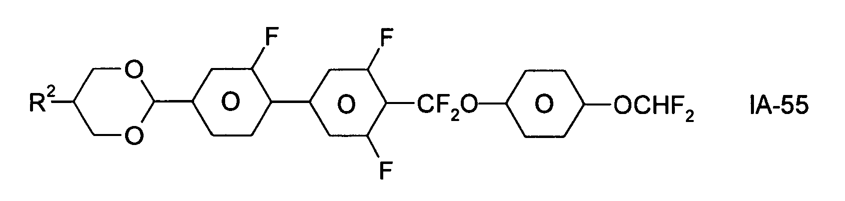 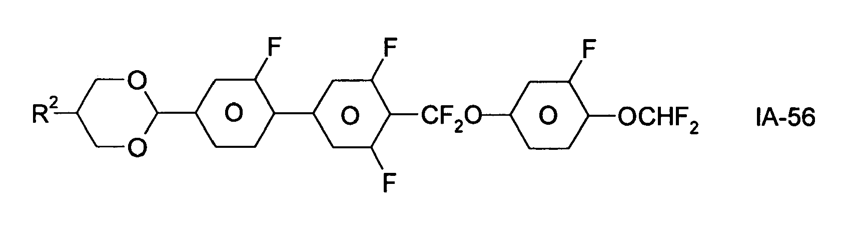 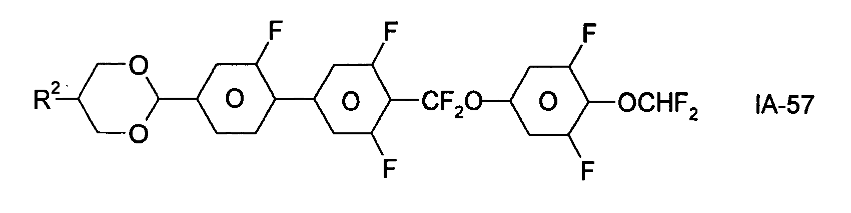 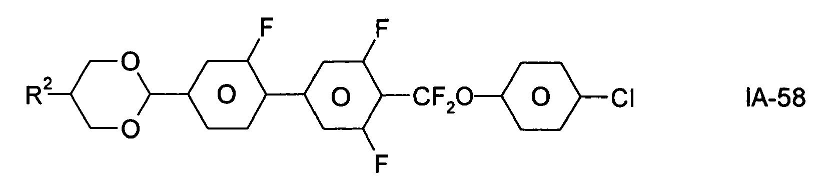 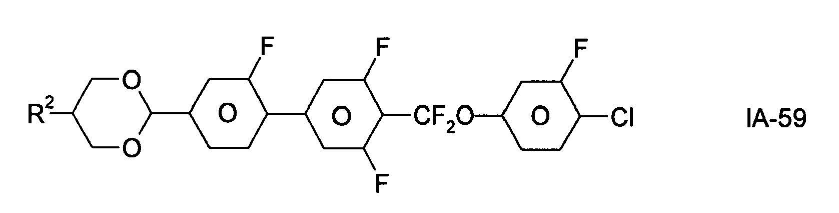 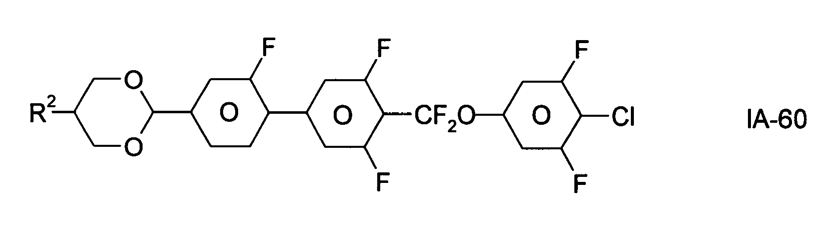 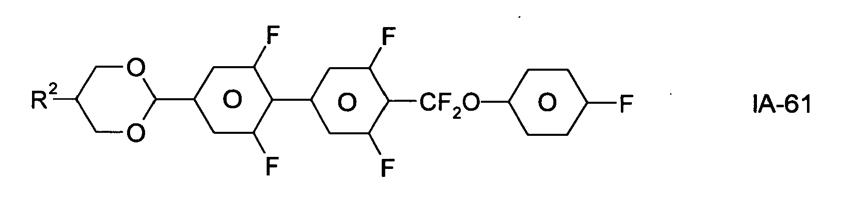 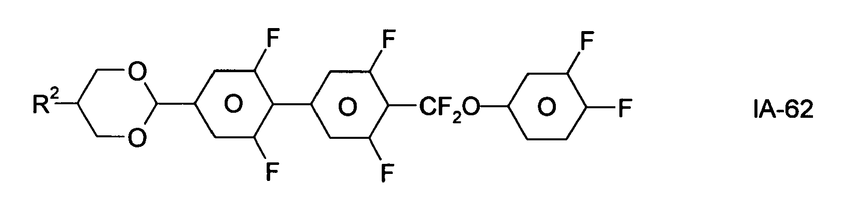 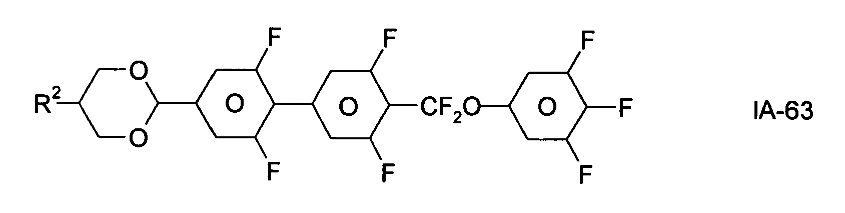 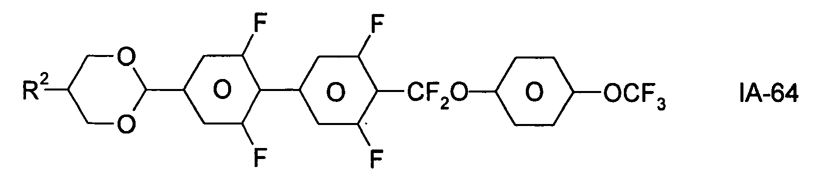 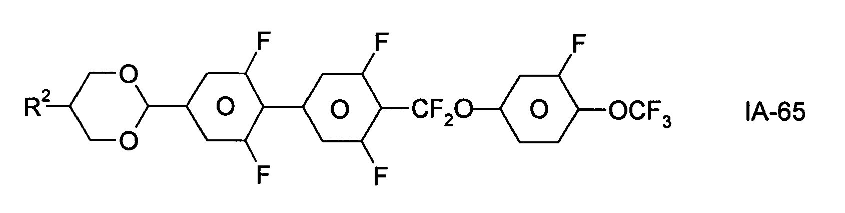 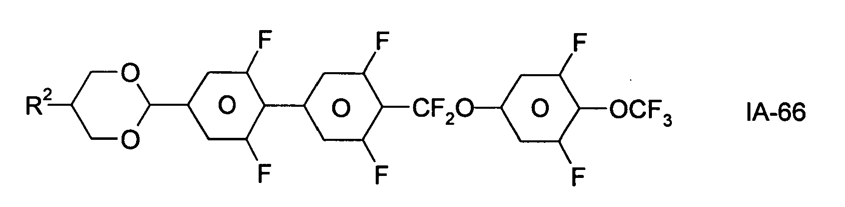 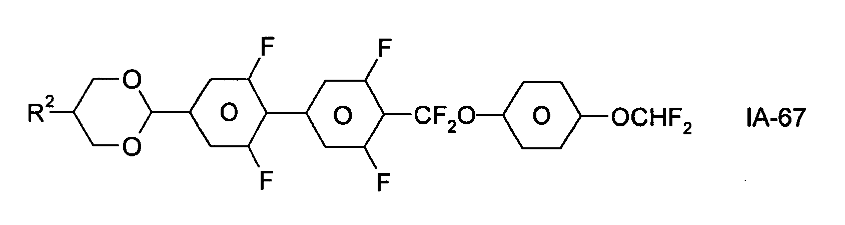 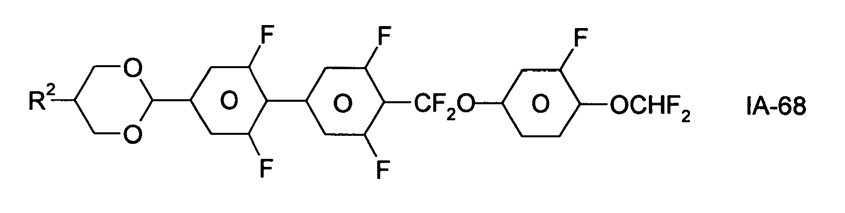 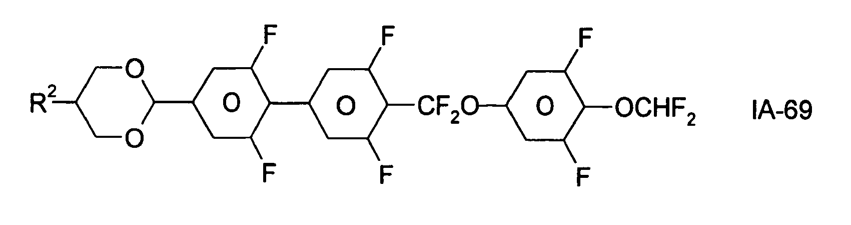 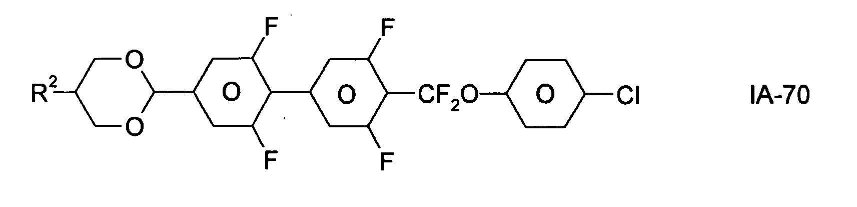 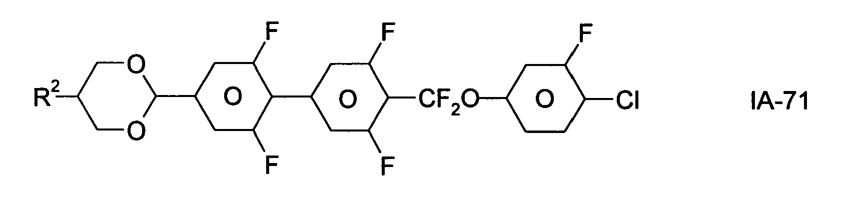 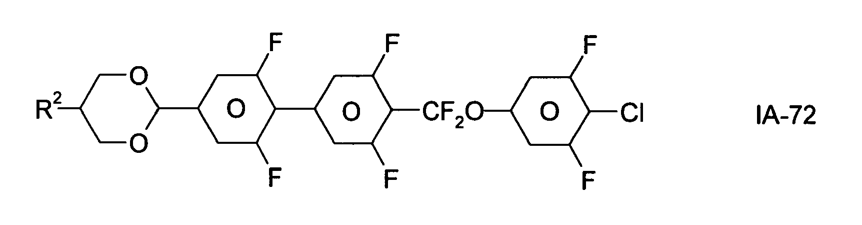 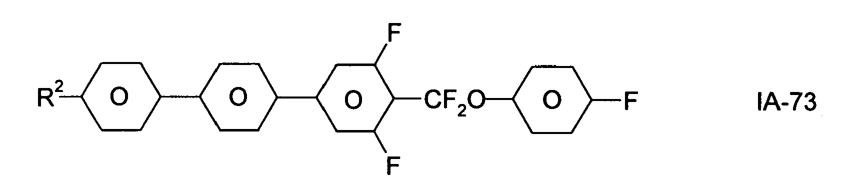 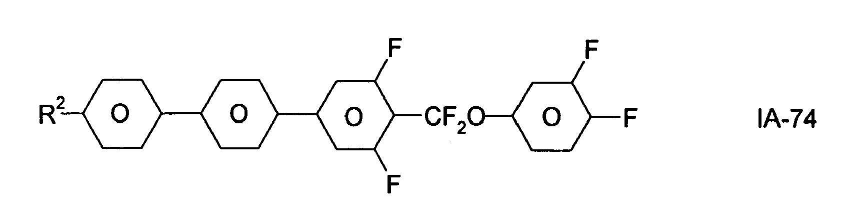 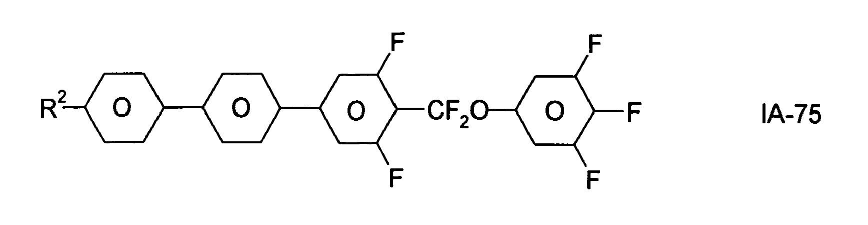 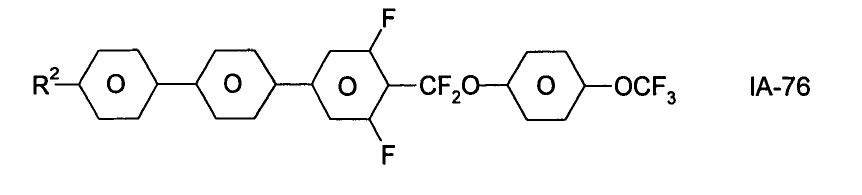 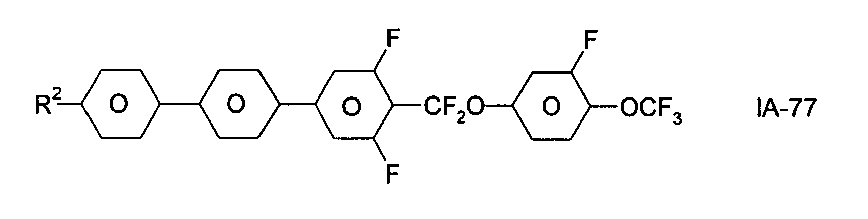 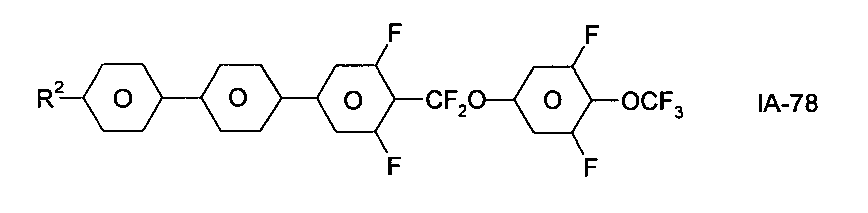 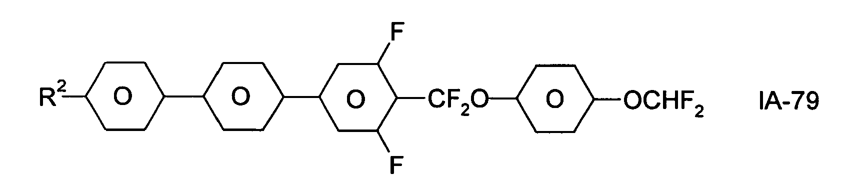 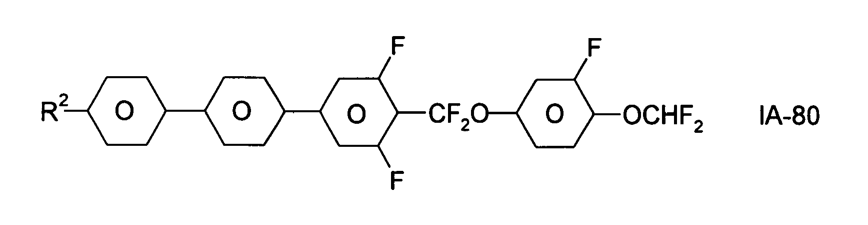 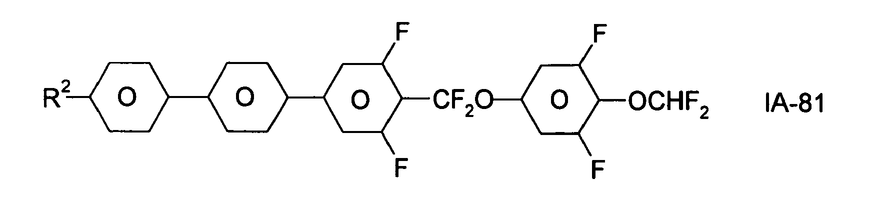 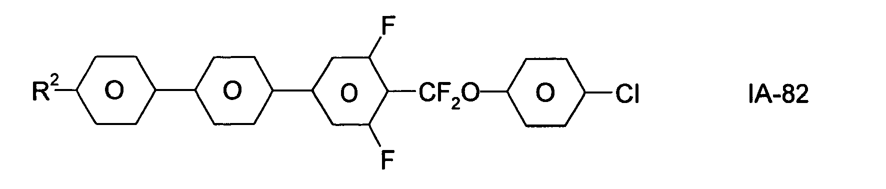 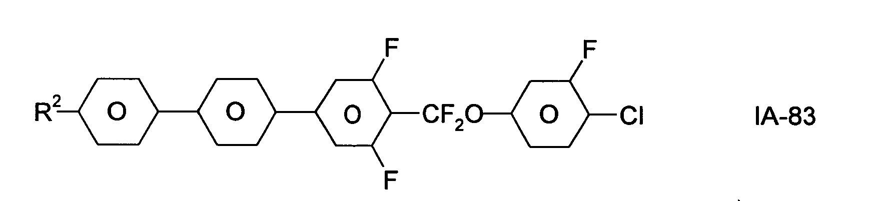 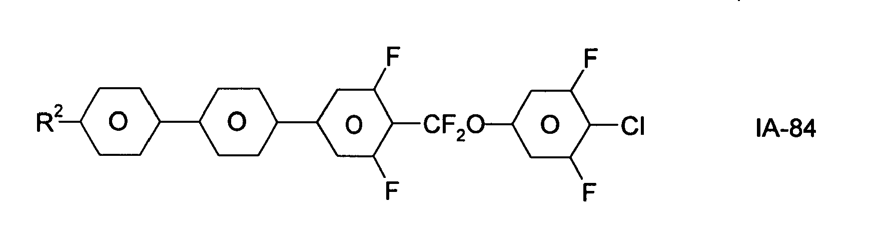 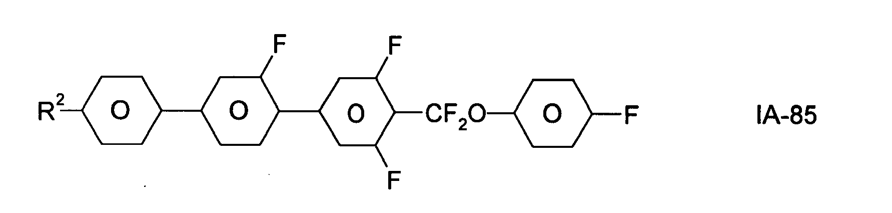 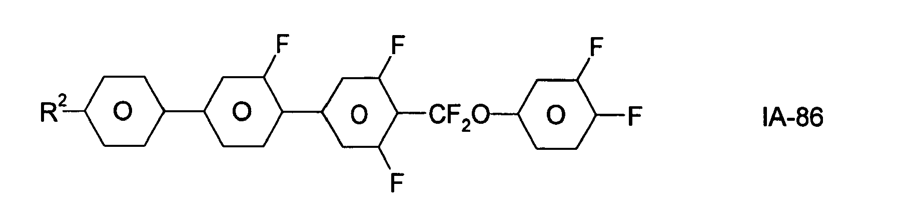 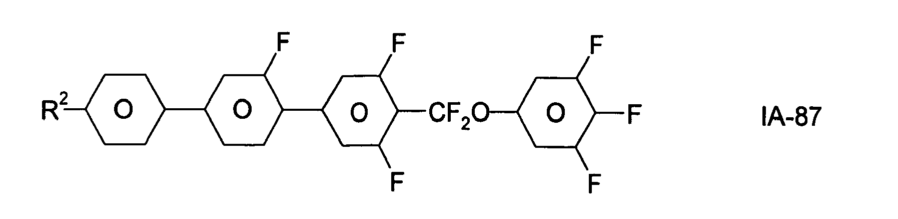 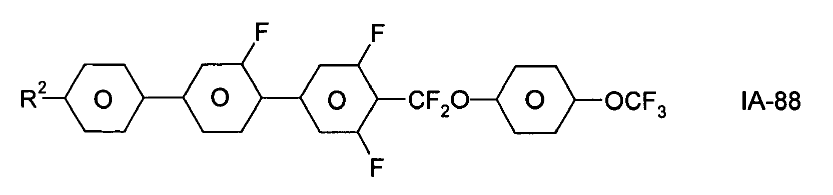 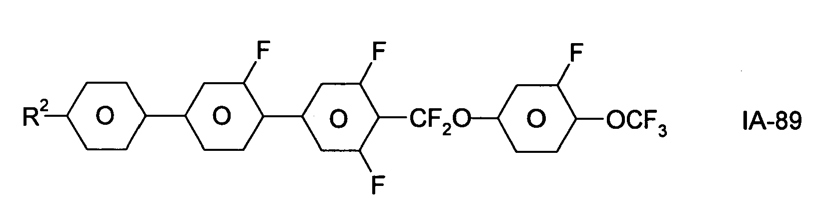 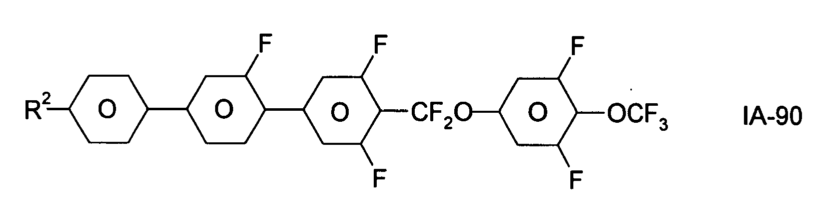 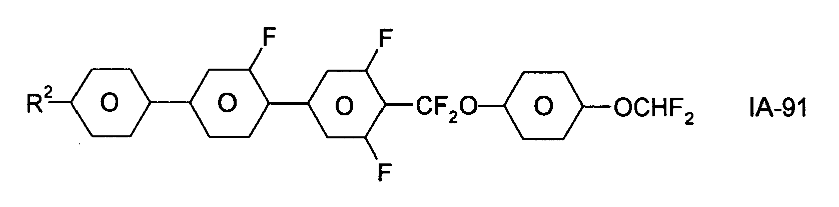 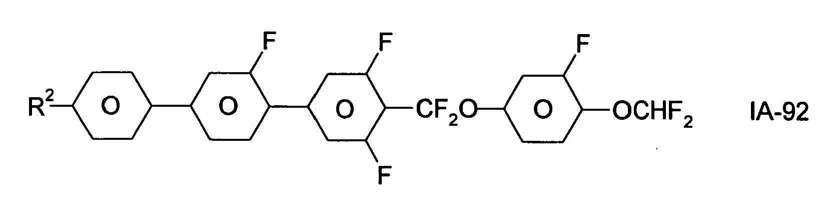 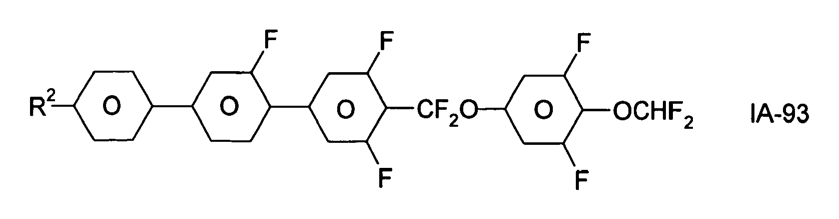 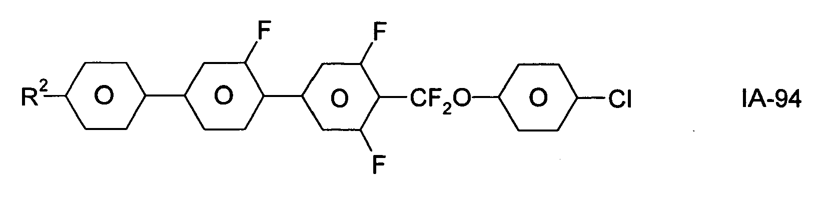 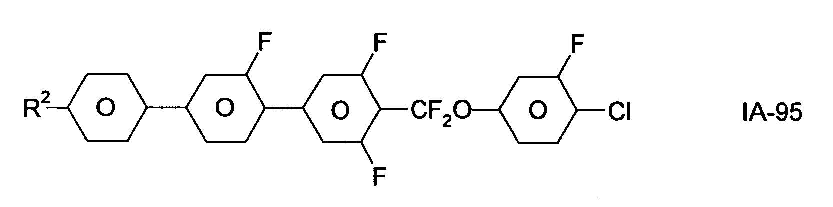 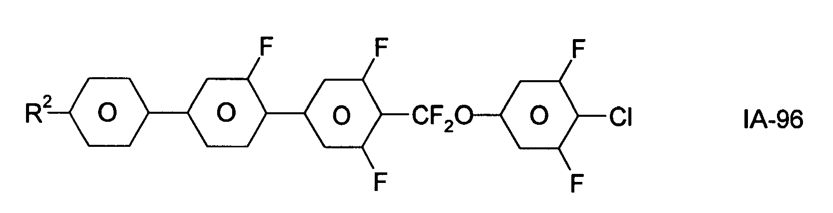 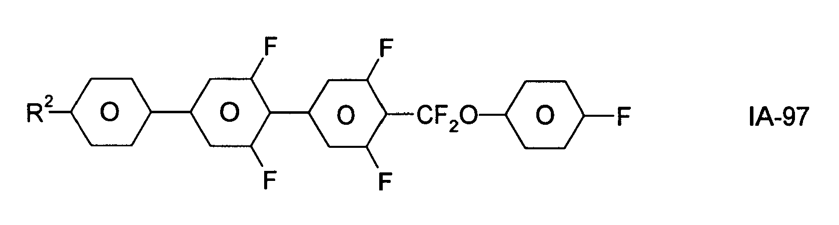 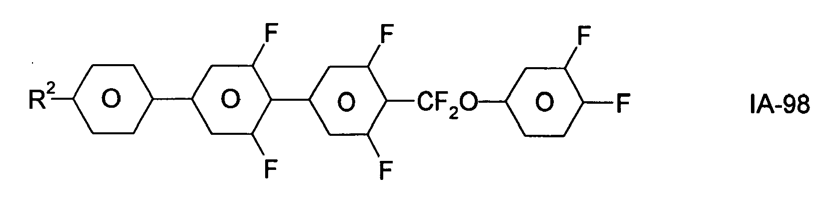 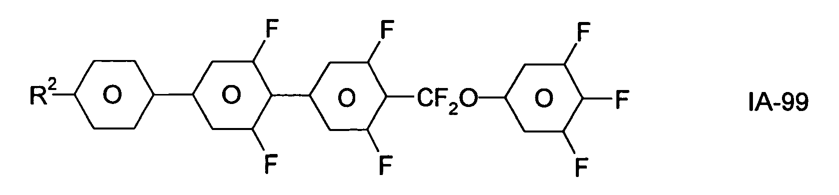 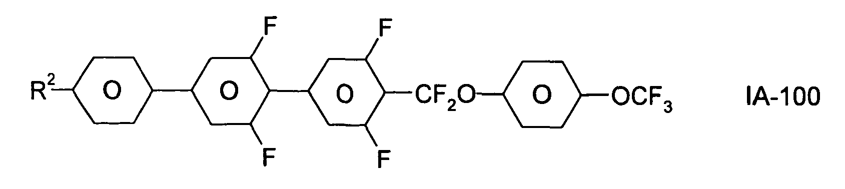 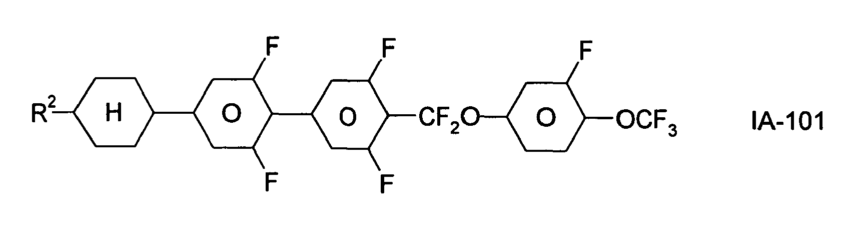 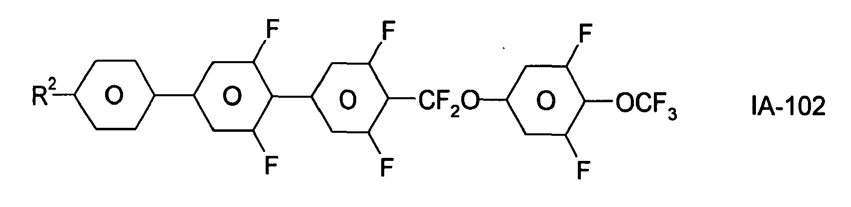 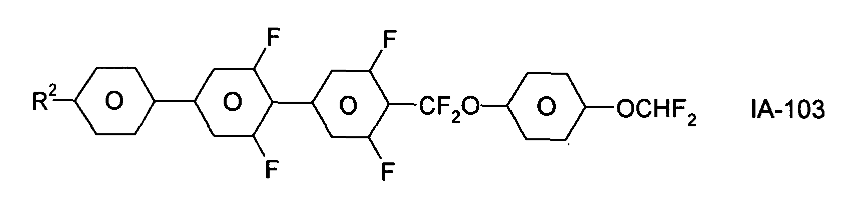 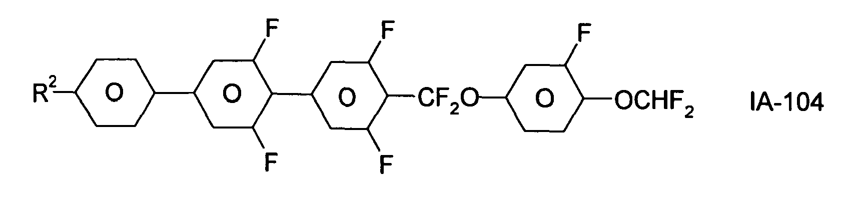 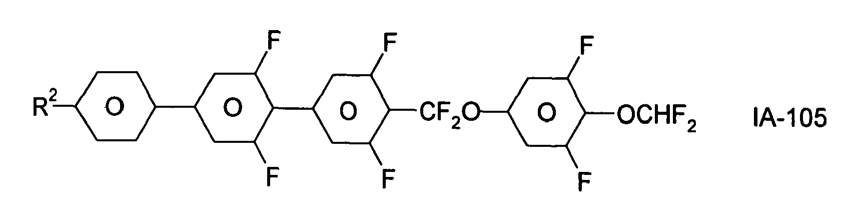 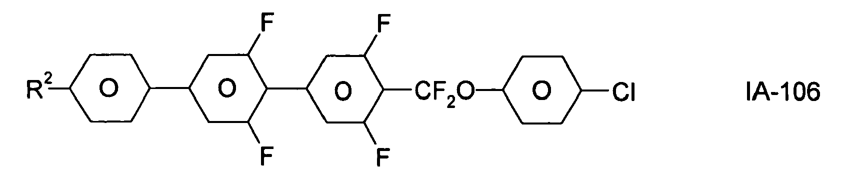 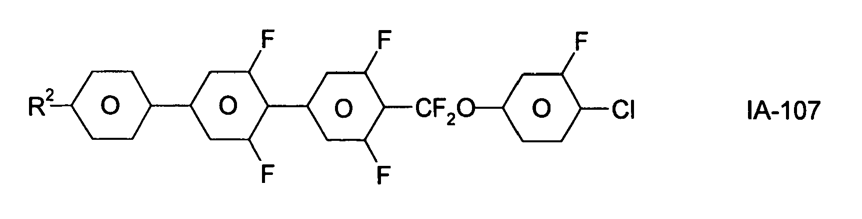 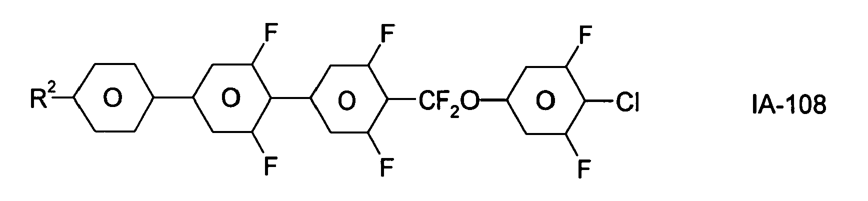 in which R² has the meaning indicated in Claim 1.

3. Liquid-crystalline medium according to Claim 1 or 2, **characterised in that** it comprises one or more compounds of the formulae I-1 to I-27 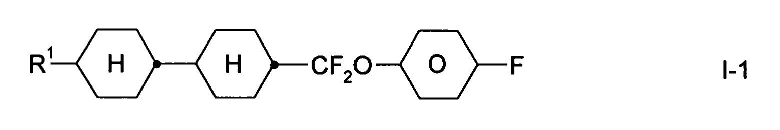 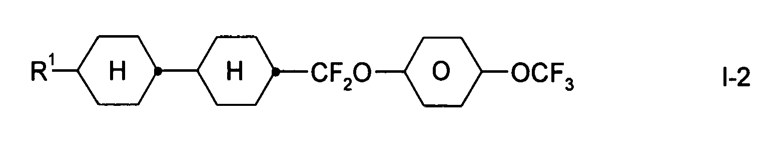 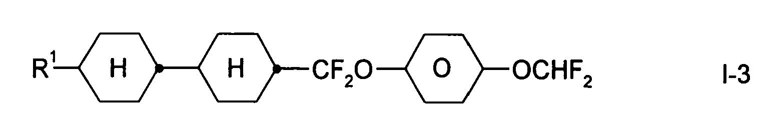 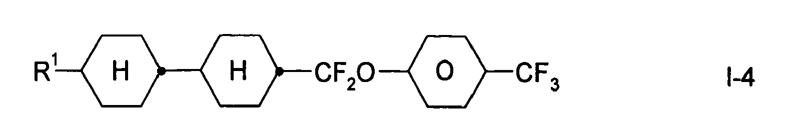 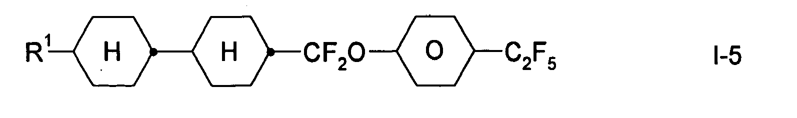 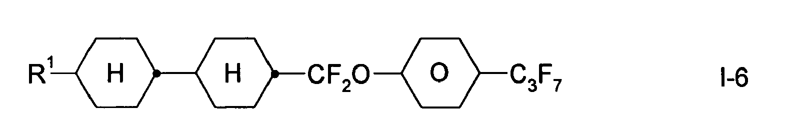 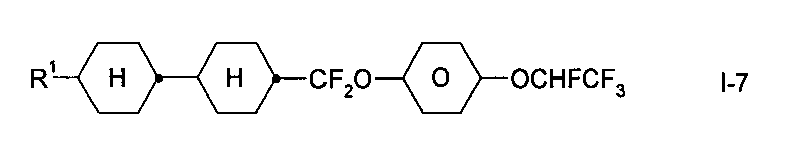 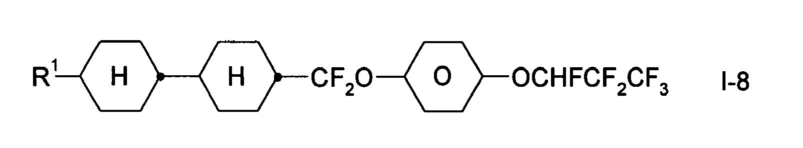 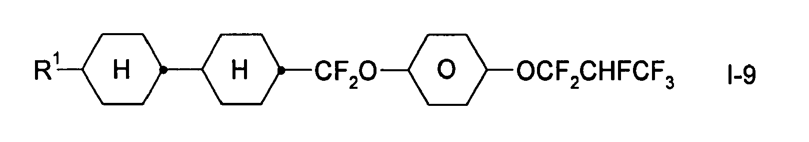 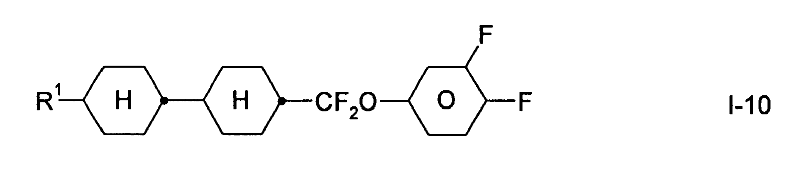 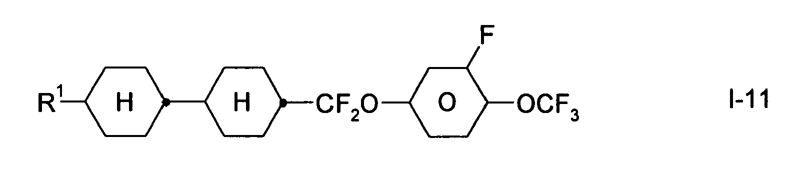 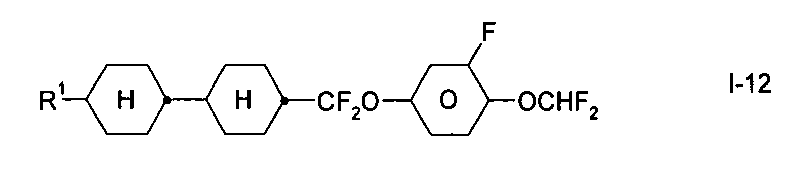 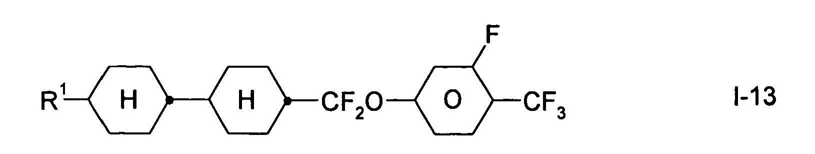 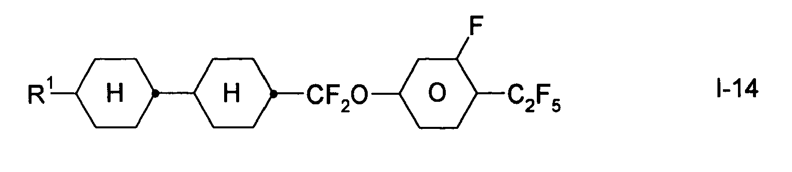 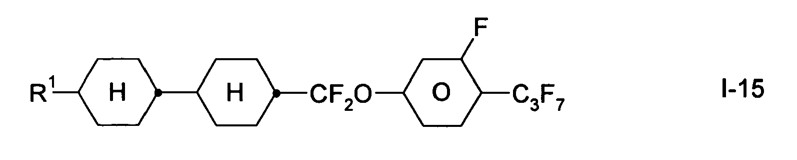 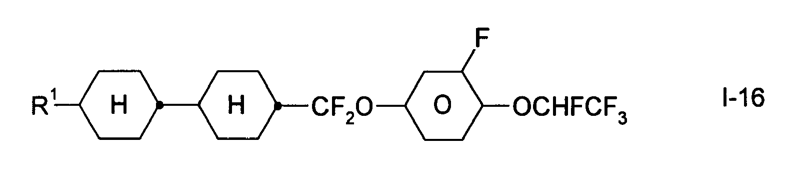 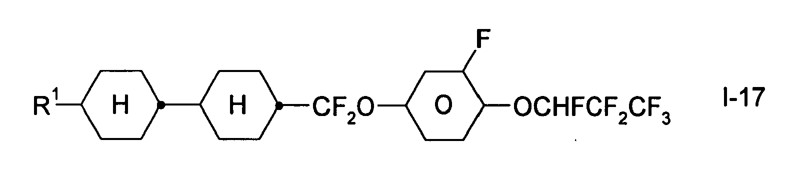 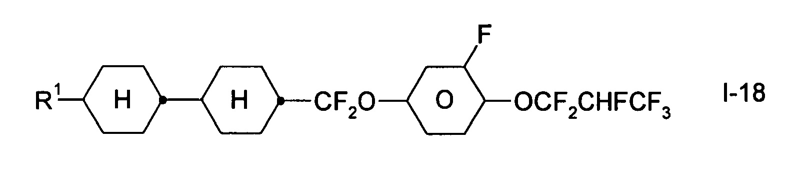 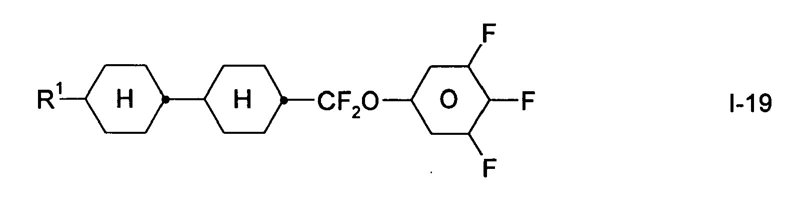 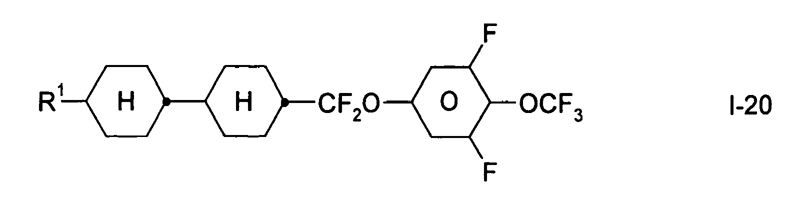 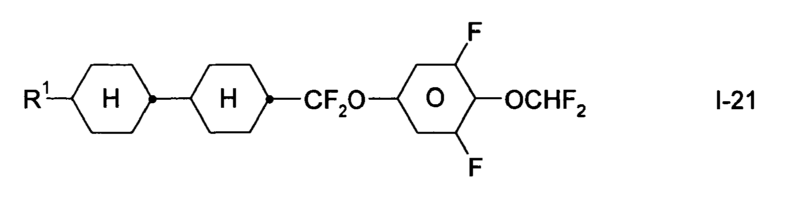 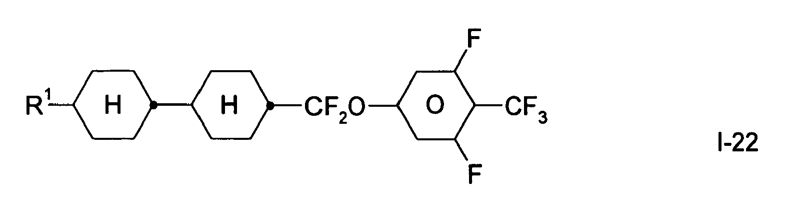 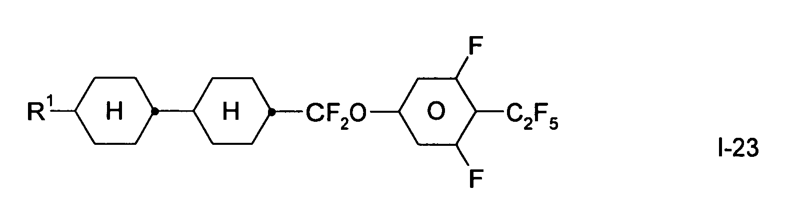 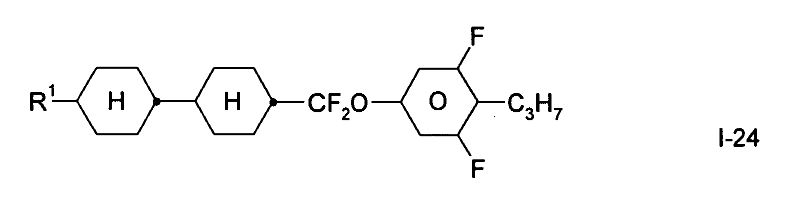 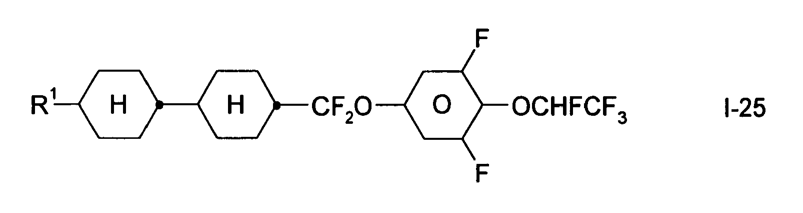 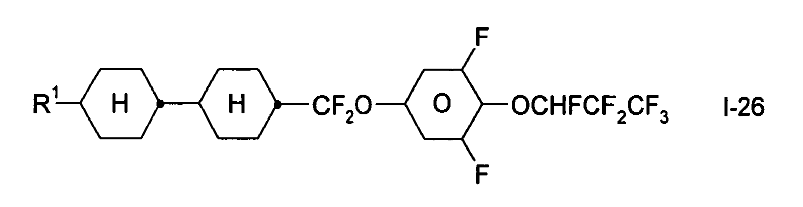 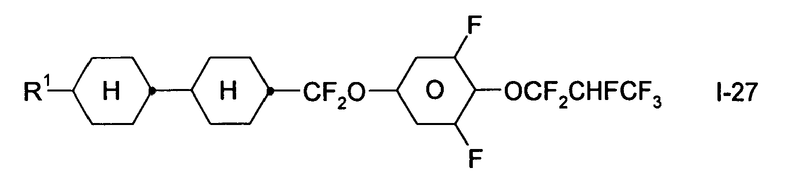 in which R¹ has the meanings indicated in Claim 1.

4. Liquid-crystalline medium according to one of Claims 1 to 3, **characterised in that** it additionally comprises one or more compounds selected from the group consisting of the general formulae II, III, IV, V and VI: 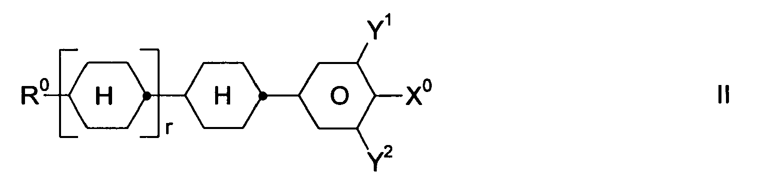 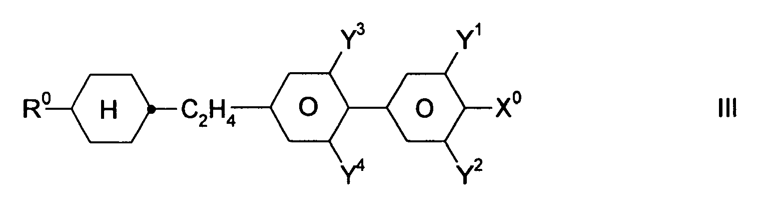 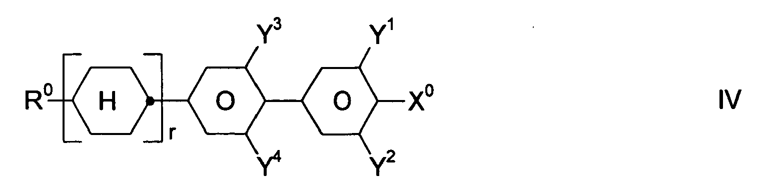 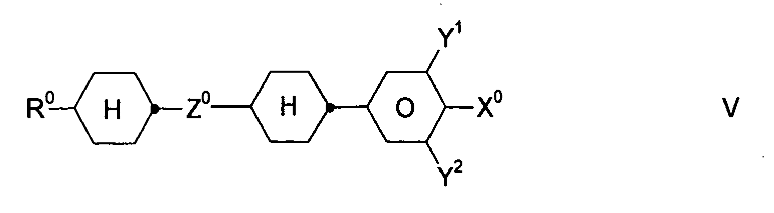 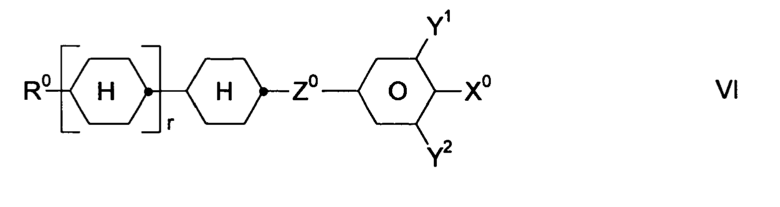 in which the individual radicals have the following meanings:
R⁰ H, n-alkyl, oxaalkyl, alkoxy, fluoroalkyl or alkenyl, each having up to 9 C atoms,
X⁰ F, Cl, halogenated alkyl, halogenated alkenyl, halogenated alkenyloxy or alkoxy having up to 6 C atoms,
Z⁰ -C₂F₄-, -CF=CF-, -CH=CF-, -CF=CH-, -C₂H₄-, -(CH₂)₄-, -OCHF-, -CHFO-, -CH=CH-, -COO-, -OCO-, -CF₂O-, -OCF₂-, -OCH₂- or -CH₂O-,
Y¹,Y², Y³ and Y⁴ each, independently of one another, H or F,
r 0 or 1,
and the compound of the formula VI is not identical with the compound of the formula I.

5. Liquid-crystalline medium according to Claim 4, **characterised in that** the proportion of compounds of the formulae IA and I to VI together in the mixture as a whole is at least 50% by weight.

6. Liquid-crystalline medium according to one of Claims 1 to 5, **characterised in that** it additionally comprises one or more compounds of the formulae Ea to Ef 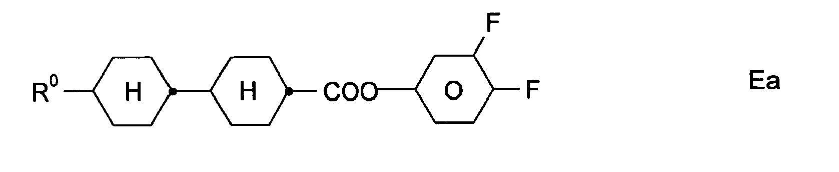 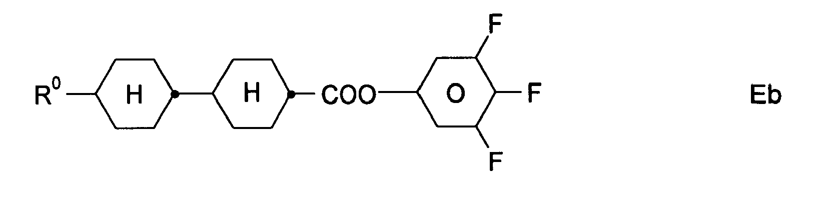 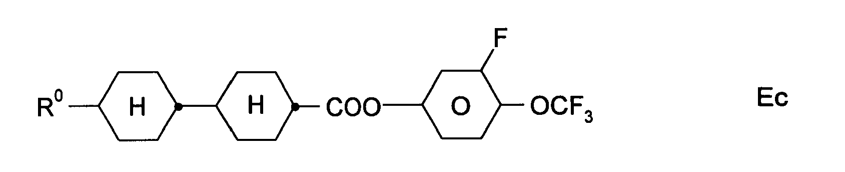 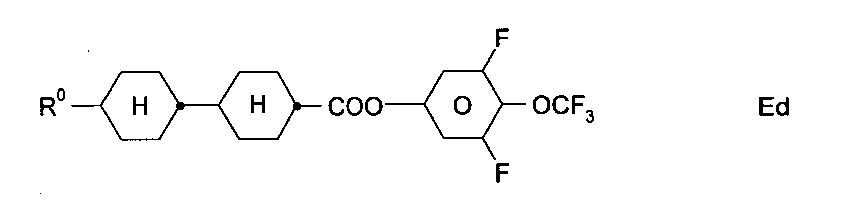 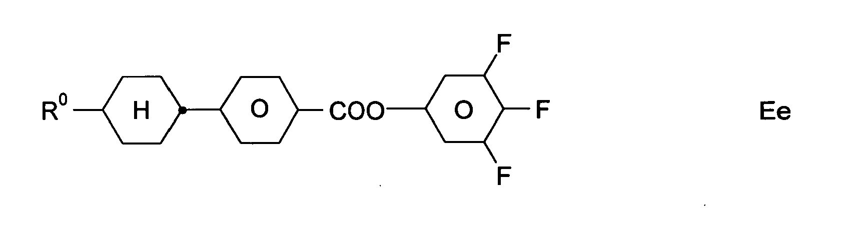 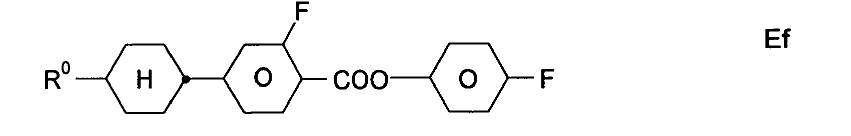 in which R⁰ has the meaning indicated in Claim 4.

7. Liquid-crystalline medium according to one of Claims 1 to 6, **characterised in that** it additionally comprises one or more compounds of the formulae IIa to IIg 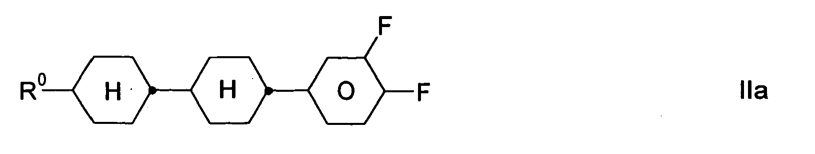 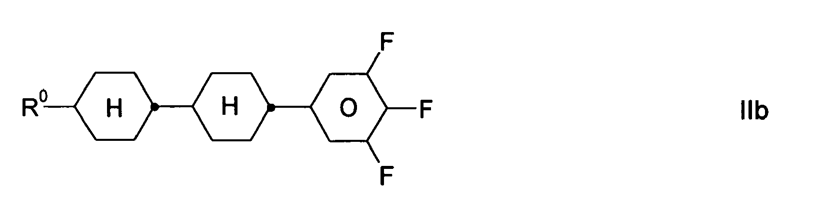 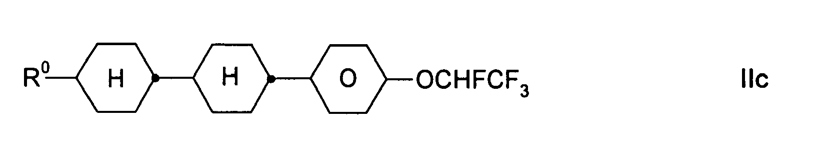 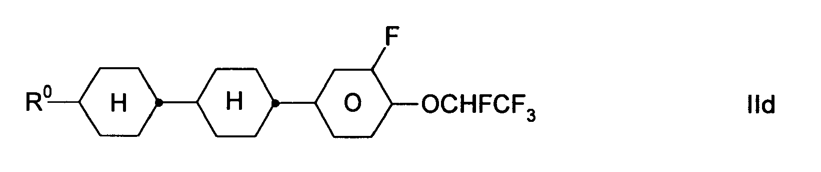 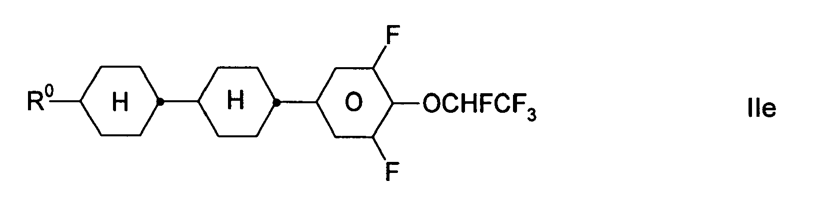 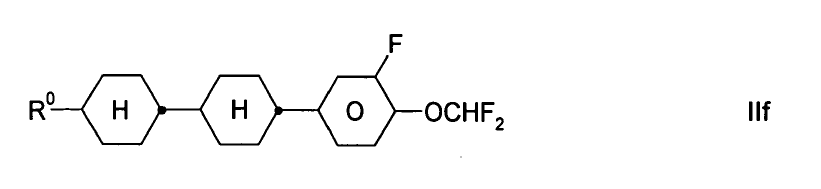 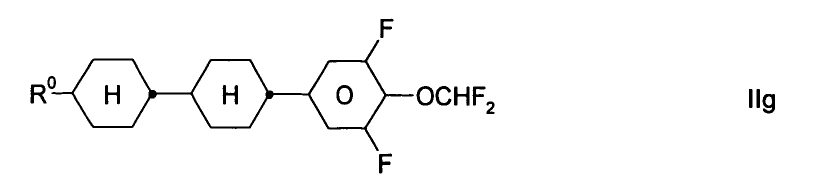 in which R⁰ has the meaning indicated in Claim 4.

8. Liquid-crystalline medium according to one of Claims 1 to 7, **characterised in that** it additionally comprises one or more compounds of the formulae RI to RIX 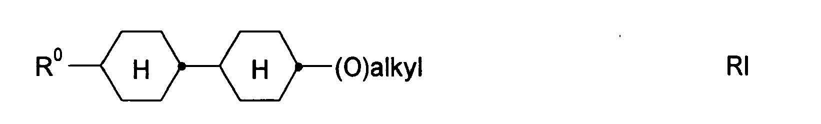 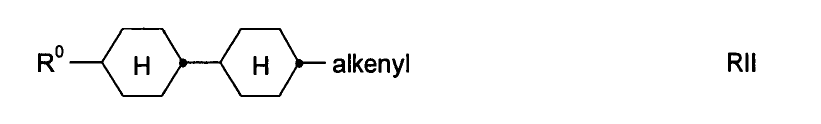 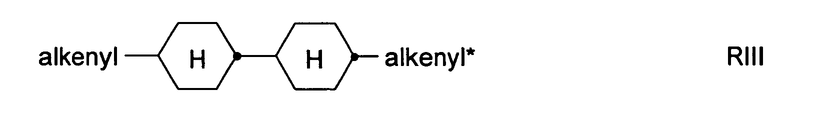 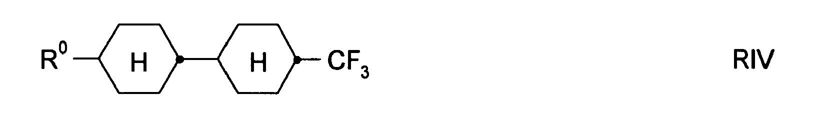 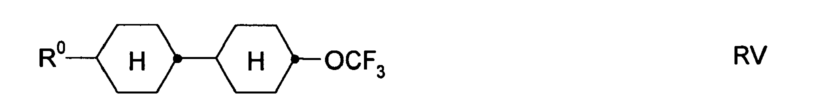 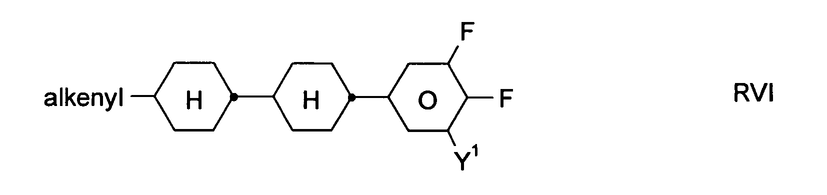 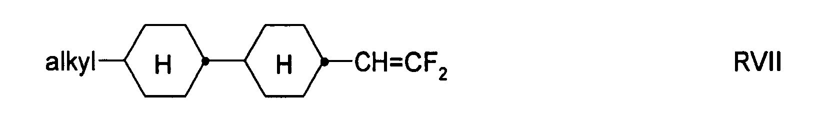 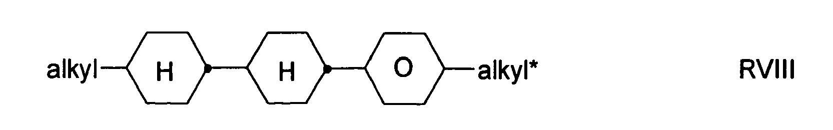 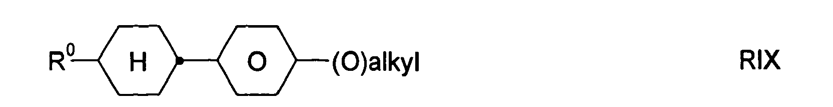 in which
R⁰ denotes n-alkyl, alkoxy, oxaalkyl, fluoroalkyl, alkenyloxy or alkenyl, each having up to 9 C atoms,
Y¹ denotes H or F,
alkyl and alkyl* each, independently of one another, denote a straight-chain or branched alkyl radical having 1-9 C atoms,
alkenyl and alkenyl* each, independently of one another, denote a straight-chain or branched alkenyl radical having 2 to 9 C atoms.

9. Liquid-crystalline medium according to one of Claims 1 to 8, **characterised in that** the proportion of compounds of the formula IA in the mixture as a whole is 5 to 40% by weight.

10. Liquid-crystalline medium according to one of Claims 1 to 9, **characterised in that** the proportion of compounds of the formula I in the mixture as a whole is 5 to 40% by weight.

11. Use of the liquid-crystalline medium according to Claim 1 for electro-optical purposes.

12. Electro-optical liquid-crystal display containing a liquid-crystalline medium according to Claim 1.

## Revendications

1. Milieu de cristal liquide basé sur un mélange de composés polaires d'anisotropie diélectrique positive, **caractérisé en ce qu'**il comprend un ou plusieurs composés de la formule I 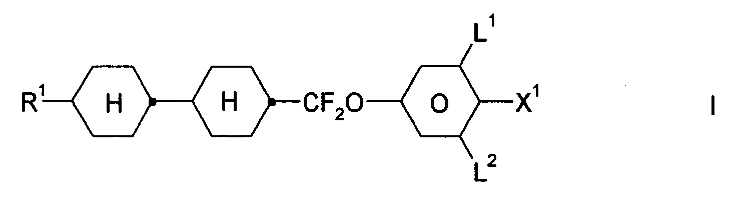 et un ou plusieurs composés de la formule IA 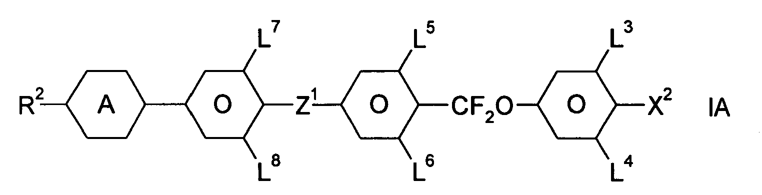 dans lesquelles les radicaux individuels présentent les significations qui suivent :
R¹ et R² chacun indépendamment de l'autre, représentent H, un radical alkyle halogéné ou non substitué comportant de 1 à 15 atomes de C, où un ou plusieurs groupes CH₂ dans ces radicaux peuvent également être remplacés, dans chaque cas indépendamment les uns des autres, par -C≡C-, -CH=CH-, -O-, 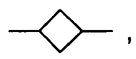 -CO-O- ou -O-CO- de telle sorte que des atomes de O ne soient pas liés directement les uns aux autres,
X¹ et X² chacun indépendamment de l'autre, représentent F, Cl, CN, SF₅, SCN, OCN, un radical alkyle halogéné, un radical alkényle halogéné, un radical alkoxy halogéné ou un radical alkényloxy halogéné, chacun comportant jusqu'à 6 atomes de C, 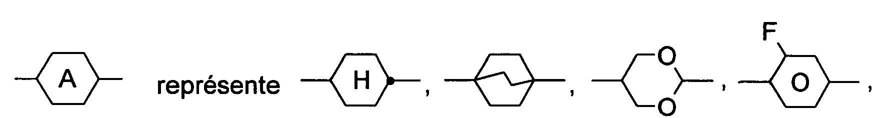 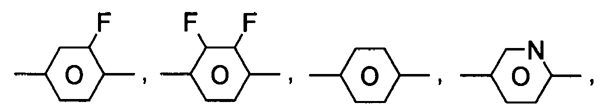 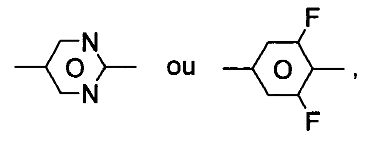
Z¹ représente -CH₂CH₂-, -CH=CH-, -C≡C-, -COO-, -CH₂O-, -OCH₂-, -OOC-, -(CH₂)₄-, -CHFO-, -CH=CF-, -CF=CH-, -CF=CF-, -C₂F₄-, -CF₂O-, -OCF₂- ou une liaison simple,
L¹ à L⁸ chacun indépendamment les uns des autres, représentent H ou F.

2. Milieu de cristal liquide selon la revendication 1, **caractérisé en ce qu'**il comprend un ou deux composés ou plus des formules IA-1 à IA-108 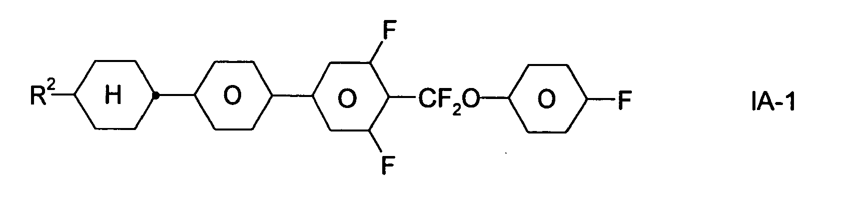 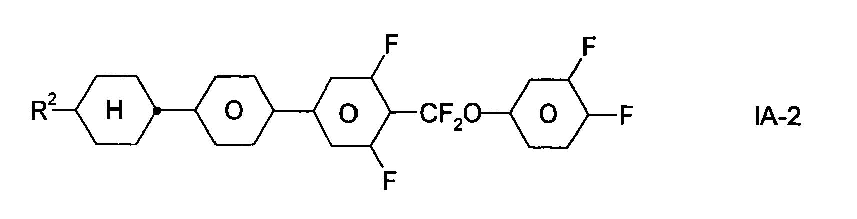 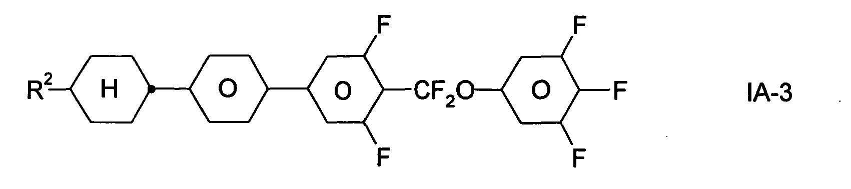 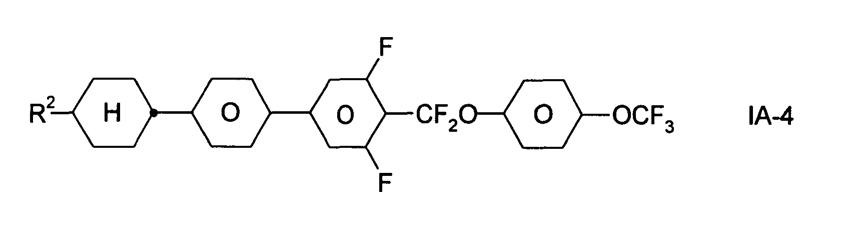 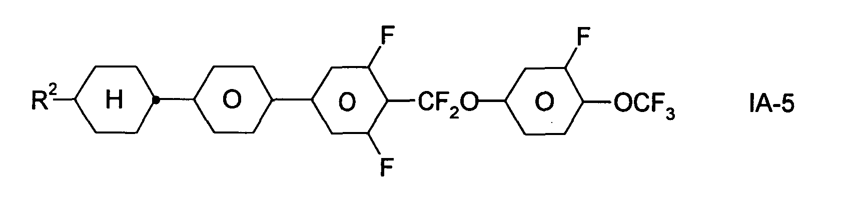 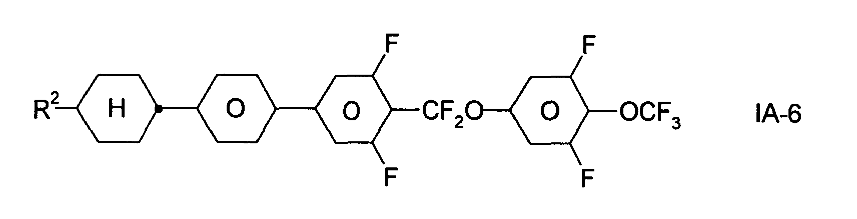 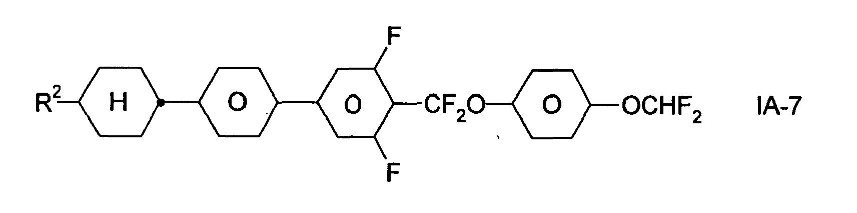 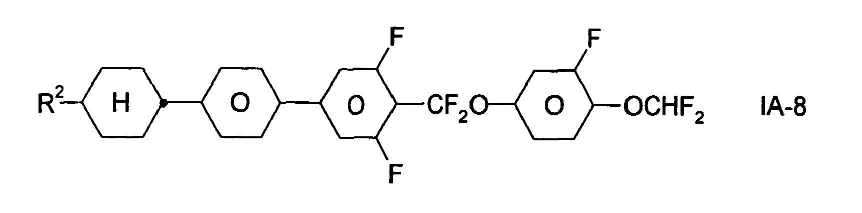 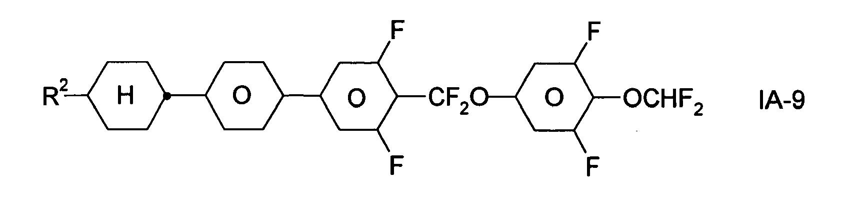 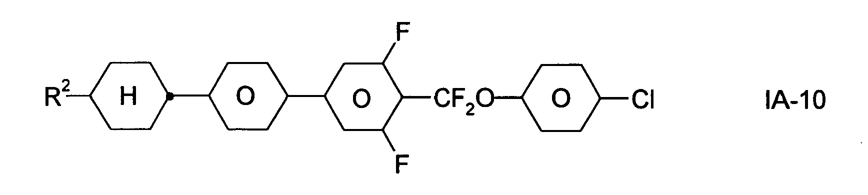 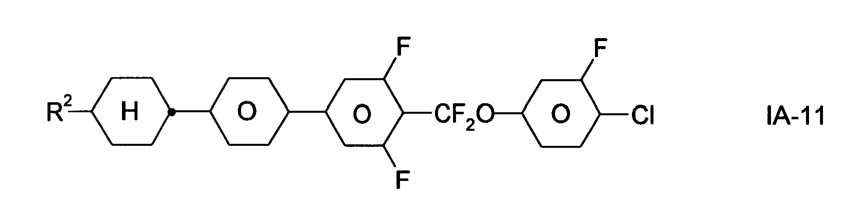 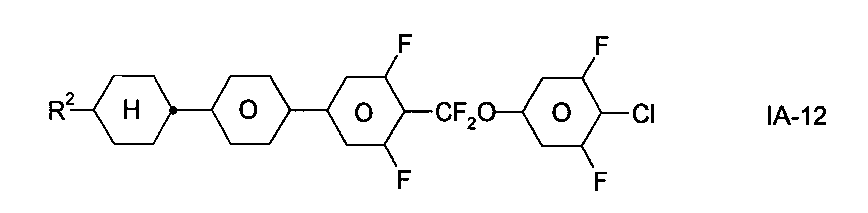 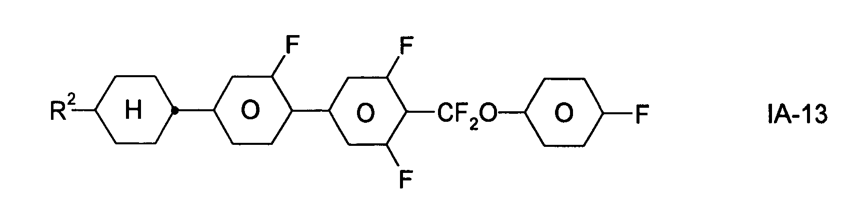 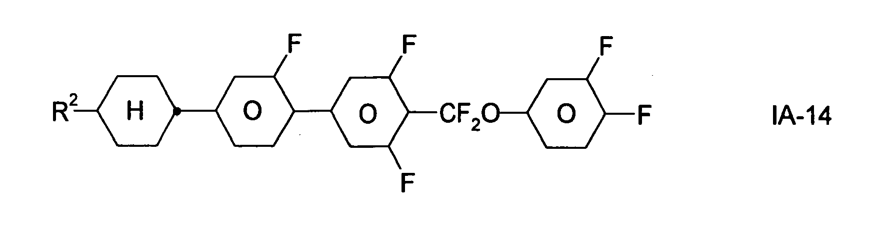 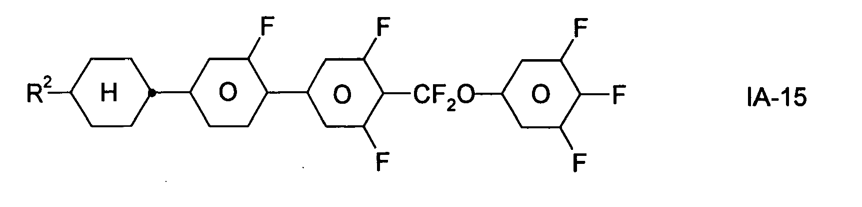 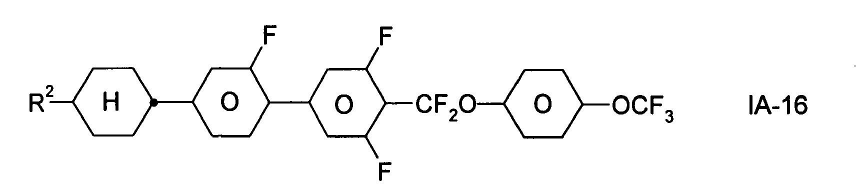 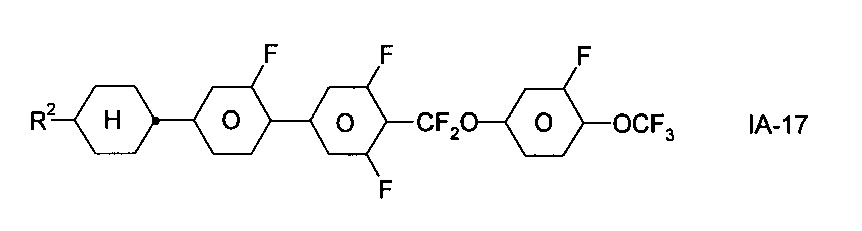 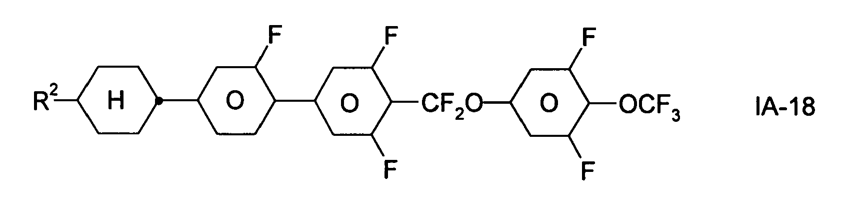 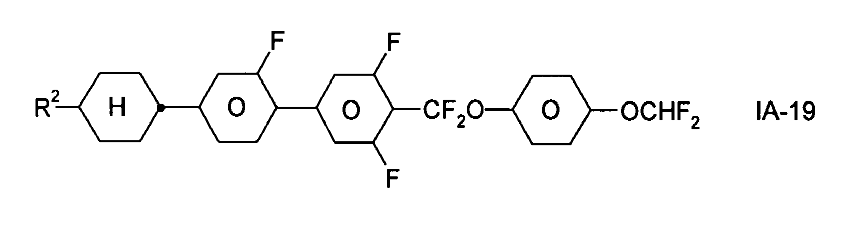 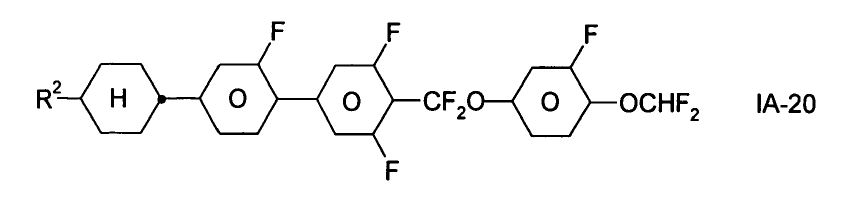 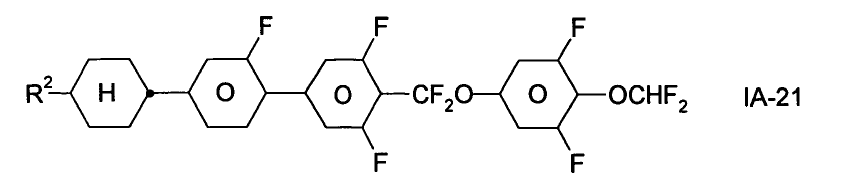 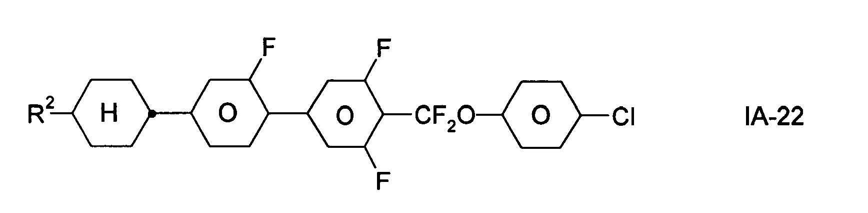 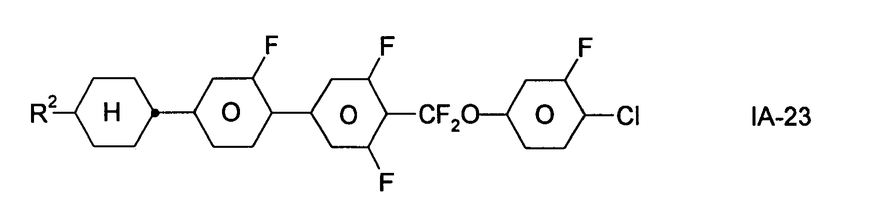 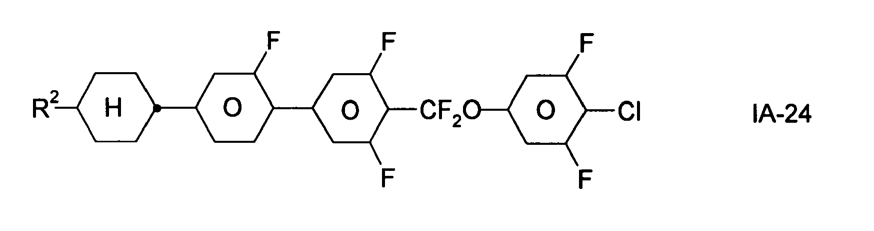 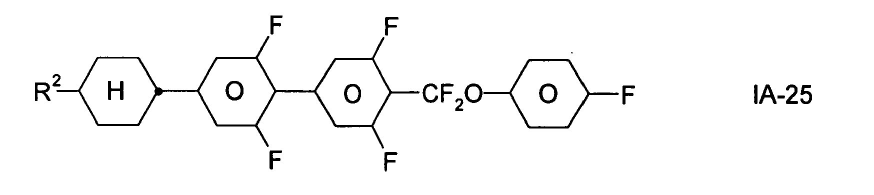 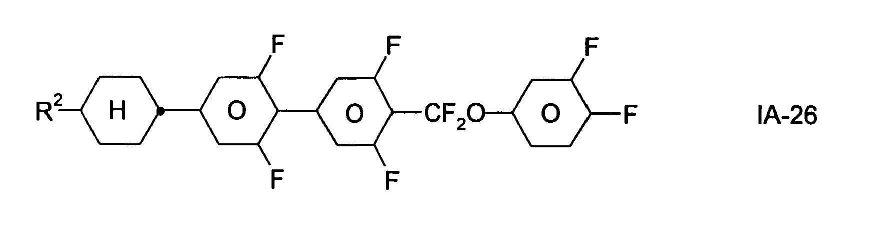 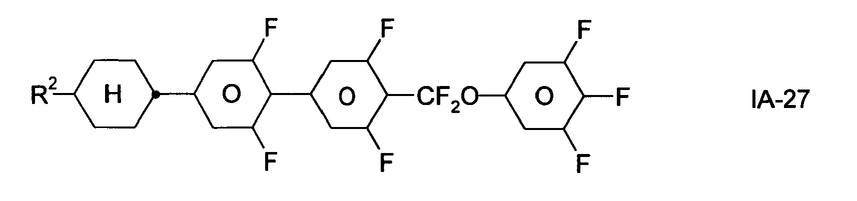 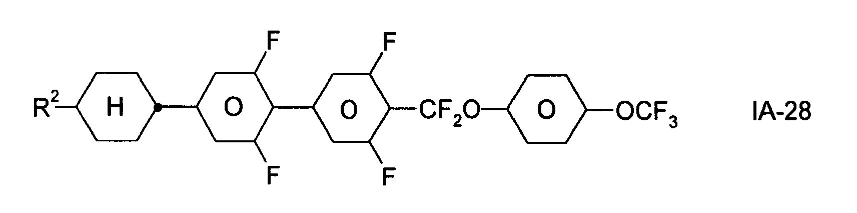 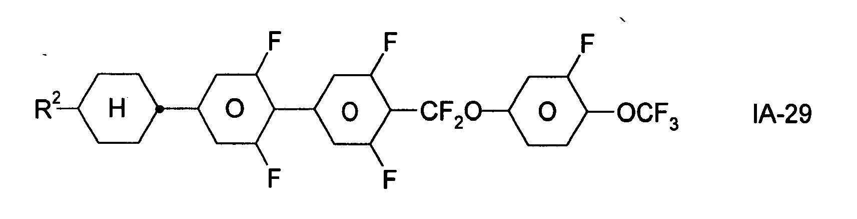 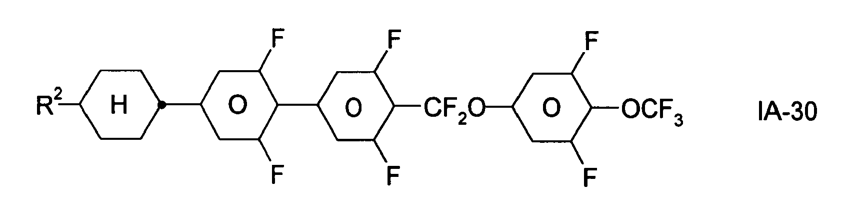 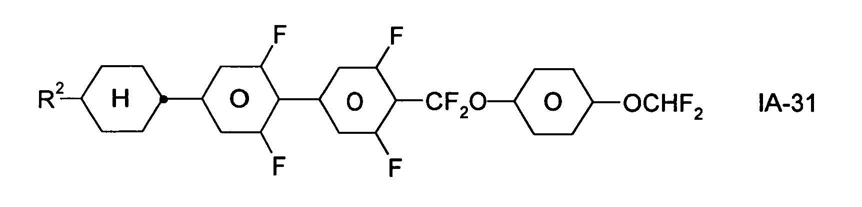 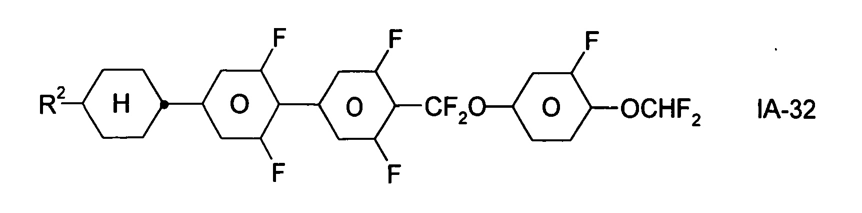 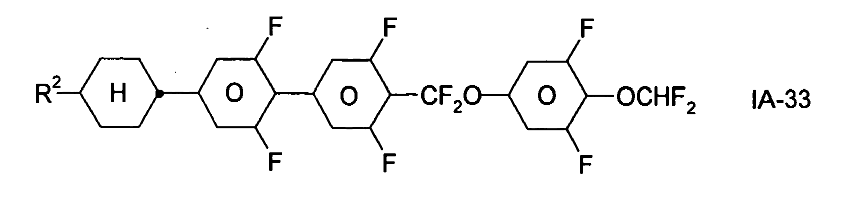 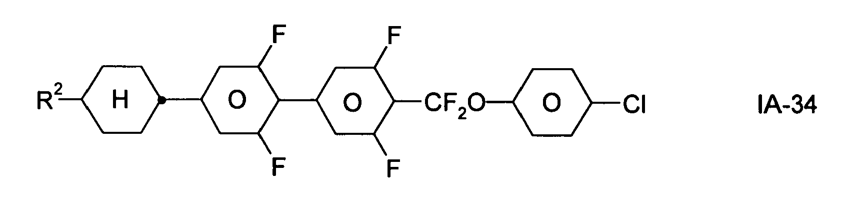 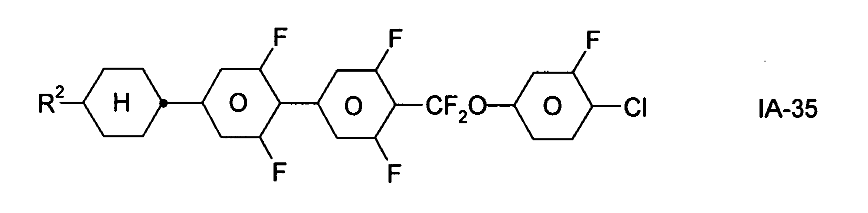 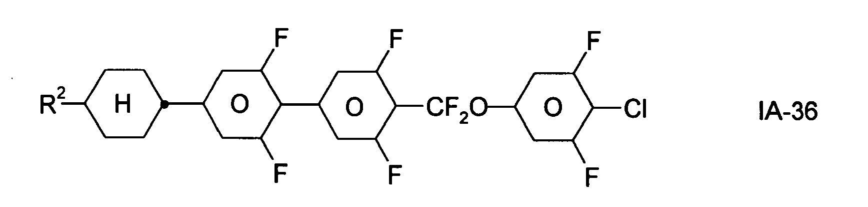 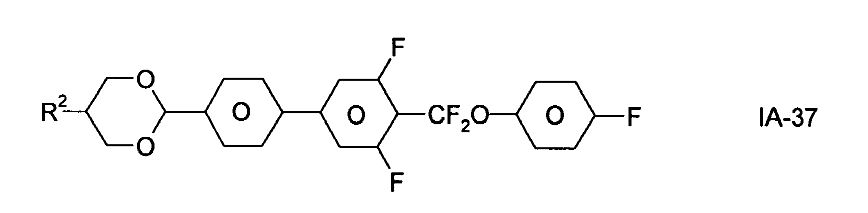 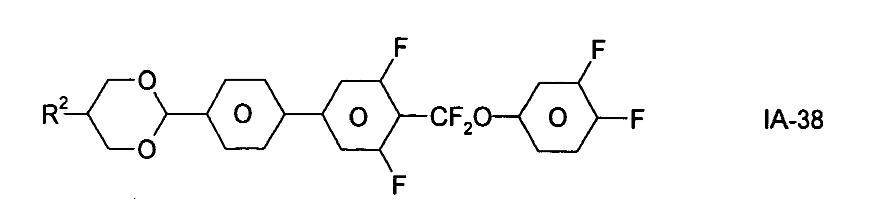 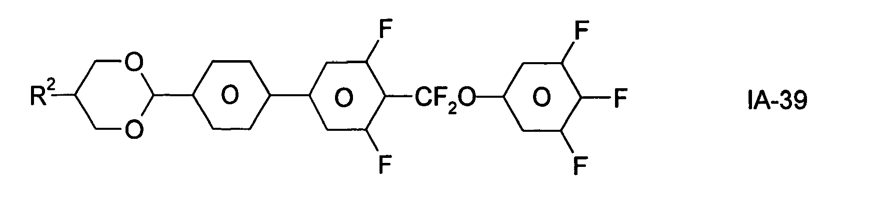 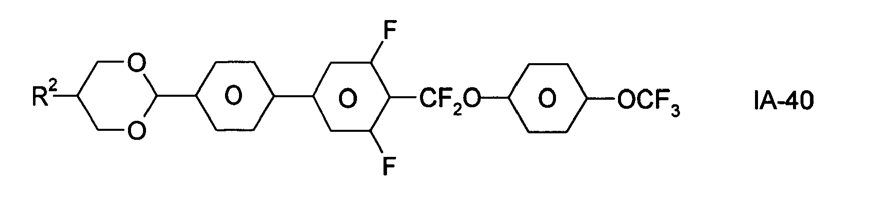 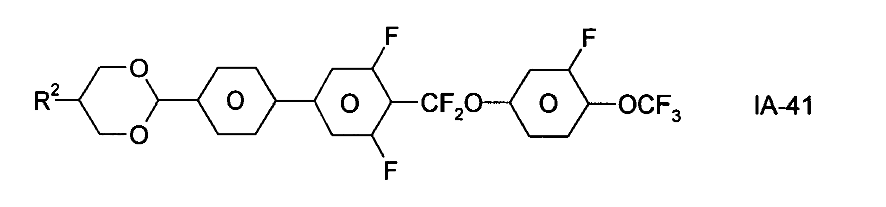 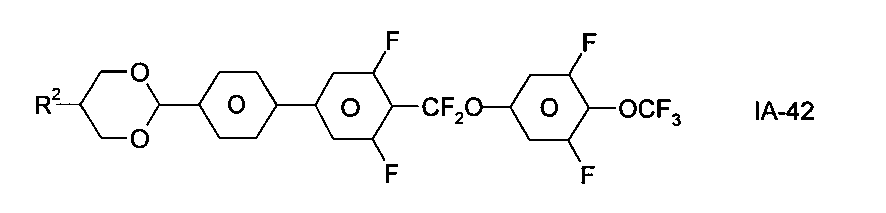 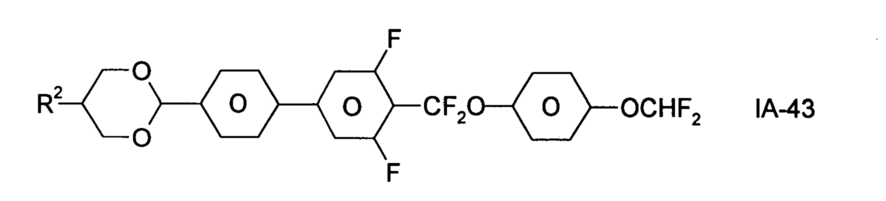 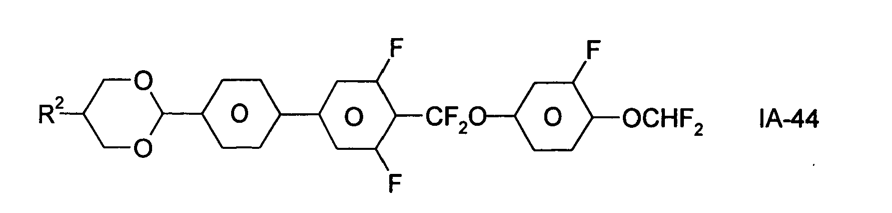 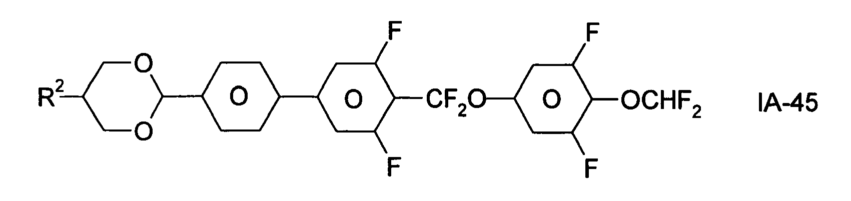 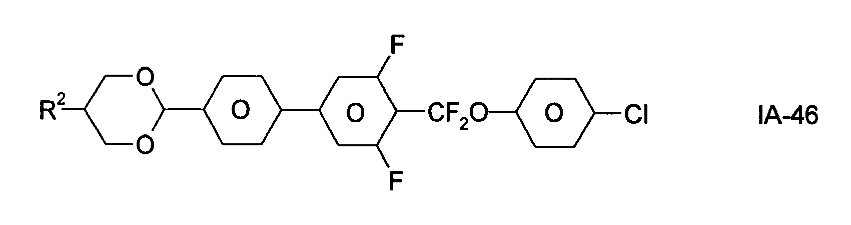 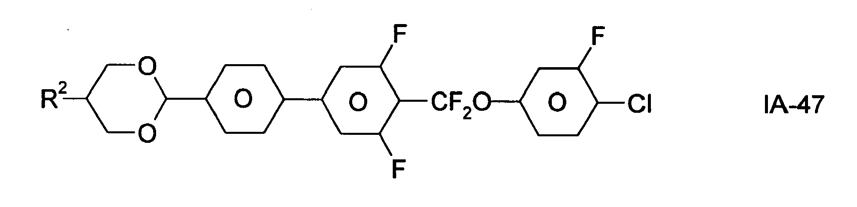 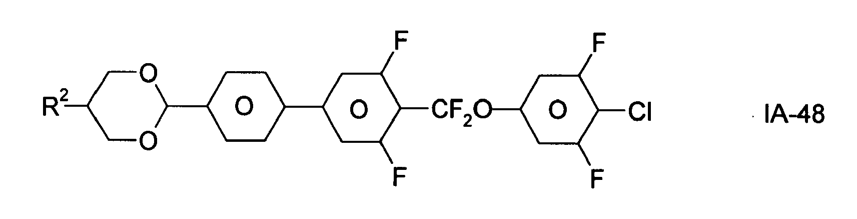 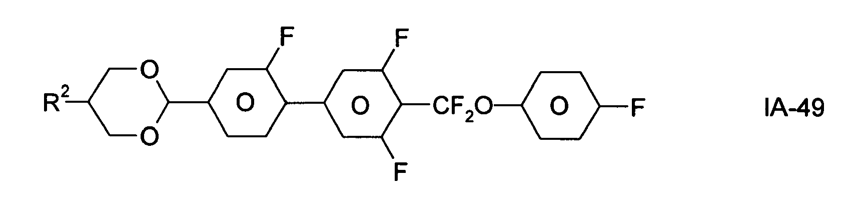 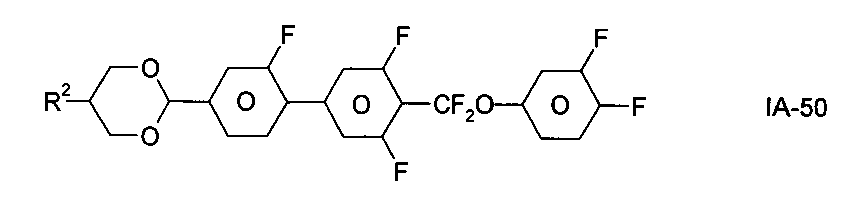 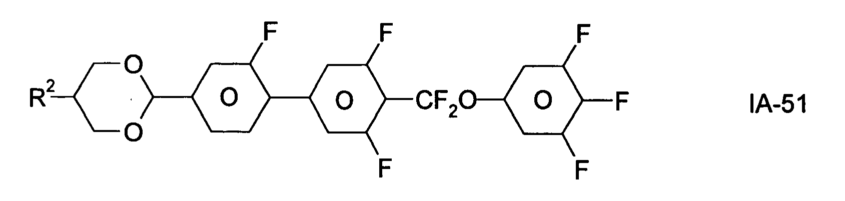 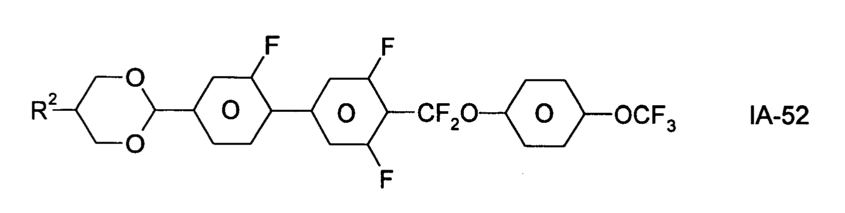 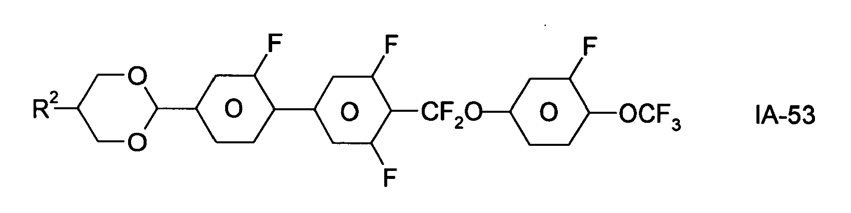 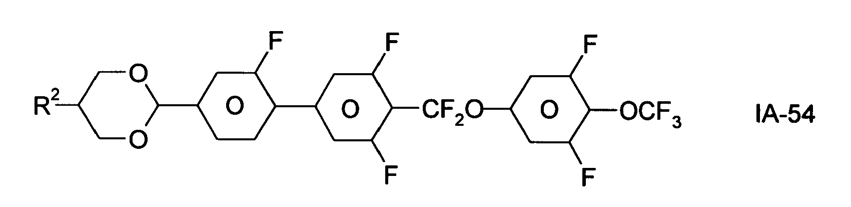 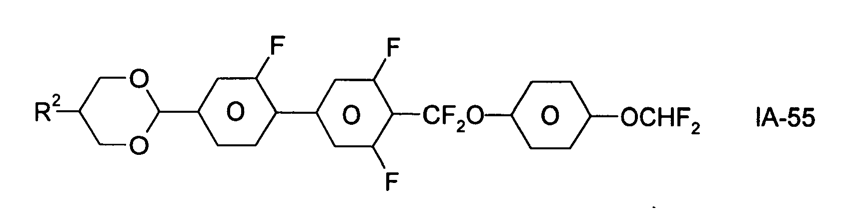 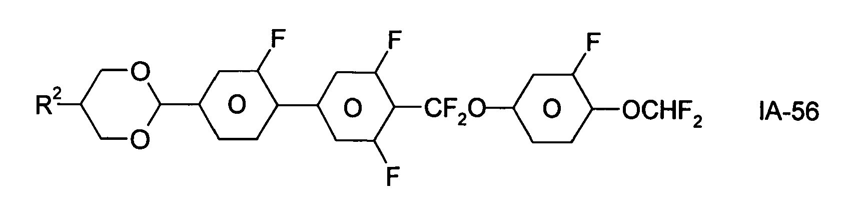 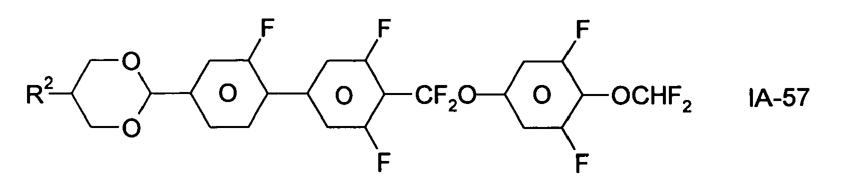 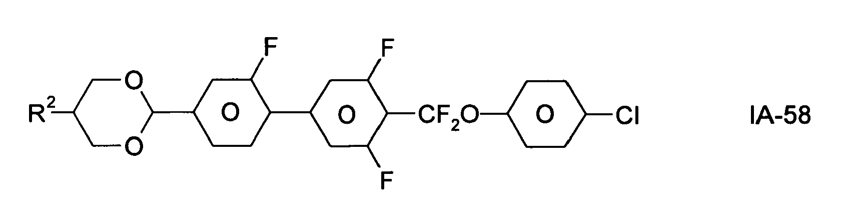 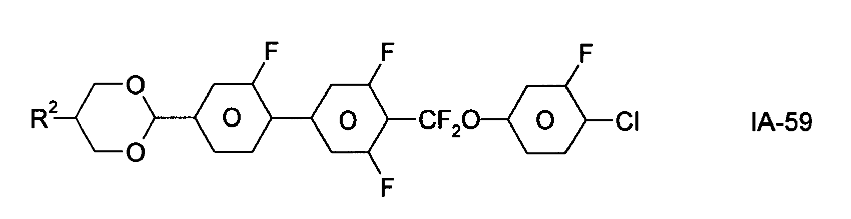 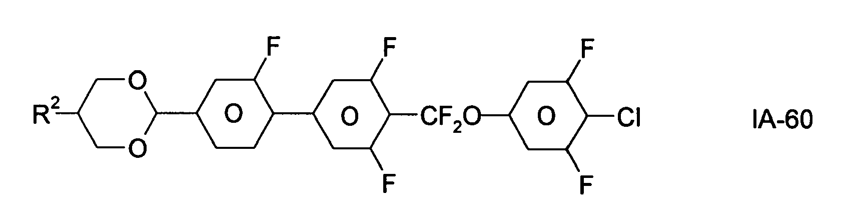 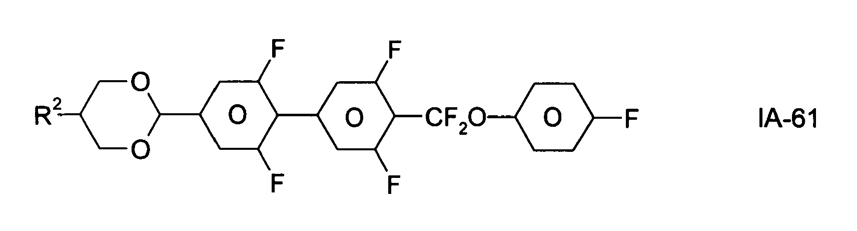 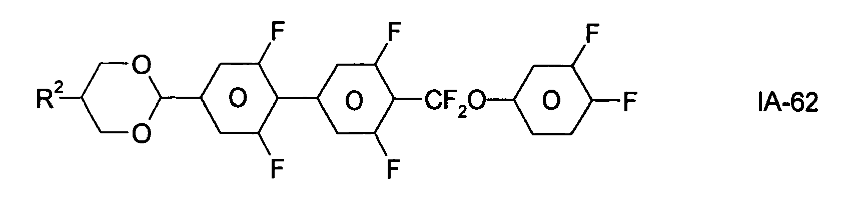 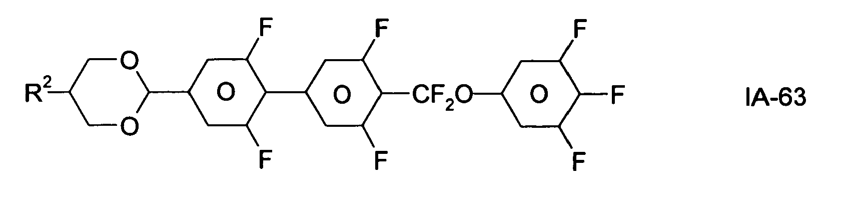 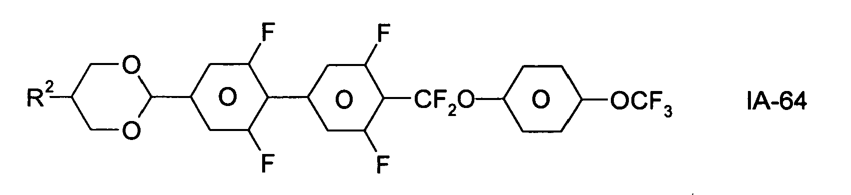 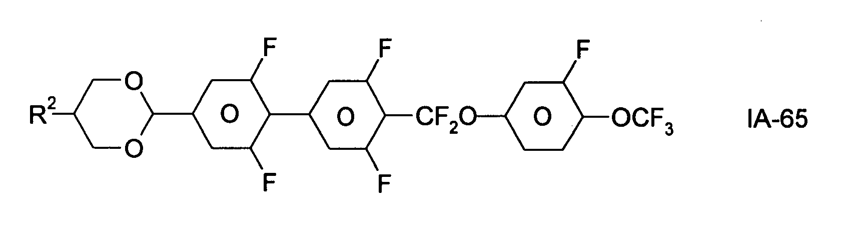 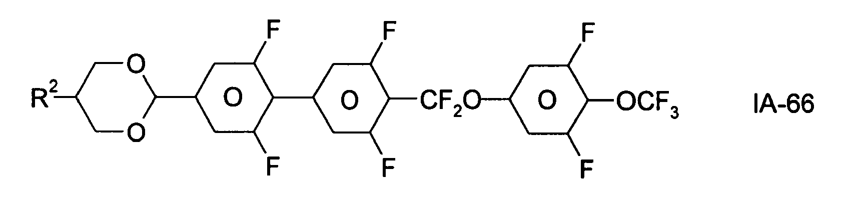 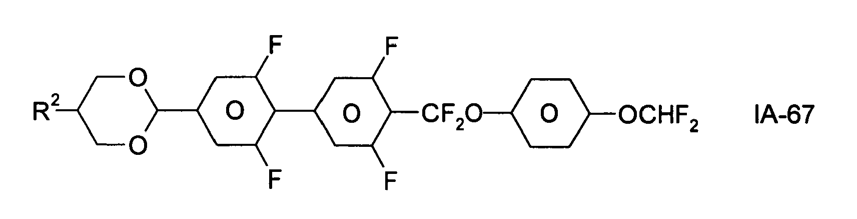 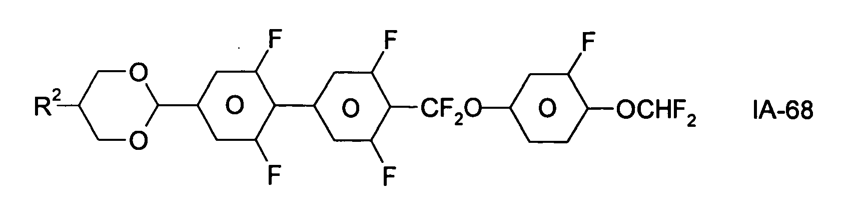 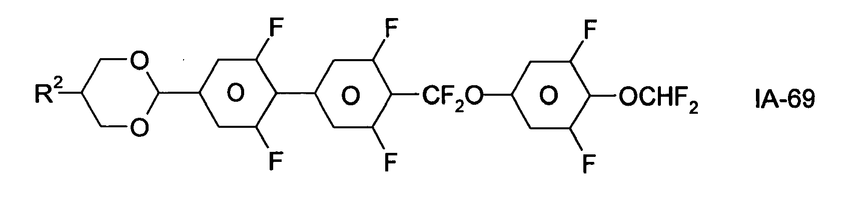 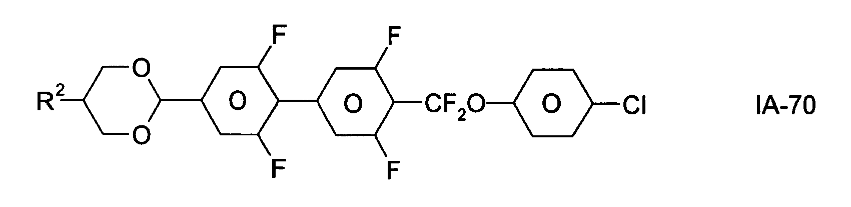 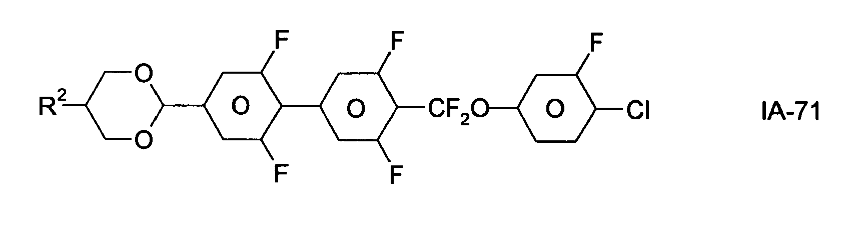 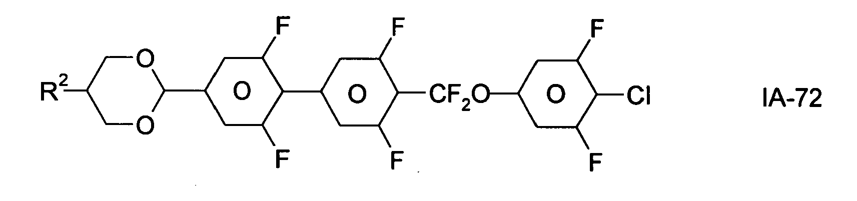 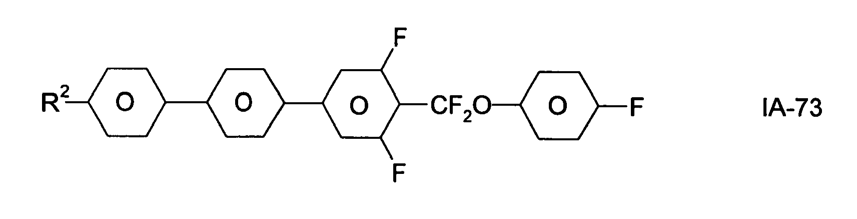 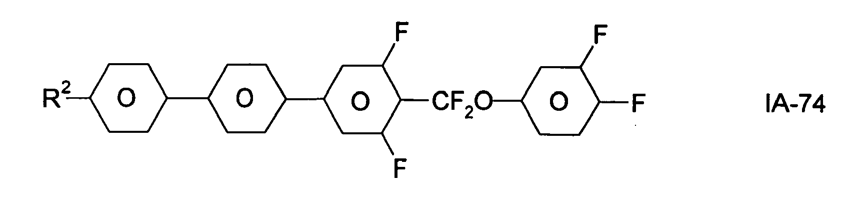 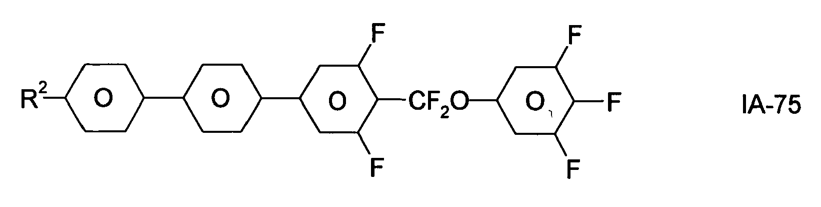 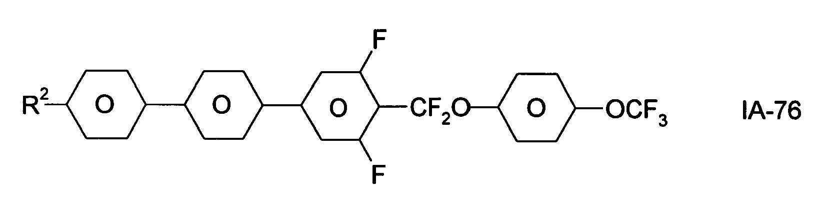 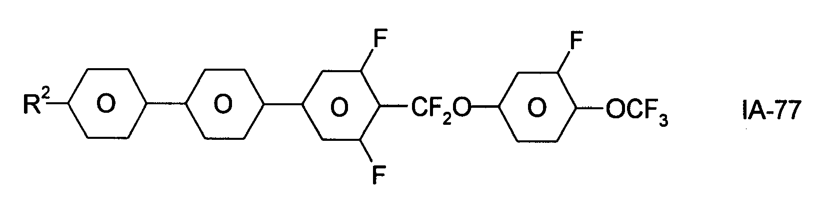 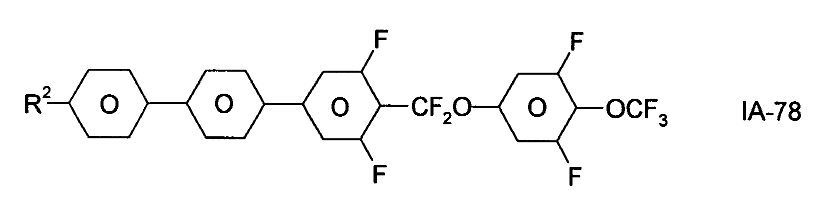 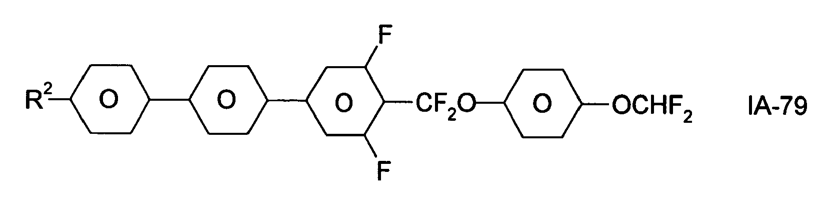 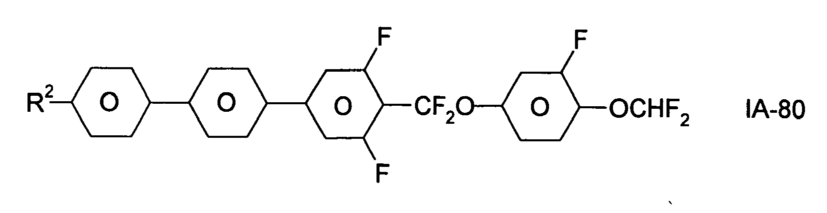 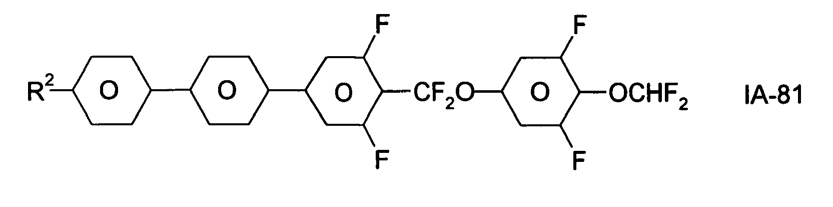 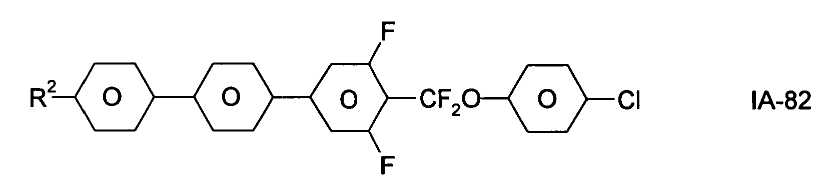 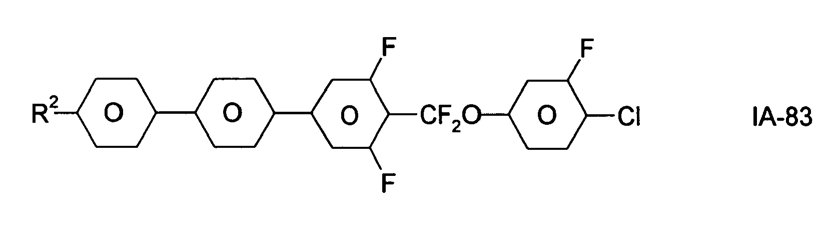 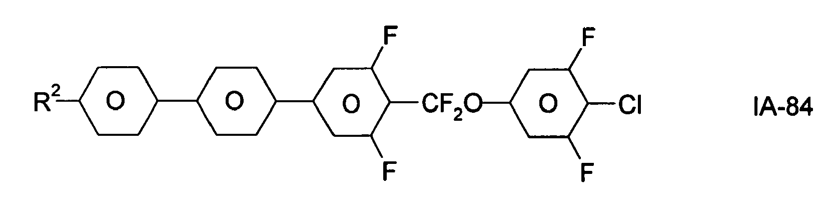 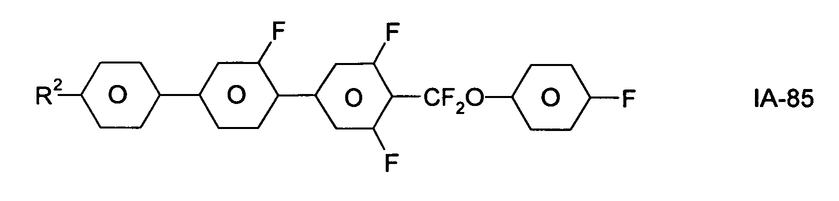 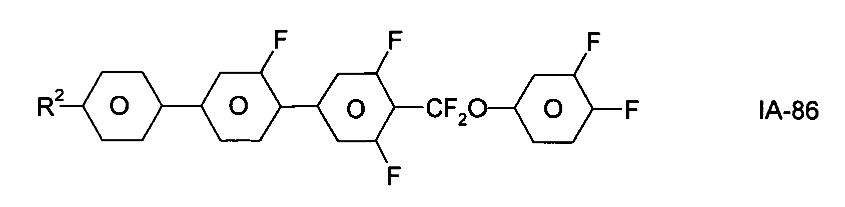 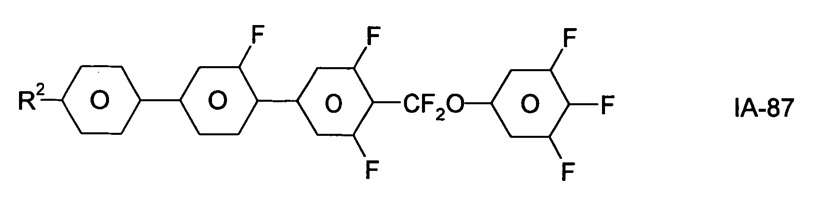 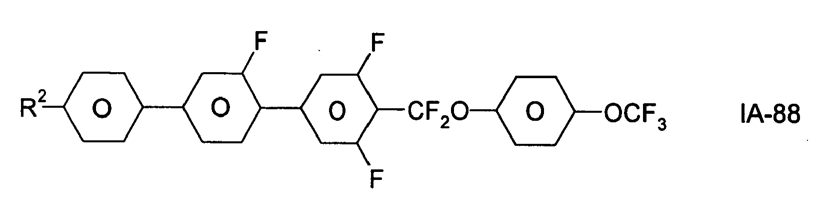 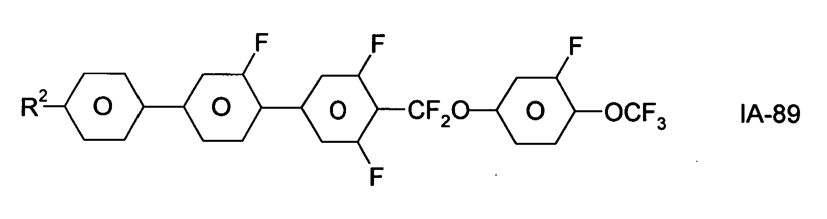 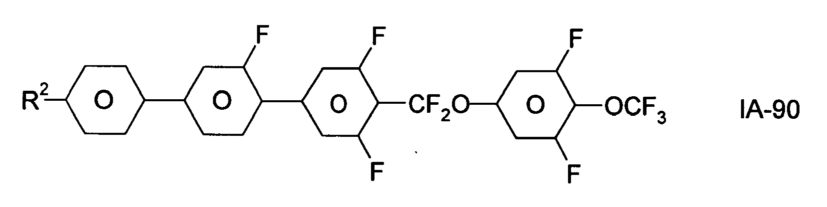 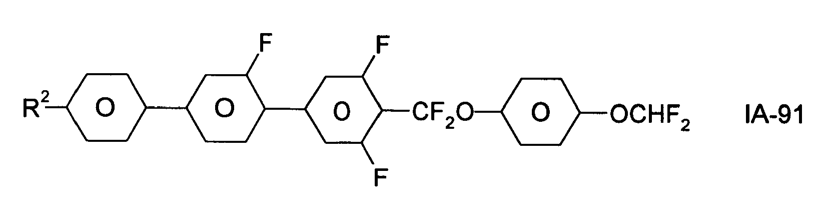 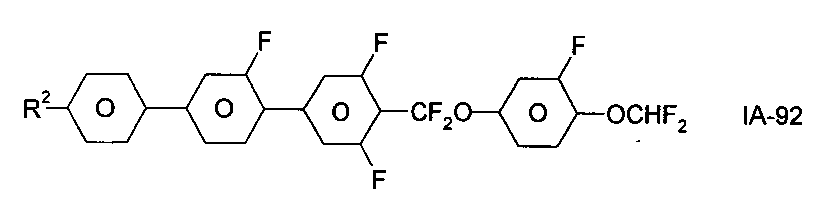 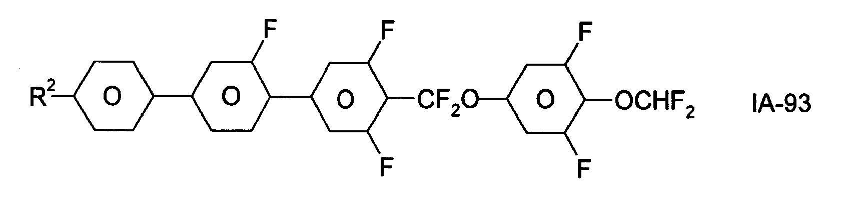 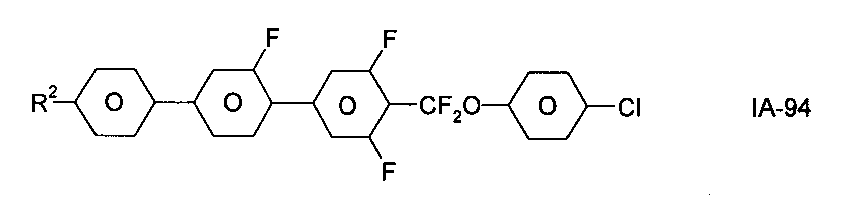 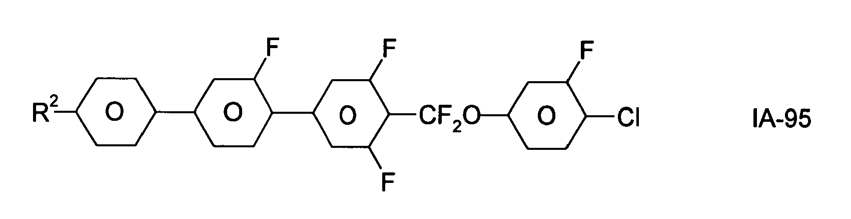 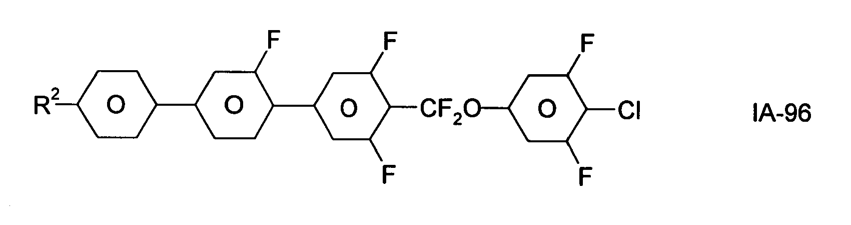 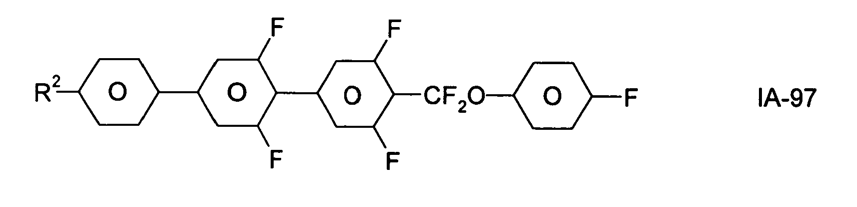 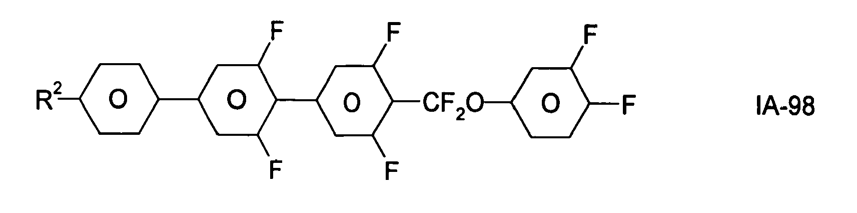 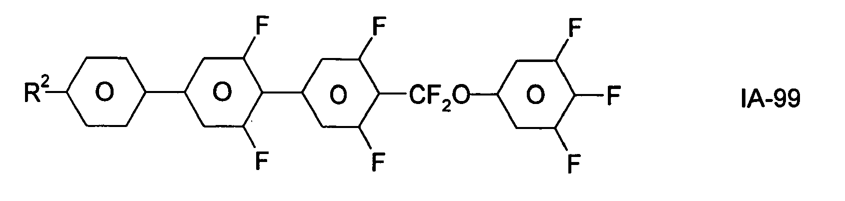 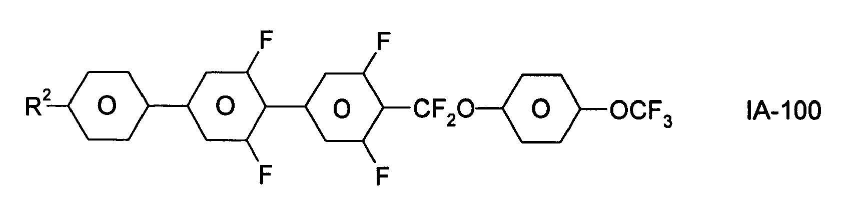 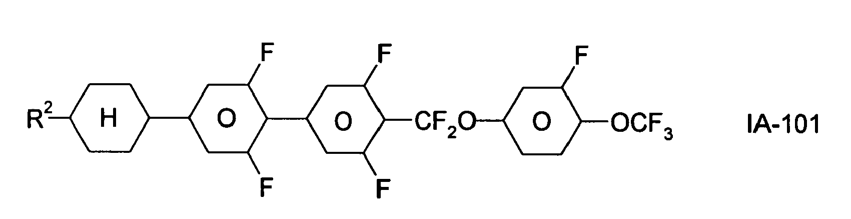 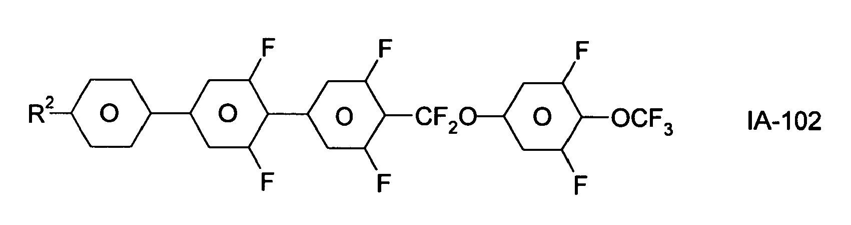 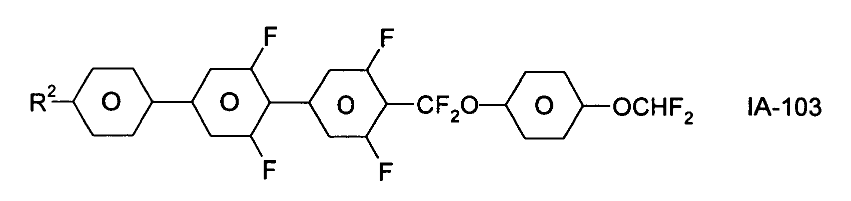 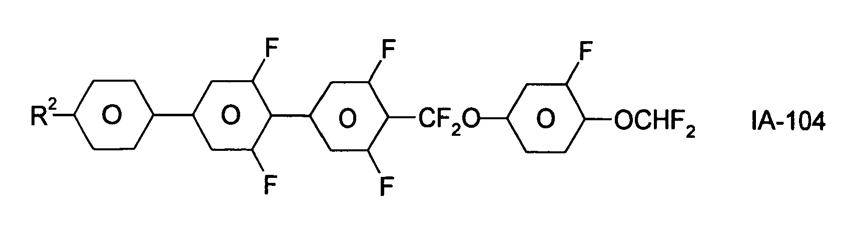 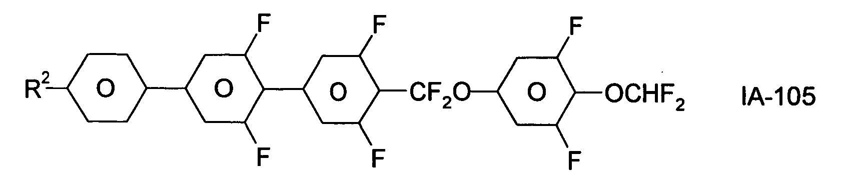 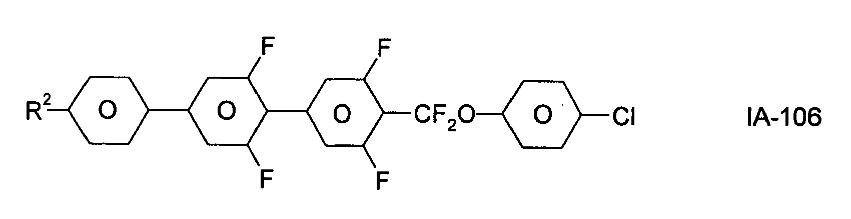 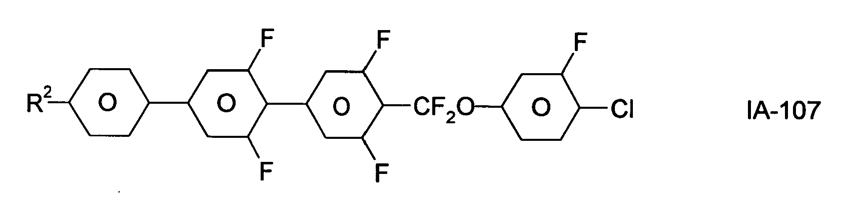 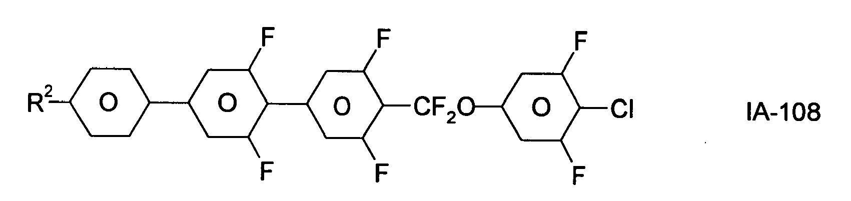 dans lesquelles R² présente la signification indiquée dans la revendication 1.

3. Milieu de cristal liquide selon la revendication 1 ou 2, **caractérisé en ce qu'**il comprend un ou plusieurs composés des formules I-1 à I-27 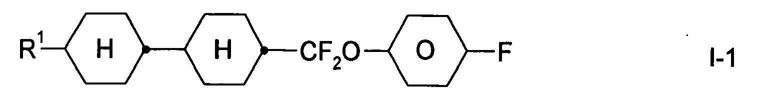 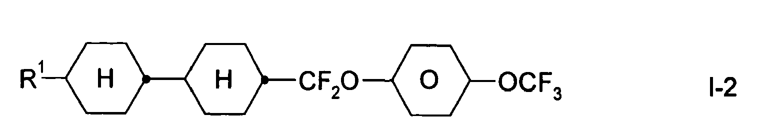 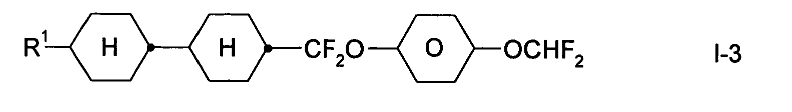 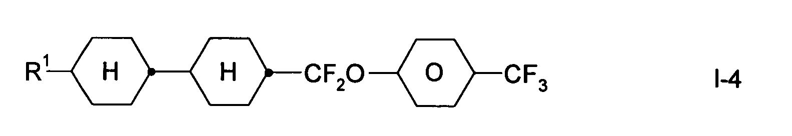 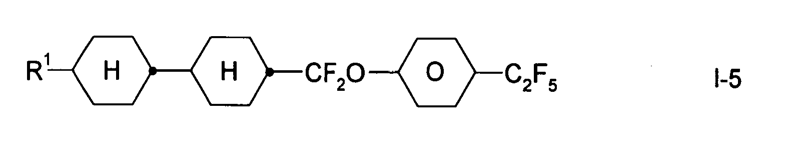 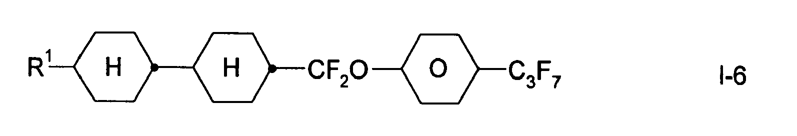 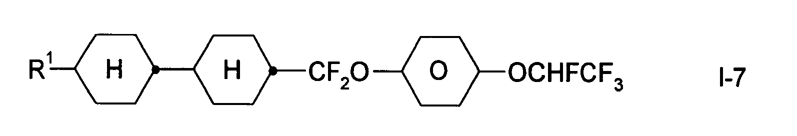 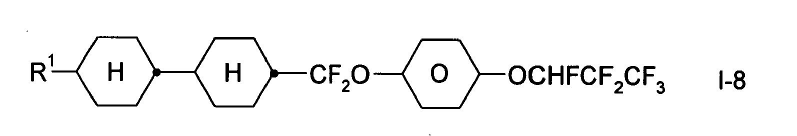 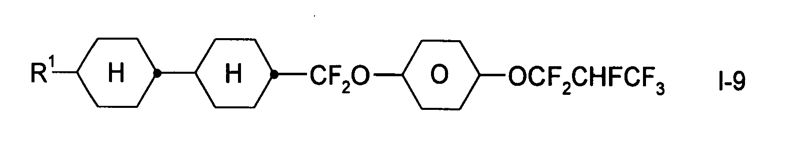 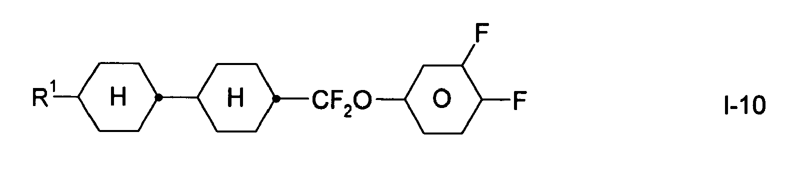 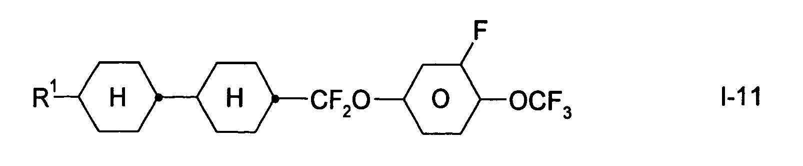 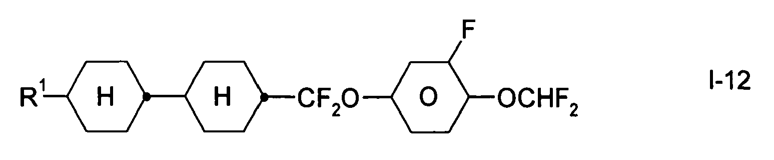 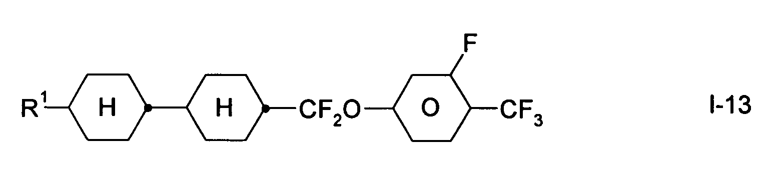 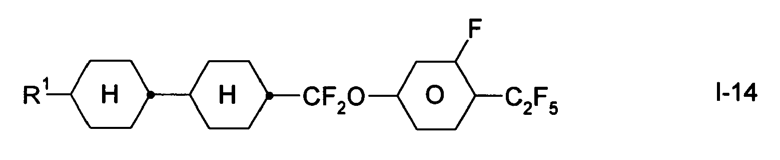 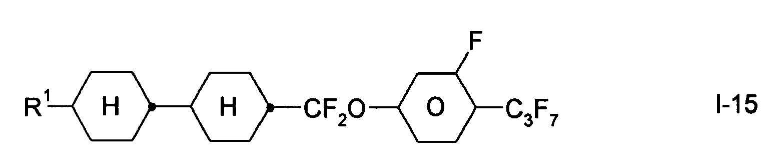 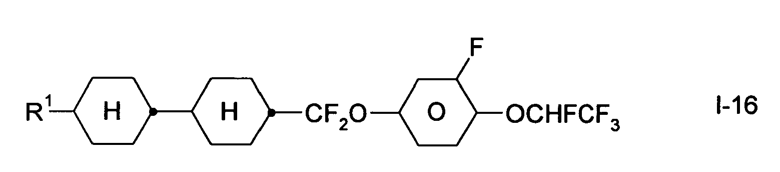 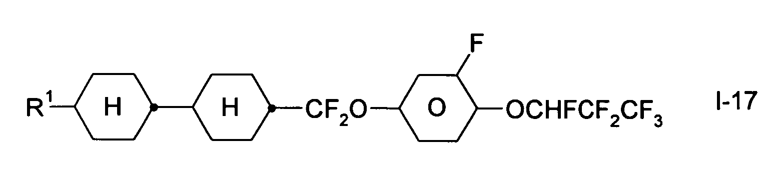 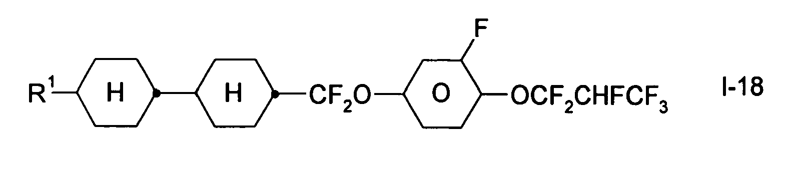 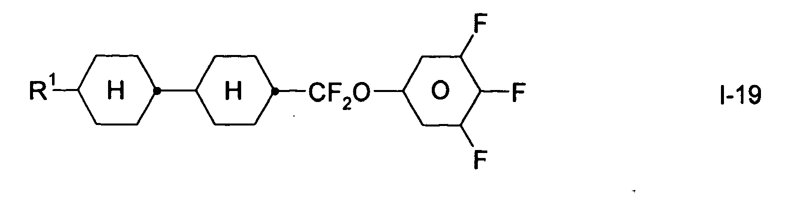 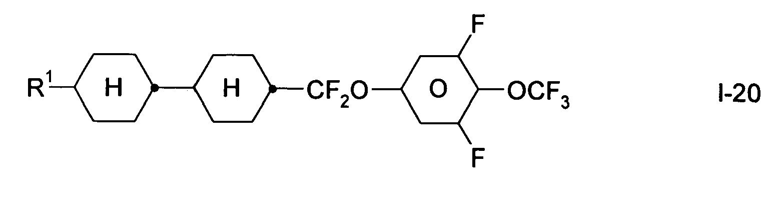 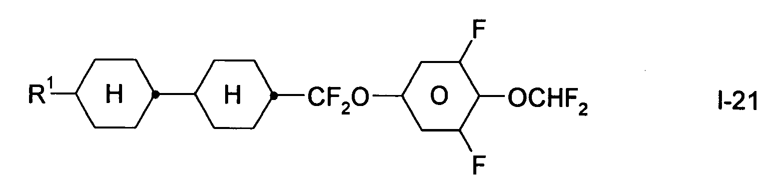 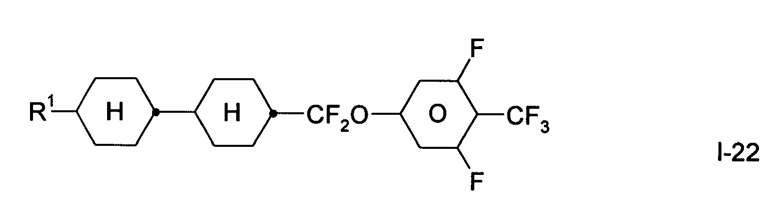 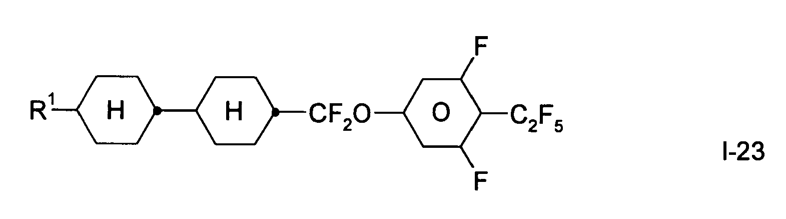 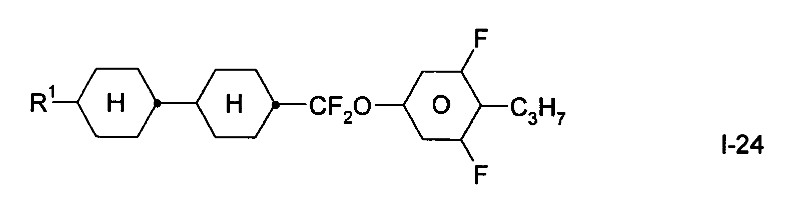 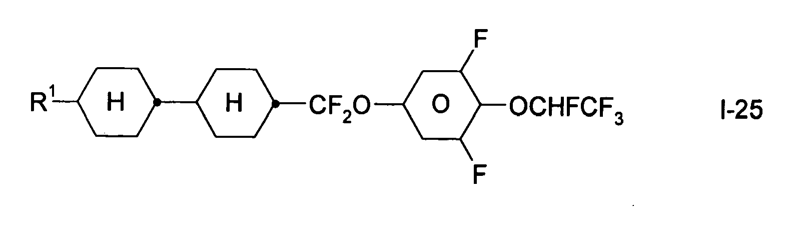 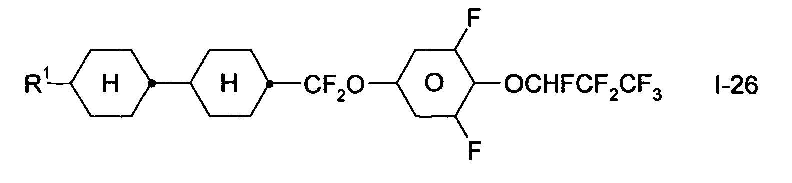 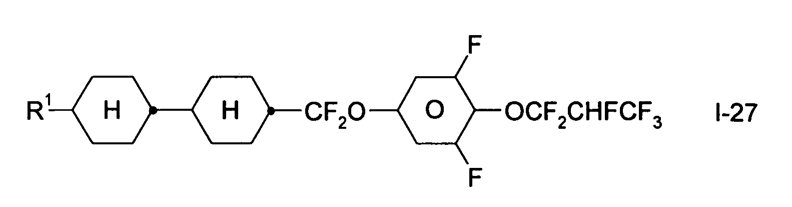 dans lesquelles R¹ présente les significations indiquées dans la revendication 1.

4. Milieu de cristal liquide selon l'une des revendications 1 à 3, **caractérisé en ce qu'**il comprend de façon additionnelle un ou plusieurs composés choisis parmi le groupe constitué par les formules générales II, III, IV, V et VI : 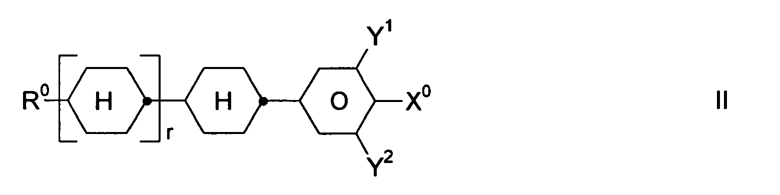 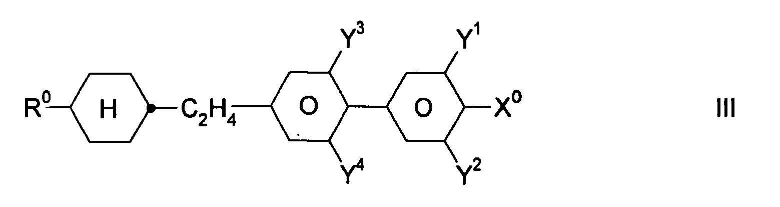 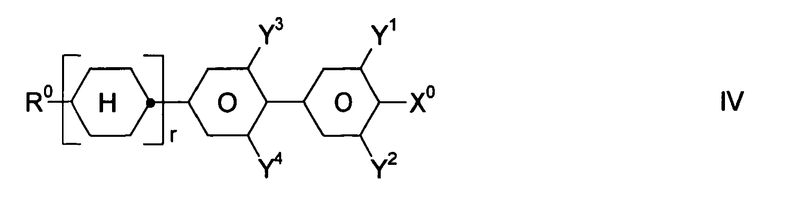 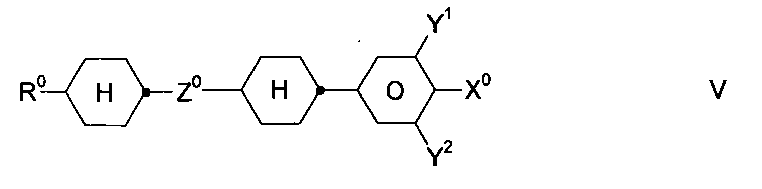 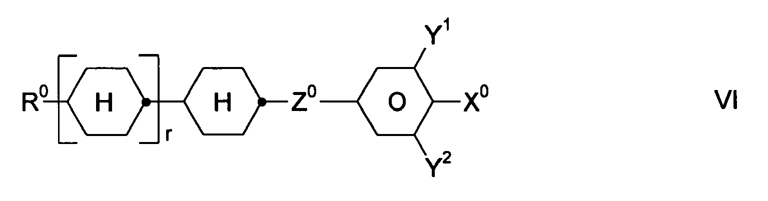 dans lesquelles les radicaux individuels présentent les significations qui suivent:
R⁰ H, n-alkyle, oxaalkyle, alkoxy, fluoroalkyle ou alkényle, chacun comportant jusqu'à 9 atomes de C,
X⁰ F, Cl, alkyle halogéné, alkényle halogéné, alkényloxy halogéné ou alkoxy comportant jusqu'à 6 atomes de C,
Z⁰ -C₂F₄-, -CF=CF-, -CH=CF-, -CF=CH-, -C₂H₄-, -(CH₂)₄-, -OCHF-, -CHFO-, -CH=CH-, -COO-, -OCO-, -CF₂O-, -OCF₂-, -OCH₂- ou -CH₂O-,
Y¹,Y², Y³ et Y⁴ chacun indépendamment de l'autre, représentent H ou F,
r 0 ou 1,
et le composé de la formule VI n'est pas identique au composé de la formule I.

5. Milieu de cristal liquide selon la revendication 4, **caractérisé en ce que** la proportion de composés des formules IA et I à VI en association dans le mélange pris dans sa globalité est d'au moins 50% en poids.

6. Milieu de cristal liquide selon l'une des revendications 1 à 5, **caractérisé en ce qu'**il comprend de façon additionnelle un ou plusieurs composés des formules Ea à Ef 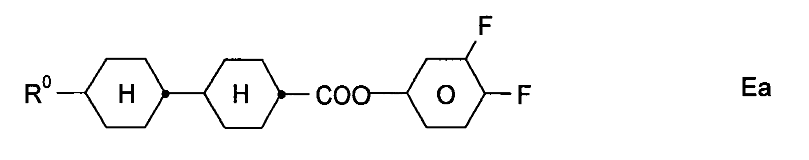 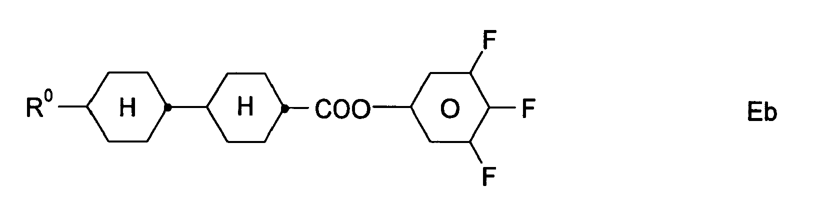 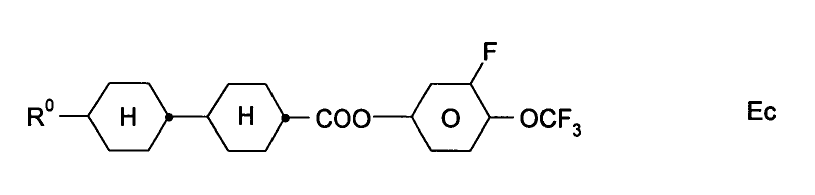 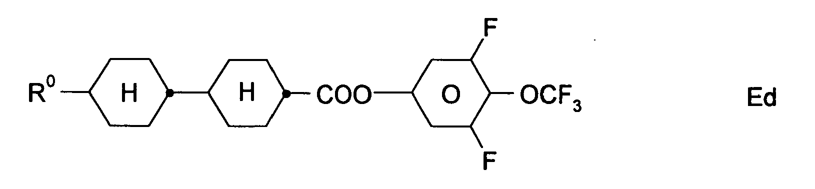 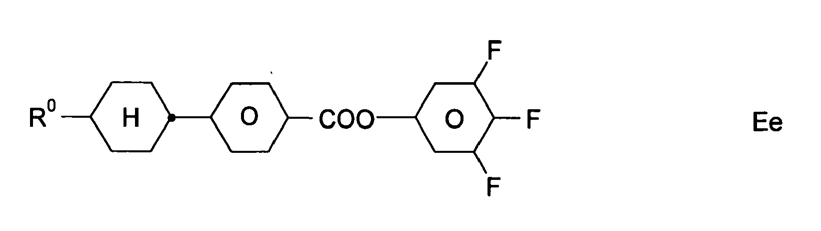 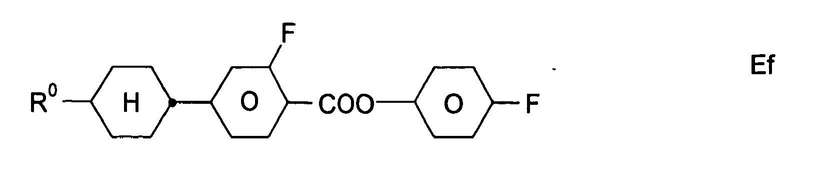 dans lesquelles R⁰ présente la signification indiquée dans la revendication 4.

7. Milieu de cristal liquide selon l'une des revendications 1 à 6, **caractérisé en ce qu'**il comprend de façon additionnelle un ou plusieurs composés des formules IIa à IIg 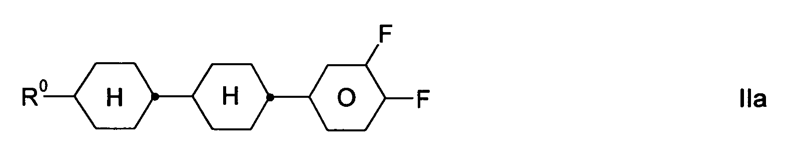 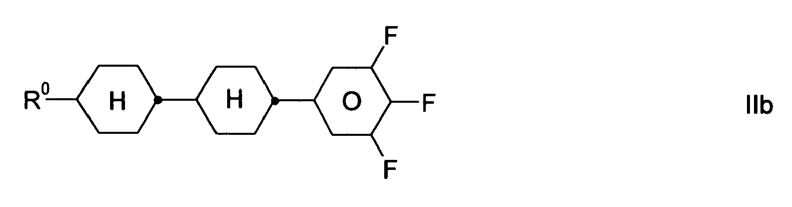 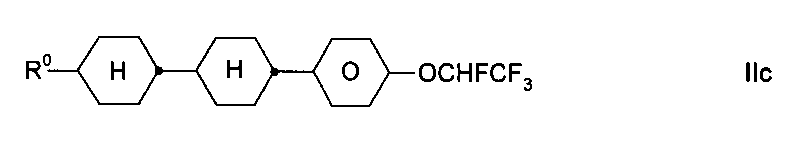 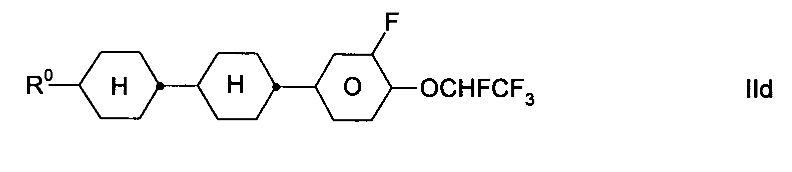 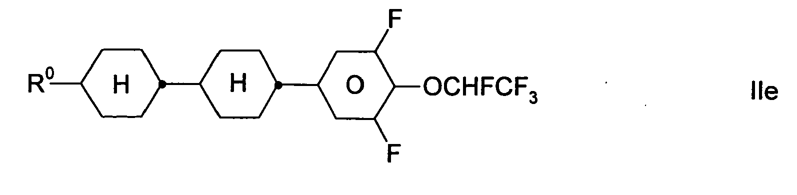 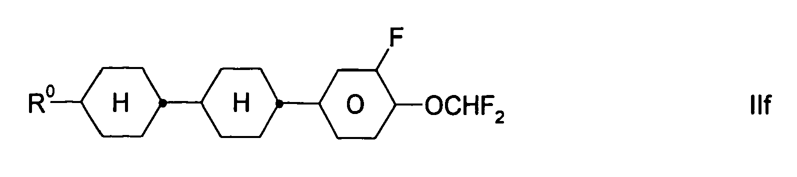 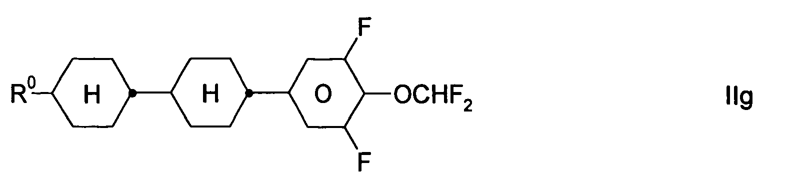 dans lesquelles R⁰ présente la signification indiquée dans la revendication 4.

8. Milieu de cristal liquide selon l'une des revendications 1 à 7, **caractérisé en ce qu'**il comprend de façon additionnelle un ou plusieurs composés des formules RI à RIX 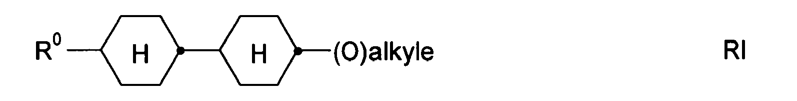 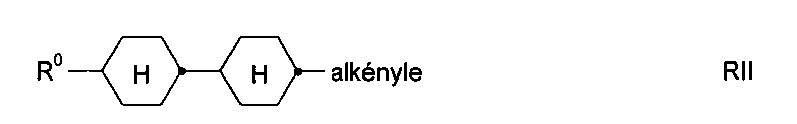 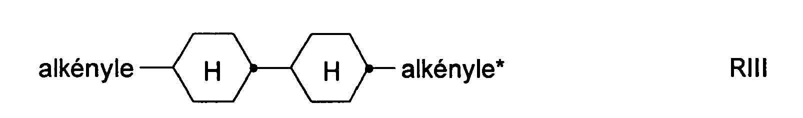 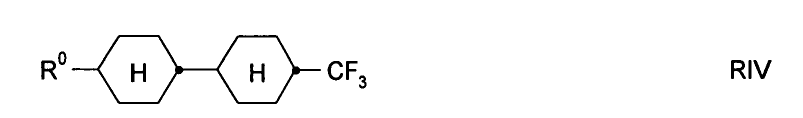 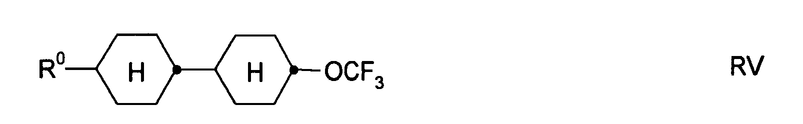 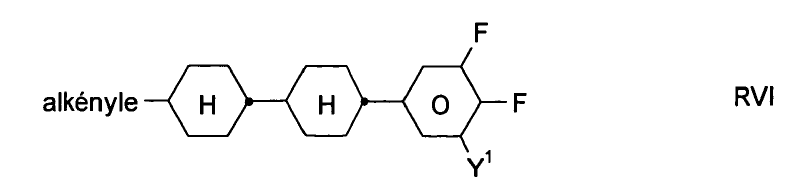 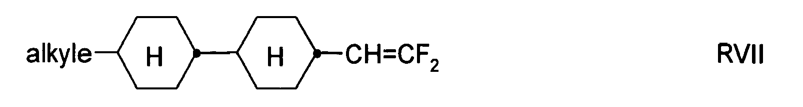 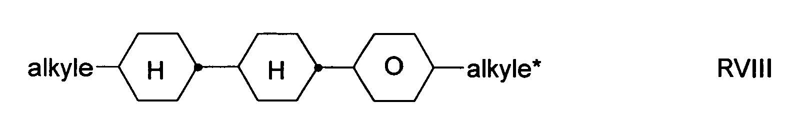 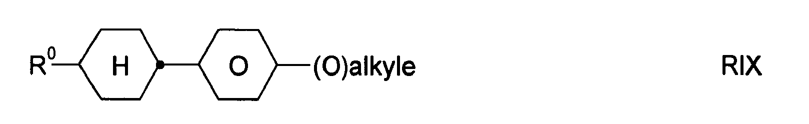 dans lesquelles
R⁰ représente n-alkyle, alkoxy, oxaalkyle, fluoroalkyle, alkényloxy ou alkényle, chacun comportant jusqu'à 9 atomes de C,
Y¹ représente H ou F,
alkyle et alkyle* chacun indépendamment de l'autre, représentent un radical alkyle en chaîne droite ou ramifié comportant de 1 à 9 atomes de C,
alkényle et alkényle* chacun indépendamment de l'autre, représentent un radical alkényle en chaîne droite ou ramifié comportant de 2 à 9 atomes de C.

9. Milieu de cristal liquide selon l'une des revendications 1 à 8, **caractérisé en ce que** la proportion des composés de la formule IA dans le mélange pris dans sa globalité est de 5% à 40% en poids.

10. Milieu de cristal liquide selon l'une des revendications 1 à 9, **caractérisé en ce que** la proportion des composés de la formule I dans le mélange pris dans sa globalité est de 5% à 40% en poids.

11. Utilisation du milieu de cristal liquide selon la revendication 1 à des fins électro-optiques.

12. Affichage à cristaux liquides électro-optique contenant un milieu de cristal liquide selon la revendication 1.
